# EUROPEAN PATENT SPECIFICATION

(11) **EP 4 238 283 B1**
(45) Date of publication and mention of the grant of the patent: **13.08.2025**
(21) Application number: 21763078.9
(22) Date of filing: 19.08.2021
(51) Int. Cl.: H04L 12/14, H04M 15/00, H04W 4/24, H04L 41/0894

(54) **METHODS, ENTITIES, AND COMPUTER READABLE MEDIA FOR ERROR HANDLING**
VERFAHREN, ENTITÄTEN UND COMPUTERLESBARE MEDIEN ZUR FEHLERHANDHABUNG
PROCÉDÉS, ENTITÉS ET SUPPORTS LISIBLES PAR ORDINATEUR PERMETTANT LA GESTION D'ERREUR

(30) Priority: 28.10.2020 WO PCT/CN2020/124565
(43) Date of publication of application: 06.09.2023
(73) Proprietor: Telefonaktiebolaget LM Ericsson (publ), 164 83 Stockholm (SE)
(72) Inventor: ZHANG, Hong, 417 66 Göteborg (SE); SONG, Yumei, 417 67 Göteborg (SE); FERNANDEZ ALONSO, Susana, 28009 Madrid (ES); GARCIA AZORERO, Fuencisla, 28014 Madrid (ES)
(74) Representative: Ericsson
(86) International application number: PCT/EP2021/072998
(87) International publication number: WO 2022/089808

(56) References cited:
- ERICSSON: "Correction to FailureCode and SessionFailureCode", vol. CT WG3, no. E-Meeting; 20201104 - 20201113, 28 October 2020 (2020-10-28), XP051947698, Retrieved from the Internet <URL:https://ftp.3gpp.org/tsg_ct/WG3_interworking_ex-CN3/TSGC3_112e/Docs/C3-205123.zip C3-205123.docx> [retrieved on 20201028]
- ERICSSON: "Extension of Policy Decision Failure handling", vol. CT WG3, no. E-Meeting; 20201104 - 20201113, 28 October 2020 (2020-10-28), XP051947699, Retrieved from the Internet <URL:https://ftp.3gpp.org/tsg_ct/WG3_interworking_ex-CN3/TSGC3_112e/Docs/C3-205124.zip C3-205124.docx> [retrieved on 20201028]
- "3 Generation Partnership Project; Technical Specification Group Core Network and Terminals; 5G System; Session Management Policy Control Service; Stage 3 (Release 17)", vol. CT WG3, no. V17.0.0, 25 September 2020 (2020-09-25), pages 1 - 201, XP051961084, Retrieved from the Internet <URL:ftp://ftp.3gpp.org/Specs/archive/29_series/29.512/29512-h00.zip 29512-h00.doc> [retrieved on 20200925]

## Description

### TECHNICAL FIELD

The present disclosure generally relates to the technical field of communication technologies, and particularly to methods, entities, and computer readable media for error handling.

### BACKGROUND

This section is intended to provide a background to the various embodiments of the technology described in this disclosure. The description in this section may include concepts that could be pursued, but are not necessarily ones that have been previously conceived or pursued. Therefore, unless otherwise indicated herein, what is described in this section is not prior art to the description and/or claims of this disclosure and is not admitted to be prior art by the mere inclusion in this section.
3GPP TS 29.512 v17.0.0 has several chapters for an error report to Policy Control Function (PCF), in which
Chapter 4.2.3.16 describes a Policy and Charging Control (PCC) rule error report for Npcf_SMPolicyControl_UpdateNotify Service Operation;
Chapter 4.2.3.20 describes a Session Rule Error Report for Npcf_SMPolicyControl_UpdateNotify Service Operation;
Chapter 4.2.3.26 describes Policy decision and condition data error handling for Npcf_SMPolicyControl_UpdateNotify Service Operation;
Chapter 4.2.4.15 describes PCC rule error report for Npcf_SMPolicyControl_Update and Npcf_SMPolicyControl_Create Service Operation;
Chapter 4.2.4.21 describes a Session Rule Error Report for Npcf_SMPolicyControl_Update and Npcf_SMPolicyControl_Create Service Operation.
Chapter 4.2.4.26 describes Policy decision and condition data error handling for Npcf_SMPolicyControl_Update and Npcf_SMPolicyControl_Create Service Operation.

These chapters describes the error happens in rule or policy decision. However, since the policy decision and condition data are referred by rule, the reference may be wrongly provisioned or updated by the PCF. Or, the error may happen in attributes in SmPolicyDecision other than sessRules, pccRules, qosDecs, chgDecs, traffContDecs, umDecs, qosMonDecs and conds, such as the attributes reflectiveQoSTimer, policyCtrlReqTriggers, lastReqUsageData, pralnfos etc.

The current 3GPP specifications don't have the option for the Session Management Function (SMF) to report the policy decision and condition data with session rule/PCC rule reference error and error in attributes in SmPolicyDecision other than sessRules, pccRules, qosDecs, chgDecs, traffContDecs, umDecs, qosMonDecs and conds.

There are generally three types of error cases:
- Case 1: Session rule and/or PCC rule refer to one or more empty policy decisions and/or condition data, e.g., a dynamic PCC rule with refUmData pointing to non-exist umData;
- Case 2: SM policy decision and session rule/PCC rule are provisioned with inconsistency, e.g., UsageMonitoringData instance is referred by both session rule and PCC rule.
- Case 3: an error in attributes in SmPolicyDecision other than sessRules, pccRules, qosDecs, chgDecs, traffContDecs, umDecs, qosMonDecs and conds, such as reflectiveQoSTimer, policyCtrlReqTriggers, lastReqUsageData, pralnfos etc. in Table 5.6.2.4-1 of 3GPP TS 29.512 v17.0.0, which is excerpted below as Table 1. For example, an error in pralnfos may be pralnfos validation/enforcement error, an error in policyCtrlReqTriggers may be e.g., the PCF removing the "US_RE" policy control request trigger while usage monitoring is still active in the SMF.

**Table 1: Definition of type SmPolicyDecision**

| **Attribute name** | **Data type** | **P** | **Cardinality** | **Description** | **Applica bility** |
|---|---|---|---|---|---|
| sessRule s | map(SessionRule) | O | 1..N | A map of Sessionrules with the content being the SessionRule as described in subclause 5.6.2.7. The key used in this map for each entry is the sessRuleld attribute of the corresponding SessionRule. | |
| | | | | (NOTE 2) | |
| pccRules | map(PccRule) | O | 1..N | A map of PCC rules with the content being the PCCRule as described in subclause 5.6.2.6. The key used in this map for each entry is the pccRuleld attribute of the corresponding PccRule. | |
| qosDecs | map(QosData) | O | 1..N | Map of QoS data policy decisions. | |
| | | | | The key used in this map for each entry is the qosld attribute of the corresponding QosData. (NOTE 2) | |
| chgDecs | map(ChargingData) | O | 1..N | Map of Charging data policy decisions. The key used in this map for each entry is the chgld attribute of the corresponding ChargingData. | |
| chargingI nfo | Charginglnformation | C | 1 | Contains the CHF addresses and possible associated CHF instance Ids and CHF set IDs of the PDU session. (NOTE 3) | |
| traffCont Decs | map(TrafficControlDa ta) | O | 1..N | Map of Traffic Control data policy decisions. The key used in this map for each entry is the tcId attribute of the corresponding TrafficControlData. (NOTE 2) | |
| umDecs | map(UsageMonitorin gData) | O | 1..N | Map of Usage Monitoring data policy decisions. The key used in this map for each entry is the umld attribute of the corresponding UsageMonitoringData. | |
| qosChars | map(QosCharacterist ics) | O | 1..N | Map of QoS characteristics for non-standard 5QIs and non-preconfigured 5QIs. This map uses the 5QI values as keys. | |
| | | | | (NOTE 2) | |
| qosMonD ecs | map(QosMonitoringD ata) | O | 1..N | Map of QoS Monitoring data policy decision. The key used in this map for each entry is the qmld attribute of the corresponding QosMonitoringData. | QoSMo nitoring |
| reflective QoSTime r | DurationSec | O | 0..1 | Defines the lifetime of a UE derived QoS rule belonging to the PDU Session for reflective QoS. | |
| | | | | (NOTE 2) | |
| offline | boolean | O | 0..1 | Indicates the offline charging is applicable to the PDU session when it is included and set to true. | |
| | | | | (NOTE 3) (NOTE 4) | |
| online | boolean | O | 0..1 | Indicates the online charging is applicable to the PDU session when it is included and set to true. | |
| | | | | (NOTE 3) (NOTE 4) | |
| conds | map(ConditionData) | O | 1..N | A map of condition data with the content being as described in subclause 5.6.2.9. The key used in this map for each entry is the condld attribute of the corresponding ConditionData. | |
| revalidati onTime | DateTime | O | 0..1 | Defines the time before which the SMF shall have to re-request PCC rules. | |
| pcscfRest Indication | boolean | O | 0..1 | If this attribute is included and set to true, it indicates that the P-CSCF Restoration is requested. The default value "FALSE" applies, if the attribute is not present and has not been supplied previously. | PCSCF-Restorat ion-Enh anceme nt |
| policyCtrl ReqTrigg ers | array(PolicyControlR equestTrigger) | O | 1..N | Defines the policy control request triggers subscribed by the PCF. | |
| lastReqR uleData | array(RequestedRule Data) | O | 1..N | Defines the last list of rule control data requested by the PCF. | |
| lastReqU sageData | RequestedUsageDat a | O | 0..1 | Defines the last requested usage data by the PCF. | |
| pralnfos | map(PresencelnfoR m) | O | 1..N | Defines the PRA information provisioned by the PCF. The "prald" attribute within the Presencelnfo data type shall also be the key of the map. The "presenceState" attribute within the Presencelnfo data type shall not be supplied. | PRA |
| ipv4Index | IpIndex | C | 0..1 | Information that identifies the IP address allocation method for IPv4 address allocation. (NOTE 3) | |
| ipv6lndex | IpIndex | C | 0..1 | Information that identifies the IP address allocation method for IPv6 address allocation. (NOTE 3) | |
| qosFlowU sage | QosFlowUsage | O | 0..1 | Indicates the required usage for default QoS flow. | |
| relCause | SmPolicyAssociation ReleaseCause | O | 0..1 | The cause for which the PCF requests the termination of the policy association. | RespBa sedSess ionRel |
| suppFeat | Supported Features | C | 0..1 | Indicates the list of negotiated supported features. | |
| | | | | This parameter shall be supplied by the PCF in the response to the POST request that requested the creation of an individual SM policy resource. | |
| tsnBridge ManCont | BridgeManagementC ontainer | O | 0..1 | Transports TSN bridge management information | TimeSe nsitiveN etworkin g |
| tsnPortM anContDs tt | PortManagementCon tainer | O | 0..1 | Transports TSN port management information for the DS-TT port. | TimeSe nsitiveN etworkin g |
| tsnPortM anContN wtts | array(PortManageme ntContainer) | O | 1..N | Transports TSN port management information for one or more NW-TT ports. | TimeSe nsitiveN etworkin g |
| NOTE 1: For IPv4v6 PDU session, both the "ipv4Index" attribute and "ipv6Index" attribute may be provisioned by the PCF. | | | | | |
| NOTE 2: This attribute shall not be removed if it was provisioned. | | | | | |
| NOTE 3: This attribute may only be supplied by the PCF in the response to the POST request that requested the creation of an individual SM policy resource. | | | | | |
| NOTE 4: If both the "offline" attribute and the "online" attribute is omitted by the PCF, the default charging method pre-configured at the SMF if available shall be applied to the PDU session. | | | | | |
| If both offline and online charging methods are pre-configured at the SMF, the SMF shall determine either of them to be applied to the PDU session based on local policy. The "offline" attribute and the "online" attribute shall not be simultaneously present with the same value, i.e., both set to true or both set to false. | | | | | |
| NOTE 5: If the "charginglnfo" attribute is not supplied by the PCF, the charging information configured at the SMF shall be applied to the PDU session. | | | | | |

When such an error happens, there is no description about how to handle it.

For case 1 and case 2, currently, if the error information is provisioned from a UpdateNotify message (e.g., the Npcf_SMPolicyControl_UpdateNotify Request message), the SMF may reject the message with error status code. If the error applies to one or more PCC/session rule, it may also be with a rule error report. However, there is no appropriate FailureCode/SessionRuleFailureCode with current specification. Using incorrect failure code may lead to wrong decision on the PCF for the existing session; and

For case 1 and case 2, if the error information is provisioned from a Create/Update Response message (e.g., the Npcf_SMPolicyControl_Create/UpdateResponse message), there is no mechanism to report the error back to the PCF. The SMF may ignore the error which leads to unspecified behaviors and inconsistent interactions between the SMF and the PCF. The SMF may terminate user session, which leads bad end user experience;

For case 3, if the error happens in attributes in SmPolicyDecision other than sessRules, pccRules, qosDecs, chgDecs, traffContDecs, umDecs, qosMonDecs and conds, e.g., pralnfos validation/enforcement error, or the PCF removing the "US_RE" policy control request trigger while usage monitoring is still active in the SMF, the current 3GPP specifications don't have the option for the SMF to report such errors.

In view of the foregoing, in the current 3GPP specifications, if the error information is provisioned from the UpdateNotify message (e.g., the Npcf_SMPolicyControl_UpdateNotify Request message), the SMF may reject the message with error status code; and if the error information is provisioned from the Create/Update Response message (e.g., the Npcf_SMPolicyControl_Create/UpdateResponse message), there is no mechanism for the SMF to report the error to the PCF. In addition, if the error happens in attributes in SmPolicyDecision other than sessRules, pccRules, qosDecs, chgDecs, traffContDecs, umDecs, qosMonDecs and conds, e.g., pralnfos validation/enforcement error, policyCtrlReqTriggers, there is also no mechanism for the SMF to report the error.

Therefore, an effective error handling mechanism is thus desired.

### SUMMARY

In order to achieve at least the above purpose, the present disclosure introduces an option for the SMF to notify the PCF about:
1) error in reference of a session rule and/or a PCC rule to the policy decision, which includes at least one of:
   - the session rule and/or the PCC rule referring to an empty policy decision, or
   - inconsistency of the policy decision with the session rule and/or the PCC rule, which includes at least one of:
      -- inconsistency of the policy decision that is provisioned by the second entity with both the session rule and the PCC rule in the same policy decision, or
      -- inconsistency of the policy decision that is provisioned by the second entity with both a session rule and a PCC rule in an updated policy decision; or
2) error in an attribute in at least one attribute in SmPolicyDecision other than sessRules, pccRules, qosDecs, chgDecs, traffContDecs, umDecs, qosMonDecs and conds, such as reflectiveQoSTimer, policyCtrlReqTriggers, lastReqUsageData, pralnfos etc.

According to a first aspect of the present disclosure, a method at a first entity is provided. The method includes: determining, based on a policy decision provisioned by a second entity, an error in at least one of: a reference of a session rule and/or a Policy and Charging Control, PCC, rule to the policy decision, wherein the error in reference of the session rule and/or the PCC rule to the policy decision further includes at least one of: the session rule and/or the PCC rule referring to an empty policy decision, or inconsistency of the policy decision with the session rule and/or the PCC rule, or an attribute in the policy decision; and transmitting, to the second entity, a notification of the error.

In an exemplary embodiment, the method further includes: receiving, from the second entity, an updated policy decision.

In an exemplary embodiment, the inconsistency of the policy decision with the session rule and the PCC rule further includes at least one of: inconsistency of the policy decision that is provisioned by the second entity with both the session rule and the PCC rule in the same policy decision, or inconsistency of the policy decision that is provisioned by the second entity with both a session rule and a PCC rule in an updated policy decision.

In an exemplary embodiment, the notification of the error is carried in a first request message for policy control update.

In an exemplary embodiment, the updated policy decision is carried in a first response message corresponding to the first request message for policy control update.

In an exemplary embodiment, the method further includes: transmitting, to the second entity, a second request message for policy control create/update; and receiving, from the second entity, a second response message corresponding to the second request message for policy control create/update, which includes the policy decision provisioned by the second entity.

In an exemplary embodiment, the notification of the error is carried in a first response message for policy control update notification.

In an exemplary embodiment, the method further includes: receiving, from the second entity, a first request message corresponding to the first response message for policy control update notification, which includes the policy decision provisioned by the second entity.

In an exemplary embodiment, the updated policy decision is carried in a second request message for policy control update notification.

In an exemplary embodiment, the first entity is an SMF, entity, and the second entity is a PCF entity.

In an exemplary embodiment, the policy decision includes a Session Management (SM) policy decision represented by SmPolicyDecision.

In an exemplary embodiment, the error in the attribute in the policy decision includes an error in at least one attribute in SmPolicyDecision other than sessRules, pccRules, qosDecs, chgDecs, traffContDecs, umDecs, qosMonDecs and conds.

According to a second aspect of the present disclosure, a method at a second entity is provided. The method includes: receiving, from a first entity, a notification of an error in at least one of: reference of a session rule and/or a PCC rule to a policy decision, wherein the error in reference of the session rule and/or the PCC rule to the policy decision further includes at least one of: the session rule and/or the PCC rule referring to an empty policy decision, or inconsistency of the policy decision with the session rule and/or the PCC rule, or an attribute in a policy decision; and updating the policy decision.

In an exemplary embodiment, the method further includes: transmitting, to the first entity, the updated policy decision.

In an exemplary embodiment, the inconsistency of the policy decision with the session rule and the PCC rule further includes at least one of: inconsistency of the policy decision that is provisioned by the second entity with both the session rule and the PCC rule in the same policy decision, or inconsistency of the policy decision that is provisioned by the second entity with both a session rule and a PCC rule in an updated policy decision.

In an exemplary embodiment, the notification of the error is carried in a first request message for policy control update.

In an exemplary embodiment, the updated policy decision is carried in a first response message corresponding to the first request message for policy control update.

In an exemplary embodiment, the method further includes: receiving, from the first entity, a second request message for policy control create/update; and transmitting, to the first entity, a second response message corresponding to the second request message for policy control create/update, which includes the Policy decision provisioned by the second entity.

In an exemplary embodiment, the notification of the error is carried in a first response message for policy control update notification.

In an exemplary embodiment, the method further includes: transmitting, to the first entity, a first request message corresponding to the first response message for policy control update notification, which includes the policy decision provisioned by the second entity.

In an exemplary embodiment, the updated policy decision is carried in a second request message for policy control update notification.

In an exemplary embodiment, the first entity is an SMF entity, and the second entity is a PCF entity.

In an exemplary embodiment, the policy decision includes an SM policy decision represented by SmPolicyDecision.

In an exemplary embodiment, the error in the attribute in the policy decision includes an error in at least one attribute in SmPolicyDecision other than sessRules, pccRules, qosDecs, chgDecs, traffContDecs, umDecs, qosMonDecs and conds.

According to a third aspect of the present disclosure, a first entity configured to perform any of the methods according to the first aspect of the present disclosure is provided.

According to a fourth aspect of the present disclosure, a second entity configured to perform any of the methods according to the second aspect of the present disclosure is provided.

According to a fifth aspect of the present disclosure, a computer readable storage medium is provided. The computer readable storage medium has computer program instructions stored thereon, the computer program instructions, when executed by at least one processor, causing the at least one processor to perform the method according to any of the first and second aspects of the present disclosure.

According to the above technical solutions of the present disclosure, for the scenarios when the policy decision with session rule/PCC rule reference error happens; or the error in at least one attribute in SmPolicyDecision other than sessRules, pccRules, qosDecs, chgDecs, traffContDecs, umDecs, qosMonDecs and conds happens, e.g., the Presence Reporting Area (PRA) information validation/enforcement error happens, the SMF may notify the PCF about the error for the PCF decision of updating the provision according to valid information. Otherwise, the SMF may ignore the error which may cause the information inconsistency between the SMF and the PCF, or the SMF may terminate the PDU session which may lower the user experience.

### BRIEF DESCRIPTION OF THE DRAWINGS

The objects, advantages and characteristics of the present disclosure will be more apparent, according to descriptions of preferred embodiments in connection with the drawings, in which:
FIG. 1 schematically shows a method at a first entity for error handling according to an exemplary embodiment of the present disclosure;
FIG. 2 schematically shows a method at a second entity for error handling according to an exemplary embodiment of the present disclosure;
FIG. 3A and FIG. 3B schematically show exemplary signaling sequence diagrams of error handling in different scenarios according to an exemplary embodiment of the present disclosure;
FIG. 4 schematically shows a structural block diagram of a first entity according to an exemplary embodiment of the present disclosure;
FIG. 5 schematically shows a structural block diagram of a first entity according to another exemplary embodiment of the present disclosure;
FIG. 6 schematically shows a structural block diagram of a second entity according to an exemplary embodiment of the present disclosure; and
FIG. 7 schematically shows a structural block diagram of a second entity according to another exemplary embodiment of the present disclosure.

It should be noted that throughout the drawings, same or similar reference numbers are used for indicating same or similar elements; various parts in the drawings are not drawn to scale, but only for an illustrative purpose, and thus should not be understood as any limitations and constraints on the scope of the present disclosure.

### DETAILED DESCRIPTION

Hereinafter, the principle of the present disclosure will be described with reference to illustrative embodiments. Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

Those skilled in the art will appreciate that the term "exemplary" is used herein to mean "illustrative," or "serving as an example," and is not intended to imply that a particular embodiment is preferred over another or that a particular feature is essential. Likewise, the terms "first", "second", "third", and similar terms, are used simply to distinguish one particular instance of an item or feature from another, and do not indicate a particular order or arrangement, unless the context clearly indicates otherwise. Further, the term "step," as used herein, is meant to be synonymous with "operation" or "action." Any description herein of a sequence of steps does not imply that these operations must be carried out in a particular order, or even that these operations are carried out in any order at all, unless the context or the details of the described operation clearly indicates otherwise.

References in the specification to "one embodiment," "an embodiment," "an example embodiment," etc. indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The terminology used herein is for the purpose of describing particular embodiments only and is not intended to be liming of exemplary embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/or combinations thereof.

As used herein, the term "and/or" includes any and all combinations of one or more of the associated listed terms.

In the following description and claims, unless defined otherwise, all technical and scientific terms used herein have the same meaning as commonly understood by one of ordinary skills in the art to which this disclosure belongs.

As used herein, the term "network" refers to a network following any suitable (wireless or wired) communication standards. For example, the wireless communication standards may comprise new radio (NR), long term evolution (LTE), LTE-Advanced, wideband code division multiple access (WCDMA), high-speed packet access (HSPA), Code Division Multiple Access (CDMA), Time Division Multiple Address (TDMA), Frequency Division Multiple Access (FDMA), Orthogonal Frequency-Division Multiple Access (OFDMA), Single carrier frequency division multiple access (SC-FDMA) and other wireless networks. A CDMA network may implement a radio technology such as Universal Terrestrial Radio Access (UTRA), etc. UTRA includes WCDMA and other variants of CDMA. A TDMA network may implement a radio technology such as Global System for Mobile Communications (GSM). An OFDMA network may implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDMA, Ad-hoc network, wireless sensor network, etc. In the following description, the terms "network" and "system" can be used interchangeably.

Furthermore, the communications between two devices in the network may be performed according to any suitable communication protocols, including, but not limited to, the wireless communication protocols as defined by a standard organization such as 3GPP or the wired communication protocols. For example, the wireless communication protocols may comprise the first generation (1G), 2G, 3G, 4G, 4.5G, 5G communication protocols, and/or any other protocols either currently known or to be developed in the future.

The term "entity" or "network entity" used herein refers to a network device or network node or network function in a communication network, and may also refer to a virtualized entity that may be implemented on cloud. For example, in a wireless communication network such as a 3GPP-type cellular network, a core network device may offer numerous services to customers who are interconnected by an access network device. Each access network device is connectable to the core network device over a wired or wireless connection.

The basic ideas of the present disclosure mainly consist in that an NRF may obtain aggregated routing related information according to registration of domain information and/or update of the registration from SCPs to the NRF and possibly, other NRF(s); and an SCP requesting routing path discovery may retrieve the aggregated routing related information from the NRF, and subscribe to the NRF for change of the aggregated routing related information. Therefore, a routing path may be found by the SCP based on the retrieved aggregated routing related information without the need of finding the interconnected SCP domain(s) and the intermediate SCP(s) from the NRF hop by hop.

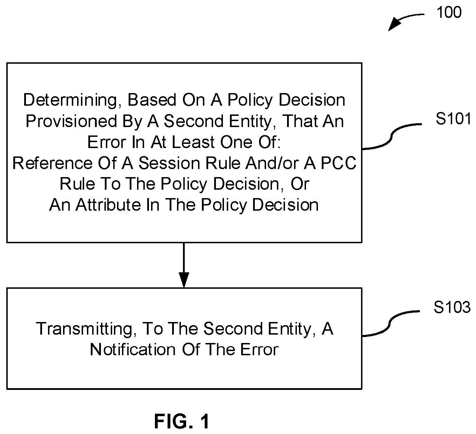

Hereinafter, a method 100 at a first entity for error handling according to an exemplary embodiment of the present disclosure will be described with reference to FIG. 1.

In an exemplary embodiment, the first entity may be an SMF entity, also called SMF for simplicity, and the second entity may be a PCF entity also called PCF for simplicity. However, it should be understood that the first entity may be any node that can be configured to perform the method 100 as described below, including a virtualized entity that may be implemented on cloud. It should also be understood that the method 100 may be appropriately applied in 5GS, or other future developments.

In step S101, the first entity may determine, based on a policy decision provisioned by a second entity, that an error in at least one of: reference of a session rule and/or a PCC rule to the policy decision, or an attribute in the policy decision.

In an exemplary embodiment, the error in reference of the session rule and/or the PCC rule to the policy decision may include at least one of: the session rule and/or the PCC rule referring to an empty policy decision, or inconsistency of the policy decision with the session rule and/or the PCC rule.

In an exemplary embodiment, the inconsistency of the policy decision with the session rule and the PCC rule may include at least one of: inconsistency of the policy decision that is provisioned by the second entity with both the session rule and the PCC rule in the same policy decision, or inconsistency of the policy decision that is provisioned by the second entity with both a session rule and a PCC rule in an updated policy decision.

In an exemplary embodiment, the policy decision may include an SM policy decision represented by SmPolicyDecision.

Preferably, the error in the attribute in the policy decision may include an error in at least one attribute in SmPolicyDecision other than sessRules, pccRules, qosDecs, chgDecs, traffContDecs, umDecs, qosMonDecs and conds, such as the attribute reflectiveQoSTimer, policyCtrlReqTriggers, lastReqUsageData, pralnfos etc. For example, an error in pralnfos may be pralnfos validation/enforcement error, an error in policyCtrlReqTriggers may be e.g., the PCF removing the "US_RE" policy control request trigger while usage monitoring is still active in the SMF.

In Step S103, the first entity may transmit, to the second entity, a notification of the error.

In an exemplary embodiment, the notification of the error may be carried in a first request message for policy control update, e.g., Npcf_SMPolicyControl_Update Request message including ruleReports/sessRuleReports/policyDecFailureReports.

In an exemplary embodiment, regarding the policy decision with session rule/PCC rule reference error, the FailureCode for PCC rule error report may be extended:

In Chapter 5.6.3.9 of 3GPP TS 29.512 v17.0.0, Data Types in Table 5.6.3.9-1 (shown as Table 2 below): Enumeration FailureCode may be added.

**Table 2**

| **Enumeration value** | **Description** | **Applicability** |
|---|---|---|
| UNKNOWN_REF_ ID | Indicates that the dynamic PCC rule could not be successfully provisioned because the reference identifier to a Policy Decision Data or to a Condition Data is unknown to the SMF. | |
| INCORRECT_RE F_DATA | Indicates that the dynamic PCC rule could not be successfully provisioned because the referred Policy Decision or Condition data are incorrect (e.g. "activationTime" attribute value in a ConditionData instance indicates a time value that occurs after the "deactivationTime" attribute indicated time value.) | |
| REF_ID_COLLISI ON | Indicates that the dynamic PCC rule could not be successfully provisioned because the same Policy Decision is referred by a session rule. | |

In an exemplary embodiment, regarding the policy decision with session rule reference error, the SessionRuleFailureCode for session rule error report may be extended:

In Chapter 5.6.3.17 of 3GPP TS 29.512 v17.0.0, data types in Table 5.6.3.17-1 (shown as Table 3 below): Enumeration SessionRuleFailureCode may be added.

**Table 3**

| **Enumeration value** | **Description** | **Applicability** |
|---|---|---|
| UNKNOWN_REF_ ID | Indicates that the session rule could not be successfully provisioned because the reference identifier to a Policy Decision Data or to a Condition Data is unknown to the SMF. | |
| INCORRECT_RE F_DATA | Indicates that the session rule could not be successfully provisioned because the referred Policy Decision or Condition data are incorrect (e.g. "activationTime" attribute value in a ConditionData instance indicates a time value that occurs after the "deactivationTime" attribute indicated time value.). | |
| REF_ID_COLLISI ON | Indicates that the session rule could not be successfully provisioned because the same Policy Decision is referred by a PCC rule. | |

In an exemplary embodiment, regarding e.g., the pralnfos and policyCtrlReqTriggers error, the PolicyDecisionFailureCode for PolicyDecisionErrorHandling may be extended.

In Chapter Table 5.6.2.19-1, and Table 5.6.2.33-1 (shown as Table 4 below), the following may be added:

**Table 4**

| **Attrib ute name** | **Data type** | **P** | **Cardinality** | **Description** | **Applicability** |
|---|---|---|---|---|---|
| invalid Policy Decs | array(InvalidPara m) | O | 1..N | Indicates the invalid parameters for the reported type(s) of the failed policy decision and/or condition data. | ExtPolicyDecis ionErrorHandli ng |

In Chapter 5.6.3.28 of 3GPP TS 29.512 v17.0.0, data types in Table 5.6.3.28-1 (shown as Table 5 below): PolicyDecisionFailureCode may be added.

**Table 5**

| **Enumeration value** | **Description** | **Applicability** |
|---|---|---|
| POLICY_PARA M_ERR | Indicates the information related to the provisioned policy parameter(s) is incorrect, incomplete or inconsistent. | |

After the second entity receives the notification of the error, the second entity updates the policy decision, and transmits the updated policy decision to the first entity.

Thus, the method 100 further includes: the first entity receiving, from the second entity, the updated policy decision.

In an exemplary embodiment, the updated policy decision is carried in a first response message corresponding to the first request message for policy control update, e.g., an Npcf_SMPolicyControl_Update Response message.

In an exemplary embodiment, the method may further include: the first entity transmitting, to the second entity, a second request message for policy control create/update, e.g., an Npcf_SMPolicyControl_Create/Update Request message; and receiving, from the second entity, a second response message corresponding to the second request message for policy control create/update, which comprises the policy decision provisioned by the second entity, e.g., an Npcf_SMPolicyControl_Create/Update Response message.

In another exemplary embodiment, the notification of the error may be carried in a first response message for policy control update notification, e.g., an Npcf_SMPolicyControl_ UpdateNotify Response message including ruleReports/sessRuleReports/policyDecFailureReports.

In this exemplary embodiment, the method 100 may further include: receiving, from the second entity, a first request message corresponding to the first response message for policy control update notification, e.g., an Npcf_SMPolicyControl_ UpdateNotify Request message which comprises the policy decision provisioned by the second entity.

In this exemplary embodiment, the updated policy decision is carried in a second request message for policy control update notification, e.g., an Npcf_SMPolicyControl_ UpdateNotify Response message.

The first entity may be an SMF entity, and the second entity may be a PCF entity.

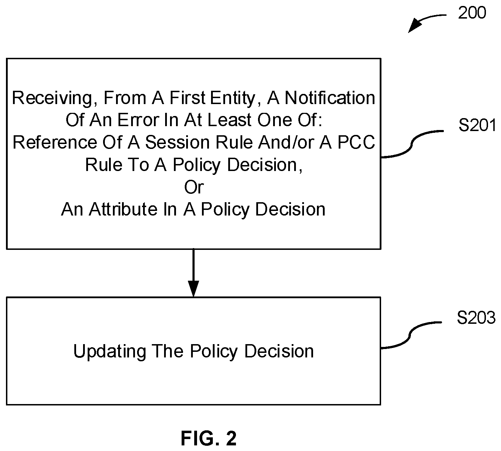

Hereinafter, a method 200 at a second entity for error handling according to an exemplary embodiment of the present disclosure will be described with reference to FIG. 2. It should be understood that the method 200 at the second entity is corresponding to the method 100 at the first entity. Thus, some description thereof may refer to those of the method 100 and will be omitted for simplicity.

In an exemplary embodiment, the first entity may be an SMF entity, also called SMF for simplicity, and the second entity may be a PCF entity also called PCF for simplicity. However, it should be understood that the second entity may be any node that can be configured to perform the method 200 as described below, including a virtualized entity that may be implemented on cloud. It should also be understood that the method 200 may be appropriately applied in 5GS, or other future developments.

In step S201, the second entity may receive, from the first entity, a notification of an error in at least one of: reference of a session rule and/or a PCC rule to the policy decision, or an attribute in the policy decision.

In an exemplary embodiment, the notification of the error may be carried in a first request message for policy control update, e.g., Npcf_SMPolicyControl_Update Request message including ruleReports/sessRuleReports/policyDecFailureReports.

In step S203, the second entity may update the policy decision based on the received notification of the error.

The method further include: the second entity transmitting, to the first entity, the updated policy decision.

In an exemplary embodiment, the updated policy decision is carried in a first response message corresponding to the first request message for policy control update, e.g., an Npcf_SMPolicyControl_Update Response message.

In an exemplary embodiment, the method 200 may further include: the second entity receiving, from the first entity, a second request message for policy control create/update, e.g., an Npcf_SMPolicyControl_Create/Update Request message; and transmitting, to the first entity, a second response message corresponding to the second request message for policy control create/update, which comprises the policy decision provisioned by the second entity, e.g., an Npcf_SMPolicyControl_Create/Update Response message.

In another exemplary embodiment, the notification of the error may be carried in a first response message for policy control update notification, e.g., an Npcf_SMPolicyControl_ UpdateNotify Response message including ruleReports/sessRuleReports/policyDecFailureReports.

In this exemplary embodiment, the method 200 may further include: transmitting, to the first entity, a first request message corresponding to the first response message for policy control update notification, e.g., an Npcf_SMPolicyControl_ UpdateNotify Request message which comprises the policy decision provisioned by the second entity.

In this exemplary embodiment, the updated policy decision is carried in a second request message for policy control update notification, e.g., an Npcf_SMPolicyControl_ UpdateNotify Response message.

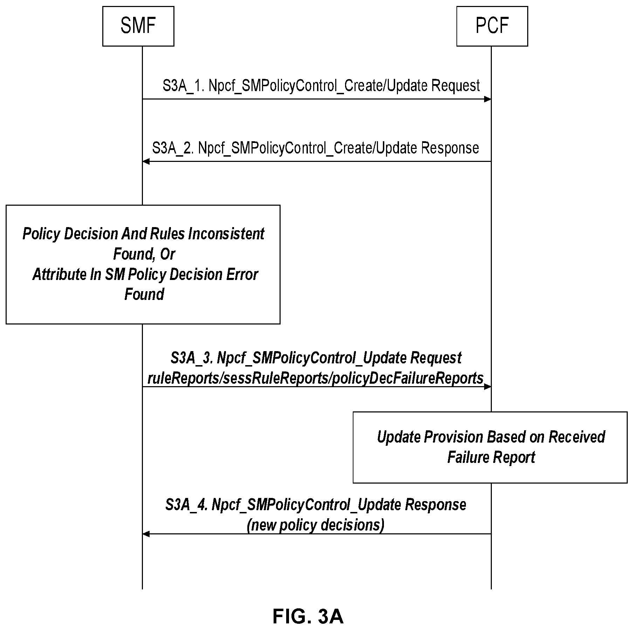

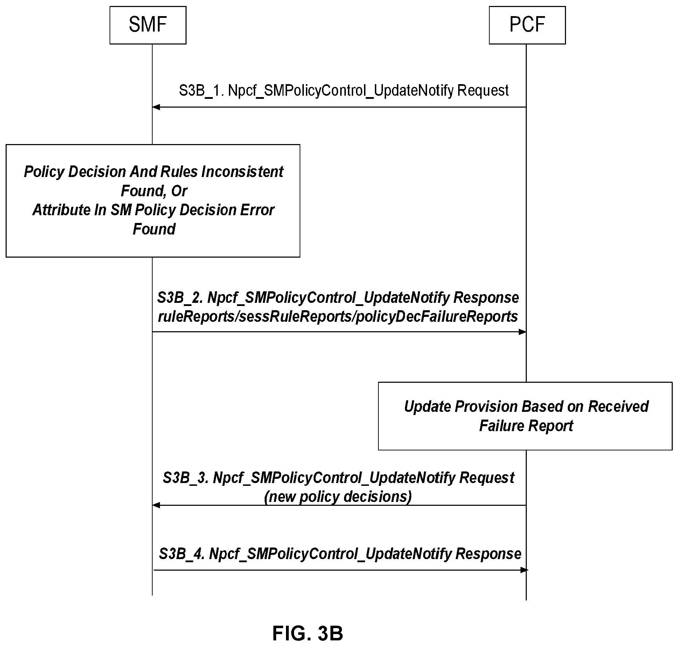

Hereinafter, an exemplary signaling sequence diagrams related to error handling according to an exemplary embodiment of the present disclosure will be described respectively with reference to FIGS. 3A and 3B, in which the method 100 at the first entity and the method 200 at the second entity for error handling according to exemplary embodiments of the present disclosure may be applied.

In the exemplary signaling sequence diagrams of FIGS. 3A and 3B, an SMF is shown as an example of the first entity, an PCF is shown as an example of the second entity.

It should be noted that the description below mainly focuses on signaling related to the methods 100 and 200, and some other signaling is not described in detail to avoid obscuring the principle of the present disclosure.

In the scenario of FIG. 3A, signaling shown in *Italics* is novel, wherein Signaling S3A_3~S3A_4 are involved.

In S3A_1, the SMF sends e.g., SmPolicyControl_Create/Update Request to the PCF;

In S3A_2, the PCF provisions, to the SMF, new policy decision and/or condition data, as well as session rules and PCC rules with reference to policy decision and/or condition data if applicable via e.g., SmPolicyControl_Create/Update Response;

The SMF validates the PCF provisioned SM policy decisions/condition data as well as session and PCC rules, and finds errors as described previously. That is,
1) error in reference of a session rule and/or a PCC rule to the policy decision, which includes at least one of:
   - the session rule and/or the PCC rule referring to an empty policy decision, or
   - inconsistency of the policy decision with the session rule and/or the PCC rule, which includes at least one of:
      -- inconsistency of the policy decision that is provisioned by the second entity with both the session rule and the PCC rule in the same policy decision, or
      -- inconsistency of the policy decision that is provisioned by the second entity with both a session rule and a PCC rule in an updated policy decision; or
2) error in an attribute in at least one attribute in SmPolicyDecision other than sessRules, pccRules, qosDecs, chgDecs, traffContDecs, umDecs, qosMonDecs and conds, such as reflectiveQoSTimer, policyCtrlReqTriggers, lastReqUsageData, pralnfos etc.

Then, in S3A_3, the SMF reports the error to the PCF using e.g., SmPolicyControl_Update Request including error reports to indicate the error;

In S3A_4, the PCF provisions updated new decision to the SMF via e.g., SmPolicyControl_Update Response based on the report error.

In the scenario of FIG. 3B, signaling shown in *Italics* is novel, wherein Signaling S3B_2~S3B_4 are involved.

In S3B_1: the PCF provisions policy decision and/or condition data, as well as session rules and PCC rules with reference to policy decision and/or condition data using e.g., SmPolicyControl_UpdateNotify Request;
The SMF validates the PCF provisioned SM policy decisions/condition data as well as session and PCC rules.

Then, in S3B_2, the SMF reports the error to PCF using e.g., SmPolicyControl_UpdateNotify Response including error reports to indicate the error;
In S3B_3, the PCF provisions updated new decision to the SMF via e.g., SmPolicyControl_UpdateNotify Request based on the report error.

In S3B_4, the SMF responds with e.g., SmPolicyControl_UpdateNotify Response.

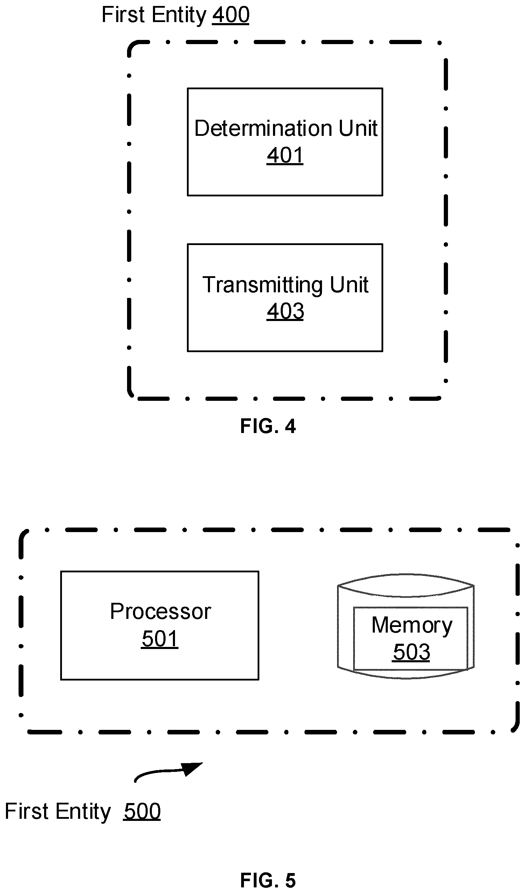

Hereinafter, a structure of a first entity according to an exemplary embodiment of the present disclosure will be described with reference to FIG. 4. FIG. 4 schematically shows a block diagram of a first entity 400 according to an exemplary embodiment of the present disclosure. The first entity 400 in FIG. 4 may perform the method 100 as described previously with reference to FIG. 1. Accordingly, some detailed description on the first entity 400 may refer to the corresponding description of the method 100 in FIG. 1 and the signaling sequence diagrams of FIGS. 3A and 3B as previously discussed, and thus will be omitted here for simplicity.

As shown in FIG. 4, the first entity 400 may include a determination unit 401 and a transmitting unit 403.

The determination unit 401 may determine, based on a policy decision provisioned by a second entity, that an error in at least one of: reference of a session rule and/or a PCC rule to the policy decision, or an attribute in the policy decision.

The transmitting unit 403 may transmit, to the second entity, a notification of the error.

In an exemplary embodiment, the first entity 400 may also include a receiving unit (not shown), which may be configured to receive, from the second entity, an updated policy decision.

In an exemplary embodiment, the transmitting unit 403 may be further configured to transmit, to the second entity, a second request message for policy control create/update.

In an exemplary embodiment, the receiving unit may be further configured to receive, from the second entity, a second response message corresponding to the second request message for policy control create/update, which comprises the policy decision provisioned by the second entity.

In an exemplary embodiment, the receiving unit may be further configured to receive, from the second entity, a first request message corresponding to the first response message for policy control update notification, which comprises the policy decision provisioned by the second entity.

Hereinafter, a structure of a first entity according to another exemplary embodiment of the present disclosure will be described with reference to FIG. 5. FIG. 5 schematically shows a block diagram of a first entity 500 according to an exemplary embodiment of the present disclosure. The first entity 500 in FIG. 5 may perform the method 100 as described previously with reference to FIG. 1. Accordingly, some detailed description on the first entity 500 may refer to the corresponding description of the method 100 in FIG. 1 and the signaling sequence diagrams of FIGS. 3A and 3B as previously discussed, and thus will be omitted here for simplicity.

As shown in FIG. 5, the first entity 500 includes at least one processor 501 and at least one memory 503. The at least one processor 501 includes e.g., any suitable CPU (Central Processing Unit), microcontroller, DSP (Digital Signal Processor), etc., capable of executing computer program instructions. The at least one memory 503 may be any combination of a RAM (Random Access Memory) and a ROM (Read Only Memory). The at least one processor memory 503 may also include persistent storage, which, for example, can be any single one or combination of magnetic memory, optical memory, or solid state memory or even remotely mounted memory.

The at least one memory 503 stores instructions executable by the at least one processor 501. The instructions, when loaded from the at least one memory 503 and executed on the at least one processor 501, may cause the first entity 500 to perform the actions, e.g., of the procedures as described earlier respectively in conjunction with FIG. 1 with reference to the signaling sequence diagrams of FIGS. 3A and 3B as previously discussed, and thus will be omitted here for simplicity.

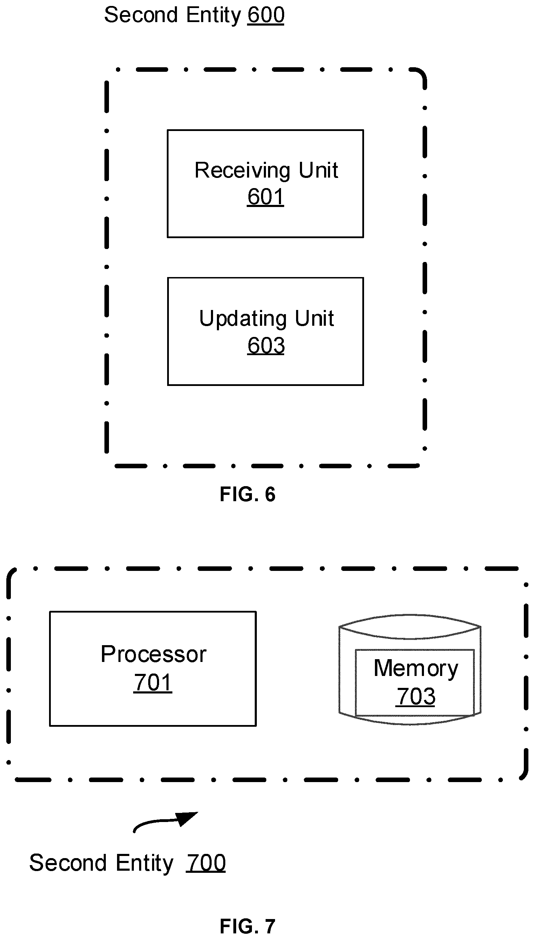

Hereinafter, a structure of a second entity according to an exemplary embodiment of the present disclosure will be described with reference to FIG. 6. FIG. 6 schematically shows a block diagram of a second entity 600 according to an exemplary embodiment of the present disclosure. The second entity 600 in FIG. 6 may perform the method 200 as described previously with reference to FIG. 2. Accordingly, some detailed description on the second entity 600 may refer to the corresponding description of the method 200 in FIG. 2 and the signaling sequence diagrams of FIGS. 3A and 3B as previously discussed, and thus will be omitted here for simplicity.

As shown in FIG. 6, the second entity 600 may include a receiving unit 601 and an updating unit 603.

The receiving unit 601 may receive, from a first entity, a notification of an error in at least one of: reference of a session rule and/or a Policy and Charging Control, PCC, rule to the policy decision, or an attribute in the policy decision.

The updating unit 603 may update the policy decision based on the received notification of the error.

In an exemplary embodiment, the second entity 600 may further include a transmitting unit, which may be configured to transmit, to the first entity, the updated policy decision.

In an exemplary embodiment, the receiving unit 601 may be further configured to receive, from the first entity, a second request message for policy control create/update, and the transmitting unit may be further configured to transmit, to the first entity, a second response message corresponding to the second request message for policy control create/update, which comprises the Policy decision provisioned by the second entity

In an exemplary embodiment, the transmitting unit may be further configured to transmit, to the first entity, a first request message corresponding to the first response message for policy control update notification, which comprises the policy decision provisioned by the second entity.

Hereinafter, a structure of a second entity according to another exemplary embodiment of the present disclosure will be described with reference to FIG. 7. FIG. 7 schematically shows a block diagram of a second entity 700 according to an exemplary embodiment of the present disclosure. The second entity 700 in FIG. 7 may perform the method 200 as described previously with reference to FIG. 2. Accordingly, some detailed description on the second entity 700 may refer to the corresponding description of the method 200 in FIG. 2 and the signaling sequence diagrams of FIGS. 3A and 3B as previously discussed, and thus will be omitted here for simplicity.

As shown in FIG. 7, the second entity 700 includes at least one processor 701 and at least one memory 703. The at least one processor 1101 includes e.g., any suitable CPU (Central Processing Unit), microcontroller, DSP (Digital Signal Processor), etc., capable of executing computer program instructions. The at least one memory 703 may be any combination of a RAM (Random Access Memory) and a ROM (Read Only Memory). The at least one processor memory 703 may also include persistent storage, which, for example, can be any single one or combination of magnetic memory, optical memory, or solid state memory or even remotely mounted memory.

The at least one memory 703 stores instructions executable by the at least one processor 701. The instructions, when loaded from the at least one memory 703 and executed on the at least one processor 1101, may cause the executing entity 700 to perform the actions, e.g., of the procedures as described earlier respectively in conjunction with FIG. 2 with reference to the signaling sequence diagrams of FIGS. 3A and 3B as previously discussed, and thus will be omitted here for simplicity.

The present disclosure also provides at least one computer program product in the form of a non-volatile or volatile memory, e.g., a non-transitory computer readable storage medium, an Electrically Erasable Programmable Read-Only Memory (EEPROM), a flash memory and a hard drive. The computer program product includes a computer program.

The computer program includes: code/computer readable instructions, which when executed by the at least one processor 501 causes the first entity 500 to perform the actions, e.g., of the procedure described earlier in conjunction with FIG. 1; or code/computer readable instructions, which when executed by the at least one processor 701 causes the second entity 700 to perform the actions, e.g., of the procedures described earlier respectively in conjunction with FIG. 2.

The computer program product may be configured as a computer program code structured in computer program modules. The computer program modules could essentially perform the actions of the flow illustrated in any of FIGS. 1~3B.

The processor may be a single CPU (Central processing unit), but could also include two or more processing units. For example, the processor may include general purpose microprocessors; instruction set processors and/or related chips sets and/or special purpose microprocessors such as Application Specific Integrated Circuit (ASICs). The processor may also include board memory for caching purposes. The computer program may be carried by a computer program product connected to the processor. The computer program product may include a non-transitory computer readable storage medium on which the computer program is stored. For example, the computer program product may be a flash memory, a Random-access memory (RAM), a Read-Only Memory (ROM), or an EEPROM, and the computer program modules described above could in alternative embodiments be distributed on different computer program products in the form of memories.

The present disclosure has been described above with reference to embodiments thereof. It should be understood that various modifications, alternations and additions can be made by those skilled in the art without departing from the scope of the present disclosure. Therefore, the scope of the present disclosure is not limited to the above particular embodiments but only defined by the claims as attached.

The present disclosure further comprises the following embodiments based on the 3GPP TS 29.512 v17.0.0.

### 5.6.3.9 Enumeration: FailureCode

**Table 5.6.3.9-1: Enumeration FailureCode**

| **Enumeration value** | **Description** | **Applicability** |
|---|---|---|
| UNK_RULE_ID | Indicates that the pre-provisioned PCC rule could not be successfully activated because the PCC rule identifier is unknown to the SMF. | |
| RA_GR_ERR | Indicates that the PCC rule could not be successfully installed or enforced because the Rating Group specified within the Charging Data policy decision which the PCC rule refers to is unknown or, invalid. | |
| SER_ID_ERR | Indicates that the PCC rule could not be successfully installed or enforced because the Service Identifier specified within the Charging Data policy decision which the PCC rule refers to is invalid, unknown, or not applicable to the service being charged. | |
| NF_MAL | Indicates that the PCC rule could not be successfully installed (for those provisioned from the PCF) or activated (for those pre-defined in SMF) or enforced (for those already successfully installed) due to SMF/UPF malfunction. | |
| RES_LIM | Indicates that the PCC rule could not be successfully installed (for those provisioned from PCF) or activated (for those pre-defined in SMF) or enforced (for those already successfully installed) due to a limitation of resources at the SMF/UPF. | |
| MAX_NR_QoS_FL OW | Indicates that the PCC rule could not be successfully installed (for those provisioned from PCF) or activated (for those pre-defined in SMF) or enforced (for those already successfully installed) due to the fact that the maximum number of QoS flows has been reached for the PDU session. | |
| MISS_FLOW_INF O | Indicates that the PCC rule could not be successfully installed or enforced because neither the "flowinfos" attribute nor "appld" attribute is specified within the "pccRule" attribute by the PCF during the first install request of the PCC rule. | |
| RES_ALLO_FAIL | Indicates that the PCC rule could not be successfully installed or maintained since the QoS flow establishment/modification failed, or the QoS flow was released. | |
| UNSUCC_QOS_V AL | This value is used to: | |
| | - indicate that the QoS validation has failed or, | |
| | - Indicate when Guaranteed Bandwidth > | |
| | Max-Requested-Bandwidth. | |
| INCOR_FLOW_IN FO | Indicates that the PCC rule could not be successfully installed or modified at the SMF because the provided flow information is not supported by the network (e.g. the provided IP address(es) or Ipv6 prefix(es) do not correspond to an IP version applicable for the PDU session). | |
| PS_TO_CS_HAN | Indicates that the PCC rule could not be maintained because of PS to CS handover. | |
| APP_ID_ERR | Indicates that the PCC rule could not be successfully installed or enforced because the Application Identifier is invalid, unknown, or not applicable to the application required for detection. | ADC |
| NO_QOS_FLOW_ BOUND | Indicates that there is no QoS flow which the SMF can bind the PCC rule(s) to. | |
| FILTER_RES | Indicates that the Flow Information within the "flowinfos" attribute cannot be handled by the SMF because any of the restrictions defined in subclause 5.4.2 of 3GPP TS 29.212 [23] was not met. | |
| MISS_REDI_SER_ ADDR | Indicates that the PCC rule could not be successfully installed or enforced at the SMF because there is no valid Redirect Server Address within the Traffic Control Data policy decision which the PCC rule refers to, provided by the PCF, and no preconfigured redirection address for this PCC rule at the SMF/UPF. | ADC |
| CM_END_USER_ SER_DENIED | Indicates that the charging system denied the service request due to service restrictions (e.g. terminate rating group) or limitations related to the end-user, for example the end-user's account could not cover the requested service. | |
| CM_CREDIT_CO N_NOT_APP | Indicates that the charging system determined that the service can be granted to the end user but no further credit control is needed for the service (e.g. service is free of charge or is treated for offline charging). | |
| CM_AUTH_REJ | Indicates that the charging system denied the service request in order to terminate the service for which credit is requested. | |
| CM_USER_UNK | Indicates that the specified end user could not be found in the charging system. | |
| CM_RAT_FAILED | Indicates that the charging system cannot rate the service request due to insufficient rating input, incorrect AVP combination or due to an attribute or an attribute value that is not recognized or supported in the rating. | |
| UE_STA_SUSP | Indicates that the UE is in suspend state. Only applicable to the interworking scenario as defined in Annex B. | PolicyUpdateWhen UESuspends |
| UNKNOWN_REF_ ID | Indicates that the dynamic PCC rule could not be successfully installed/modified because the referenced identifier to a Policy Decision Data or to a Condition Data is unknown to the SMF. | |
| INCORRECT_REF _DATA | Indicates that the dynamic PCC rule could not be successfully installed/modified because the referenced Policy Decision or Condition data are incorrect (e.g. "activationTime" attribute value in a ConditionData instance indicates a time value that occurs after the "deactivationTime" attribute indicated time value.) | |
| REF_ID_COLLISI ON | Indicates that the dynamic PCC rule could not be successfully installed/modified because the same Policy Decision is referenced by a session rule. | |

| |
|---|
| *** Next Change *** |

### 5.6.3.17 Enumeration: SessionRuleFailureCode

**Table 5.6.3.17-1: Enumeration SessionRuleFailureCode**

| **Enumeration value** | **Description** | **Applicability** |
|---|---|---|
| NF_MAL | Indicates that the session rule could not be successfully installed) or enforced (for those already successfully installed) due to SMF/UPF malfunction. | |
| RES_LIM | Indicates that the session rule could not be successfully installed or enforced (for those already successfully installed) due to a limitation of resources at the SMF/UPF. | |
| UNSUCC_QOS_VAL | Indicate that the QoS validation has failed. | |
| UE_STA_SUSP | Indicates that the UE is in suspend state. Only applicable to the interworking scenario as defined in Annex B. | PolicyUpdateWhen UESuspends |
| UNKNOWN_REF_ID | Indicates that the session rule could not be successfully installed/modified because the reference identifier to a Policy Decision Data or to a Condition Data is unknown to the SMF. | |
| INCORRECT_REF_DATA | Indicates that the session rule could not be successfully installed/modified because the referenced Policy Decision or Condition data are incorrect (e.g. "activationTime" attribute value in a ConditionData instance indicates a time value that occurs after the "deactivationTime" attribute indicated time value.). | |
| REF_ID_COLLISION | Indicates that the session rule could not be successfully installed/modified because the same Policy Decision is referenced by a PCC rule. | |

| |
|---|
| *** Next Change *** |

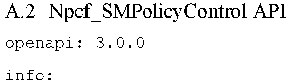

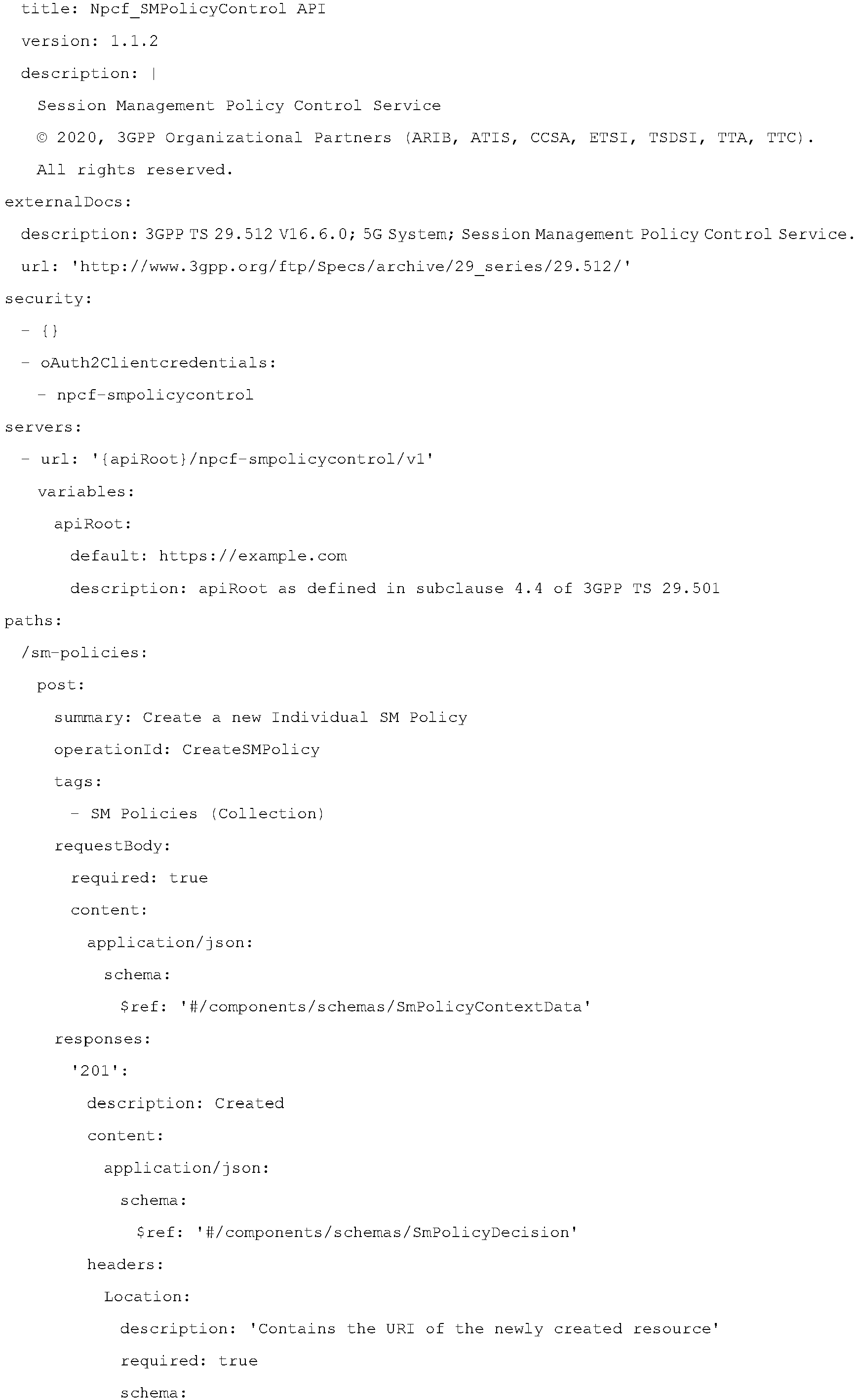

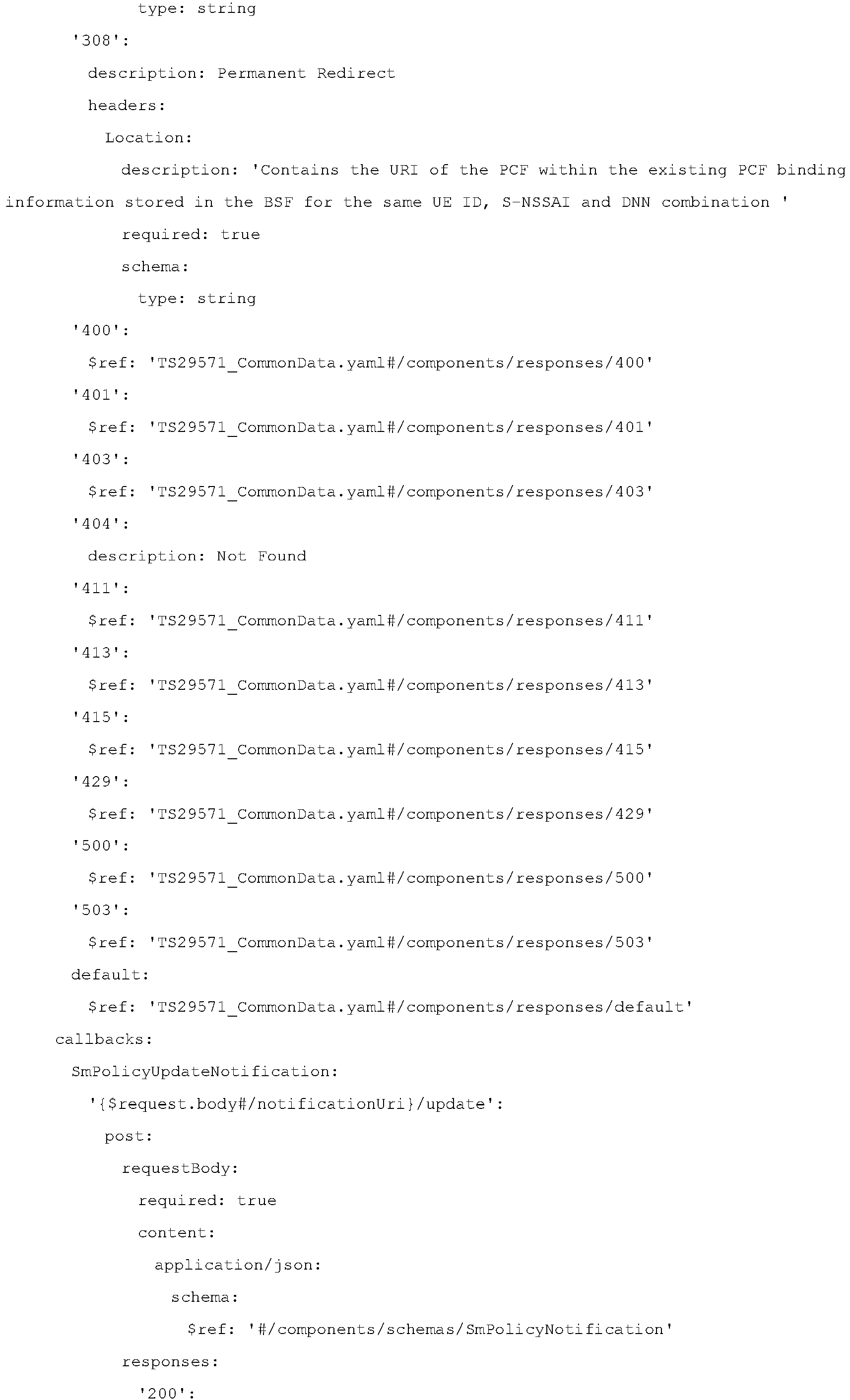

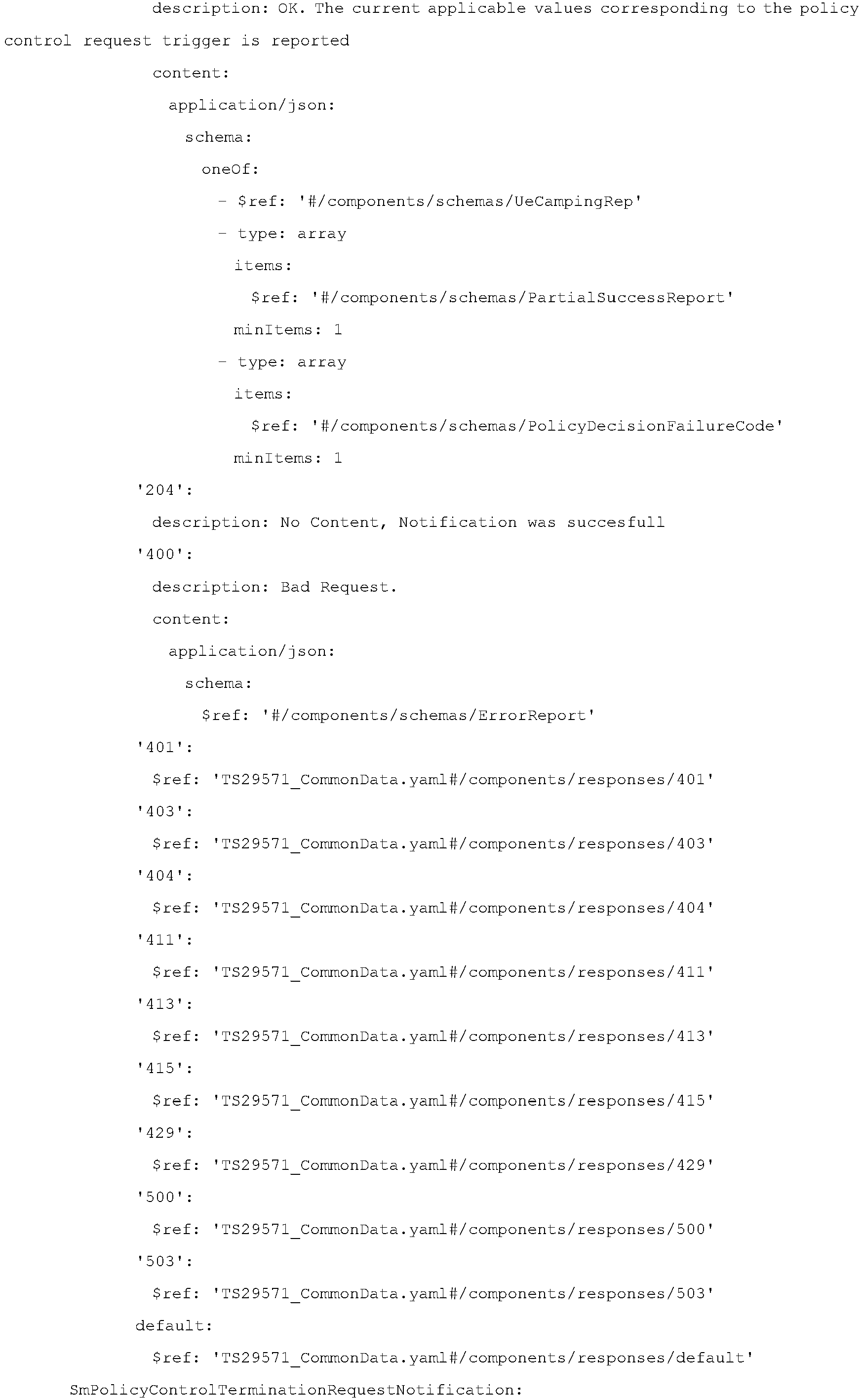

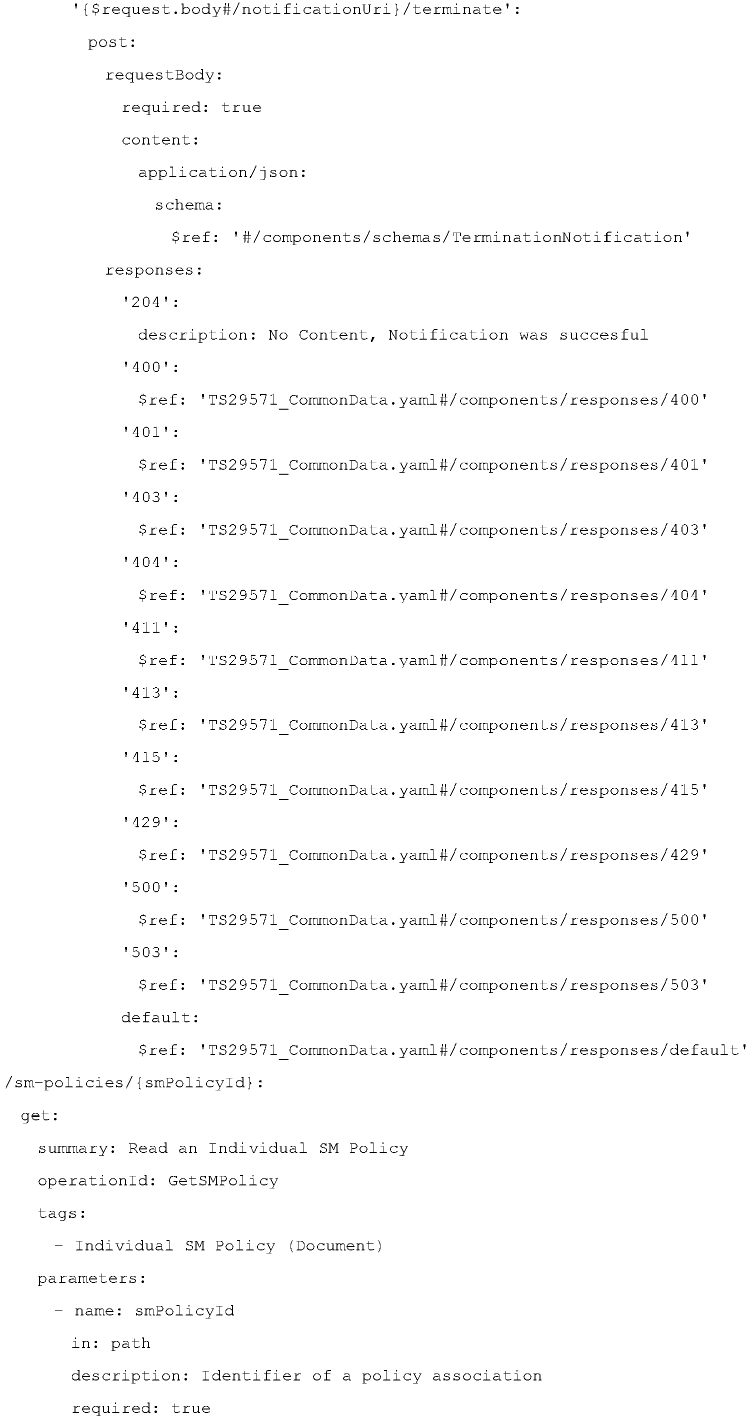

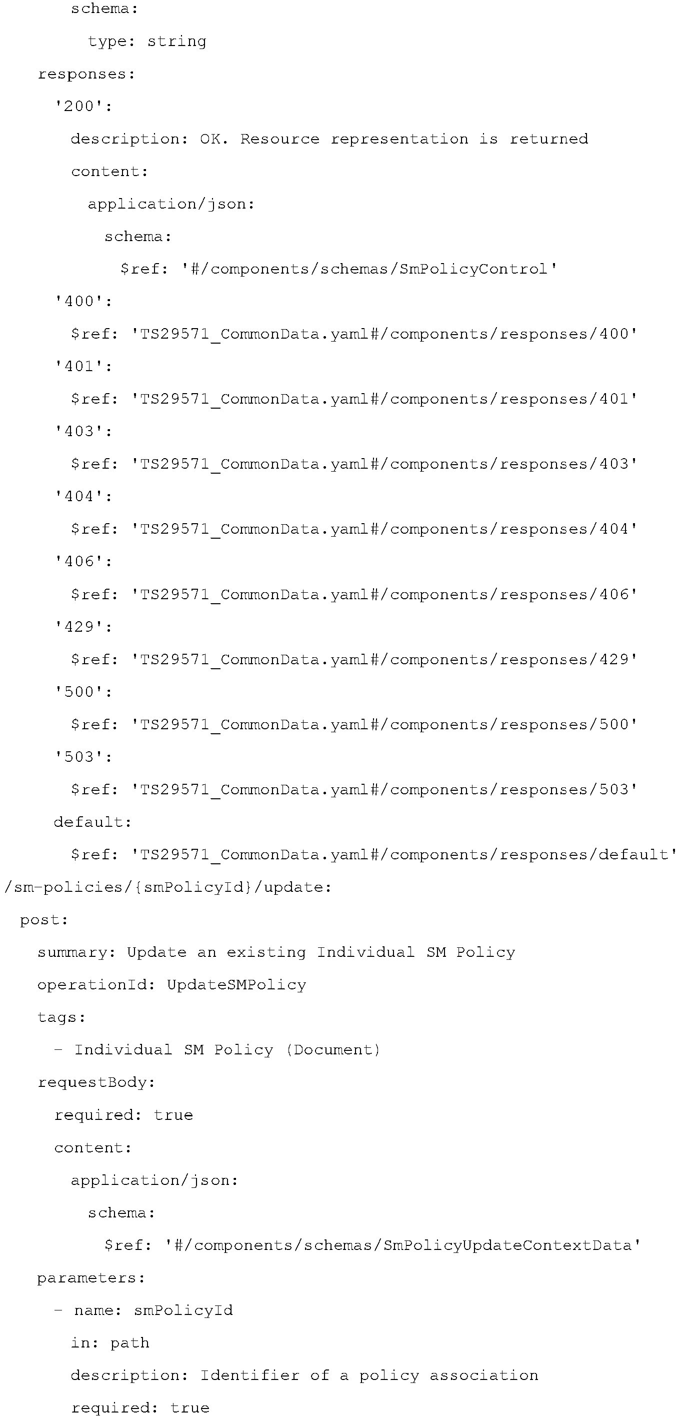

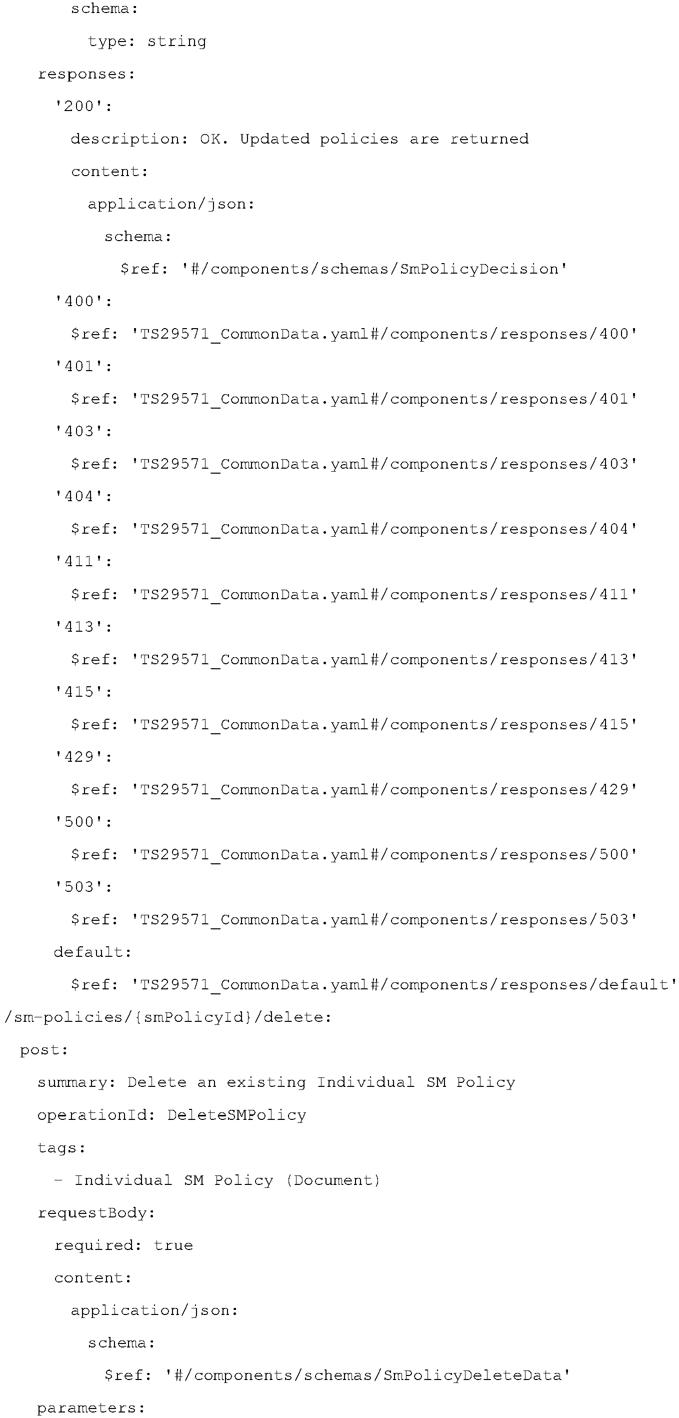

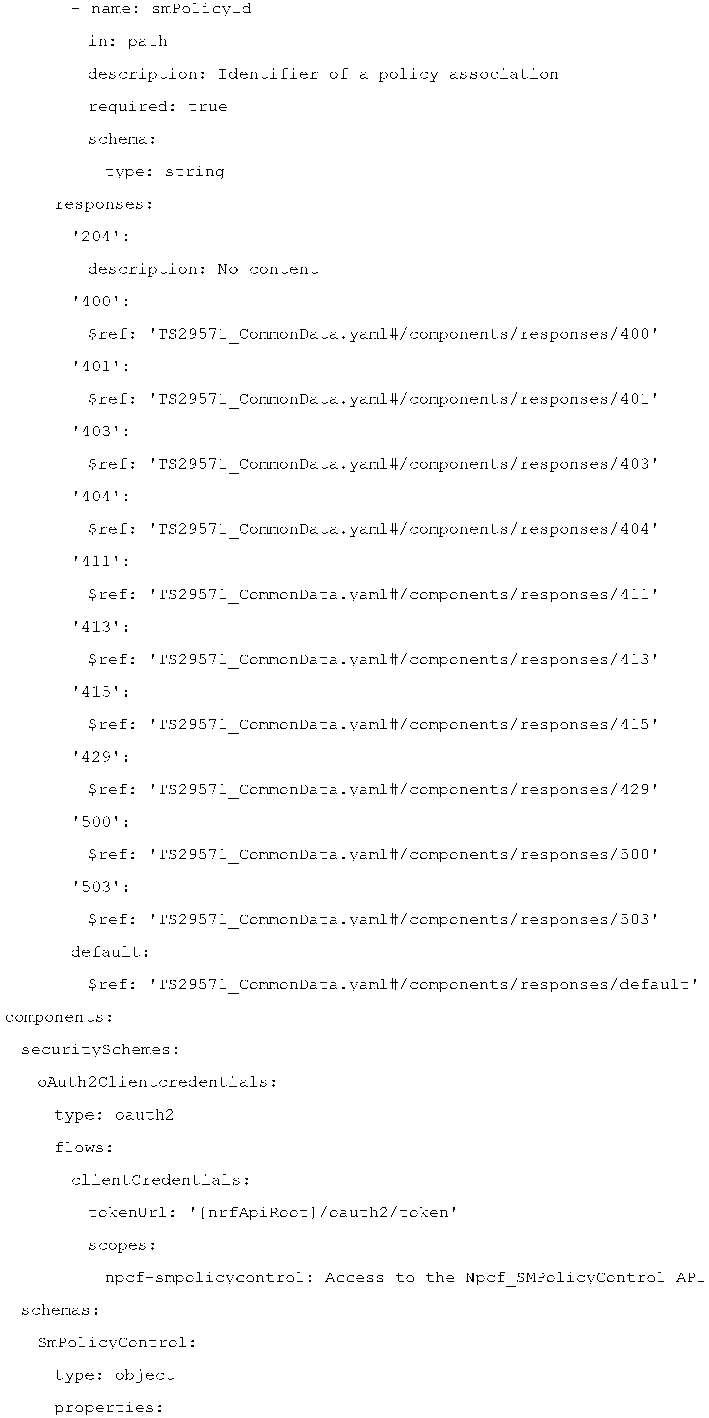

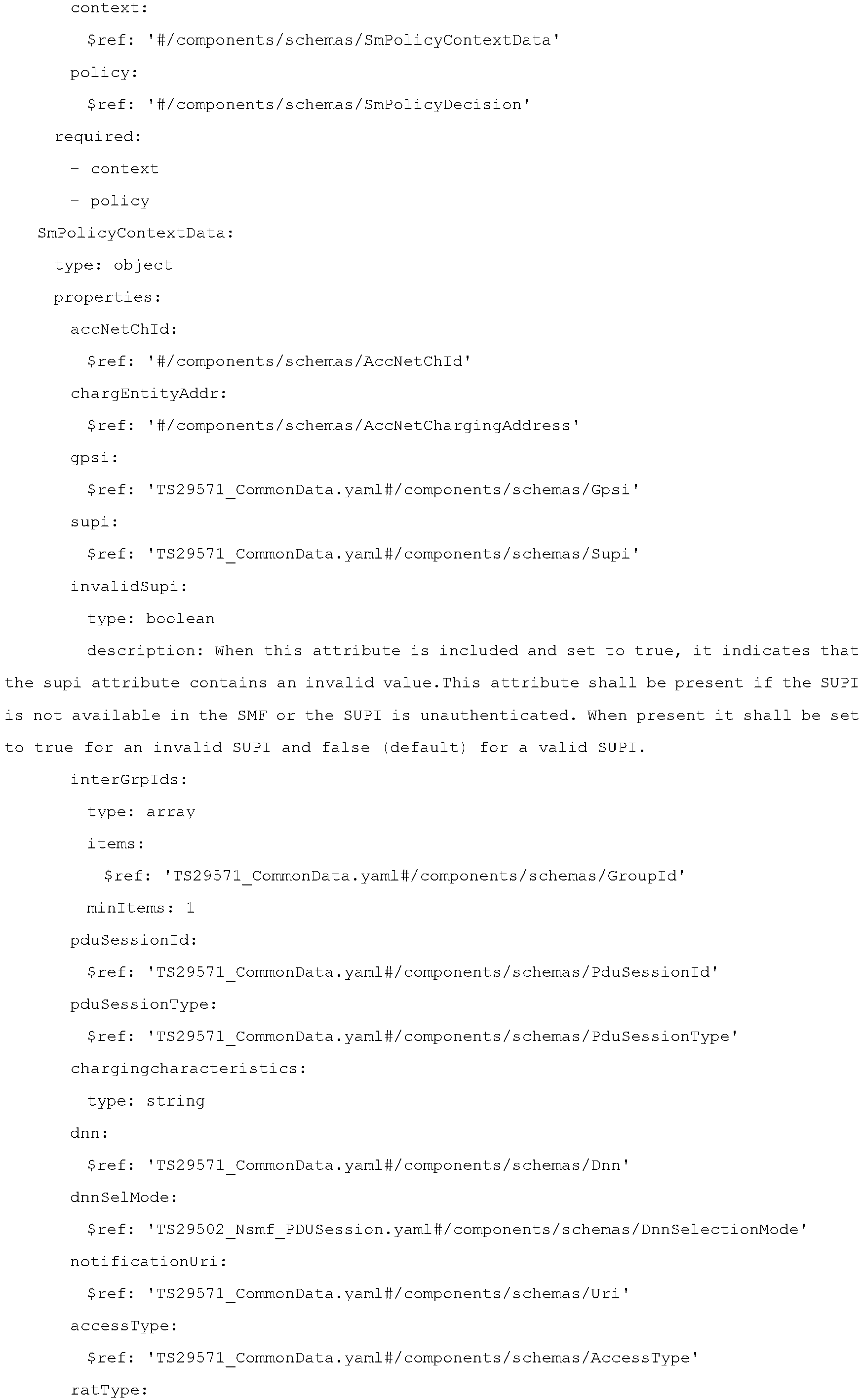

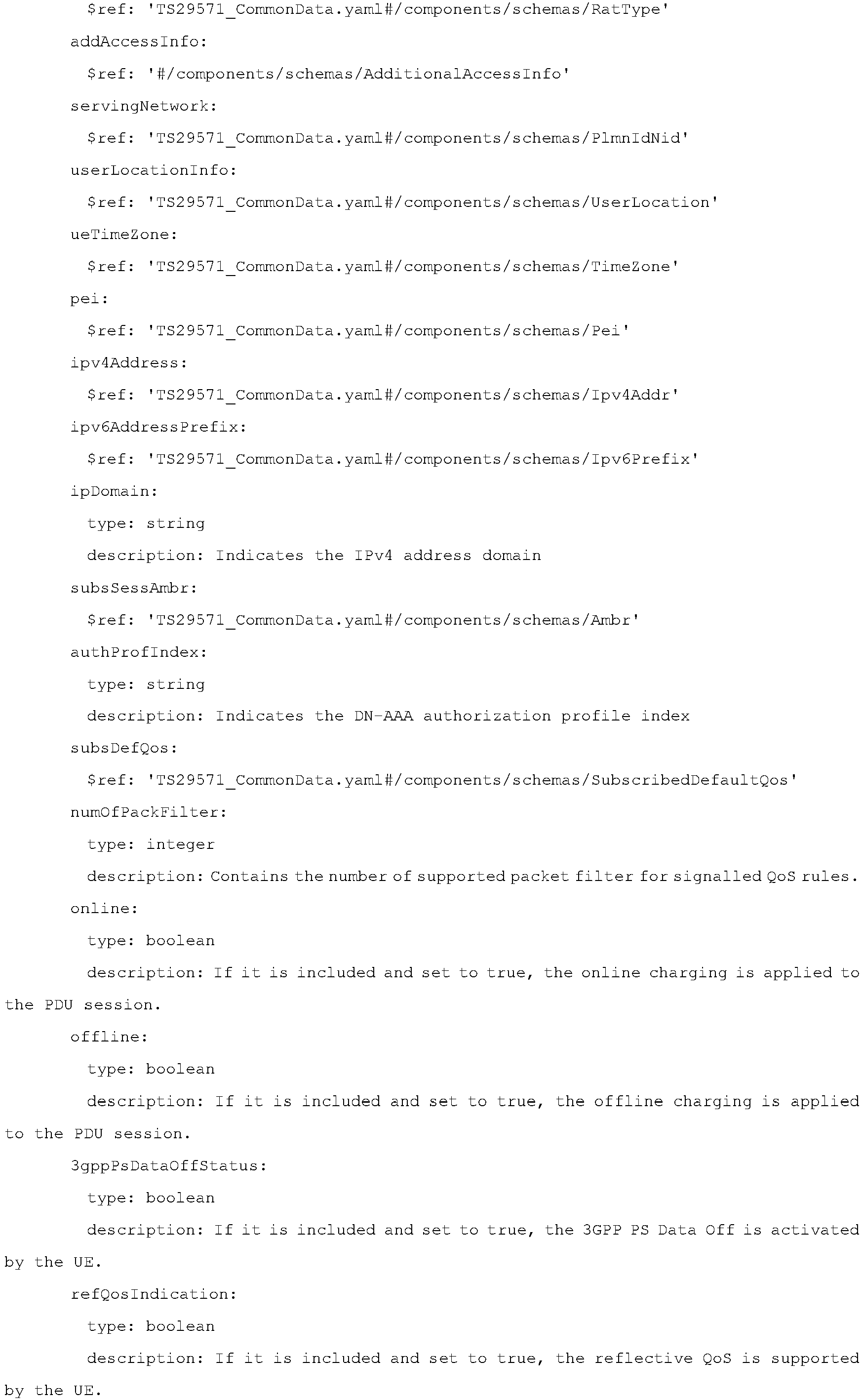

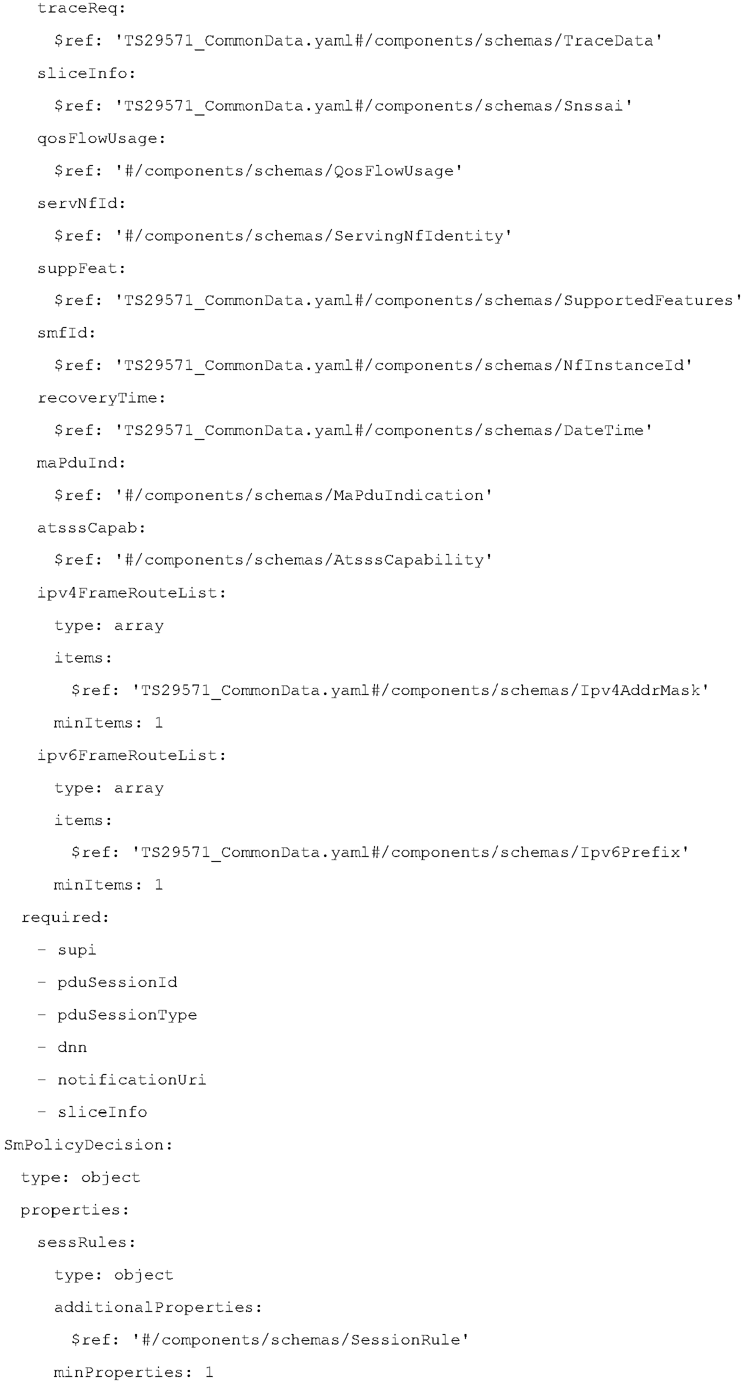

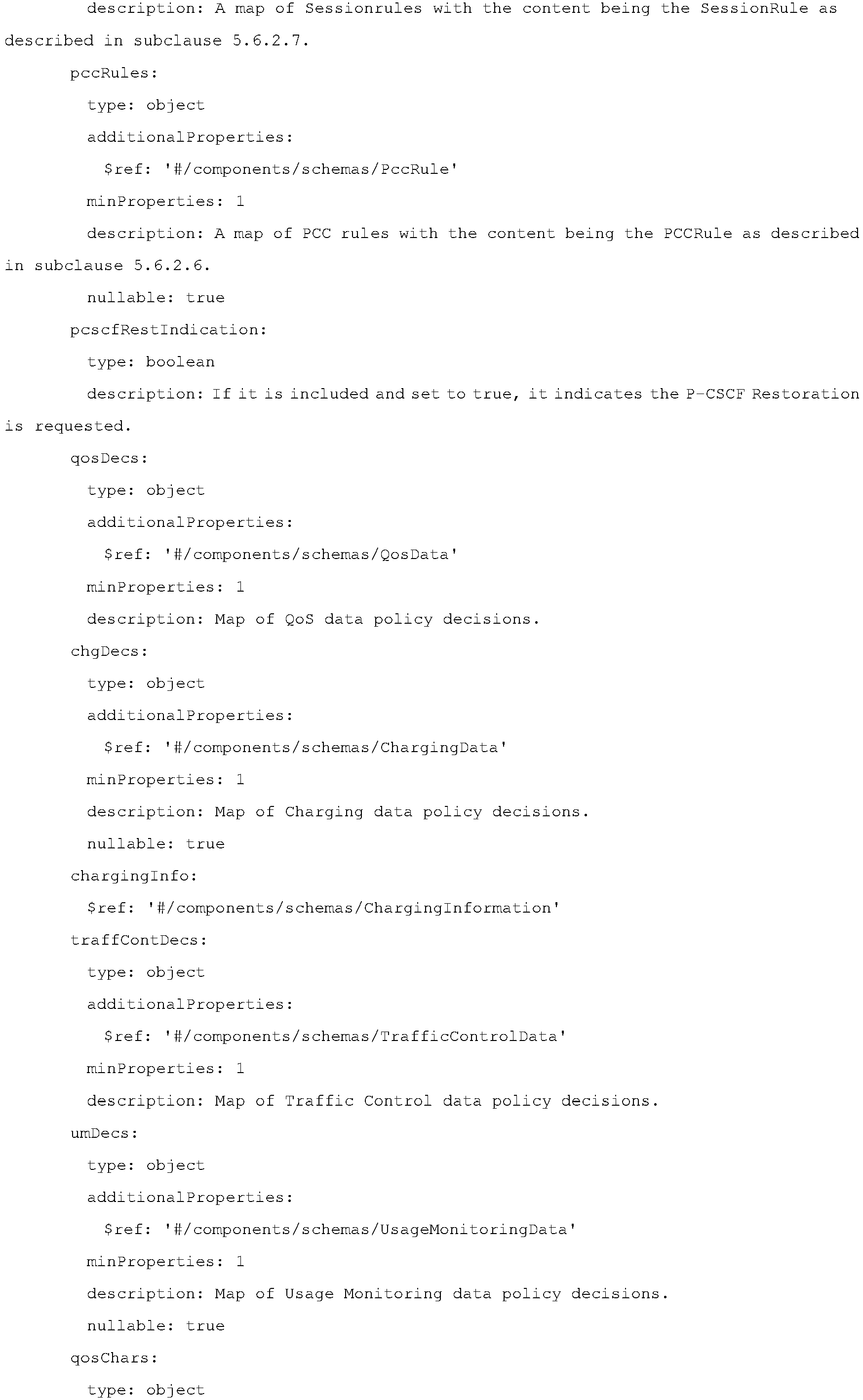

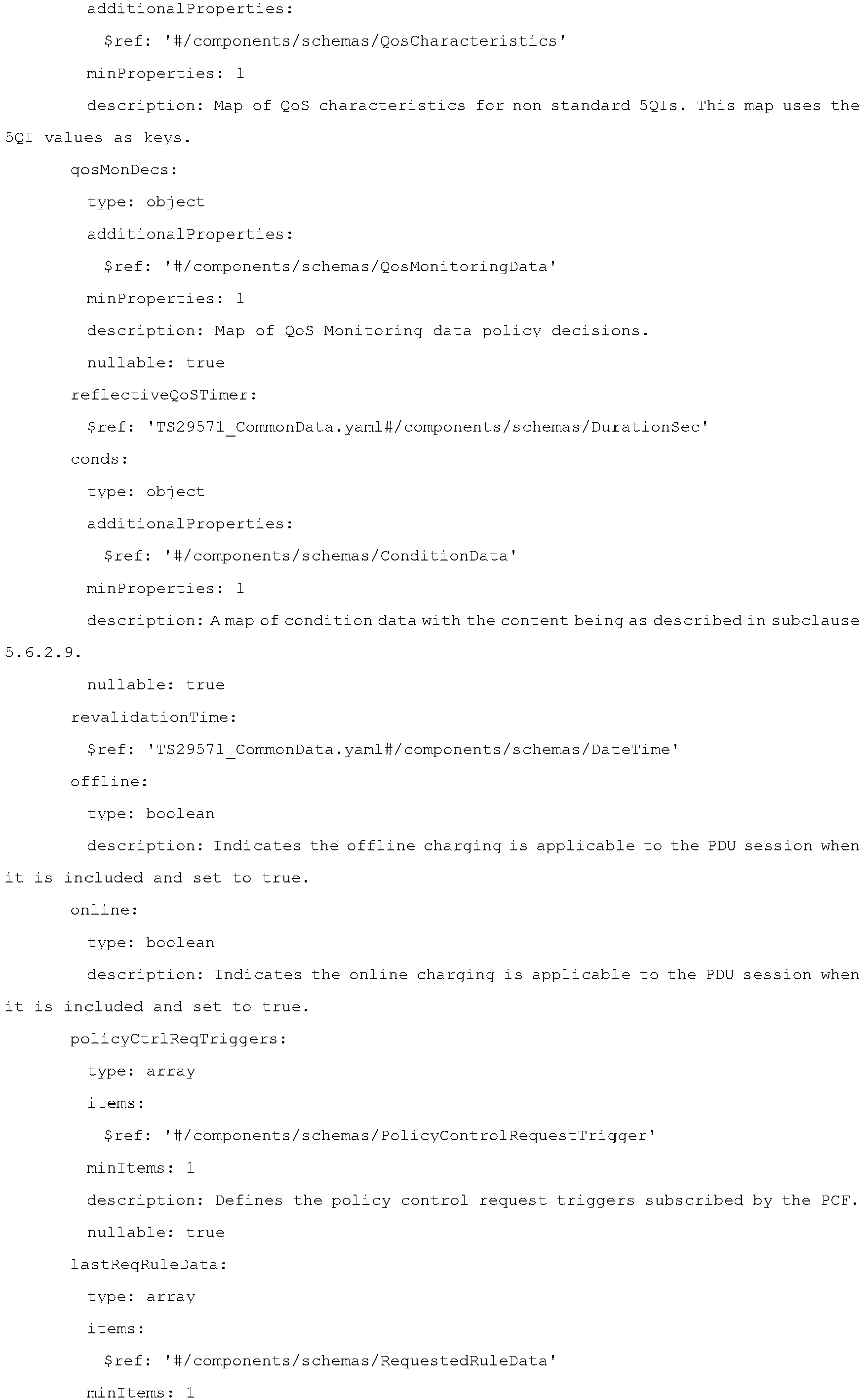

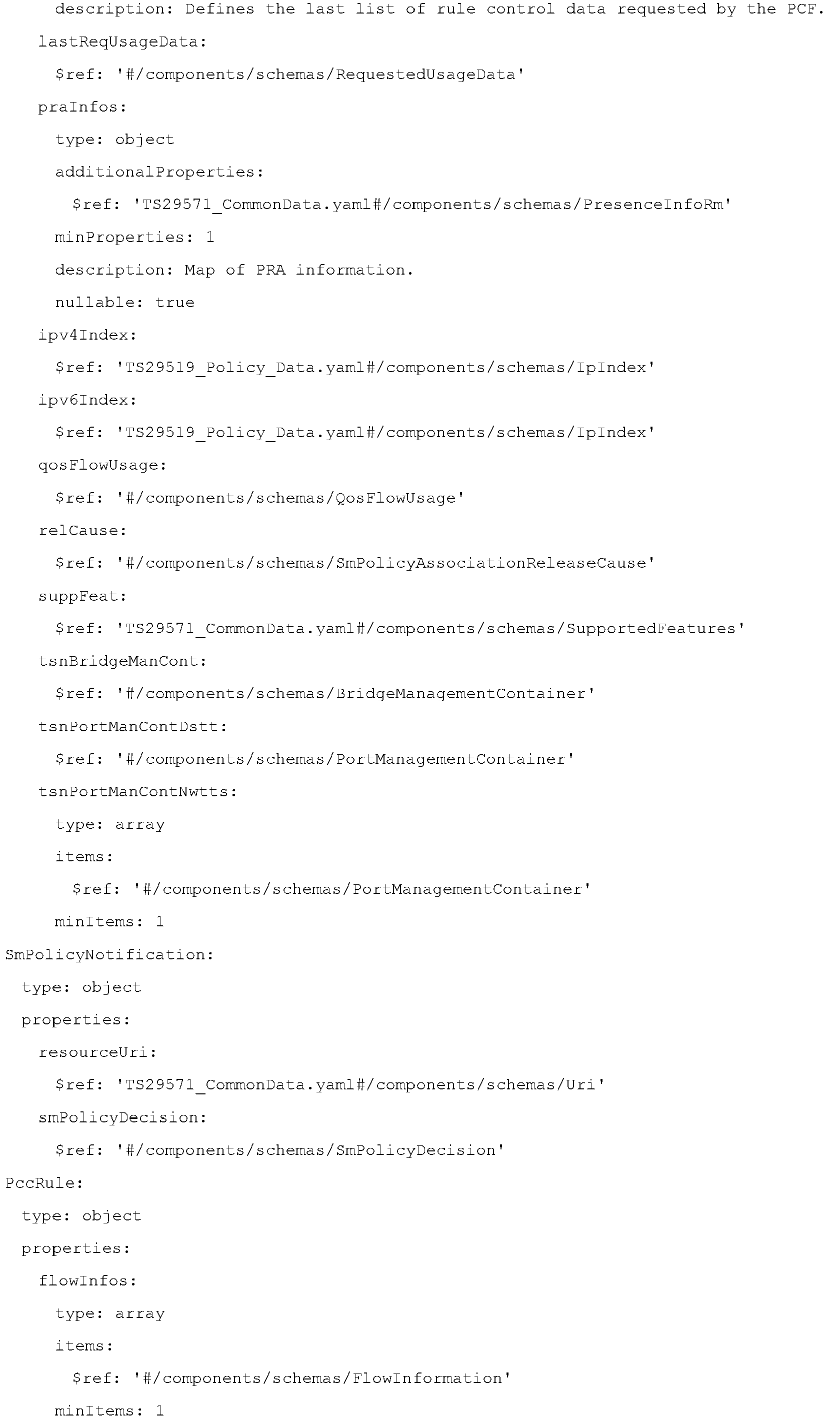

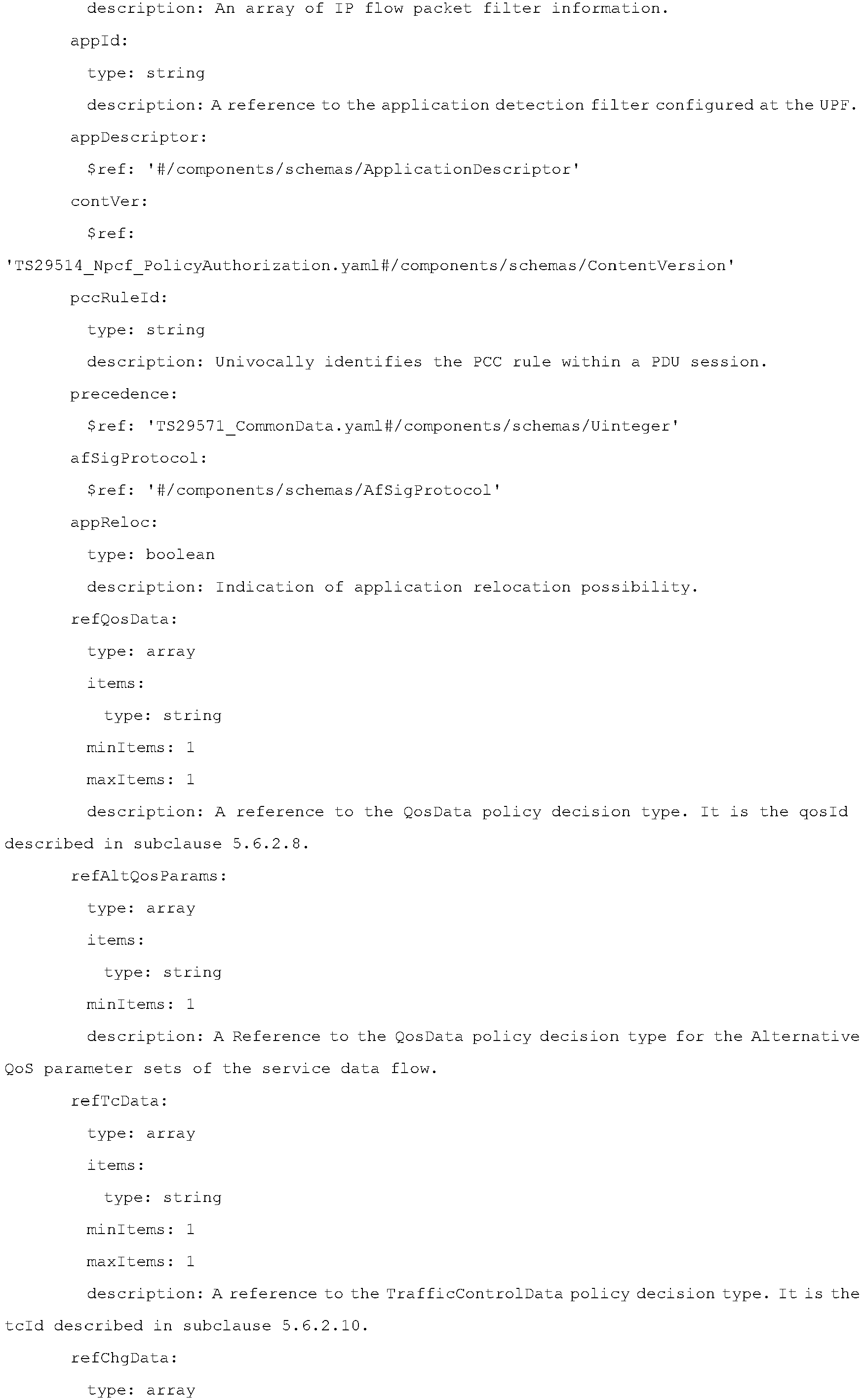

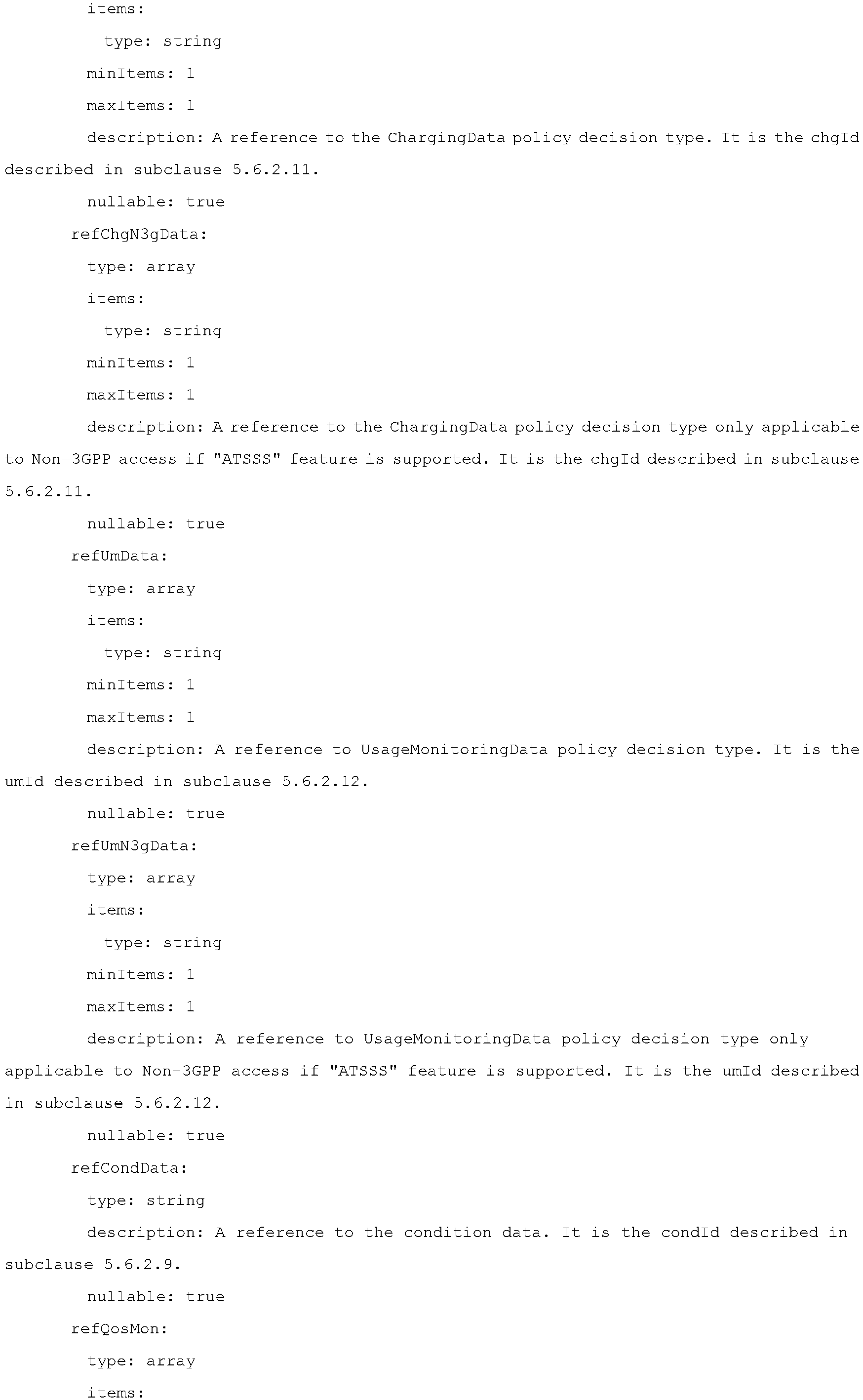

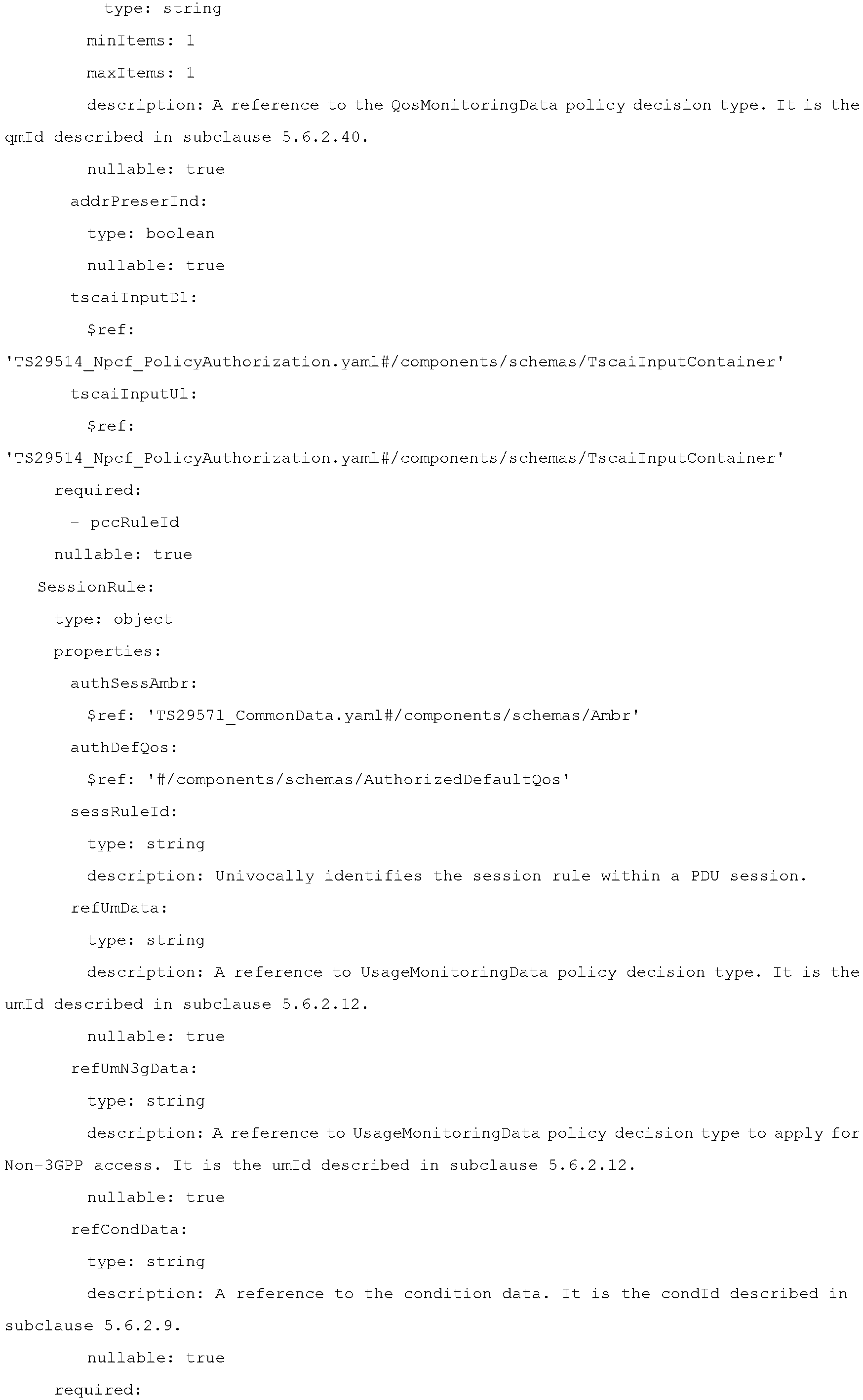

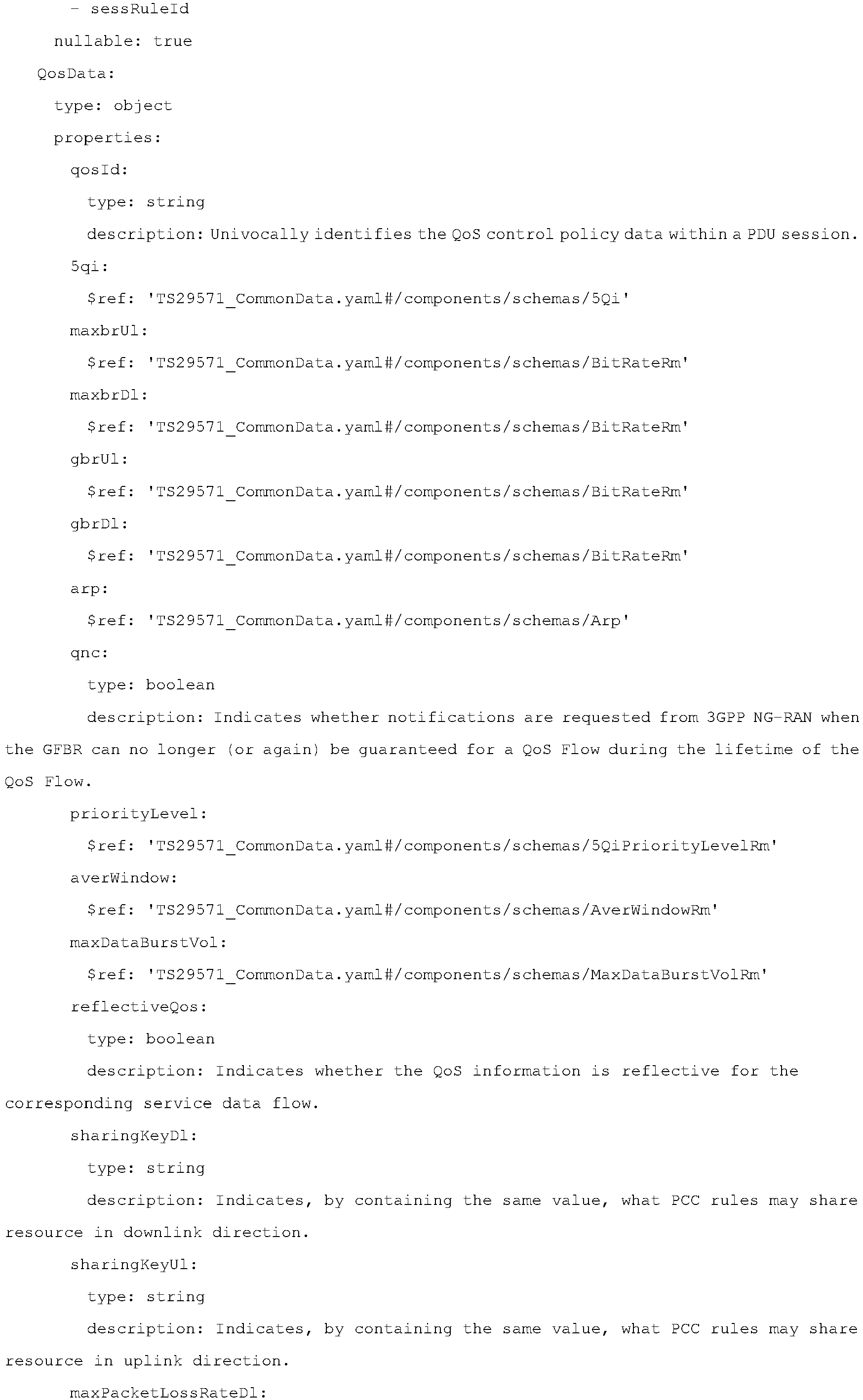

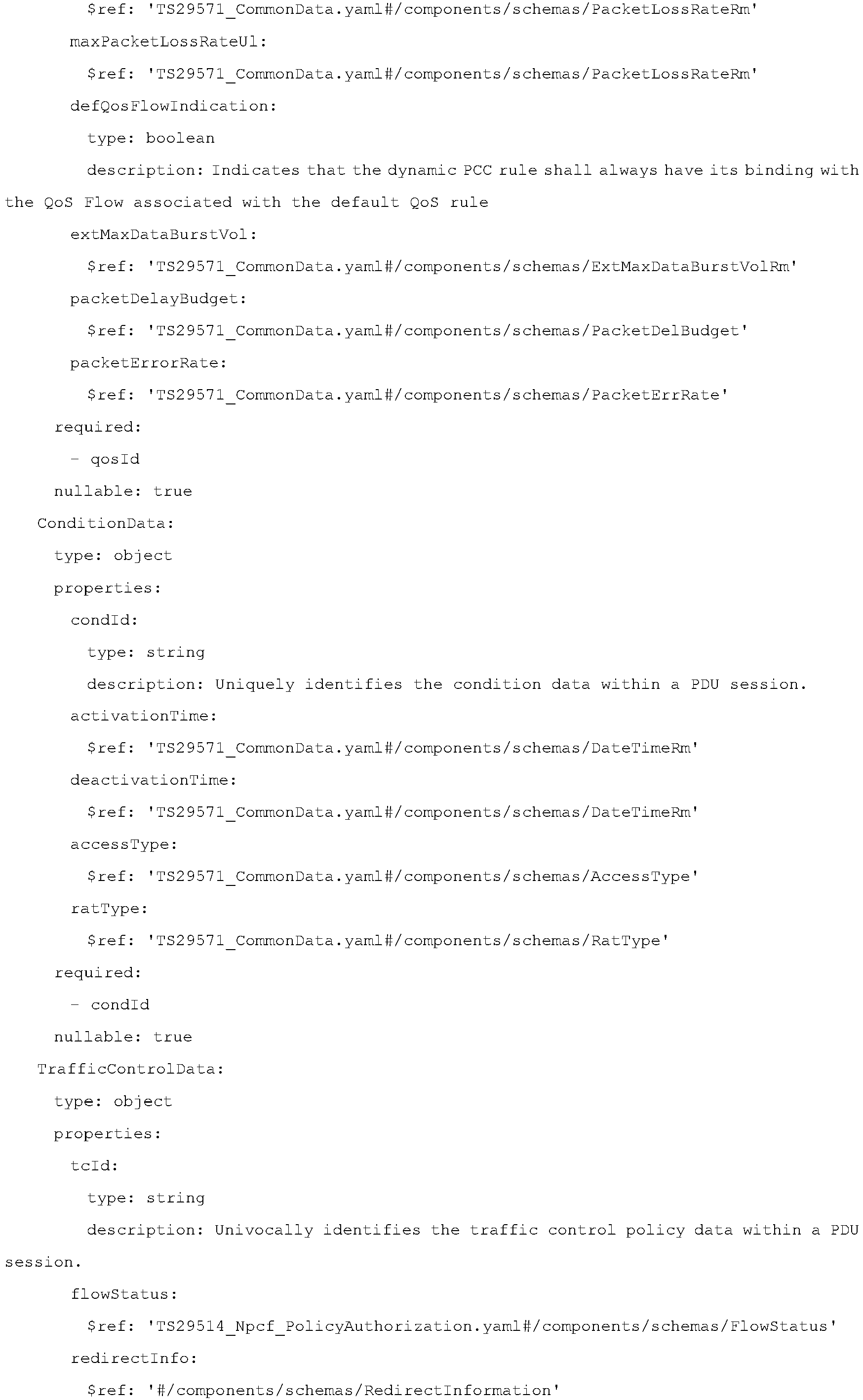

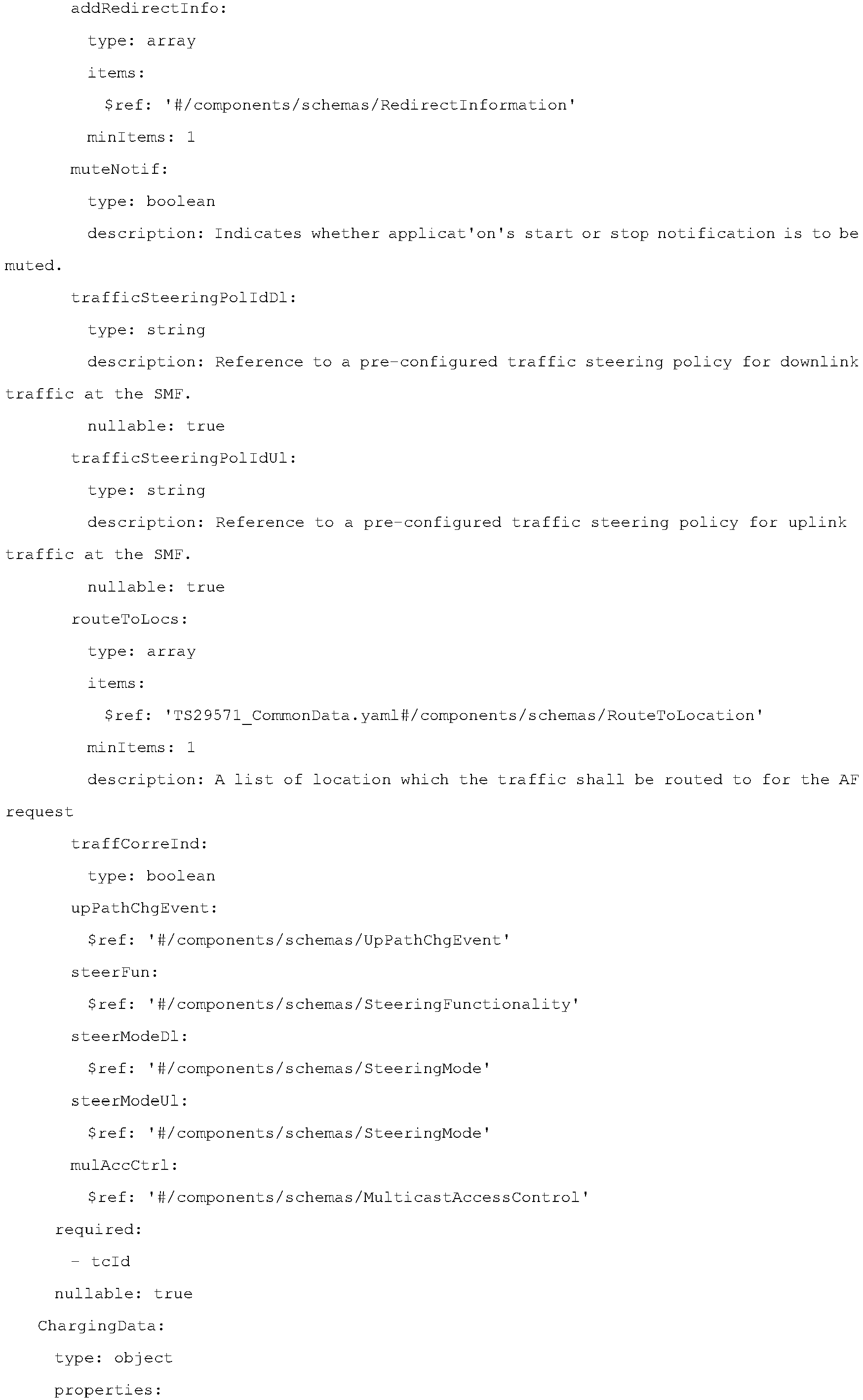

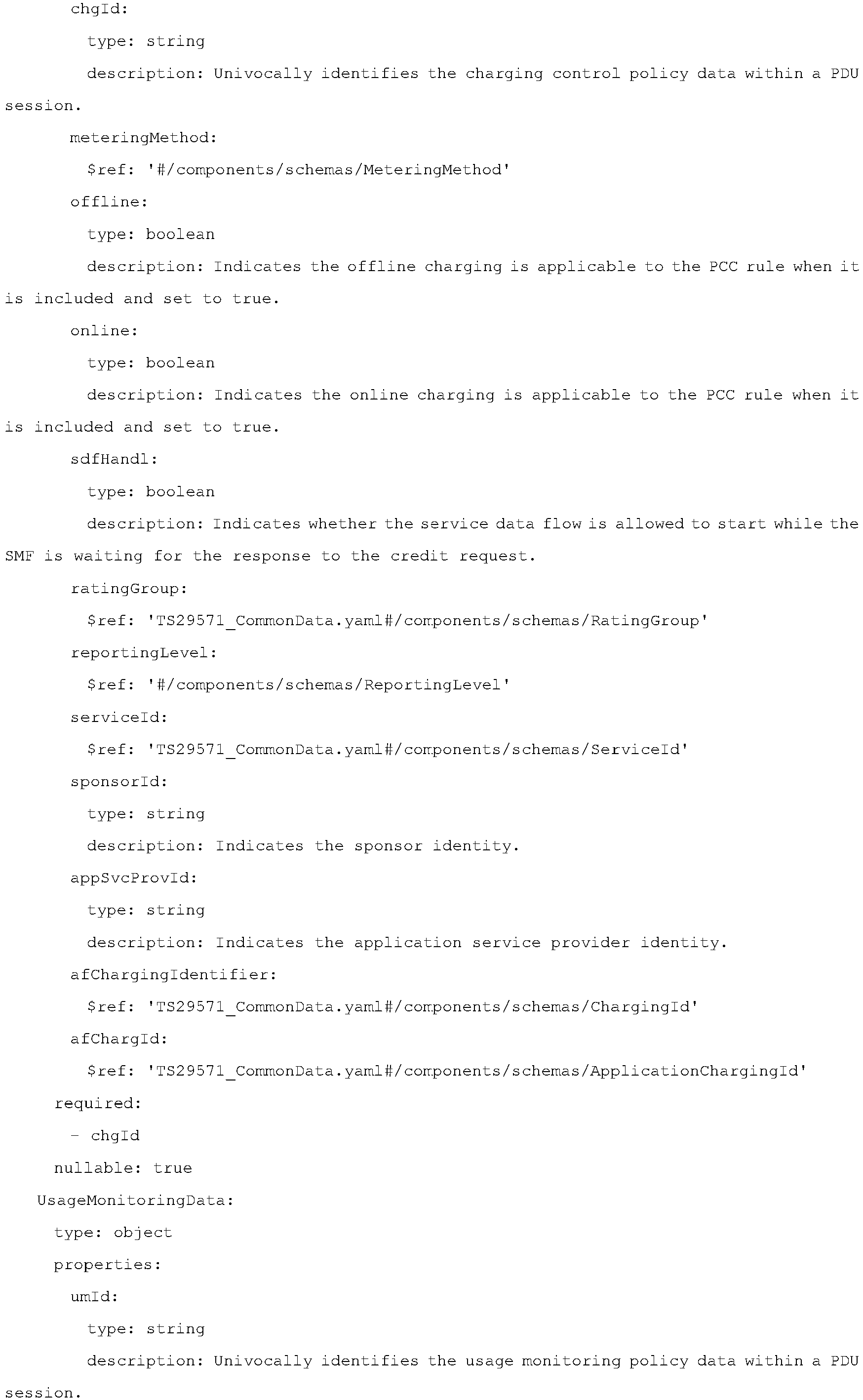

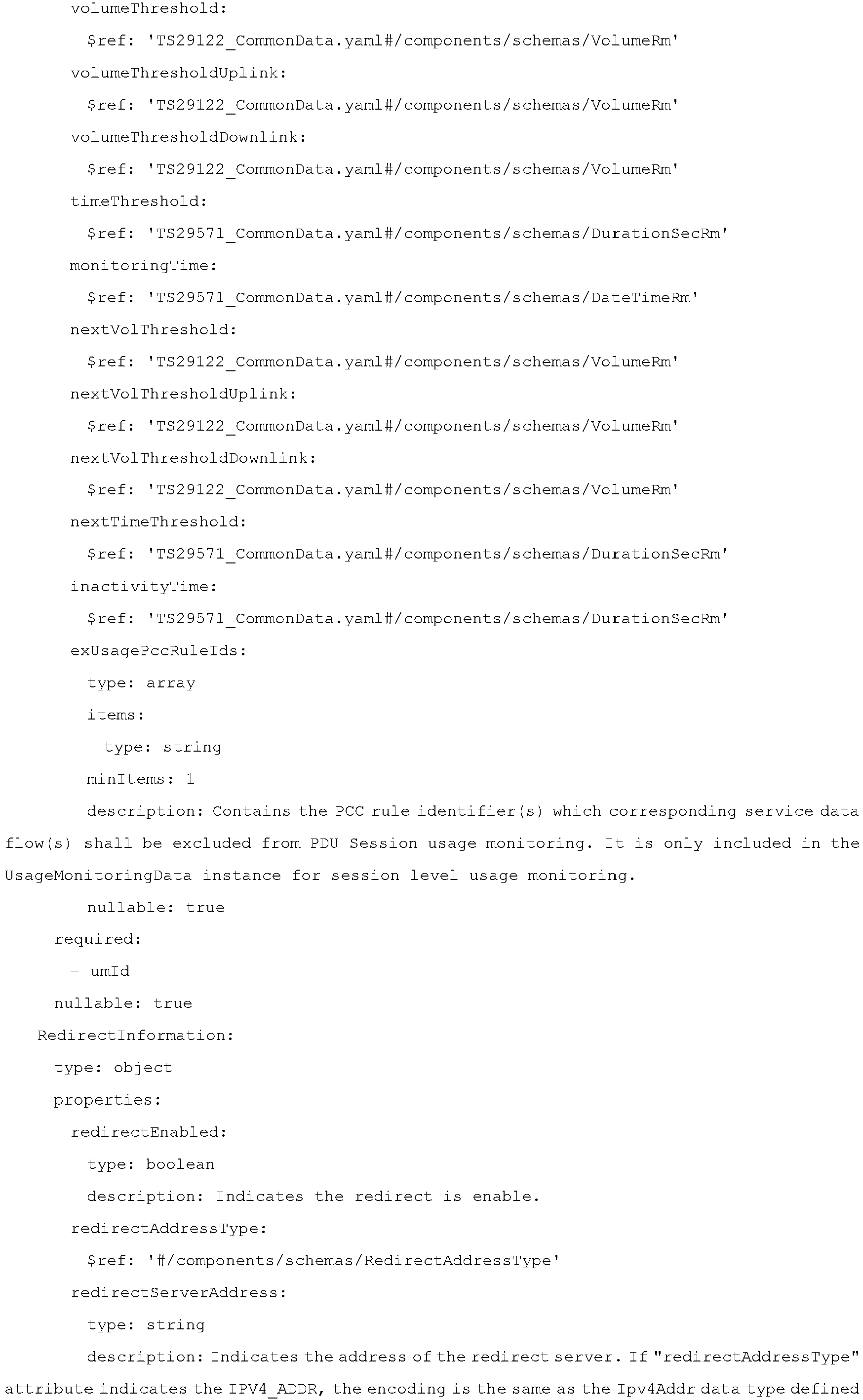

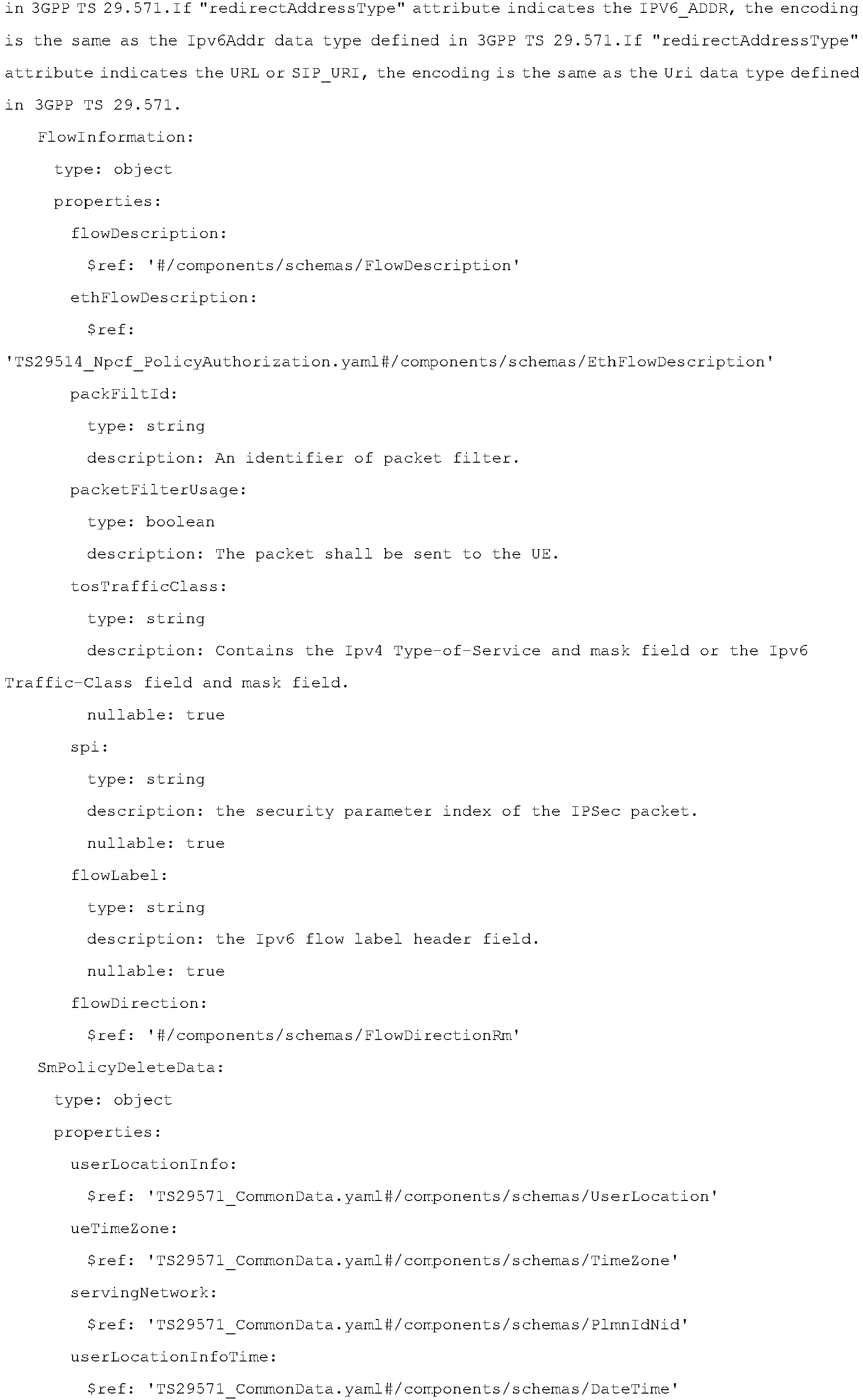

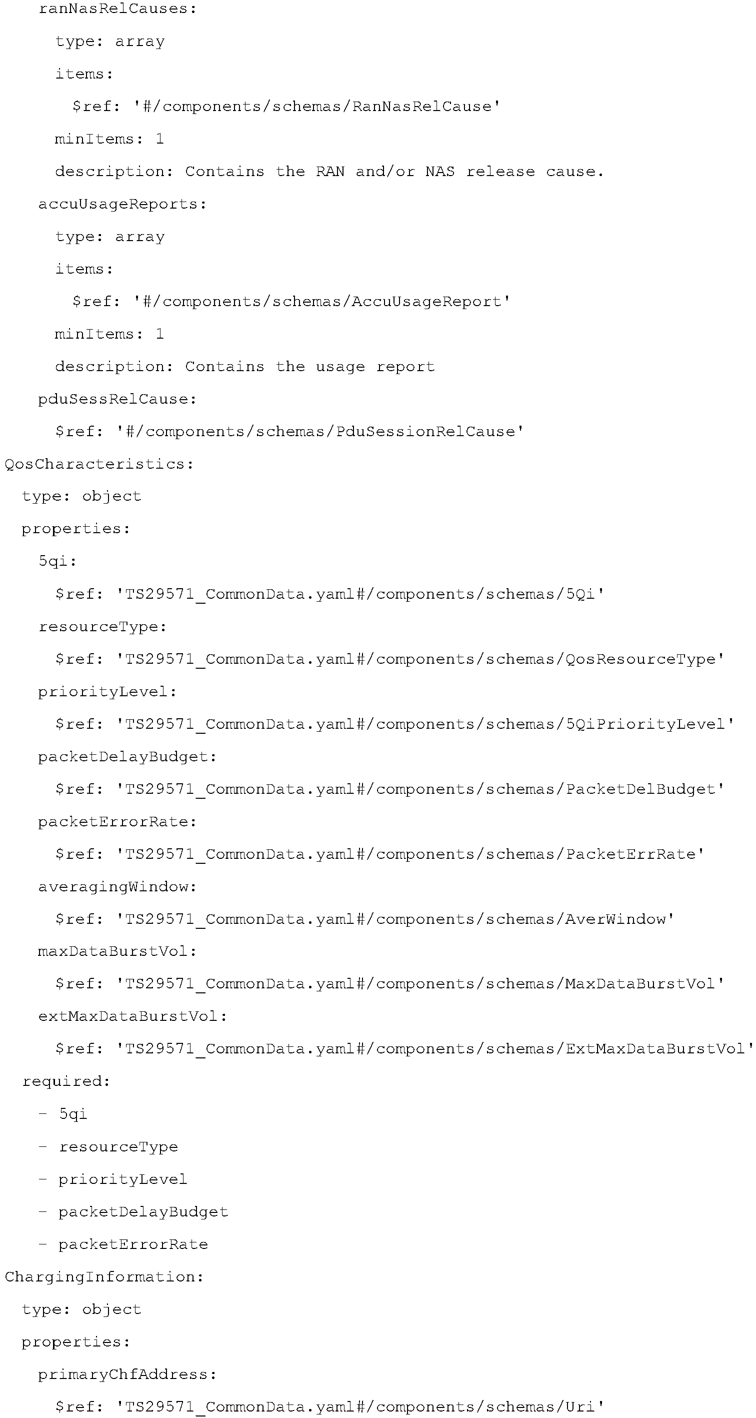

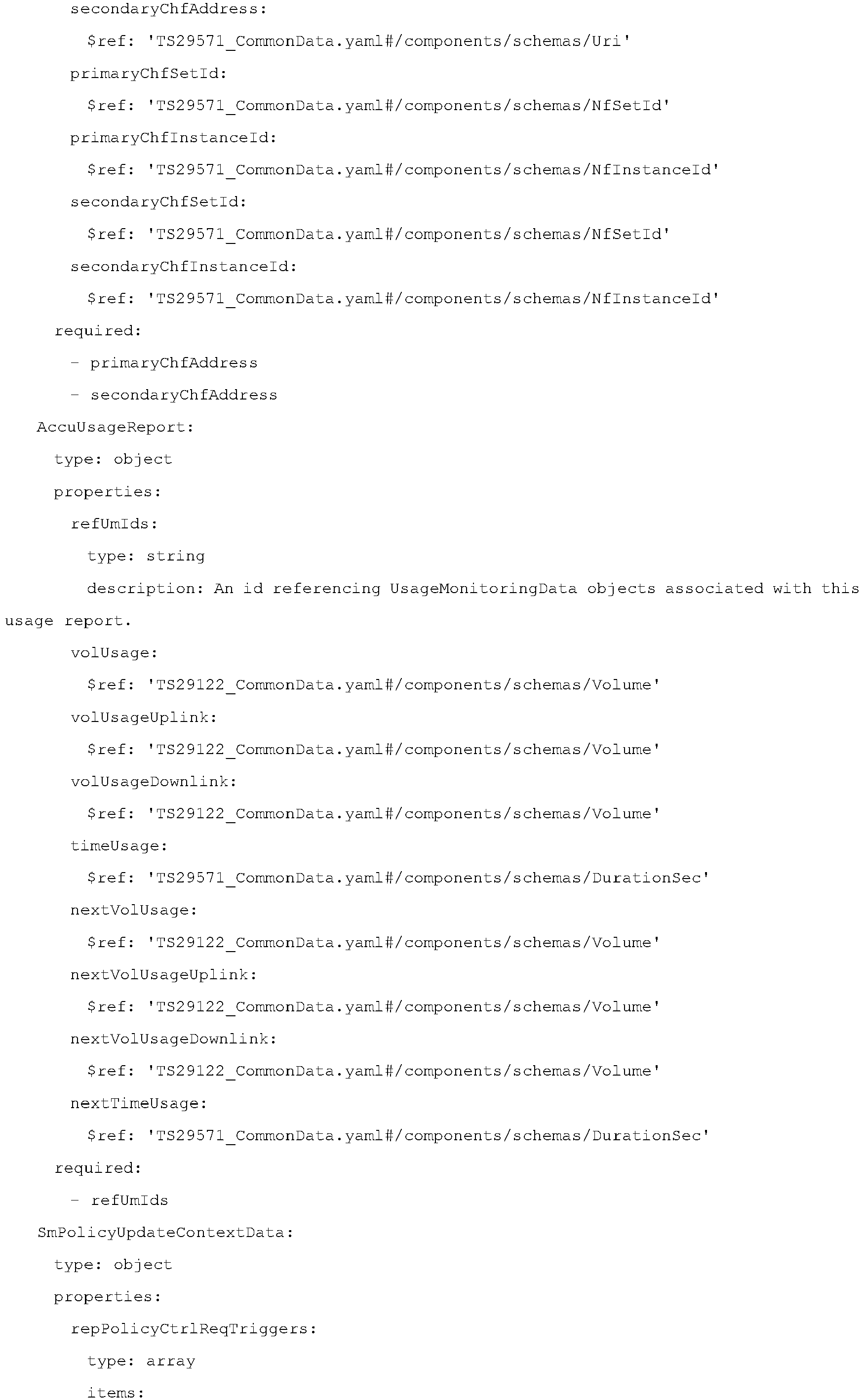

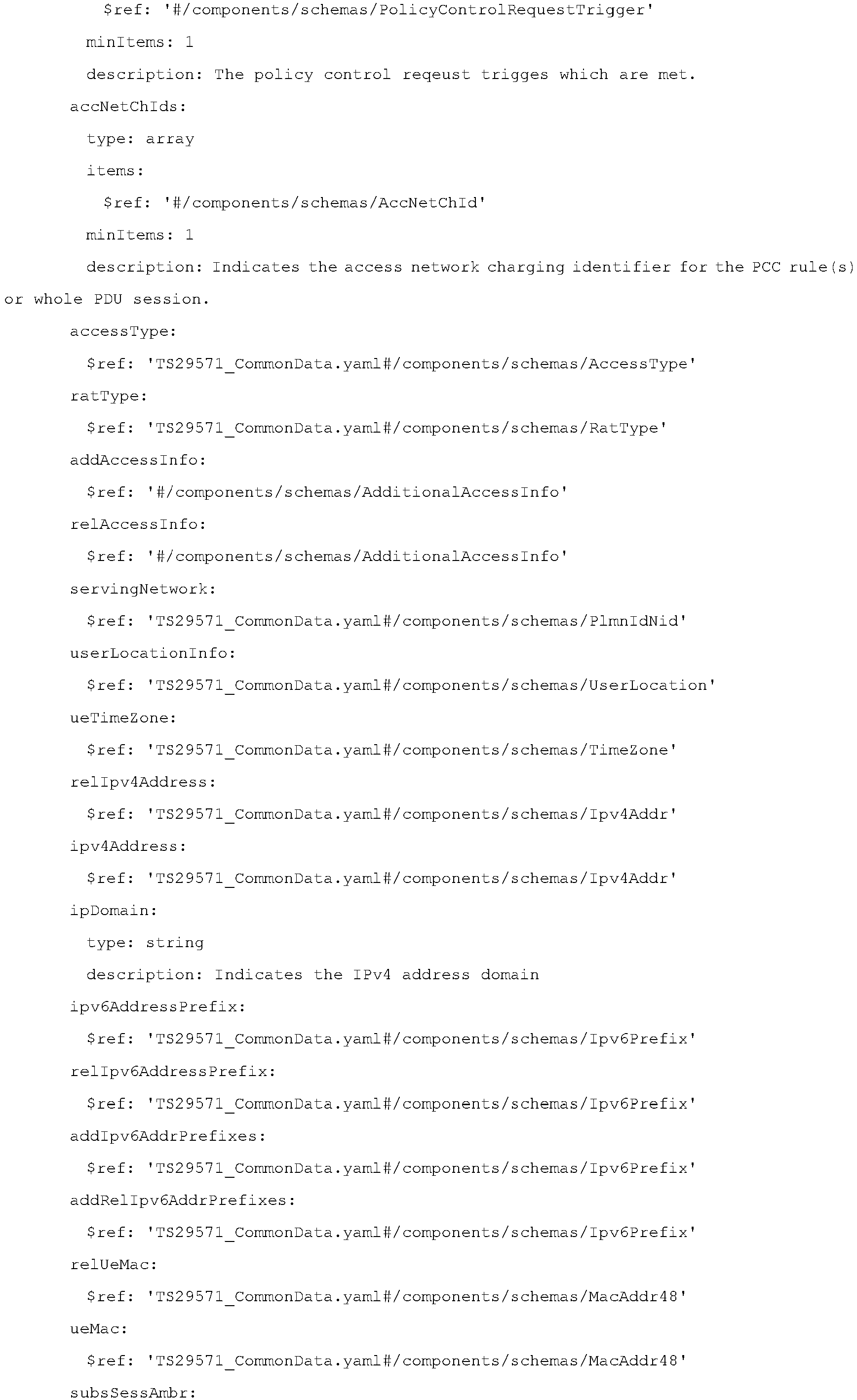

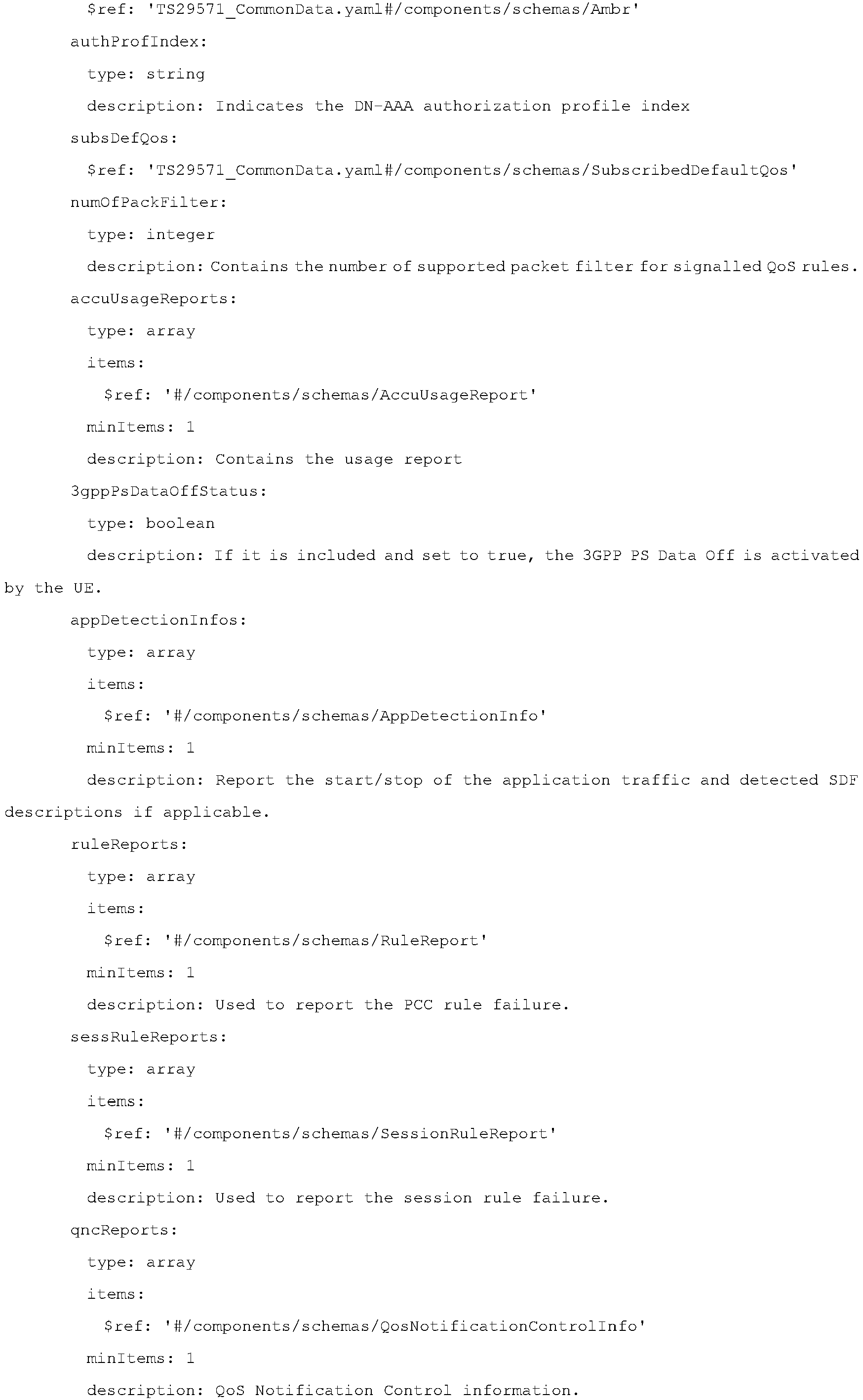

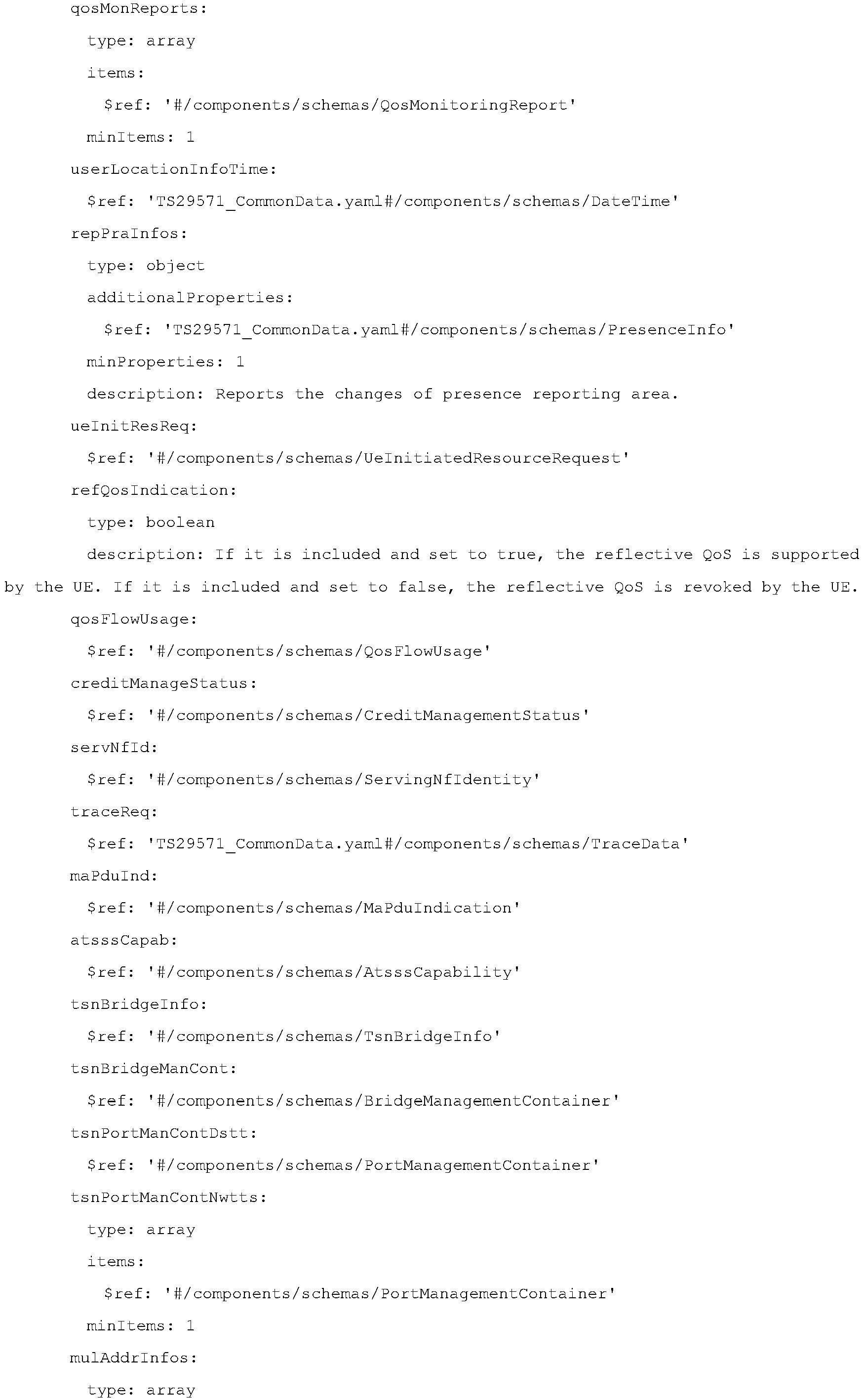

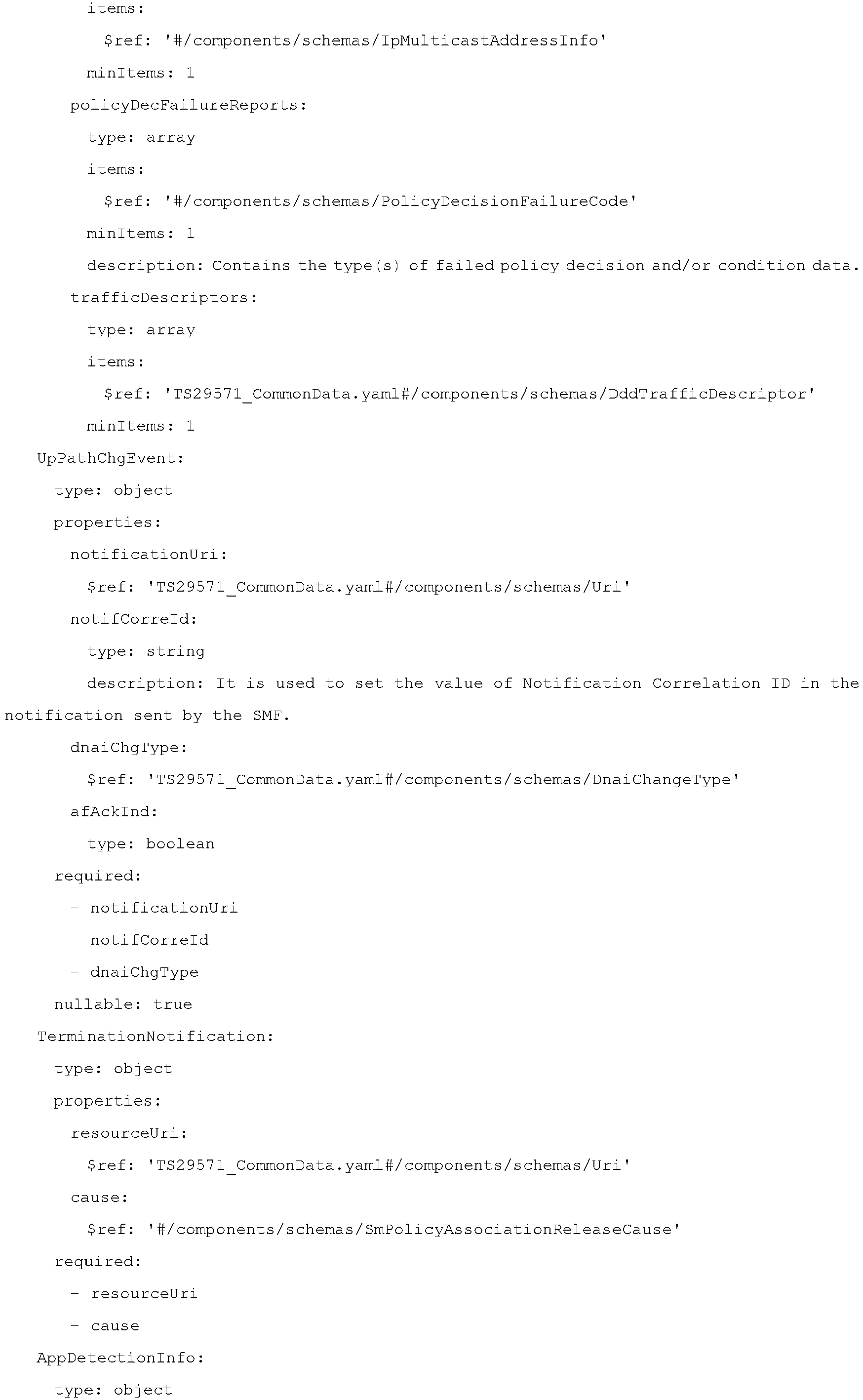

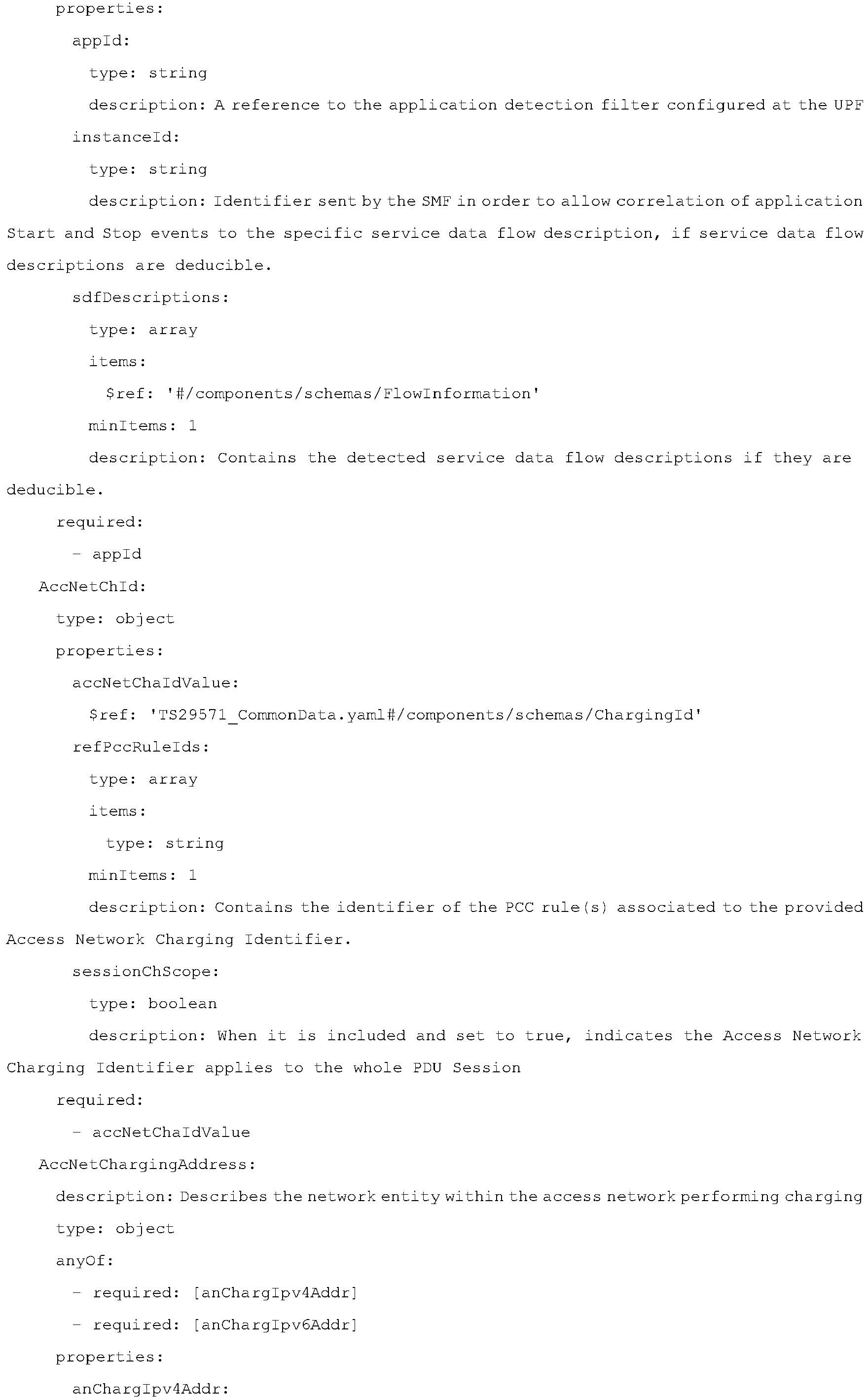

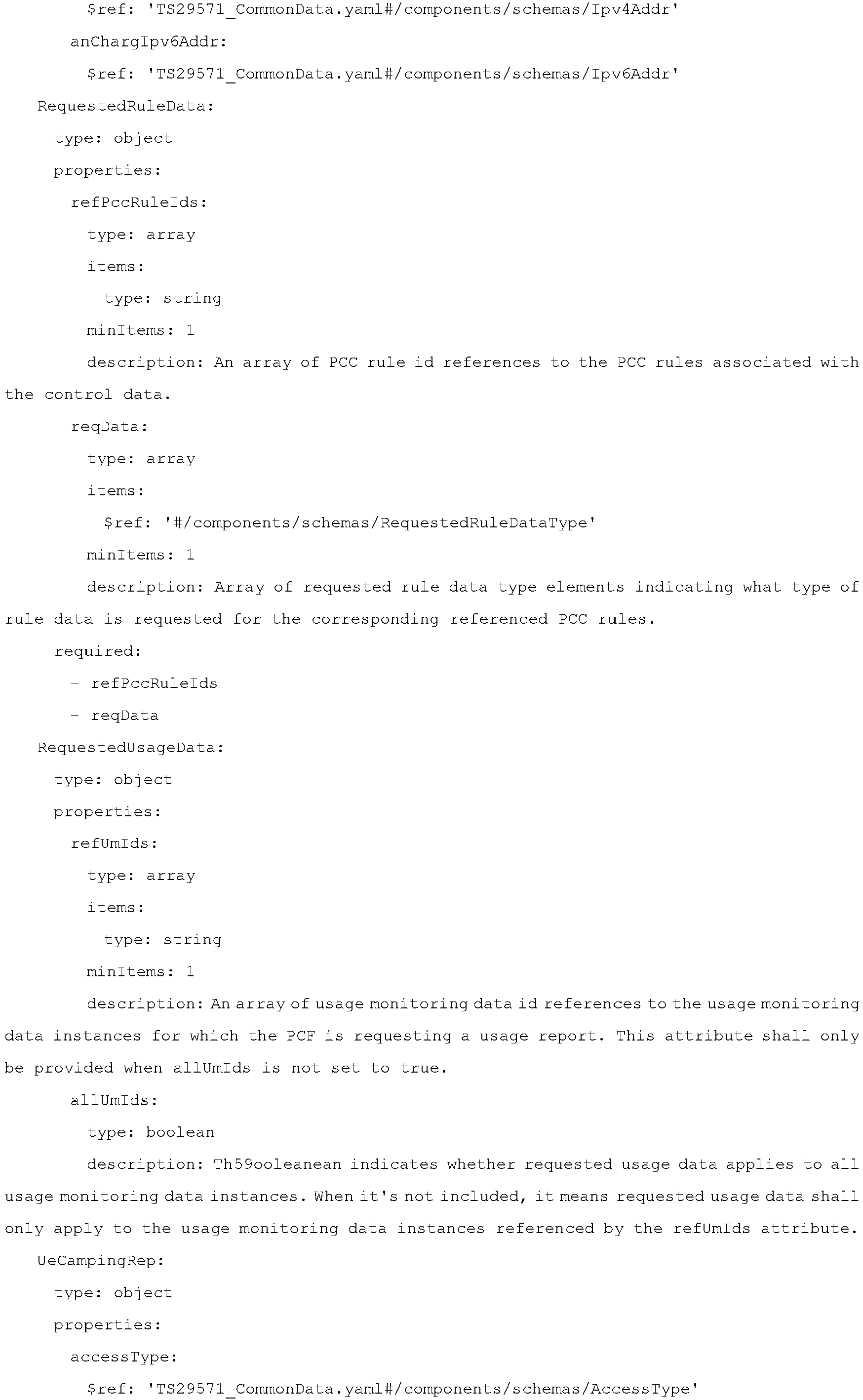

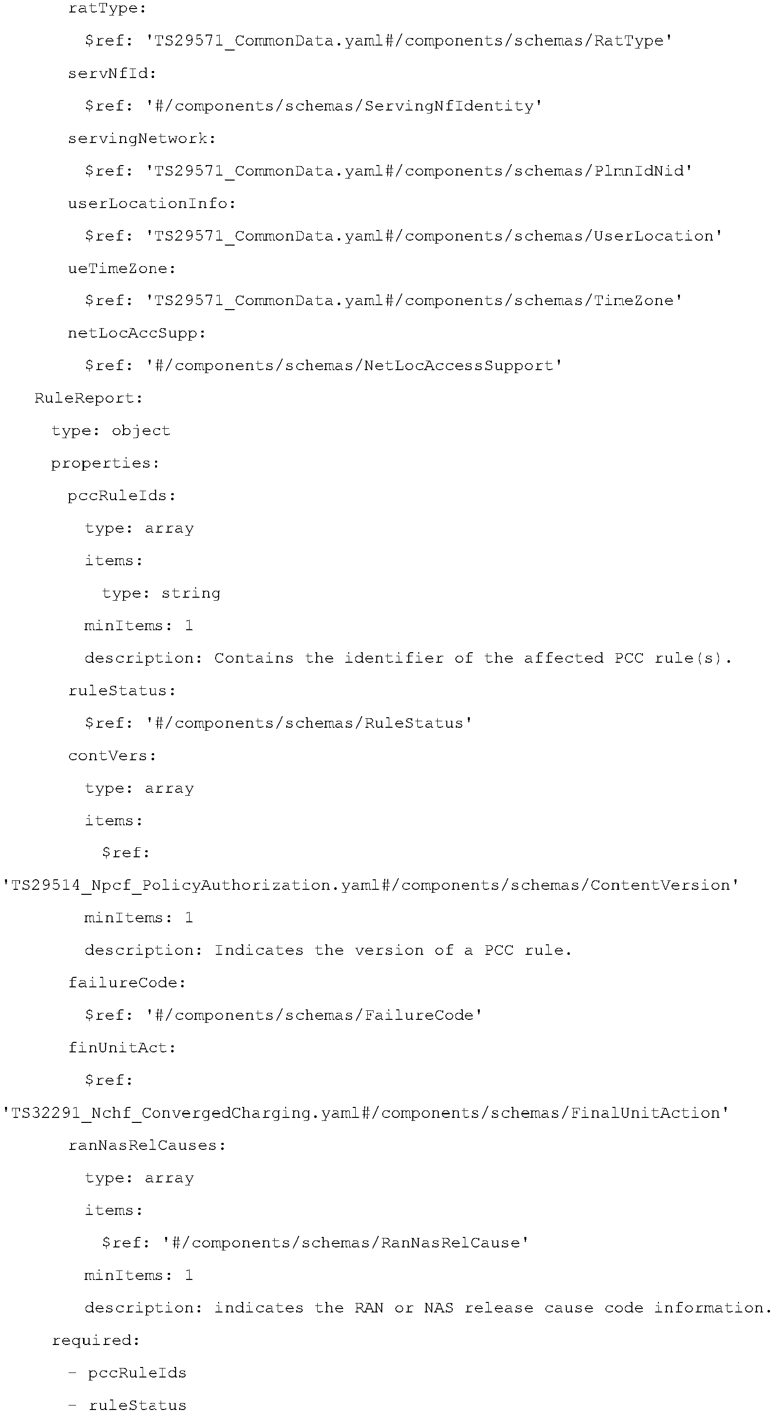

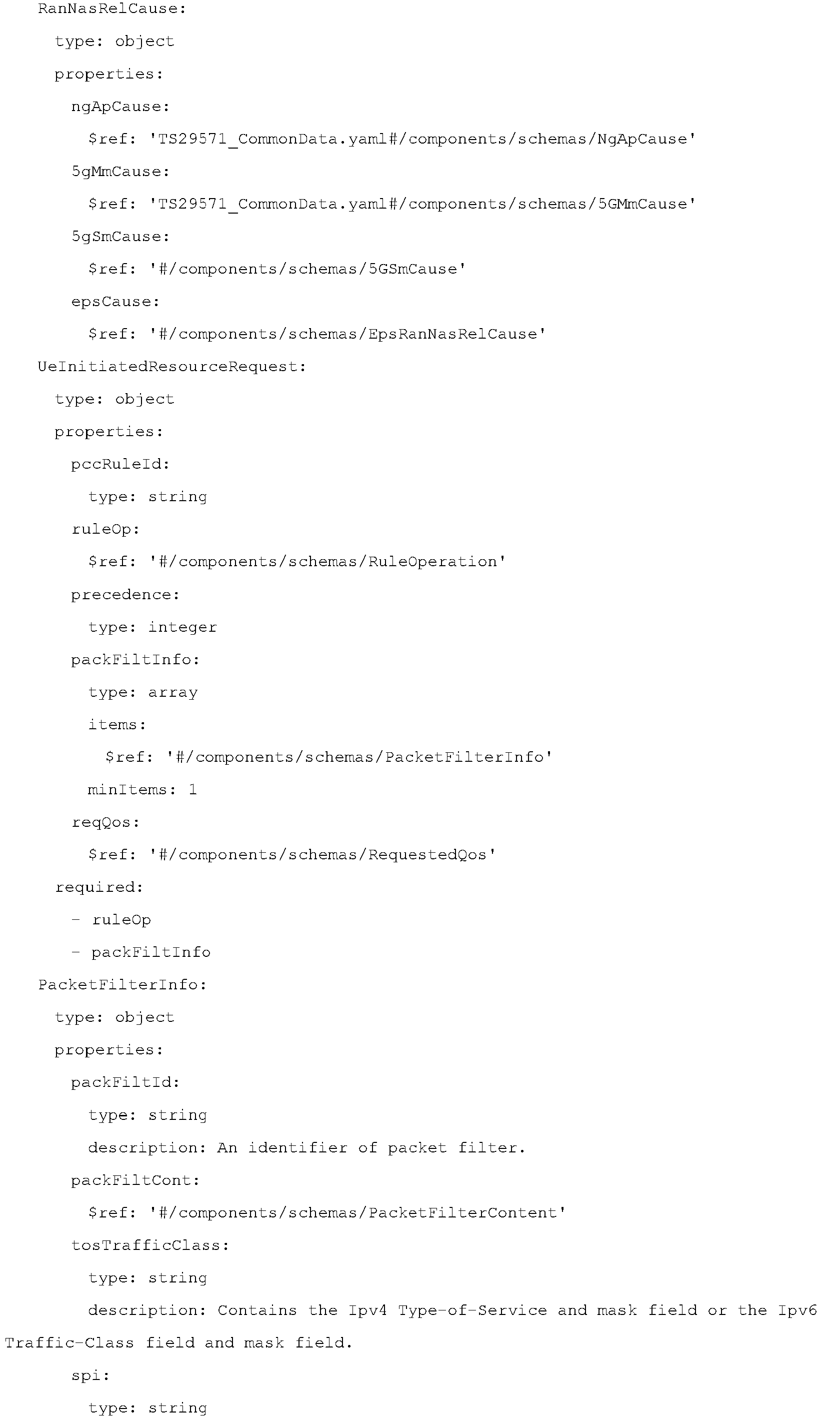

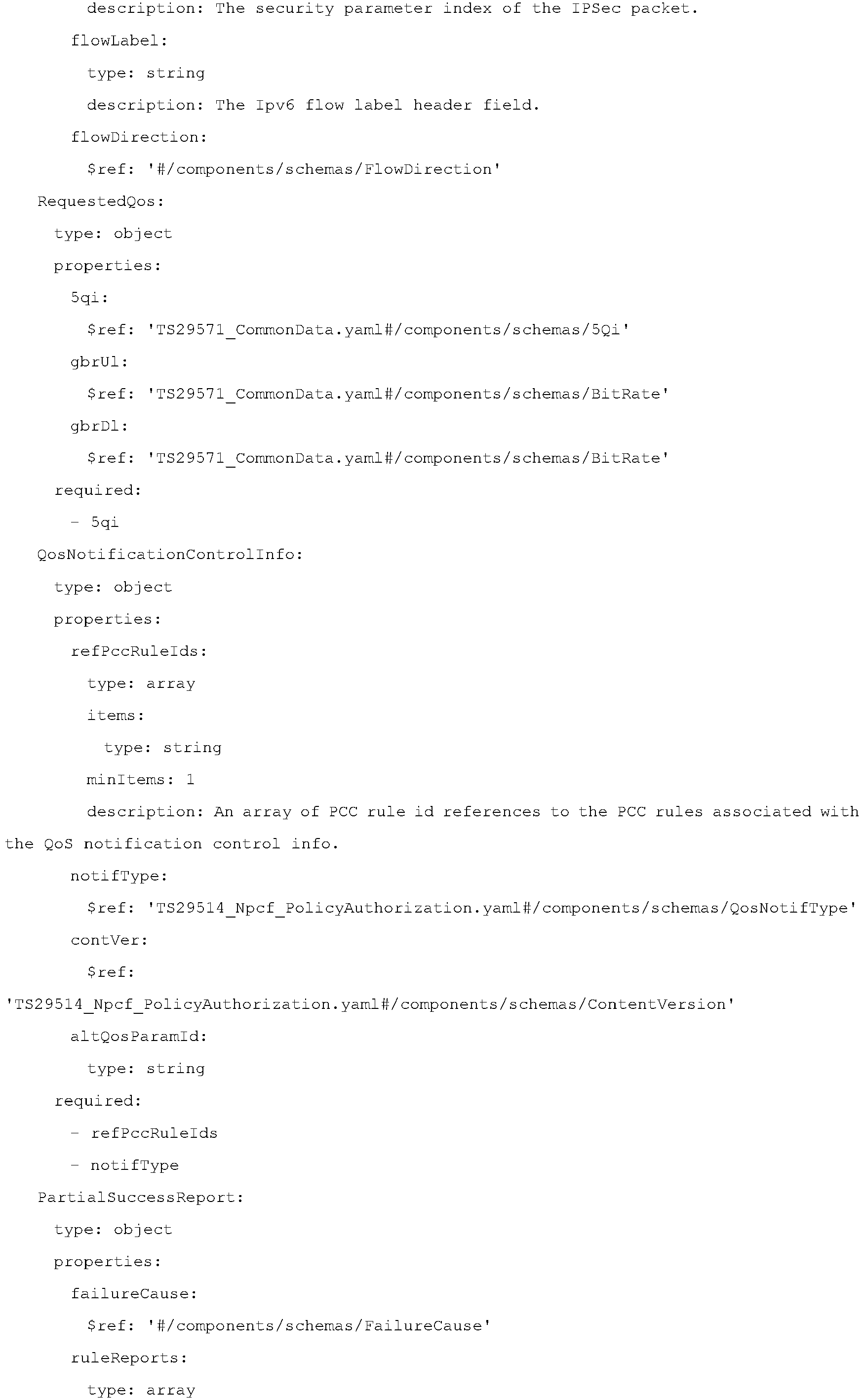

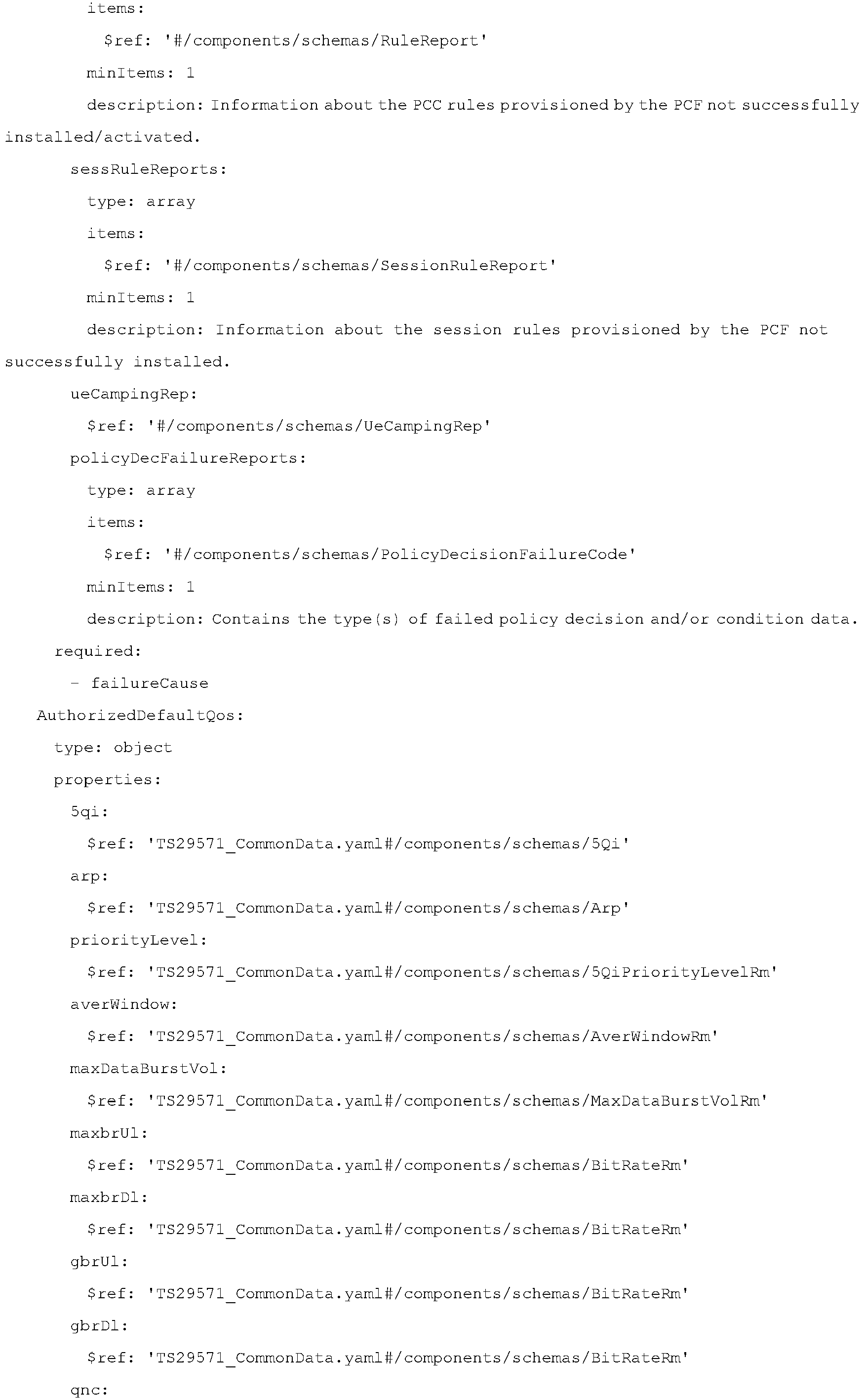

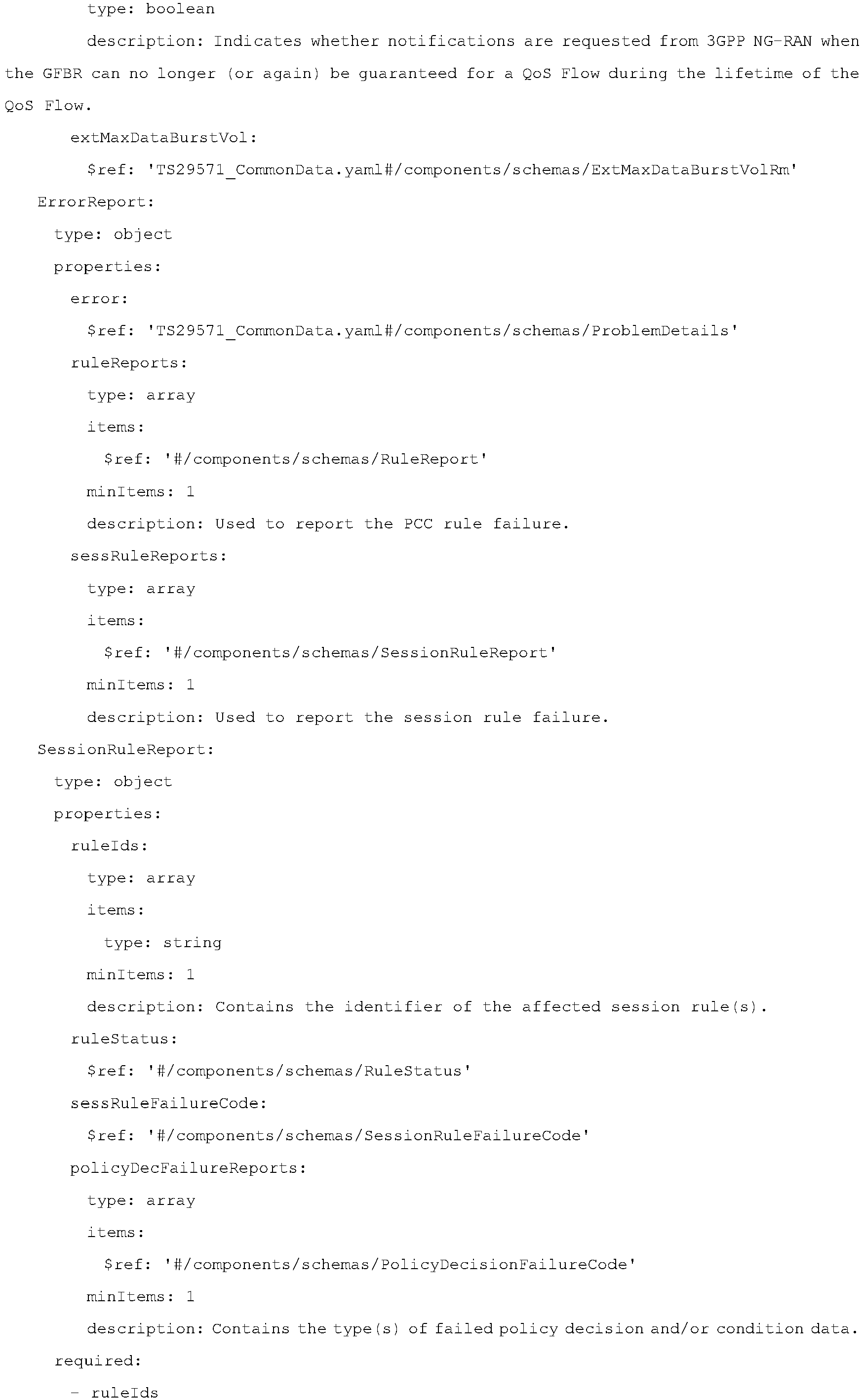

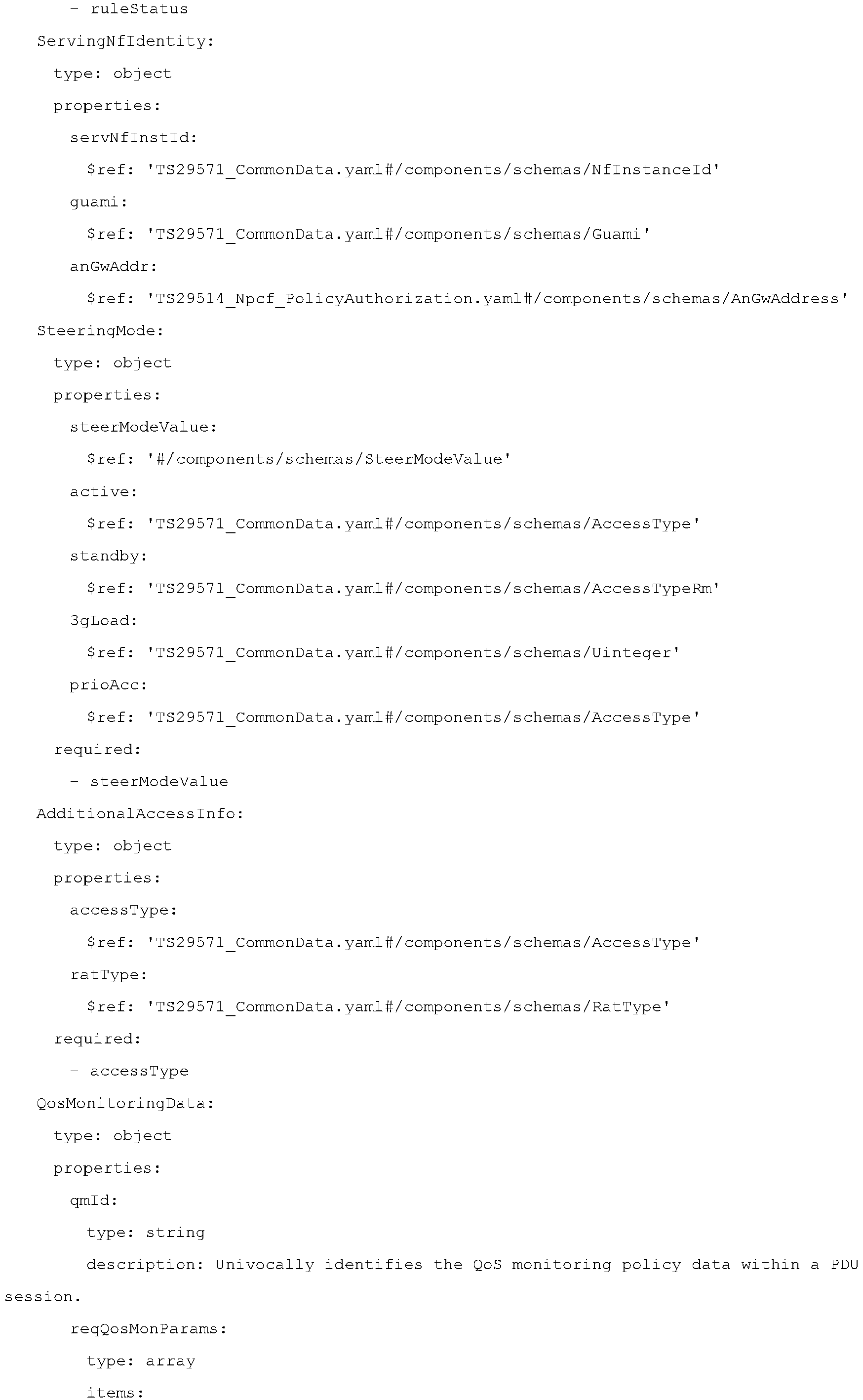

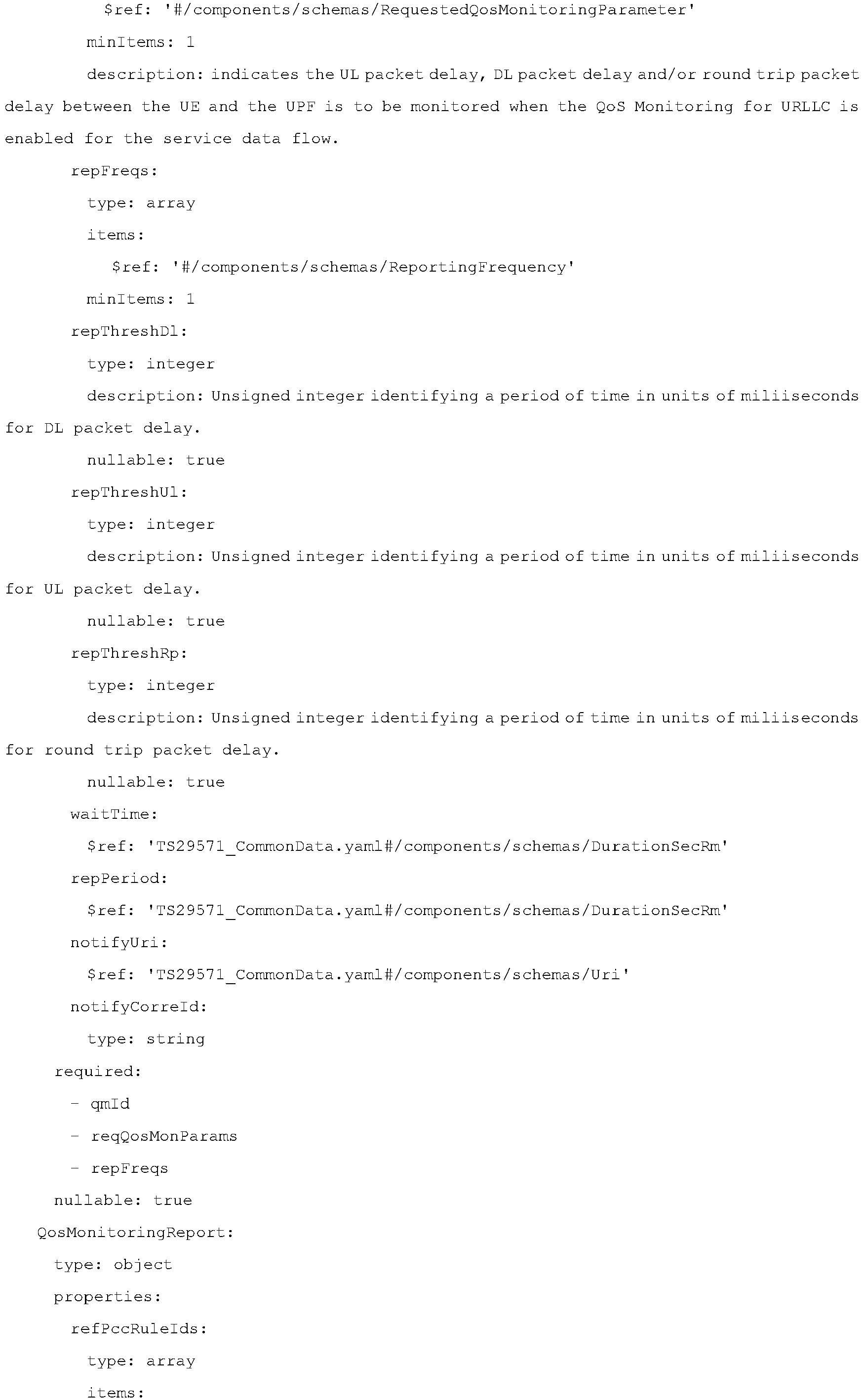

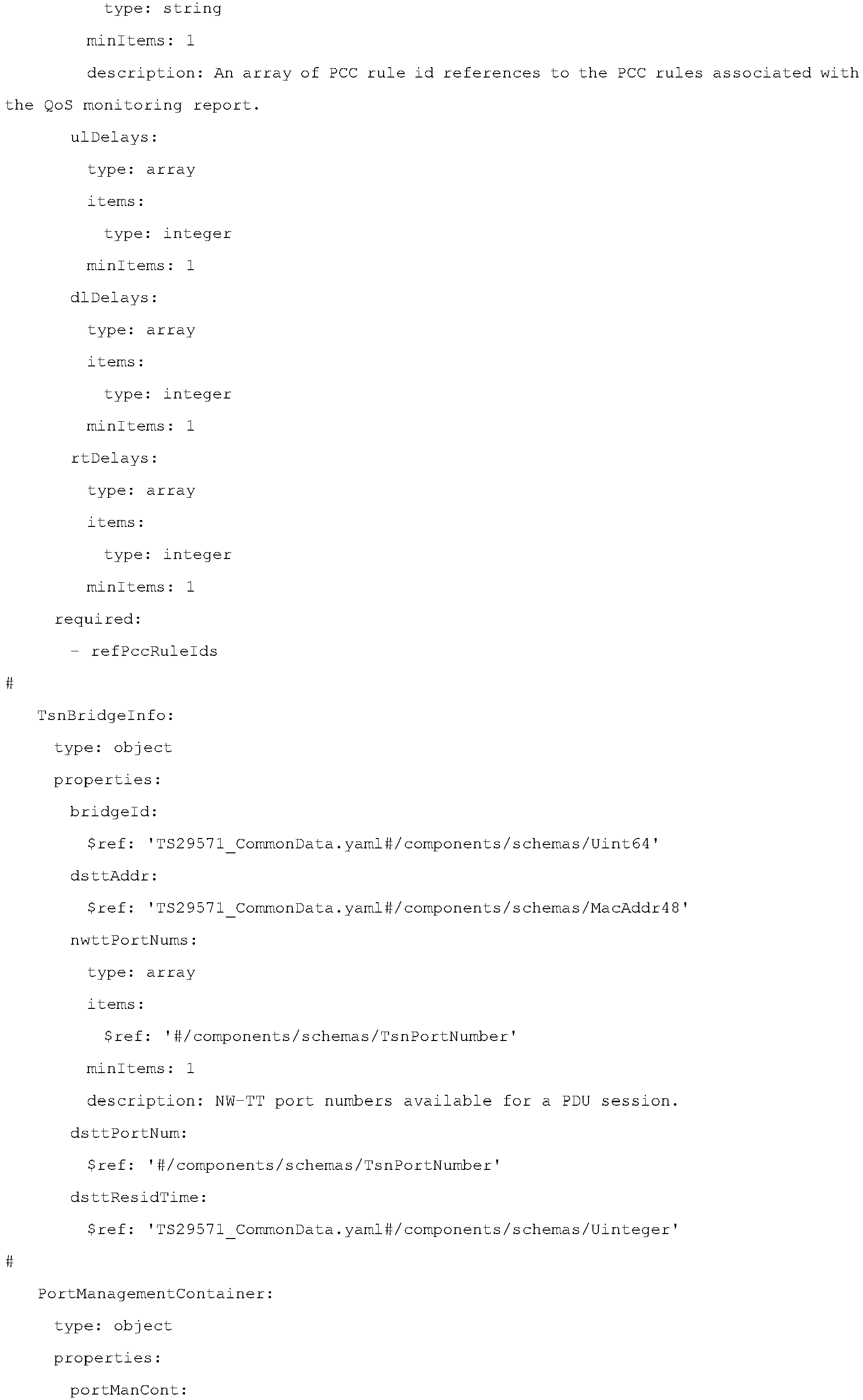

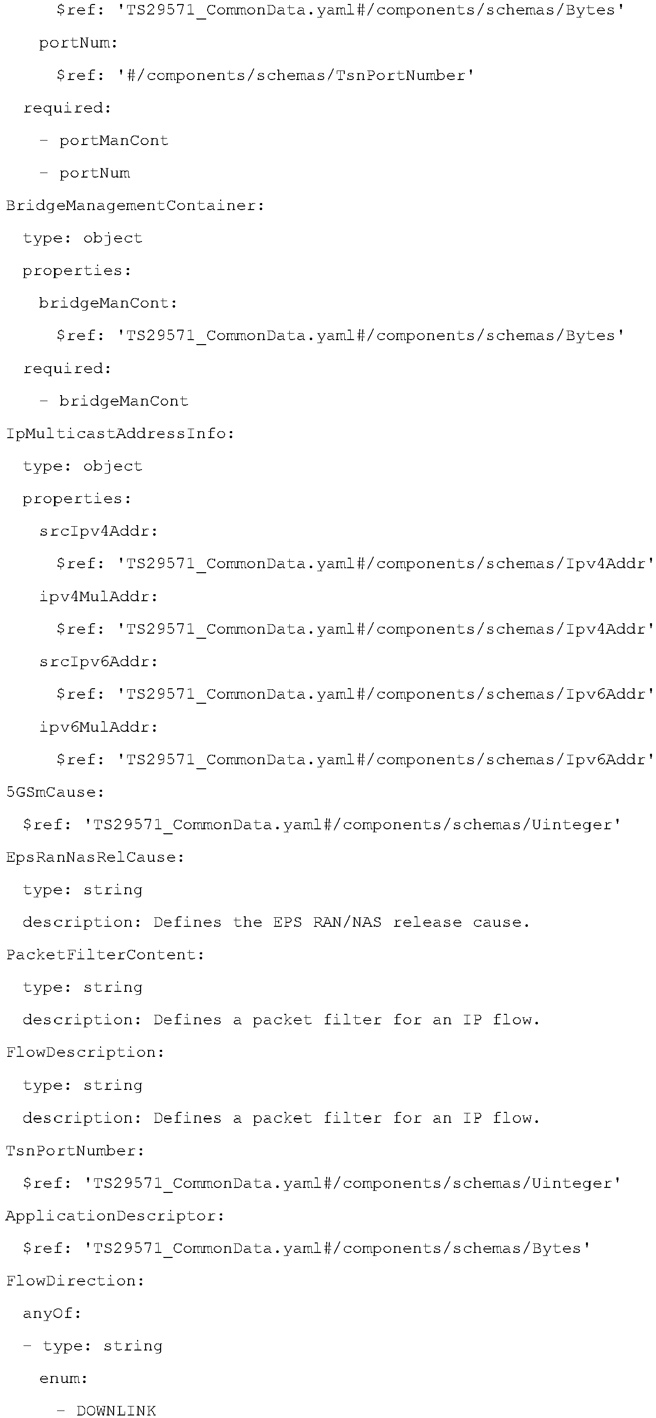

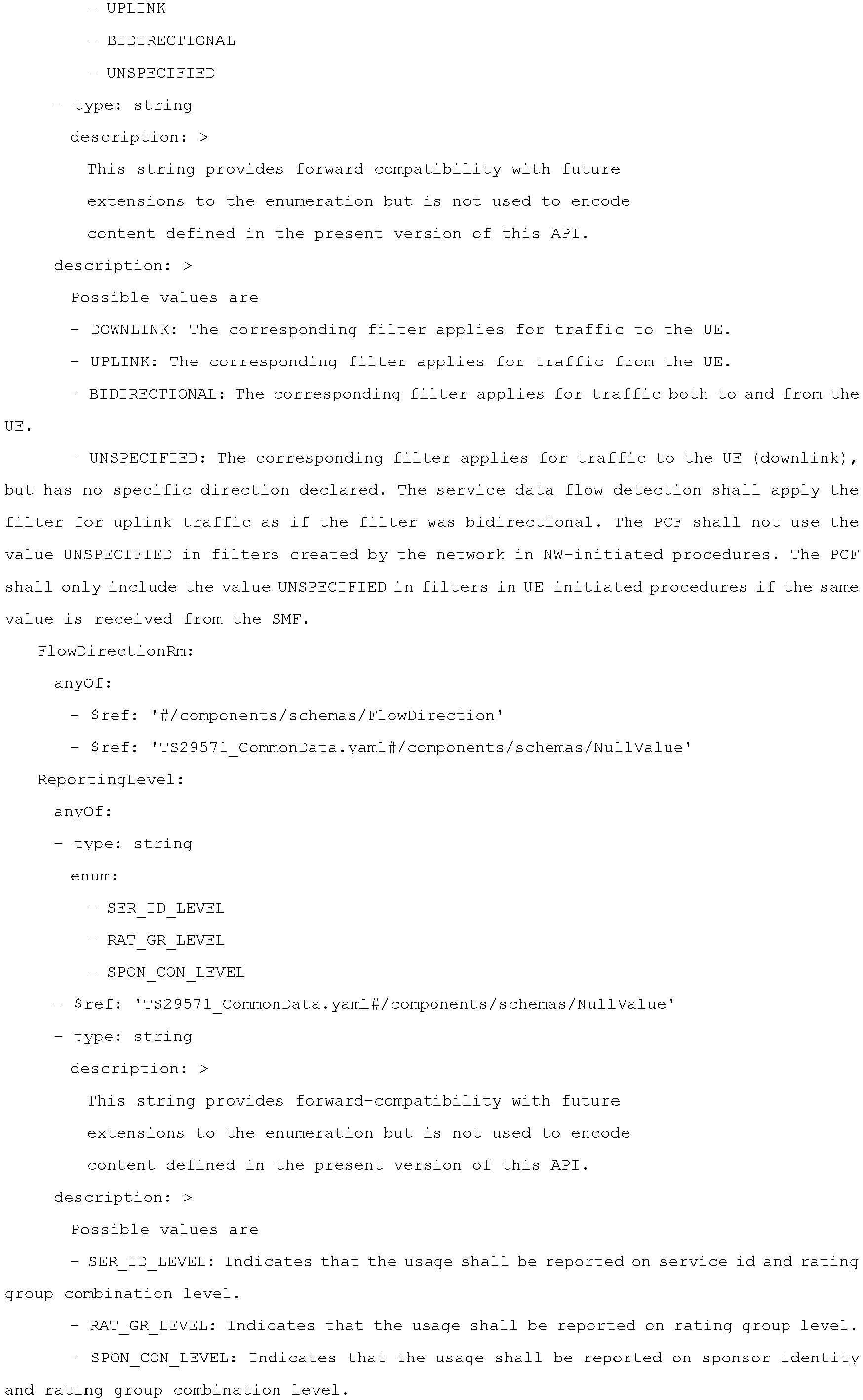

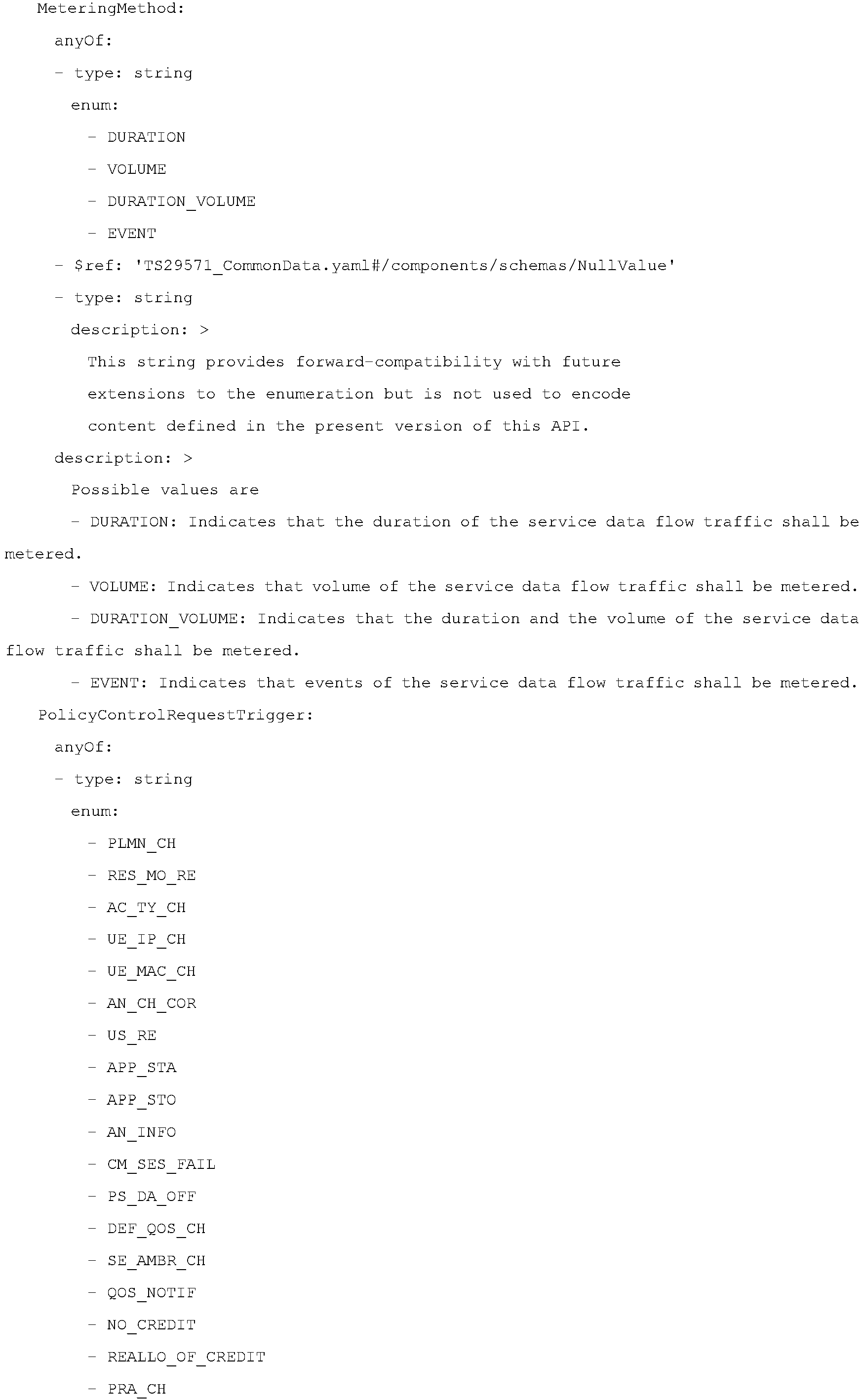

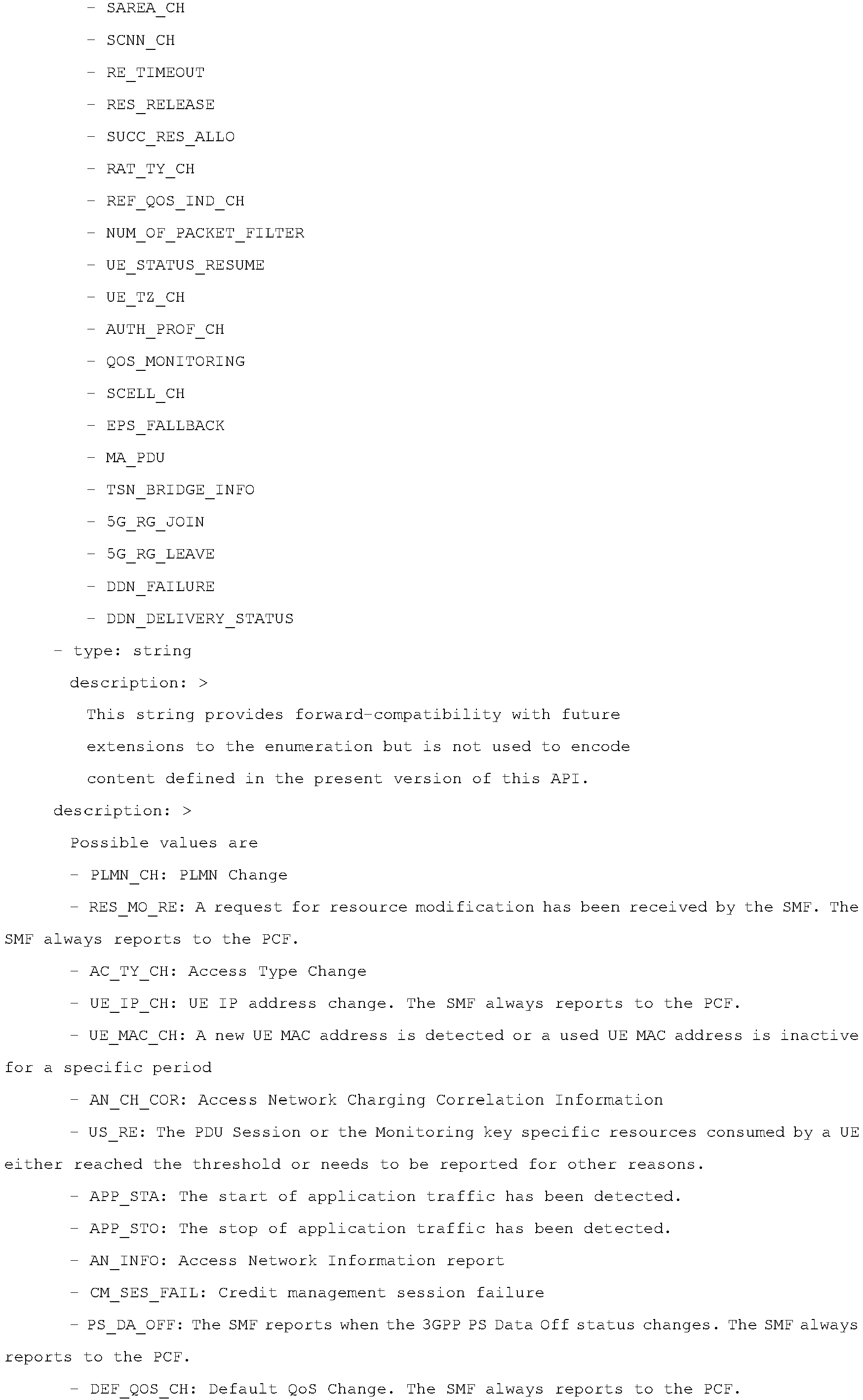

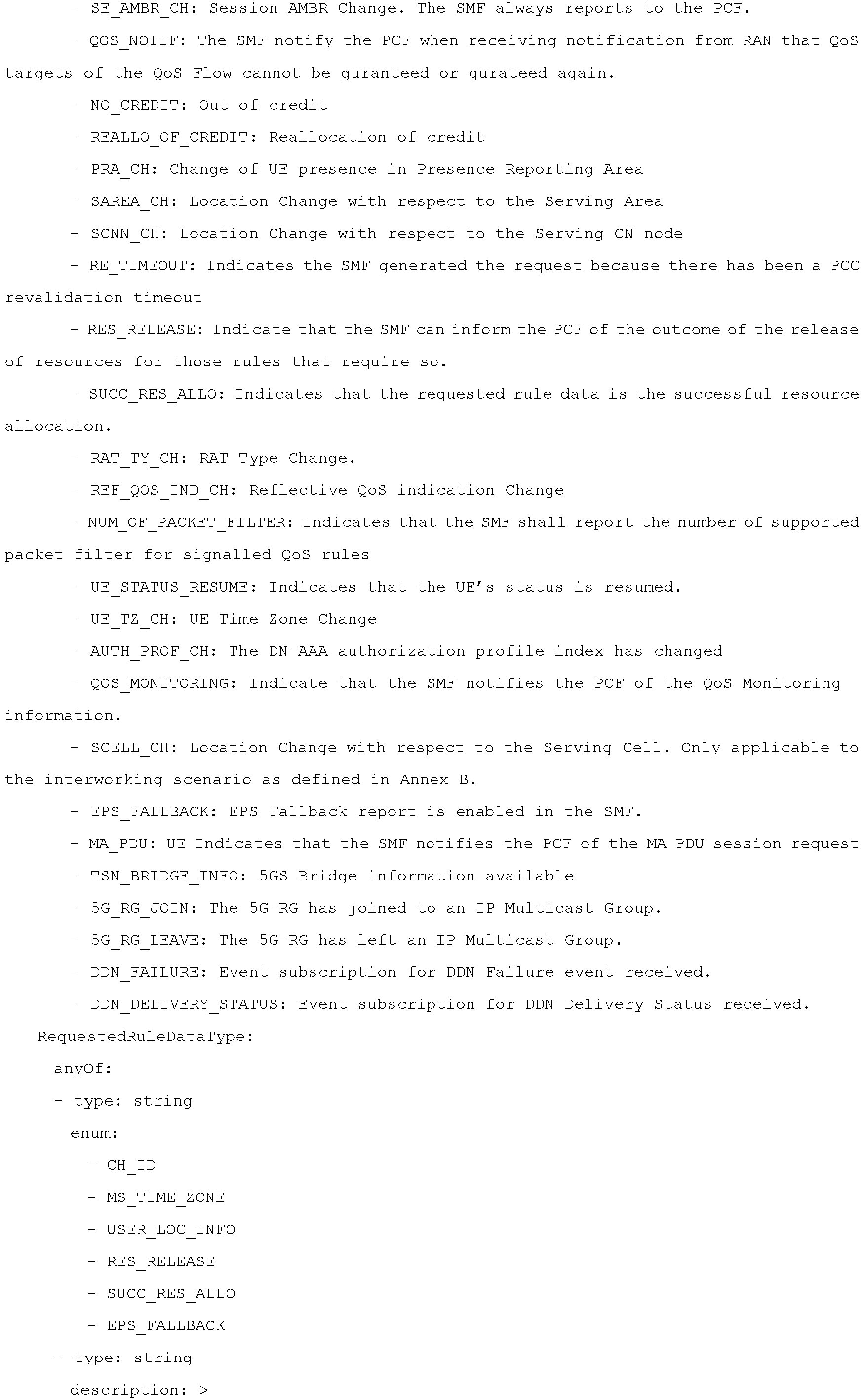

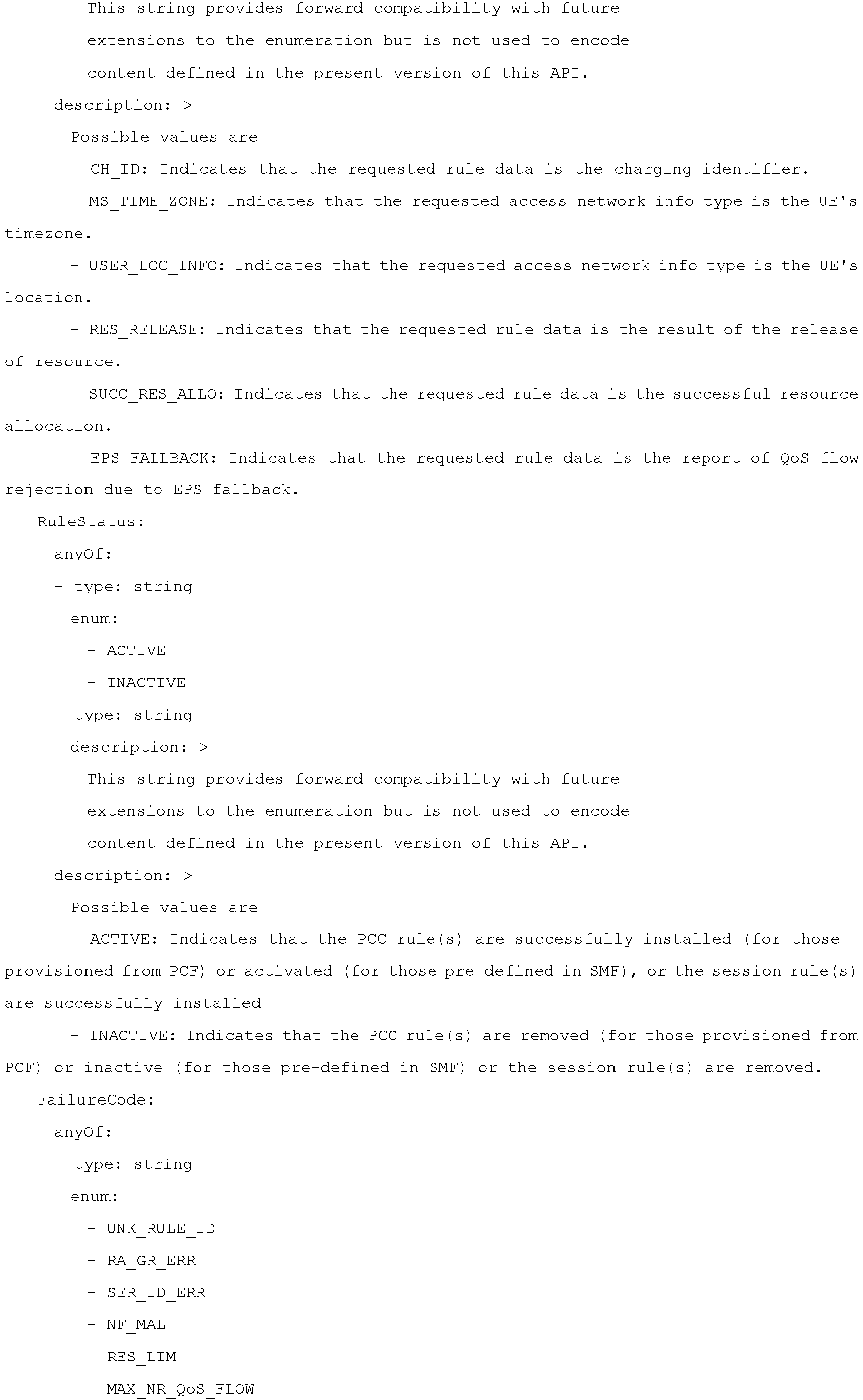

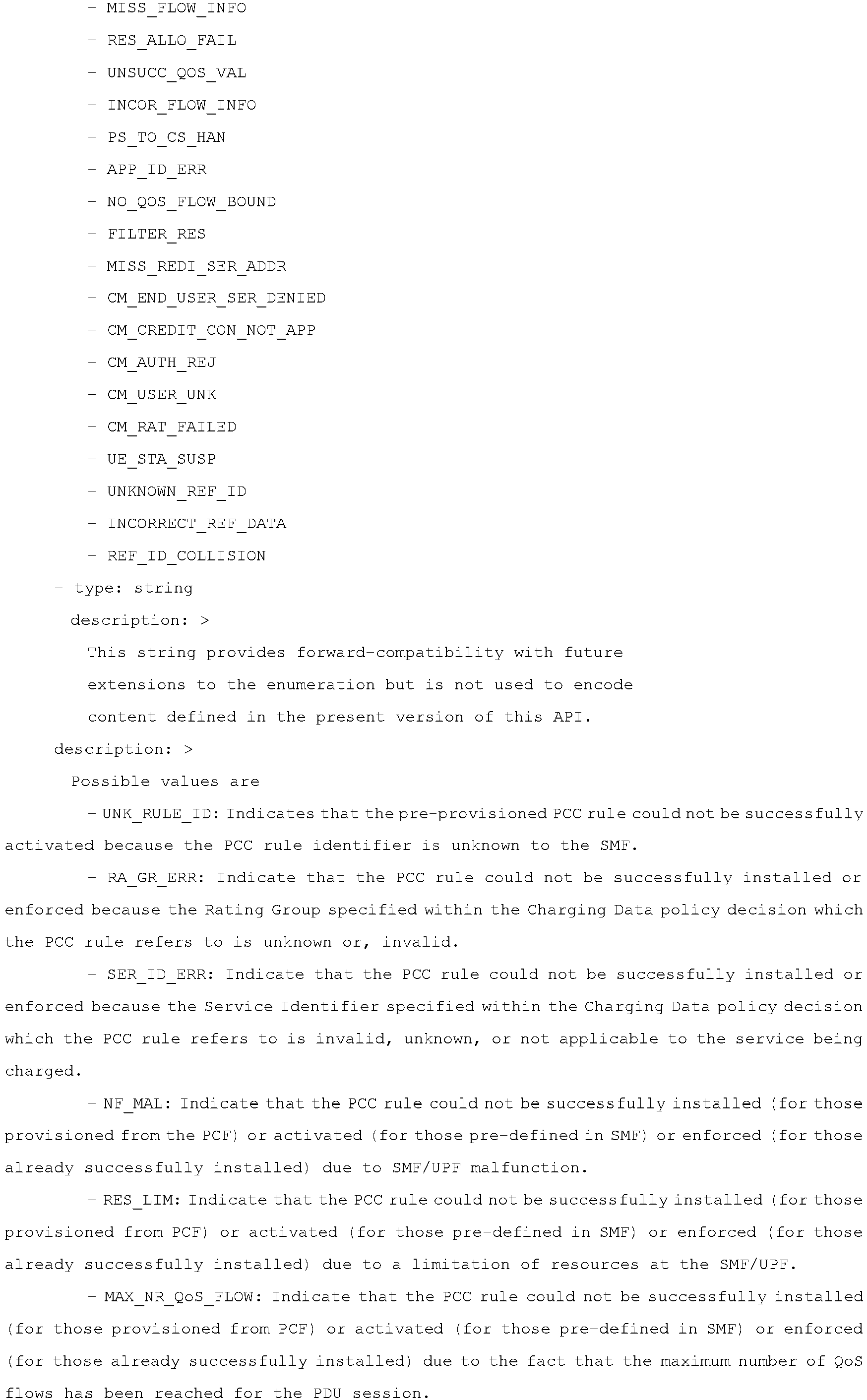

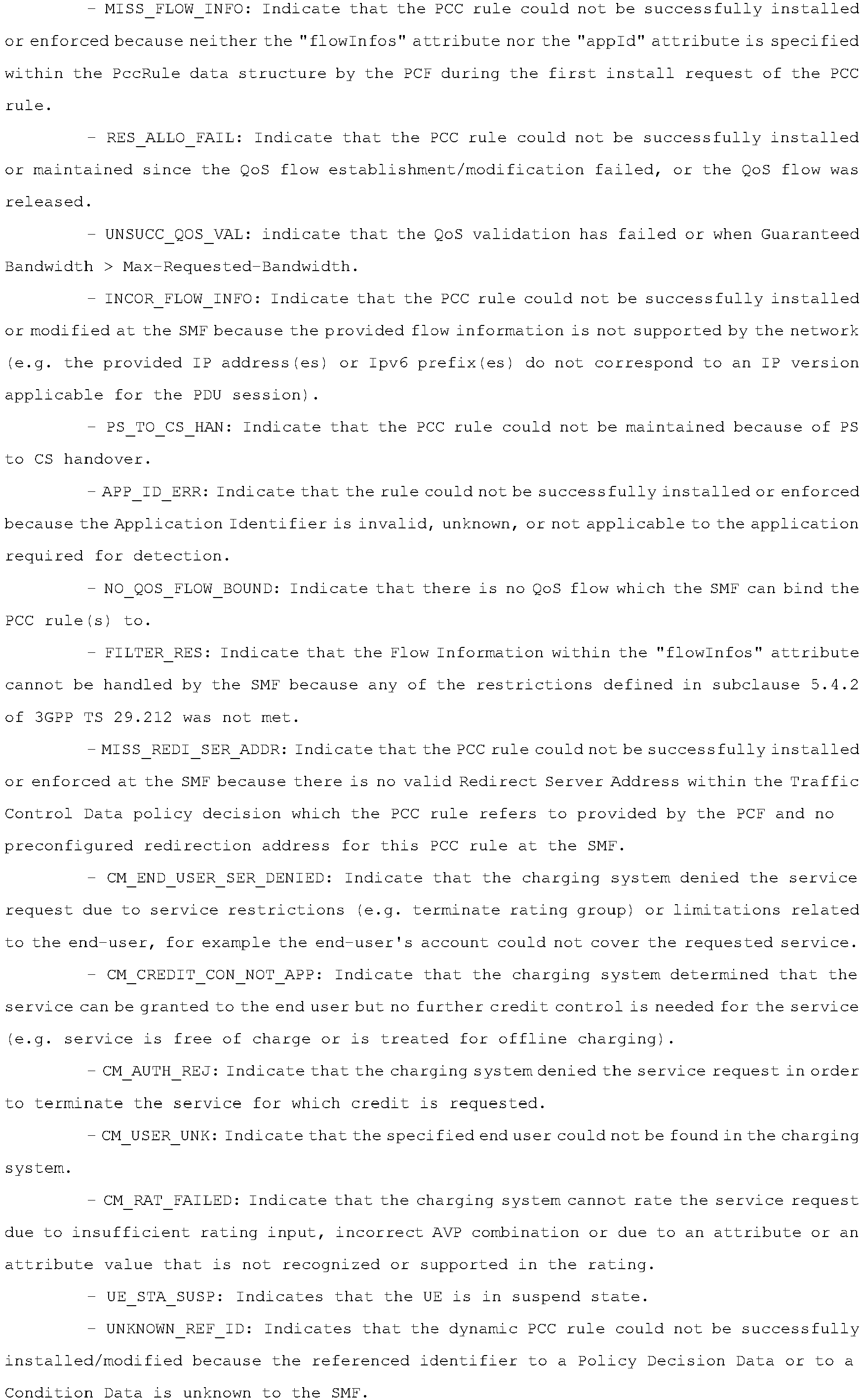

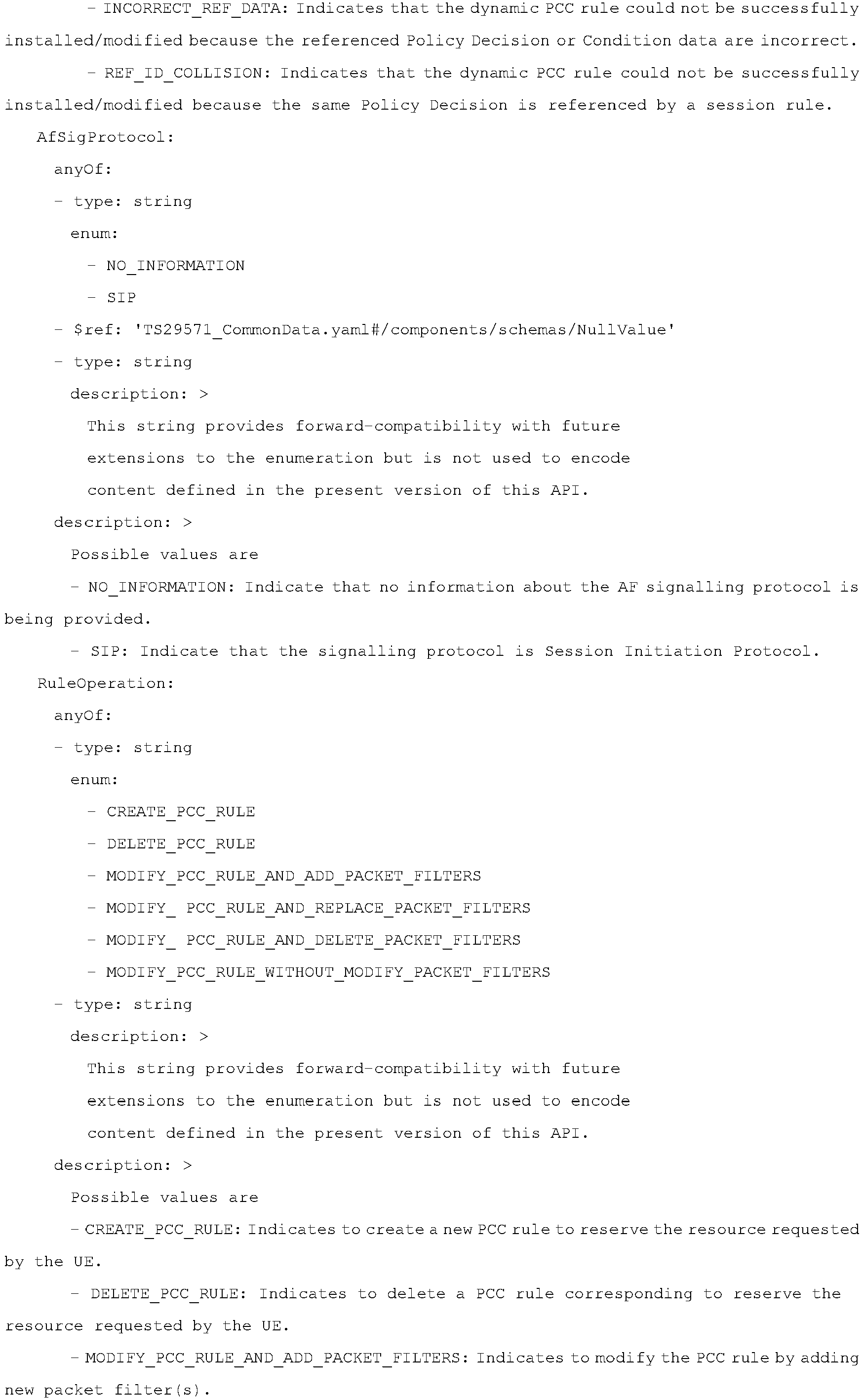

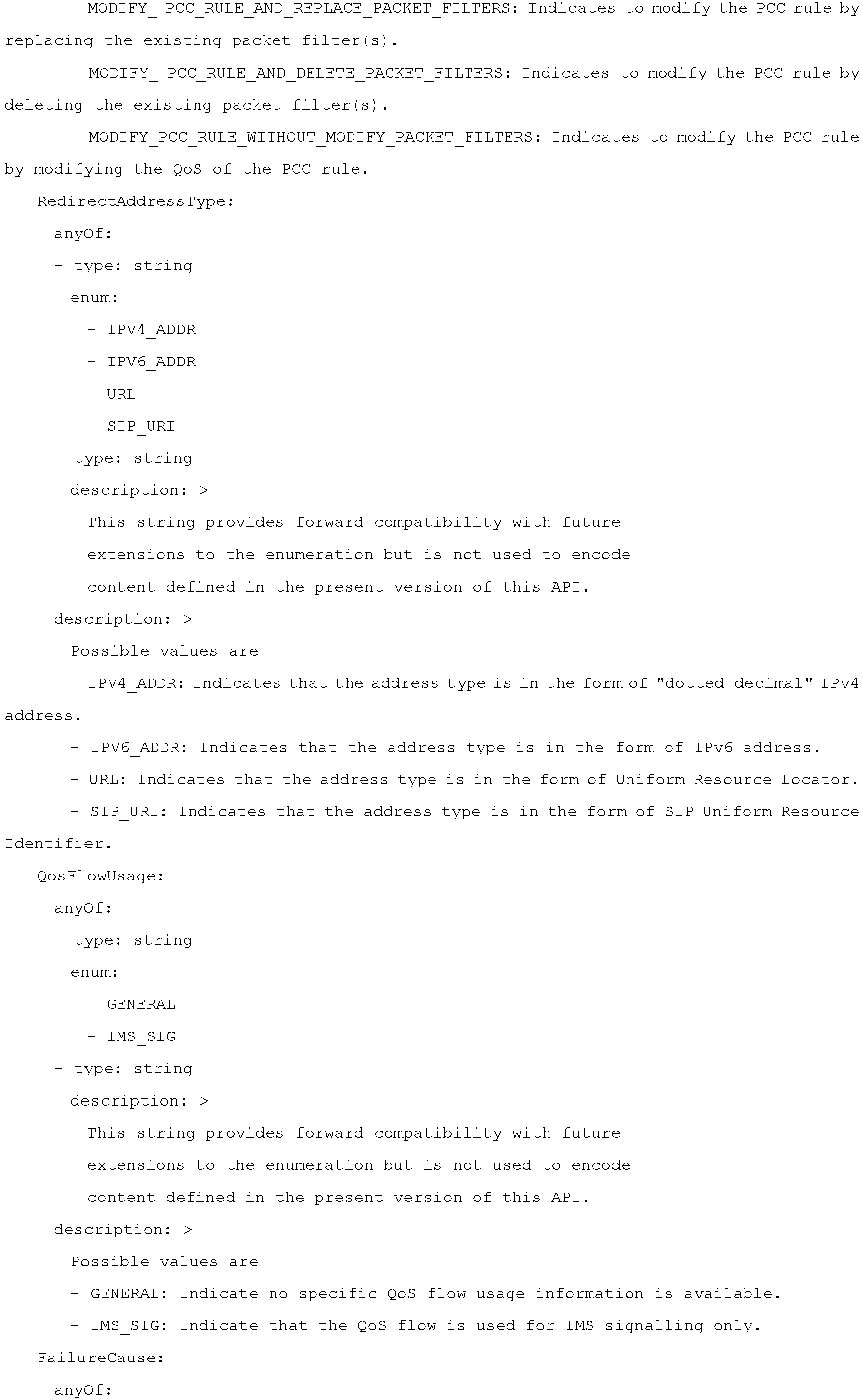

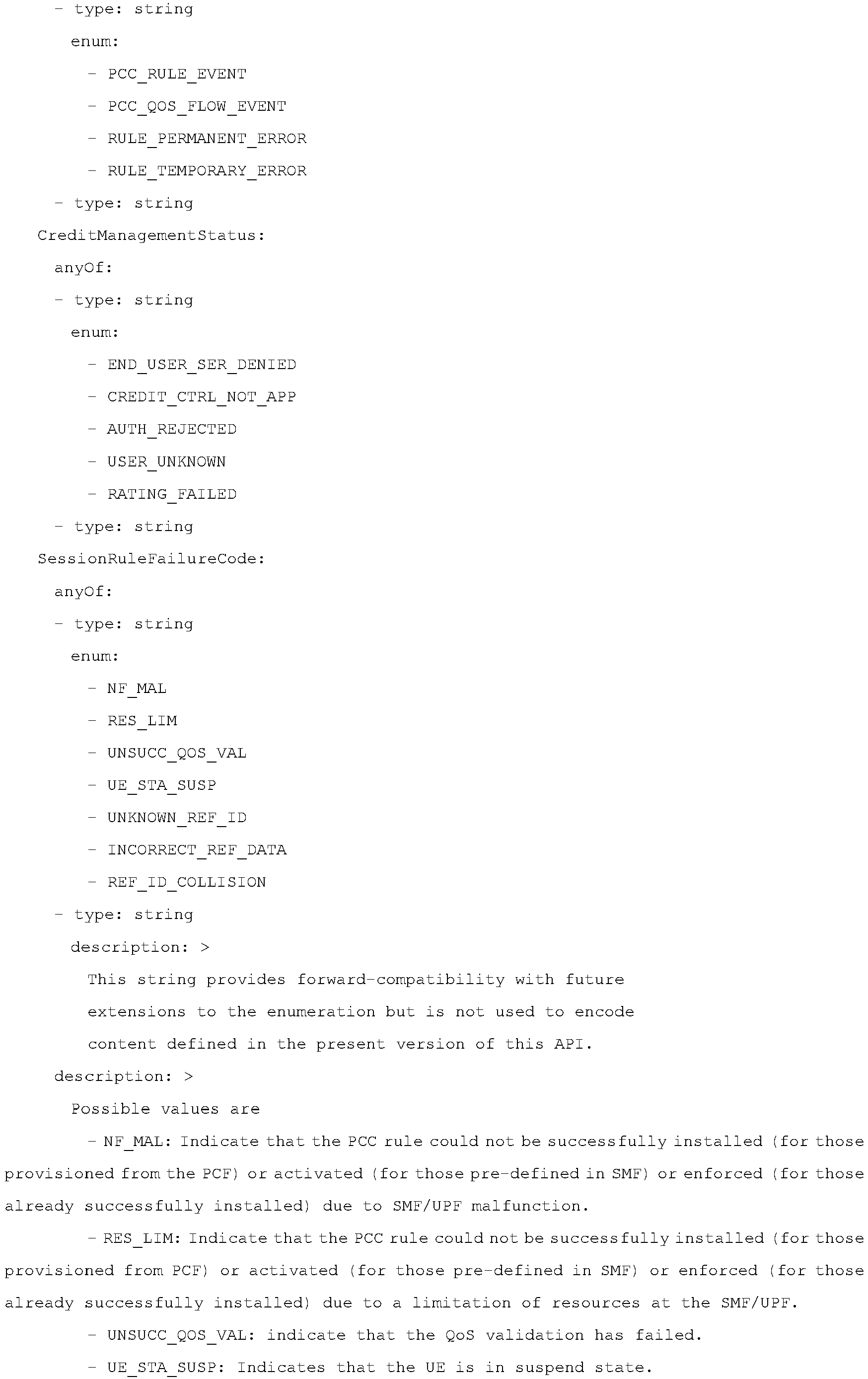

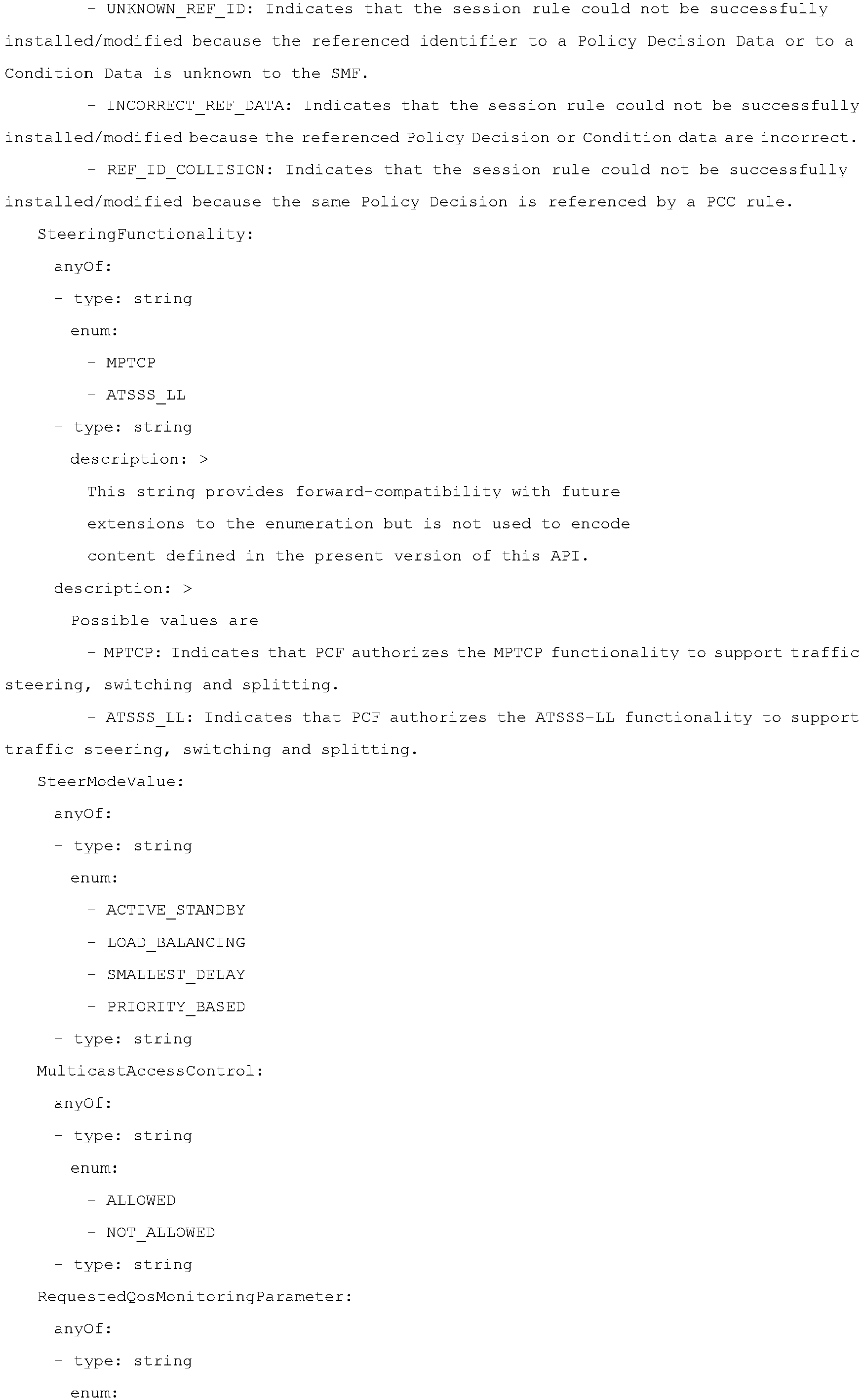

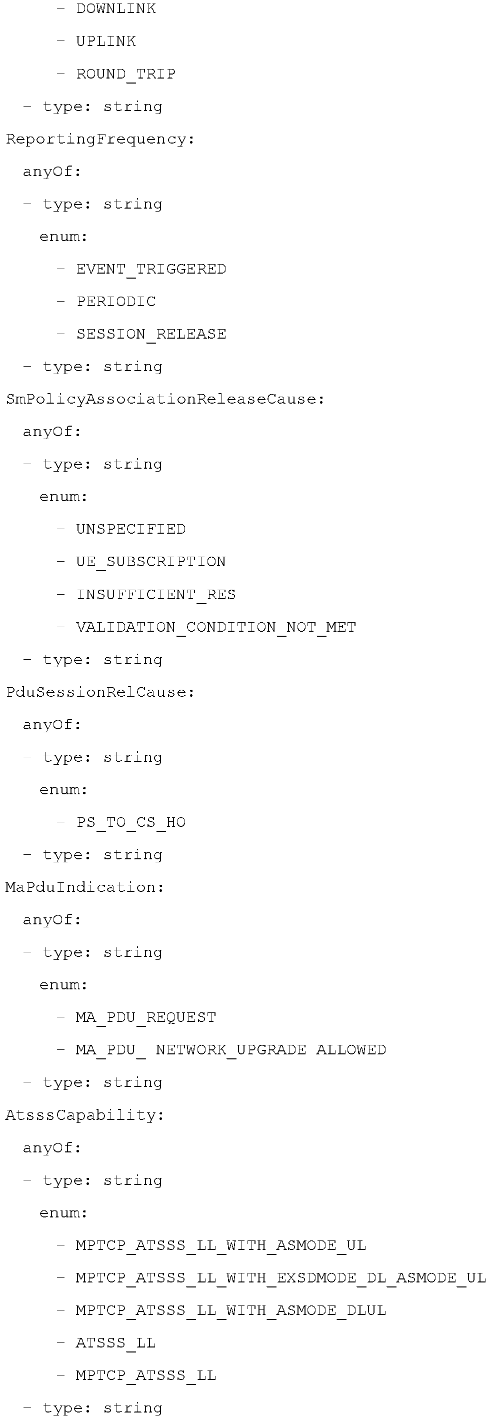

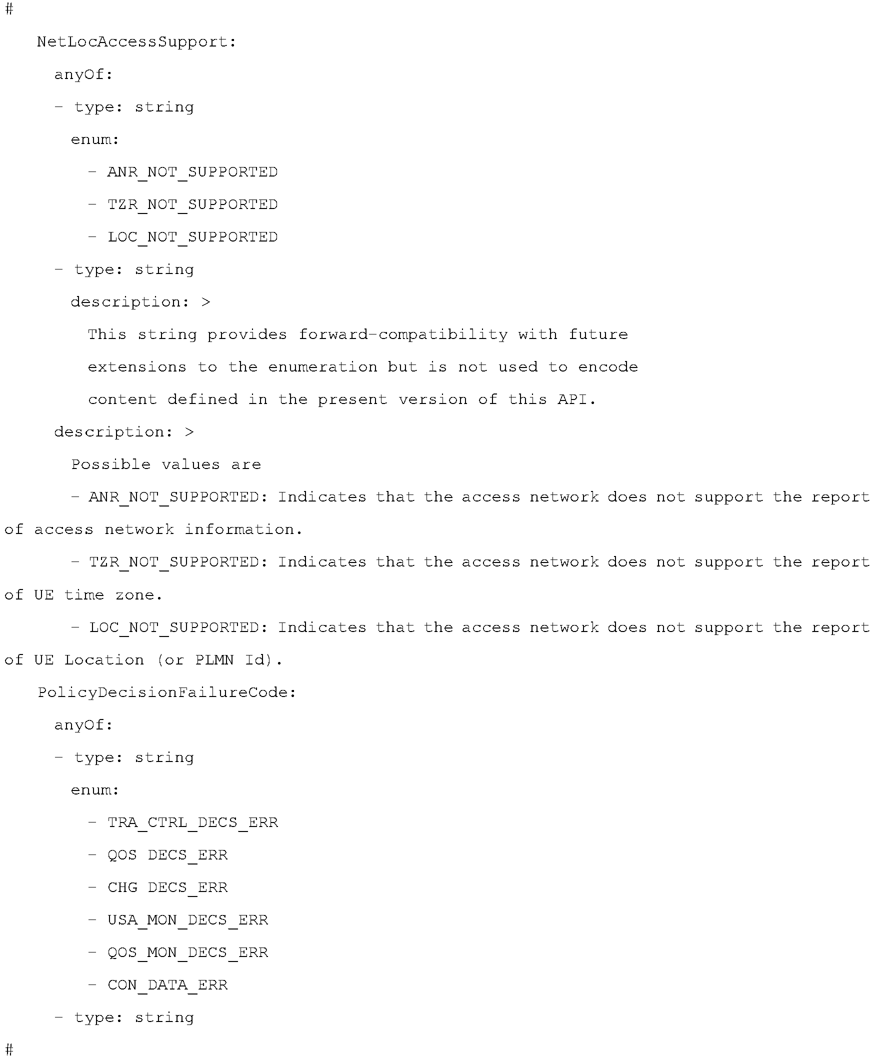

### 4.2.3.26 Policy decision error handling

### 4.2.3.26.x1 Policy decision types and condition data error handling

If the "PolicyDecisionErrorHandling" feature is supported and if the SMF receives one or more policy decision types (as defined in subclause 4.1.4.4) and/or condition data (as defined in subclause 4.1.8) which are not referred by any PCC rules or session rules as defined in subclause 4.2.3.1 but the storage of the policy decision types and/or condition data was unsuccessful (e.g. the policy decision could not be successfully stored due to a limitation of resources at the SMF), or because there are semantical inconsistencies in the provided data, the SMF shall behave as follows:
- If the "ExtPolicyDecisionErrorHandling" feature is not supported, include an HTTP "200 OK" status code and one or more PolicyDecisionFailureCode data types to indicate the type(s) of the failed policy decisions and/or condition data in the response message if the SMF does not need to report any other information (e.g. the failure report of the PCC rule or session rule which are provisioned in the same message are not needed).
- Include an HTTP "200 OK" status code and the "policyDecFailureReports" attribute to indicate the type(s) of the failed policy decisions and/or condition data within the PartialSuccessReport data structure in the response message if:
   a. the SMF needs to report partial success (e.g. some of the PCC rules and/or session rules provisioned by the PCF in the same message are not installed/activated successfully); or
   b. the "ExtPolicyDecisionErrorHandling" feature is supported, and the SMF does not need to report any other information (e.g. the failure report of the PCC rule or session rule which are provisioned in the same message are not needed). In this case, the SMF may also encode within the "invalidPolicyDecs" attribute the failed policy decisions.
- Include an HTTP "400 Bad Request" status code and the "policyDecFailureReports" attribute to indicate the type(s) of the failed policy decisions and/or condition data within the ErrorReport data structure in the response message if the SMF needs to reject the request (e.g. all the PCC rules and/or session rules provisioned by the PCF in the same message are not installed/activated successfully).

When the PCF receives the above reports, the PCF shall consider all the instances of the policy decsions and/or condition data which are provisioned in the request message and indicated by the PolicyDecisionFailureCode data type are removed from the SMF. When the PCF receives the response with HTTP "400 Bad Request" status code but the "policyDecFailureReports" attribute is not included, the PCF shall consider all the provisioned instances of the policy decsions and/or condition data in the request message are removed from the SMF.

The removal of a policy decision type and/or condition data shall not fail.

### 4.2.3.26.x2 Other policy decision data error handling

If the "ExtPolicyDecisionErrorHandling" feature is supported and if the SMF receives other SM policy decisions than PCC rules, session rules, policy decision types or condition data (e.g. the SMF receives policy control request triggers and applicable additional information), and the SMF detects the received policy decision cannot be enforced (e.g., because semantical inconsistencies in the provided data):
If the SMF does not need to reject the request (e.g. none, or only some but not all of the PCC rules and/or session rules provisioned by the PCF in the same message are not installed/activated successfully), the SMF shall include an HTTP "200 OK" status code and the "policyDecFailureReports" attribute within the PartialSuccessReport data structure in the response message to indicate a failure in the provided policy decision parameters. The SMF may also encode within the "invalidPolicyDecs" attribute the failed policy decisions.
- If the SMF needs to reject the request (e.g. all the PCC rules and/or session rules provisioned by the PCF in the same message are not installed/activated successfully), the SMF shall include an HTTP "400 Bad Request" status code and the "policyDecFailureReports" attribute in the response message to indicate a failure in the provided policy decision parameters.

When the PCF receives the above reports, the PCF shall consider:
a. All the new failed policy decisions provisioned in the request message and indicated by the PolicyDecisionFailureCode data type are not installed in the SMF.
b. All the modified policy decisions provisioned in the request message and indicated by the PolicyDecisionFailureCode data type remain unmodified in the SMF.
c. All the removed policy decisions provided in the request message are deleted in the SMF.
NOTE: The removal of a policy decision does not fail. Even if there is an inconsistency e.g. between the deletion of a policy control request trigger and the deletion of the applicable additional information, the whole related policy decision is removed.

| |
|---|
| *** Next Change *** |

### 4.2.4.26 Policy decision error handling

### 4.2.4.26.x1 Policy decision types and condition data error handling

If the "PolicyDecisionErrorHandling" feature is supported and one or more policy decision types (as defined in subclause 4.1.4.4) and/or condition data (as defined in subclause 4.1.8) which are not referred by any PCC rules or session rules is provisioned using the procedure as defined in subclauses 4.2.2.1, 4.2.3.1 or 4.2.4.1 but the storage was unsuccessful (e.g. the policy decision could not be successfully stored due to a limitation of resources at the SMF), or because there are semantical inconsistencies in the provided data, the SMF shall include the "policyDecFailureReports" attribute to indicate the type(s) of the failed policy decisions and/or condition data within the SmPolicyUpdateContextData data structure. When the PCF receives the above reports, the PCF shall consider all the instances of the policy decsions and/or condition data which are not referred by any PCC rule and/or session stored at the SMF and indicated by the PolicyDecisionFailureCode data type are removed from the SMF. If the "ExtPolicyDecisionErrorHandling" feature is supported, the SMF may also encode within the "invalidPolicyDecs" attribute the failed policy decisions.

### 4.2.4.26.x2 Other policy decision data error handling

If the "ExtPolicyDecisionErrorHandling" feature is supported and one or more SM Policy decisions other than PCC rules, session rules policy decision types or condition data are provisioned using the procedure as defined in subclauses 4.2.2.1, 4.2.3.1 or 4.2.4.1 but the SMF detects the received policy decision cannot be enforced (e.g. because semantical inconsistencies in the provided data), and the SMF determines that the PDU session can be kept, the SMF shall include the "policyDecFailureReports" attribute within the SmPolicyUpdateContextData data structure to indicate a failure in the provided policy decision parameters. The SMF may also encode within the "invalidPolicyDecs" attribute the failed policy decisions.

When the PCF receives the above report, the PCF shall consider:
a. All the new failed policy decisions provisioned are not installed in the SMF.
b. All the modified policy decisions shall remain unmodified in the SMF.
c. All the removed policy decisions provided in the request message are deleted in the SMF.
NOTE: The removal of a policy decision does not fail. Even if there is an inconsistency e.g. between the deletion of a policy control request trigger and the deletion of the applicable additional information, the whole related policy decision is removed.

| |
|---|
| *** Next Change *** |

### 5.6.1 General

This subclause specifies the application data model supported by the API.

The Npcf_SMPolicyControl API allows the SMF to retrieve the session management related policy from the PCF as defined in 3GPP TS 23.503 [6].

Table 5.6.1-1 specifies the data types defined for the Npcf_SMPolicyControl service based interface protocol.

**Table 5.6.1-1: Npcf_SMPolicyControl specific Data Types**

| **Data type** | **Section defined** | **Description** | **Applicability** |
|---|---|---|---|
| 5GSmCause | 5.6.3.2 | Indicates the 5GSM cause code value. | RAN-NAS-Cau se |
| AdditionalAcce ssinfo | 5.6.2.43 | Indicates the combination of additional Access Type and RAT Type for MA PDU session | ATSSS |
| AccNetChargin gAddress | 5.6.2.35 | Identifies the address of the network node performing charging and used for charging applications. | |
| AccNetChld | 5.6.2.23 | Contains the access network charging identifier for the PCC rule(s) or whole PDU session. | |
| AccuUsageRe port | 5.6.2.18 | Contains the accumulated usage report information. | UMC |
| AfSigProtocol | 5.6.3.10 | Indicates the protocol used for signalling between the UE and the AF. | ProvAFsignalFl ow |
| AppDetectionln fo | 5.6.2.22 | Contains the detected application's traffic information. | ADC |
| ApplicationDes criptor | 5.6.3.2 | Defines the Application Descriptor for an ATSSS rule. | ATSSS |
| AtsssCapability | 5.6.3.26 | Contains the ATSSS capability supported for the MA PDU Session. | ATSSS |
| AuthorizedDef aultQos | 5.6.2.34 | Authorized Default QoS. | |
| BridgeManage mentContainer | 5.6.2.47 | Contains the TSN BMIC. | TimeSensitive Networking |
| ChargingData | 5.6.2.11 | Contains charging related parameters. | |
| Charginglnfor mation | 5.6.2.17 | Contains the addresses of the charging functions. | |
| ConditionData | 5.6.2.9 | Contains conditions for applicability of a rule. | |
| CreditManage mentStatus | 5.6.3.16 | Indicates the reason of the credit management session failure. | |
| EpsRanNasRel Cause | 5.6.3.2 | Indicates the RAN or NAS release cause code information in 3GPP-EPS access type or indicates the TWAN or untrusted WLAN release cause code information in Non-3GPP-EPS access type. | RAN-NAS-Cau se |
| ErrorReport | 5.6.2.36 | Contains the rule reports. | |
| FailureCause | 5.6.3.14 | Indicates the cause of the failure in a Partial Success Report. | |
| FailureCode | 5.6.3.9 | Indicates the reason of the PCC rule failure. | |
| FlowDescriptio n | 5.6.3.2 | Defines a packet filter for an IP flow. | |
| FlowDirection | 5.6.3.3 | Indicates the direction of the service data flow. | |
| FlowDirectionR m | 5.6.3.15 | This data type is defined in the same way as the "FlowDirection" data type, but allows null value. | |
| Flowlnformatio n | 5.6.2.14 | Contains the flow information. | |
| IpMulticastAdd ressinfo | 5.6.2.46 | Contains the IP multicast addressing information | WWC |
| MaPdulndicati on | 5.6.3.25 | Contains the MA PDU session indication, i.e., MA PDU Request or MA PDU Network-Upgrade Allowed. | ATSSS |
| MeteringMetho d | 5.6.3.5 | Indicates the metering method. | |
| MulticastAcces sControl | 5.6.3.20 | Indicates whether the service data flow, corresponding to the service data flow template, is allowed or not allowed. | WWC |
| NetLocAccess Support | 5.6.3.27 | Indicates the access network support of the report of the requested access network information. | NetLoc |
| PacketFilterCo ntent | 5.6.3.2 | Defines a packet filter for an IP flow. | |
| PacketFilterlnf o | 5.6.2.30 | Contains the information from a single packet filter sent from the SMF to the PCF. | |
| PartialSuccess Report | 5.6.2.33 | Includes the information reported by the SMF when some of the PCC rules and/or session rules are not successfully installed/activated. | |
| PccRule | 5.6.2.6 | Contains the PCC rule information. | |
| PduSessionRel Cause | 5.6.3.24 | Contains the SMF PDU Session release cause. | PDUSessionR elCause |
| PolicyControlR equestTrigger | 5.6.3.6 | Contains the policy control request trigger(s). | |
| PolicyDecision FailureCode | 5.6.3.28 | Indicates the type of the failed policy decision and/or condition data. | PolicyDecision ErrorHandling |
| PortManageme ntContainer | 5.6.2.45 | Contains the TSN port management information container for a TSN port. | TimeSensitive Networking |
| QosCharacteri stics | 5.6.2.16 | Contains QoS characteristics for a non-standardized or non-configured 5QI. | |
| QosData | 5.6.2.8 | Contains the QoS parameters. | |
| QosFlowUsage | 5.6.3.13 | Indicates a QoS flow usage information. | |
| QosMonitoring Data | 5.6.2.40 | Contains QoS monitoring related control information. | QosMonitoring |
| QosMonitoring Report | 5.6.2.42 | Contains QoS monitoring reporting information. | QosMonitoring |
| QosNotification Controllnfo | 5.6.2.32 | Contains the QoS Notification Control Information. | |
| RanNasRelCa use | 5.6.2.28 | Contains the RAN/NAS release cause. | RAN-NAS-Cau se |
| RedirectAddre ssType | 5.6.3.12 | Indicates the redirect address type. | ADC |
| RedirectInform ation | 5.6.2.13 | Contains the redirect information. | ADC |
| ReportingFreq uency | 5.6.3.22 | Indicates the frequency for the reporting | QosMonitoring |
| ReportingLevel | 5.6.3.4 | Indicates the reporting level. | |
| RequestedQos | 5.6.2.31 | Contains the QoS information requested by the UE. | |
| RequestedQos MonitoringPara meter | 5.6.3.21 | Indicates the requested QoS monitoring parameters to be measured. | QosMonitoring |
| RequestedRul eData | 5.6.2.24 | Contains rule data requested by the PCF to receive information associated with PCC rules. | |
| RequestedRul eDataType | 5.6.3.7 | Contains the type of rule data requested by the PCF. | |
| RequestedUsa geData | 5.6.2.25 | Contains usage data requested by the PCF requesting usage reports for the corresponding usage monitoring data instances. | |
| RuleOperation | 5.6.3.11 | Indicates a UE initiated resource operation that causes a request for PCC rules. | |
| RuleReport | 5.6.2.27 | Reports the status of PCC. | |
| RuleStatus | 5.6.3.8 | Indicates the status of PCC or session rule. | |
| ServingNfIdent y | 5.6.2.38 | Contains the serving Network Function identity. | |
| SessionRule | 5.6.2.7 | Contains session level policy information. | |
| SessionRuleFa ilureCode | 5.6.3.17 | Indicates the reason of the session rule failure. | |
| SessionRuleR eport | 5.6.2.37 | Reports the status of session rule. | |
| SmPolicyAsso ciationRelease Cause | 5.6.3.23 | Represents the cause why the PCF requests the termination of the SM policy association. | |
| SmPolicyContr ol | 5.6.2.2 | Contains the parameters to request the SM policies and the SM policies authorized by the PCF. | |
| SmPolicyConte xtData | 5.6.2.3 | Contains the parameters to create individual SM policy resource. | |
| SmPolicyDecis ion | 5.6.2.4 | Contains the SM policies authorized by the PCF. | |
| SmPolicyNotifi cation | 5.6.2.5 | Contains the update of the SM policies. | |
| SmPolicyDelet eData | 5.6.2.15 | Contains the parameters to be sent to the PCF when the individual SM policy is deleted. | |
| SmPolicyUpdat eContextData | 5.6.2.19 | Contains the met policy control request trigger(s) and corresponding new value(s) or the error report of the policy enforcement. | |
| SteeringFuncti onality | 5.6.3.18 | Indicates functionality to support traffic steering, switching and splitting determined by the PCF. | ATSSS |
| SteeringMode | 5.6.2.39 | Contains the steering mode value and parameters determined by the PCF. | ATSSS |
| SteeringMode Value | 5.6.3.19 | Indicates the steering mode value determined by the PCF. | ATSSS |
| TerminationNot ification | 5.6.2.21 | Termination Notification. | |
| TrafficControlD ata | 5.6.2.10 | Contains parameters determining how flows associated with a PCCRule are treated (blocked, redirected, etc). | |
| TsnBridgeInfo | 5.6.2.41 | Contains parameters that describe and identify the TSN bridge. | TimeSensitive Networking |
| TsnPortNumbe r | 5.6.3.2 | Contains a TSN port number. | TimeSensitive Networking |
| UeCampingRe p | 5.6.2.26 | Contains the current applicable values corresponding to the policy control request triggers. | |
| UelnitiatedRes ourceRequest | 5.6.2.29 | Indicates a UE requests specific QoS handling for selected SDF. | |
| UpPathChgEv ent | 5.6.2.20 | Contains the UP path change event subscription from the AF. | TSC |
| UsageMonitori ngData | 5.6.2.12 | Contains usage monitoring related control information. | UMC |

Table 5.6.1-2 specifies data types re-used by the Npcf_SMPolicyControl service based interface protocol from other specifications, including a reference to their respective specifications and when needed, a short description of their use within the Npcf_SMPolicyControl service based interface.

**Table 5.6.1-2: Npcf_SMPolicyControl re-used Data Types**

| **Data type** | **Reference** | **Comments** | **Applicability** |
|---|---|---|---|
| 5GMmCaus e | 3GPP TS 29.571 [11] | Contains the cause value of 5GMM protocol. | RAN-NAS-Cau se |
| 5Qi | 3GPP TS 29.571 [11] | Unsigned integer representing a 5G QoS Identifier (see subclause 5.7.2.1 of 3GPP TS 23.501 [2]), within the range 0 to 255. | |
| 5QiPriorityLe vel | 3GPP TS 29.571 [11] | Unsigned integer indicating the 5QI Priority Level (see subclauses 5.7.3.3 and 5.7.4 of 3GPP TS 23.501 [2]), within the range 1 to 127. | |
| | | Values are ordered in decreasing order of priority, i.e. with 1 as the highest priority and 127 as the lowest priority. | |
| 5QiPriorityLe velRm | 3GPP TS 29.571 [11] | This data type is defined in the same way as the "5QiPriorityLevel" data type, but with the OpenAPI "nullable: true" property. | |
| AccessType | 3GPP TS 29.571 [11] | The identification of the type of access network. | |
| AccessType Rm | 3GPP TS 29.571 [11] | This data type is defined in the same way as the "AccessType" data type, but with the OpenAPI "nullable: true" property. | |
| Ambr | 3GPP TS 29.571 [11] | Session AMBR. | |
| AnGwAddre ss | 3GPP TS 29.514 [17] | Carries the control plane address of the access network gateway. (NOTE 1) | |
| ApplicationC hargingld | 3GPP TS 29.571 [11] | Application provided charging identifier allowing correlation of charging information. | AF_Charging_ Identifier |
| Arp | 3GPP TS 29.571 [11] | ARP. | |
| AverWindow | 3GPP TS 29.571 [11] | Averaging Window. | |
| AverWindow Rm | 3GPP TS 29.571 [11] | This data type is defined in the same way as the "AverWindow" data type, but with the OpenAPI "nullable: true" property. | |
| Bytes | 3GPP TS 29.571 [11] | String with format "byte". | TimeSensitive Networking |
| BitRate | 3GPP TS 29.571 [11] | String representing a bit rate that shall be formatted as follows: | |
| | | pattern: "^\d+(\.\d+)? | |
| | | (bps\|Kbps\|Mbps\|Gbps\|Tbps)$" | |
| | | Examples: | |
| | | "125 Mbps", "0.125 Gbps", "125000 Kbps". | |
| BitRateRm | 3GPP TS 29.571 [11] | This data type is defined in the same way as the "BitRate" data type, but with the OpenAPI "nullable: true" property. | |
| Chargingld | 3GPP TS 29.571 [11] | Charging identifier allowing correlation of charging information. | |
| ContentVersi on | 3GPP TS 29.514 [17] | Indicates the content version of a PCC rule. It uniquely identifies a version of the PCC rule as defined in subclause 4.2.6.2.14. | RuleVersionin g |
| DateTime | 3GPP TS 29.571 [11] | String with format "date-time" as defined in OpenAPI Specification [10]. | |
| DateTimeR m | 3GPP TS 29.571 [11] | This data type is defined in the same way as the "DateTime" data type, but with the OpenAPI "nullable: true" property. | |
| DddTrafficD escriptor | 3GPP TS 29.571 [11] | Traffic Descriptor | DDNEventPoli cyControl |
| DnaiChange Type | 3GPP TS 29.571 [11] | Describes the types of DNAI change. | |
| Dnn | 3GPP TS 29.571 [11] | The DNN the user is connected to. | |
| DnnSelectio nMode | 3GPP TS 29.502 [22] | DNN selection mode. | DNNSelection Mode |
| DurationSec | 3GPP TS 29.571 [11] | Identifies a period of time in units of seconds. | |
| DurationSec Rm | 3GPP TS 29.571 [11] | This data type is defined in the same way as the "DurationSec" data type, but with the OpenAPI "nullable: true" property. | |
| EthFlowDes cription | 3GPP TS 29.514 [17] | Defines a packet filter for an Ethernet flow. (NOTE 2) | |
| ExtMaxData BurstVol | 3GPP TS 29.571 [11] | Maximum Data Burst Volume. | EMDBV |
| ExtMaxData BurstVolRm | 3GPP TS 29.571 [11] | This data type is defined in the same way as the "ExtMaxDataBurstVol" data type, but with the OpenAPI "nullable: true" property. | EMDBV |
| FinalUnitActi on | 3GPP TS 32.291 [19] | Indicates the action to be taken when the user's account cannot cover the service cost. | |
| FlowStatus | 3GPP TS 29.514 [17] | Describes whether the IP flow(s) are enabled or disabled. The value "REMOVED" is not applicable to Npcf_SMPolicyControl service. | |
| Gpsi | 3GPP TS 29.571 [11] | Identifies a GPSI. | |
| Groupld | 3GPP TS 29.571 [11] | Identifies a group of internal globally unique ID. | |
| Guami | 3GPP TS 29.571 [11] | Globally Unique AMF Identifier. | |
| InvalidParam | 3GPP TS 29.571 [11] | Invalid Parameters for the reported failed policy decisions | ExtPolicyDecis ionErrorHandli ng |
| Iplndex | 3GPP TS 29.519 [15] | Information that identifies which IP pool or external server is used to allocate the IP address. | |
| Ipv4Addr | 3GPP TS 29.571 [11] | Identifies an Ipv4 address. | |
| Ipv4AddrMa sk | 3GPP TS 29.571 [11] | String identifying an IPv4 address mask. | |
| Ipv6Addr | 3GPP TS 29.571 [11] | Identifies an IPv6 address. | |
| Ipv6Prefix | 3GPP TS 29.571 [11] | The Ipv6 prefix allocated for the user. | |
| MacAddr48 | 3GPP TS 29.571 [11] | MAC Address. | |
| MaxDataBur stVol | 3GPP TS 29.571 [11] | Maximum Data Burst Volume. | |
| MaxDataBur stVolRm | 3GPP TS 29.571 [11] | This data type is defined in the same way as the "MaxDataBurstVol" data type, but with the OpenAPI "nullable: true" property. | |
| Nflnstanceld | 3GPP TS 29.571 [11] | The NF instance identifier. | |
| NfSetld | 3GPP TS 29.571 [11] | The NF set identifier. | |
| NgApCause | 3GPP TS 29.571 [11] | Contains the cause value of NgAP protocol. | RAN-NAS-Cau se |
| NullValue | 3GPP TS 29.571 [11] | JSON's null value, used as an explicit value of an enumeration. | |
| PacketDelBu dget | 3GPP TS 29.571 [11] | Packet Delay Budget. | |
| PacketErrRa te | 3GPP TS 29.571 [11] | Packet Error Rate. | |
| PacketLoss RateRm | 3GPP TS 29.571 [11] | This data type is defined in the same way as the "PacketLossRate" data type, but with the OpenAPI "nullable: true" property. | |
| PduSessionI d | 3GPP TS 29.571 [11] | The identification of the PDU session. | |
| PduSession Type | 3GPP TS 29.571 [11] | Indicate the type of a PDU session. | |
| Pei | 3GPP TS 29.571 [11] | The Identification of a Permanent Equipment. | |
| PlmnldNid | 3GPP TS 29.571 [11] | The identification of the Network. PLMN Identity, and for SNPN NID. | |
| Presencelnf o | 3GPP TS 29.571 [11] | Contains the information which describes a Presence Reporting Area. | PRA |
| Presencelnf oRm | 3GPP TS 29.571 [11] | This data type is defined in the same way as the "Presencelnfo" data type, but with the OpenAPI "nullable: true" property. | PRA |
| ProblemDeta ils | 3GPP TS 29.571 [11] | Contains a detailed information about an error. | |
| QosNotifTyp e | 3GPP TS 29.514 [17] | Indicates whether the GBR targets for the indicated SDFs are "NOT_GUARANTEED" or "GUARANTEED" again. | |
| QosResourc eType | 3GPP TS 29.571 [11] | Indicates whether the resource type is GBR, delay critical GBR, or non-GBR. | |
| RatingGroup | 3GPP TS 29.571 [11] | Identifier of a rating group. | |
| RatType | 3GPP TS 29.571 [11] | The identification of the RAT type. | |
| RouteToLoc ation | 3GPP TS 29.571 [11] | A traffic routes to applications location. | TSC |
| Serviceld | 3GPP TS 29.571 [11] | Identifier of a service. | |
| Snssai | 3GPP TS 29.571 [11] | Identifies the S-NSSAI. | |
| SubscribedD efaultQos | 3GPP TS 29.571 [11] | Subscribed Default QoS. | |
| Supi | 3GPP TS 29.571 [11] | The identification of the user (i.e. IMSI, NAI). | |
| SupportedFe atures | 3GPP TS 29.571 [11] | Used to negotiate the applicability of the optional features defined in table 5.8-1. | |
| TraceData | 3GPP TS 29.571 [11] | | |
| TimeZone | 3GPP TS 29.571 [11] | Contains the user time zone information. | |
| TscailnputC ontainer | 3GPP TS 29.514 [17] | TSCAI Input information. | TimeSensitive Networking |
| Uinteger | 3GPP TS 29.571 [11] | Unsigned Integer. | TimeSensitive Networking |
| Uint64 | 3GPP TS 29.571 [11] | Unsigned 64-bit integers. | TimeSensitive Networking |
| Uri | 3GPP TS 29.571 [11] | URI. | |
| UserLocatio n | 3GPP TS 29.571 [11] | Contains the user location. | |
| Volume | 3GPP TS 29.122 [32] | Unsigned integer identifying a volume in units of bytes. | |
| VolumeRm | 3GPP TS 29.122 [32] | This data type is defined in the same way as the "Volume" data type, but with the OpenAPI "nullable: true" property. | |
| NOTE 1: "AnGwAddr" data structure is only applicable to the 5GS and EPC/E-UTRAN interworking scenario as defined in Annex B. | | | |
| NOTE 2: In order to support a set of MAC addresses with a specific range in the traffic filter, feature MacAddressRange as specified in subclause 5.8 shall be supported. | | | |

| |
|---|
| *** Next Change *** |

### 5.6.2.19 Type SmPolicyUpdateContextData

**Table 5.6.2.19-1: Definition of type SmPolicyUpdateContextData**

| **Attribute** name | **Data type** | **P** | **Cardinality** | **Description** | **Applicability** |
|---|---|---|---|---|---|
| repPolicyCt rlReqTrigg ers | array(PolicyContr olRequestTrigger) | C | 1..N | The policy control request triggers which are met. It is omitted if no triggers are met such as in subclauses 4.2.4.7 and 4.2.4.15. | |
| accNetChl ds | array(AccNetChId ) | O | 1..N | Indicates the access network charging identifier for the PCC rule(s) or whole PDU session. | |
| accessTyp e | AccessType | O | 0..1 | The Access Type where the served UE is camping. | |
| ratType | RatType | O | 0..1 | The RAT Type where the served UE is camping. | |
| addAccess Info | AdditionalAccessl nfo | O | 0..1 | Indicates the combination of added Access Type and RAT Type for MA PDU session. | ATSSS |
| relAccessl nfo | AdditionalAccessl nfo | O | 0..1 | Indicates the combination of released Access Type and RAT Type for MA PDU session. | ATSSS |
| servingNet work | PlmnIdNid | O | 0..1 | The serving network where the served UE is camping. For an SNPN the NID together with the PLMN ID identifies the SNPN. | |
| userLocati onlnfo | UserLocation | O | 0..1 | The location of the served UE is camping. | |
| ueTimeZon e | TimeZone | O | 0..1 | The time zone where the served UE is camping. | |
| ipv4Addres s | Ipv4Addr | O | 0..1 | The IPv4 Address of the served UE. | |
| ipDomain | string | O | 0..1 | IPv4 address domain identifier. (NOTE 2) | |
| rellpv4Addr ess | Ipv4Addr | O | 0..1 | Indicates the released IPv4 Address of the served UE. | |
| ipv6Addres sPrefix | Ipv6Prefix | O | 0..1 | The Ipv6 Address Prefix of the served UE. | |
| rellpv6Addr essPrefix | Ipv6Prefix | O | 0..1 | Indicates the released IPv6 Address Prefix of the served UE in multi-homing case. | |
| relUeMac | MacAddr48 | O | 0..1 | Indicates the released MAC Address of the served UE. | |
| ueMac | MacAddr48 | O | 0..1 | The MAC Address of the served UE. | |
| subsSessA mbr | Ambr | O | 0..1 | UDM subscribed or DN-AAA authorized Session-AMBR. | |
| authProfln dex | string | O | 0..1 | DN-AAA authorization profile index. | DN-Authorizati on |
| subsDefQo s | Subscribed Default Qos | O | 0..1 | Subscribed Default QoS Information. | |
| numOfPac kFilter | integer | O | 0..1 | Contains the number of supported packet filter for signalled QoS rules. (NOTE 1) | |
| accuUsage Reports | array(AccuUsage Report) | O | 1..N | Accumulate usage report. | |
| 3gppPsDat aOffStatus | boolean | O | 0..1 | If it is included and set to true, the 3GPP PS Data Off is activated by the UE. | |
| appDetecti onlnfos | array(AppDetectio nInfo) | O | 1..N | Reports the start/stop of the application traffic and detected SDF descriptions if applicable. | ADC |
| ruleReport s | array(RuleReport) | O | 1..N | Used to report the PCC rule failure. | |
| sessRuleR eports | array(SessionRul eReport) | O | 1..N | Used to report the session rule failure. | SessionRuleEr rorHandling |
| qncReports | array(QosNotificat ionControllnfo) | O | 1..N | QoS Notification Control information. | |
| qosMonRe ports | array(QosMonitori ngReport) | O | 1..N | QoS Monitoring reporting information. | QosMonitoring |
| userLocati onlnfoTime | DateTime | O | 0..1 | Contains the NTP time at which the UE was last known to be in the location. | |
| repPraInfo s | map(PresenceInfo ) | O | 1..N | Reports the changes of presence reporting area. The "prald" attribute within the Presencelnfo data type shall also be the key of the map. The "presenceState" attribute within the Presencelnfo data type shall be supplied. | PRA |
| uelnitResR eq | UelnitiatedResour ceRequest | O | 0..1 | Indicates a UE requests specific QoS handling for selected SDF. | |
| refQosindic ation | boolean | O | 0..1 | If it is included and set to true, the reflective QoS is supported by the UE. If it is included and set to false, the reflective QoS is revoked by the UE. | |
| qosFlowUs age | QosFlowUsage | O | 0..1 | Indicates the required usage for default QoS flow. | |
| creditMana geStatus | CreditManageme ntStatus | O | 0..1 | Indicates the reason of the credit management session failure. | |
| servNfId | ServingNfldentity | O | 0..1 | Contains the serving network function identity. | |
| traceReq | TraceData | C | 0..1 | It shall be included if trace is required to be activated, modified or deactivated (see 3GPP TS 32.422 [24]). For trace modification, it shall contain a complete replacement of trace data. | |
| | | | | For trace deactivation, it shall contain the Null value. | |
| addlpv6Ad drPrefixes | array(lpv6Prefix) | O | 1..N | The Ipv6 Address Prefixes of the served UE. | Multilpv6AddrP refix |
| addRellpv6 AddrPrefix es | array(lpv6Prefix) | O | 1..N | Indicates the released IPv6 Address Prefixes of the served UE in multi-homing case. | Multilpv6AddrP refix |
| tsnBridgeln fo | TsnBridgelnfo | O | 0..1 | Transports TSN bridge information. | TimeSensitive Networking |
| tsnBridgeM anCont | BridgeManageme ntContainer | O | 0..1 | Transports TSN bridge management information. | TimeSensitive Networking |
| tsnPortMan ContDstt | PortManagement Container | O | 0..1 | Transports TSN port management information for the DS-TT port. | TimeSensitive Networking |
| tsnPortMan ContNwtts | array(PortManage mentContainer) | O | 1..N | Transports TSN port management information for one or more NW-TT ports. | TimeSensitive Networking |
| maPdulnd | MaPdulndication | O | 0..1 | Contains the MA PDU session indication, i.e., MA PDU Request or MA PDU Network-Upgrade Allowed. (NOTE 1) | ATSSS |
| atsssCapa b | AtsssCapability | O | 0..1 | Contains the ATSSS capability supported for the MA PDU session. (NOTE 1) | ATSSS |
| mulAddrInf os | array(lpMulticastA ddressInfo) | O | 1..N | Contains the IP multicast address information. | WWC |
| policyDecF ailureRepo rts | array(PolicyDecisi onFailureCode) | O | 1..N | Indicates the type(s) of the failed policy decision and/or condition data. | PolicyDecision ErrorHandling |
| invalidPolic yDecs | array(InvalidPara m) | O | 1..N | Indicates the invalid parameters for the reported type(s) of the failed policy decision and/or condition data. | ExtPolicyDecis ionErrorHandli ng |
| trafficDescr iptors | array(DddTrafficD escriptor) | O | 1..N | Contains the traffic descriptor(s) | DDNEventPoli cyControl |
| NOTE 1: This attribute is only applicable to the 5GS and EPC/E-UTRAN interworking scenario as defined in Annex B. | | | | | |
| NOTE 2: The value provided in this attribute is implementation specific. The only constraint is that the SMF shall supply a different identifier for each overlapping address domain (e.g. the SMF NF instance identifier). | | | | | |

| |
|---|
| *** Next Change *** |

### 5.6.2.33 Type PartialSuccessReport

**Table 5.6.2.33-1: Definition of type PartialSuccessReport**

| **Attribute name** | **Data type** | **P** | **Cardinality** | **Description** | **Applicability** |
|---|---|---|---|---|---|
| failureCa use | FailureCause | M | 1 | Application error cause specific to this report. | |
| ruleRepo rts | array(RuleReport) | C | 1..N | Information about the PCC rules provisioned by the PCF not successfully installed/activated. | |
| sessRule Reports | array(SessionRule Report) | O | 1..N | Information about the session rules provisioned by the PCF not successfully installed. | SessionRuleEr rorHandling |
| ueCampi ngRep | UeCampingRep | O | 0..1 | Includes the current applicable values corresponding to the provisioned policy control request triggers. | |
| policyDe cFailure Reports | array(PolicyDecisio nFailureCode) | O | 1..N | Used to report the failure of the policy decision and/or condition data. | PolicyDecision ErrorHandling |
| invalidPo licyDecs | array(InvalidParam ) | O | 1..N | Indicates the invalid parameters for the reported type(s) of the failed policy decision and/or condition data. | ExtPolicyDecis ionErrorHandli ng |
| NOTE: The "ruleReports" shall be included if the SessionRuleErrorHandling feature is not supported. | | | | | |

| |
|---|
| *** Next Change *** |

### 5.6.3.28 Enumeration: PolicyDecisionFailureCode

**Table 5.6.3.28-1: PolicyDecisionFailureCode**

| **Enumeration value** | **Description** | **Applicability** |
|---|---|---|
| TRA_CTRL_DE CS_ERR | Indicates failure in the provisioning of traffic control decisiondata. | |
| QOS DECS_ERR | Indicates failure in the provisioning of QoS decision data. | |
| CHG DECS_ERR | Indicates failure in the provisioning of charing decision data. | |
| USA_MON_DE CS_ERR | Indicates failure in the provisioning of usage monitoring decision data. | |
| QOS_MON_DE CS_ERR | Indicates failure in the provisioning of QoS monitoring decision data. | |
| CON_DATA_E RR | Indicates failure in the provisioning of condition data. | |
| POLICY_PARA M_ERR | Indicates the information related to the provisioned policy parameter(s) is incorrect, incomplete or inconsistent. | ExtPolicyDecision Error Handling |

| |
|---|
| *** Next Change *** |

### 5.8 Feature negotiation

The optional features in table 5.8-1 are defined for the Npcf_SMPolicyControl API. They shall be negotiated using the extensibility mechanism defined in subclause 6.6 of 3GPP TS 29.500 [4].

**Table 5.8-1: Supported Features**

| **Feature number** | **Feature Name** | **Description** |
|---|---|---|
| 1 | TSC | This feature indicates support for traffic steering control in the (S)Gi-LAN or routing of the user traffic to a local Data Network identified by the DNAI per AF request. If the SMF supports this feature, the PCF shall behave as described in subclause 4.2.6.2.6. |
| 2 | ResShare | This feature indicates the support of service data flows that share resources. If the SMF supports this feature, the PCF shall behave as described in subclause 4.2.6.2.8. |
| 3 | 3GPP-PS-Data-Off | This feature indicates the support of 3GPP PS Data off status change reporting. |
| 4 | ADC | This feature indicates the support of application detection and control. |
| 5 | UMC | Indicates that the usage monitoring control is supported. |
| 6 | NetLoc | This feature indicates the support of the Access Network Information Reporting for 5GS. |
| 7 | RAN-NAS-Cause | This feature indicates the support for the detailed release cause code information from the access network. (NOTE) |
| 8 | ProvAFsignalFlow | This feature indicates support for the feature of IMS Restoration as described in subclause 4.2.3.17. If SMF supports this feature the PCF may provision AF signalling IP flow information. |
| 9 | PCSCF-Restoration-Enhancement | This feature indicates support of P-CSCF Restoration Enhancement. It is used for the SMF to indicate if it supports P-CSCF Restoration Enhancement. |
| 10 | PRA | This feature indicates the support of presence reporting area change reporting. |
| 11 | RuleVersioning | This feature indicates the support of PCC rule versioning as defined in subclause 4.2.6.7. |
| 12 | SponsoredConnectivity | This feature indicates support for sponsored data connectivity feature. If the SMF supports this feature, the PCF may authorize sponsored data connectivity to the subscriber. |
| 13 | RAN-Support-Info | This feature indicates the support of maximum packet loss rate value(s) for uplink and/or downlink voice service data flow(s). |
| 14 | PolicyU pdateWhen U ESuspends | This feature indicates the support of report when the UE is suspended and then resumed from suspend state. |
| | | Only applicable to the interworking scenario as defined in Annex B. |
| 15 | AccessTypeCondition | This feature indicates the support of access type conditioned authorized session AMBR as defined in subclause 4.2.6.3.2.4. |
| 16 | MultiIpv6AddrPrefix | This feature indicates the support of multiple Ipv6 address prefixes reporting. |
| 17 | SessionRuleErrorHandling | This feature indicates the support of session rule error handling. |
| 18 | AF_Charging_ldentifier | This feature indicates the support of long character strings as charging identifiers. |
| 19 | ATSSS | This feature indicates the support of the access traffic switching, steering and splitting functionality as defined in subclauses 4.2.6.2.17 and 4.2.6.3.4. |
| 20 | PendingTransaction | This feature indicates support for the race condition handling as defined in 3GPP TS 29.513 [7]. |
| 21 | URLLC | This feature indicates support of Ultra-Reliable Low-Latency Communication (URLLC) requirements, i.e. AF application relocation acknowledgement requirement and UE address(es) preservation. The TSC feature shall be supported in order to support this feature. |
| 22 | MacAddressRange | Indicates the support of a set of MAC addresses with a specific range in the traffic filter. |
| 23 | WWC | Indicates support of wireless and wireline convergence access as defined in annex C. |
| 24 | QosMonitoring | Indicates support of QoS monitoring as defined in subclause 4.2.3.25 and 4.2.4.24. |
| 25 | AuthorizationWithRequiredQoS | Indicates support of policy authorization for the AF session with required QoS as defined in subclause 4.2.3.22. |
| 26 | EnhancedBackgroundDataTransfer | Indicates the support of applying the Background Data Transfer Policy to a future PDU session. |
| 27 | DN-Authorization | This feature indicates the support of DN-AAA authorization data for policy control. |
| 28 | PDUSessionRelCause | Indicates the support of PDU session release cause. |
| 29 | SamePcf | This feature indicates the support of same PCF selection for the parameter's combination. |
| 30 | ADCmultiRedirection | This feature indicates support for multiple redirection information in application detection and control. It requires the support of ADC feature. |
| 31 | RespBasedSessionRel | Indicates support of handling PDU session termination functionality as defined in subclause 4.2.4.22. |
| 32 | TimeSensitiveNetworking | Indicates that the 5G System is integrated within the external network as a TSN bridge. |
| 33 | EMDBV | This feature indicates the support of the ExtMaxDataBurstVol data type defined in 3GPP TS 29.571 [11]. The use of this data type is specified in subclause 4.2.2.1. |
| 34 | DNNSelectionMode | This feature indicates the support of DNN selection mode. |
| 35 | EPSFallbackReport | This feature indicates the support of the report of EPS Fallback as defined in subclauses B.3.3.2 and B.3.4.6. |
| 36 | PolicyDecisionErrorHandling | This feature indicates the support of the error report of the policy decision and/or condition data which is not referred by any PCC rule or session rule as defined in subclause 4.2.3.26 and 4.2.4.26. |
| 37 | DDNEventPolicyControl | This feature indicates the support for policy control in the case of DDN Failure and Delivery Status events as defined in subclause 4.2.4.27. |
| 38 | ReallocationOfCredit | This feature indicates the support of notifications of reallocation of credit. |
| x2 | ExtPolicyDecisionErrorHandling | This feature indicates the support of the error report of a faulty SM policy decision parameter as defined in subclause 4.2.3.26 and 4.2.4.26. It requires the support of PolicyDecisionErrorHandling feature. |
| NOTE: | 5GS and EPS release cause code information is supported. The EPS release cause code information from the access network is only applicable to EPS interworking scenarios as specified in Annex B. | |

| |
|---|
| *** Next Change *** |

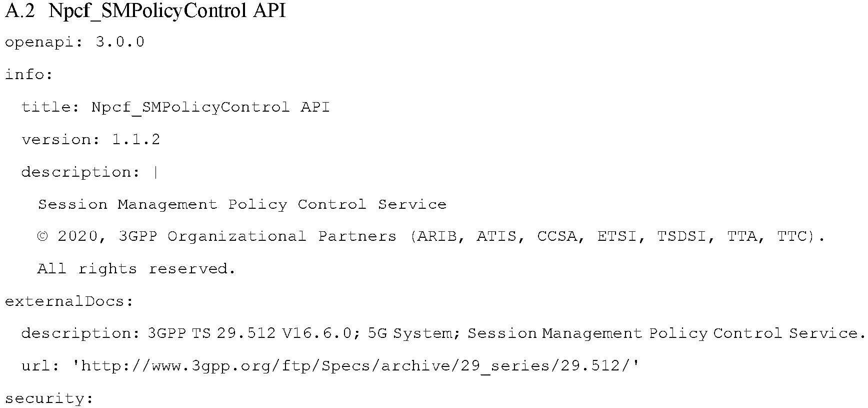

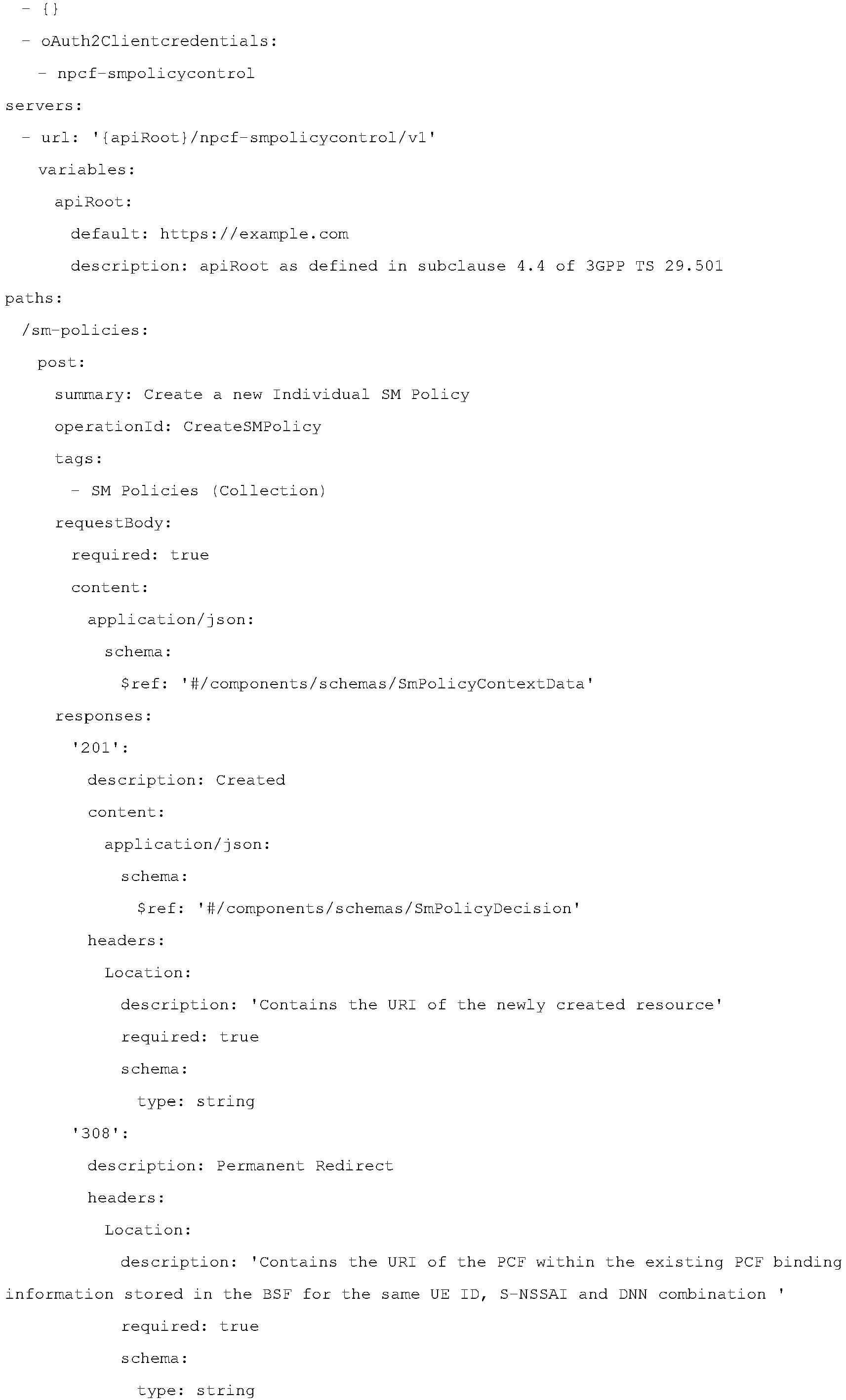

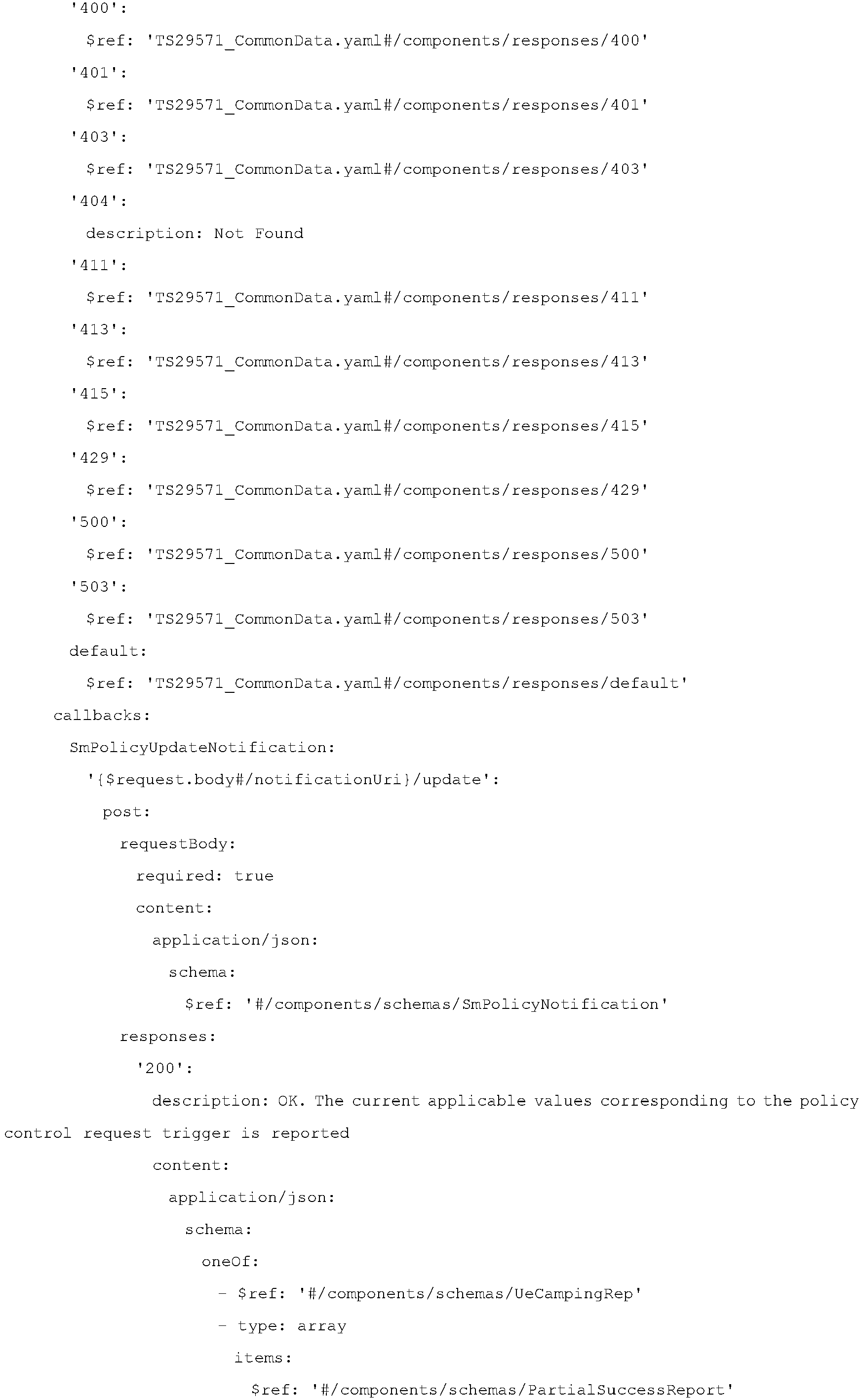

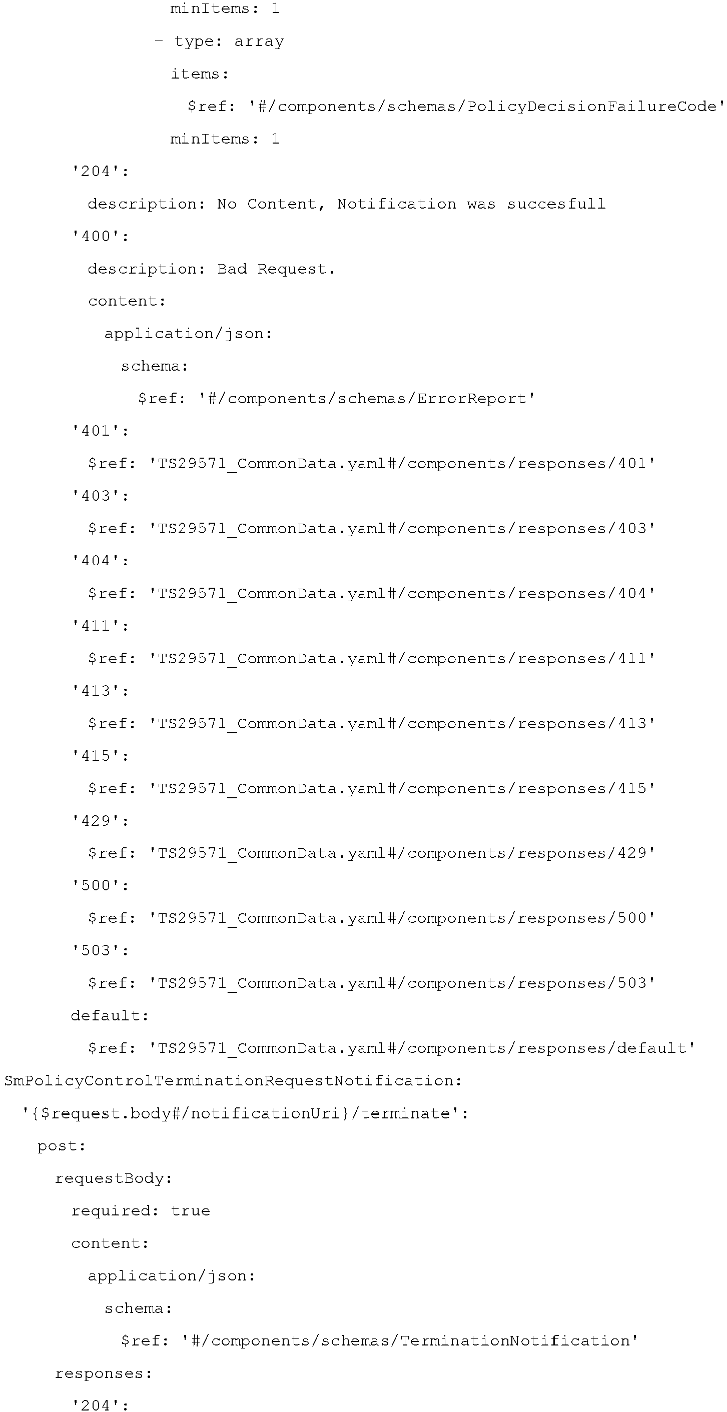

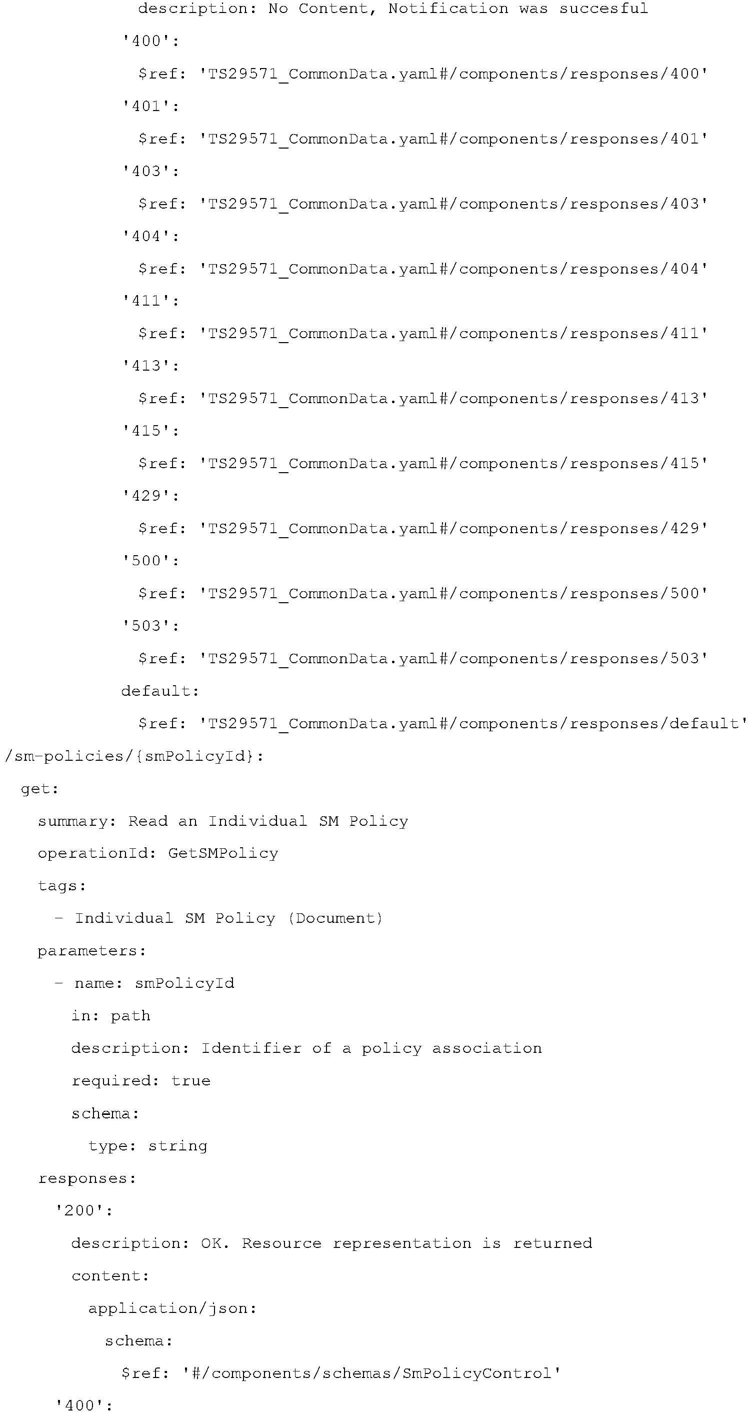

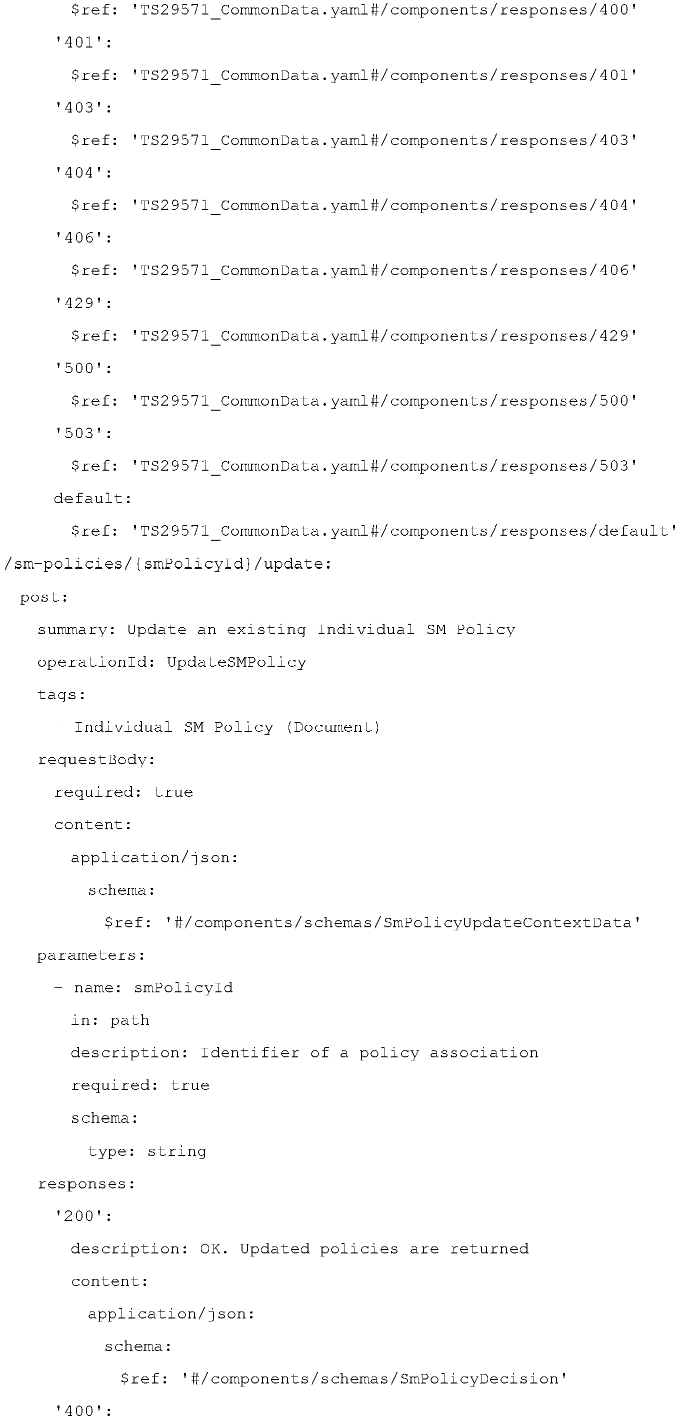

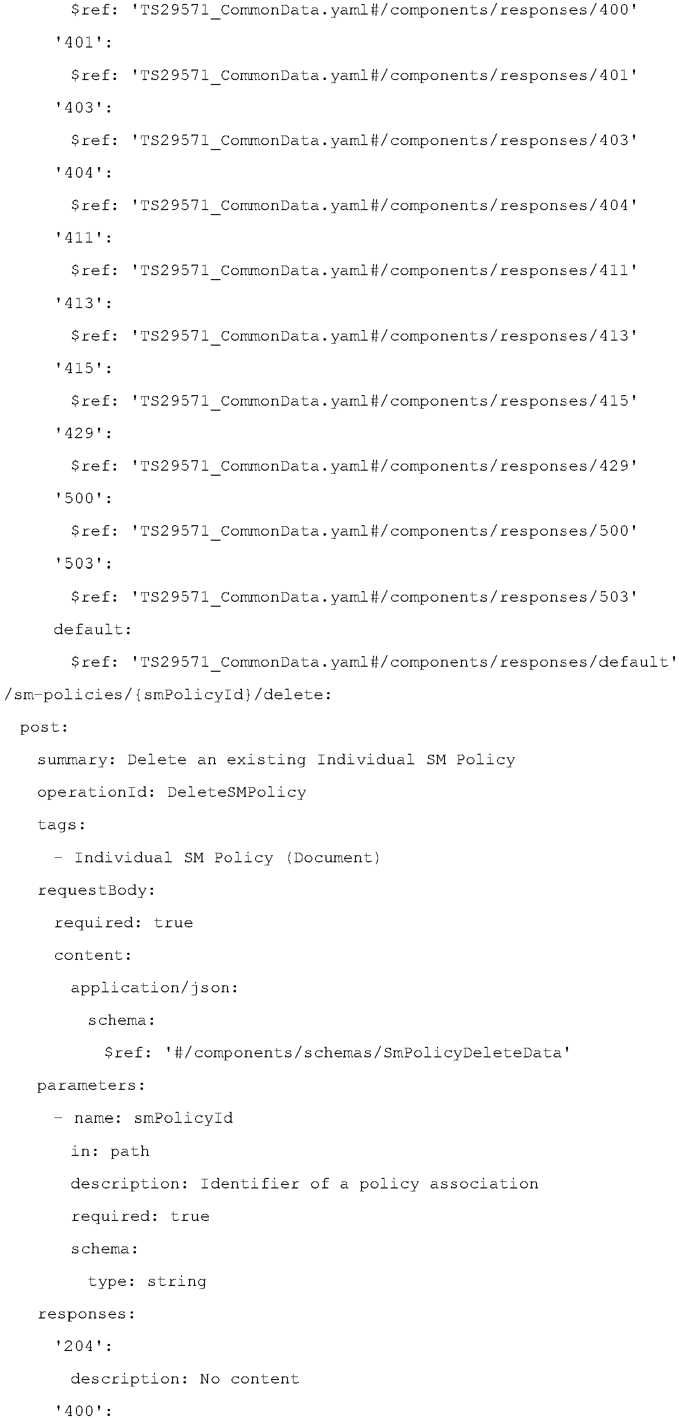

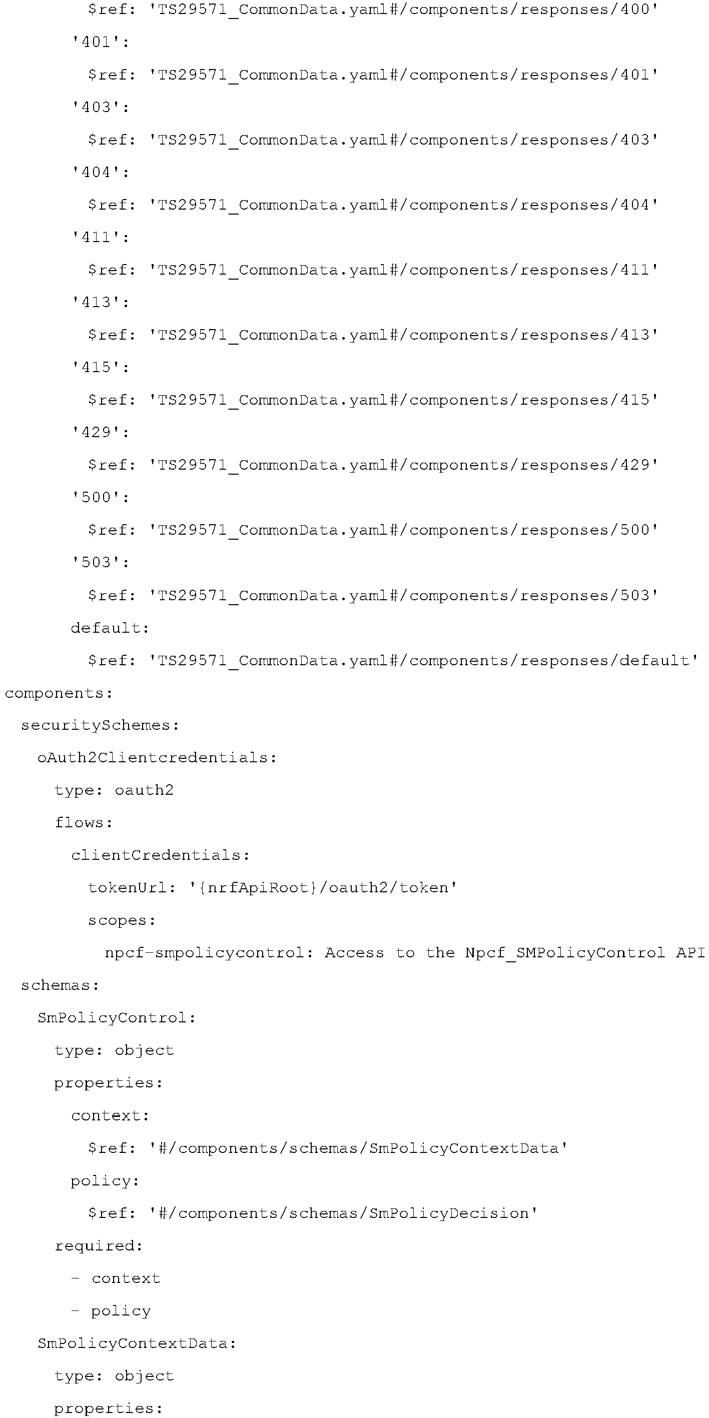

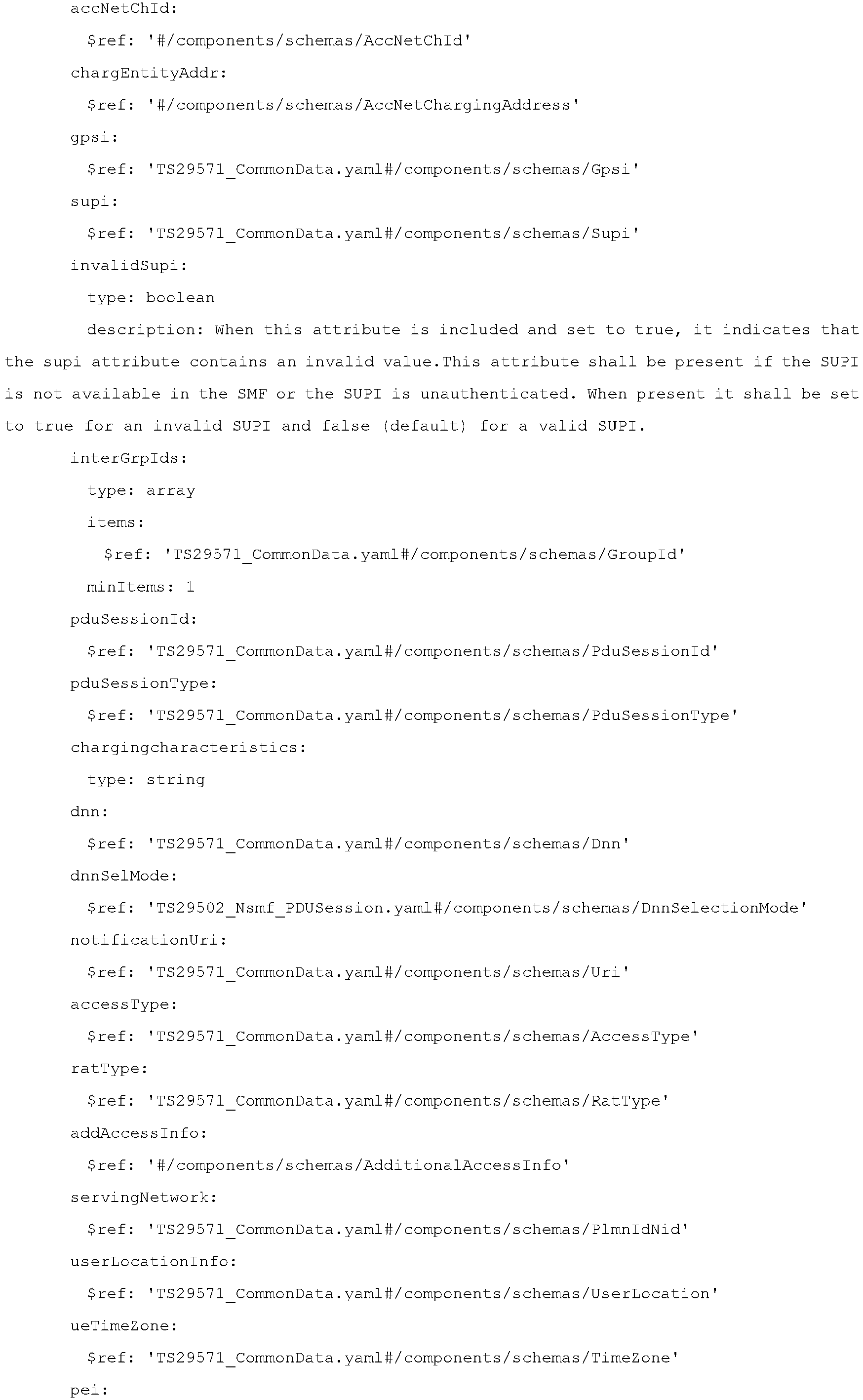

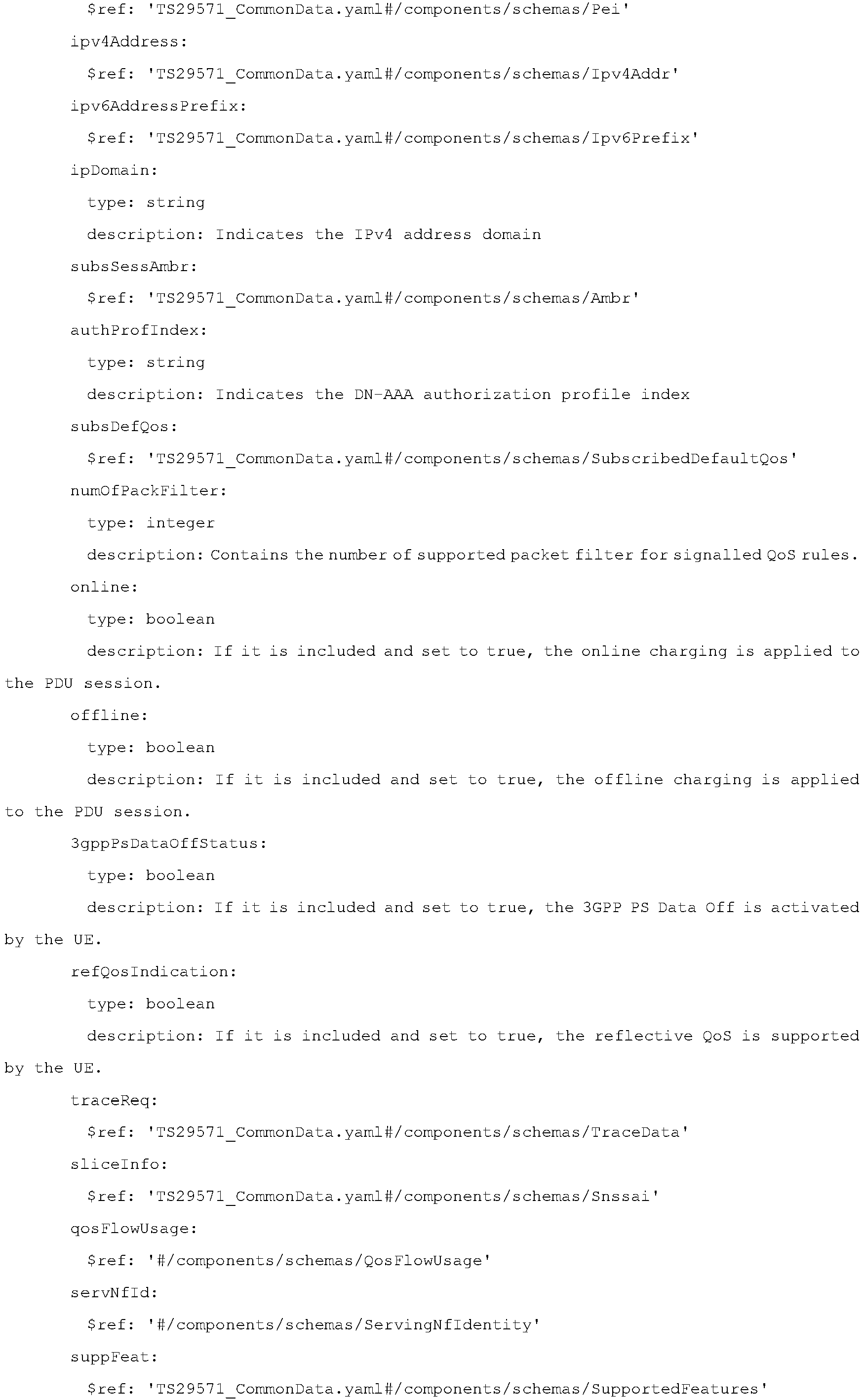

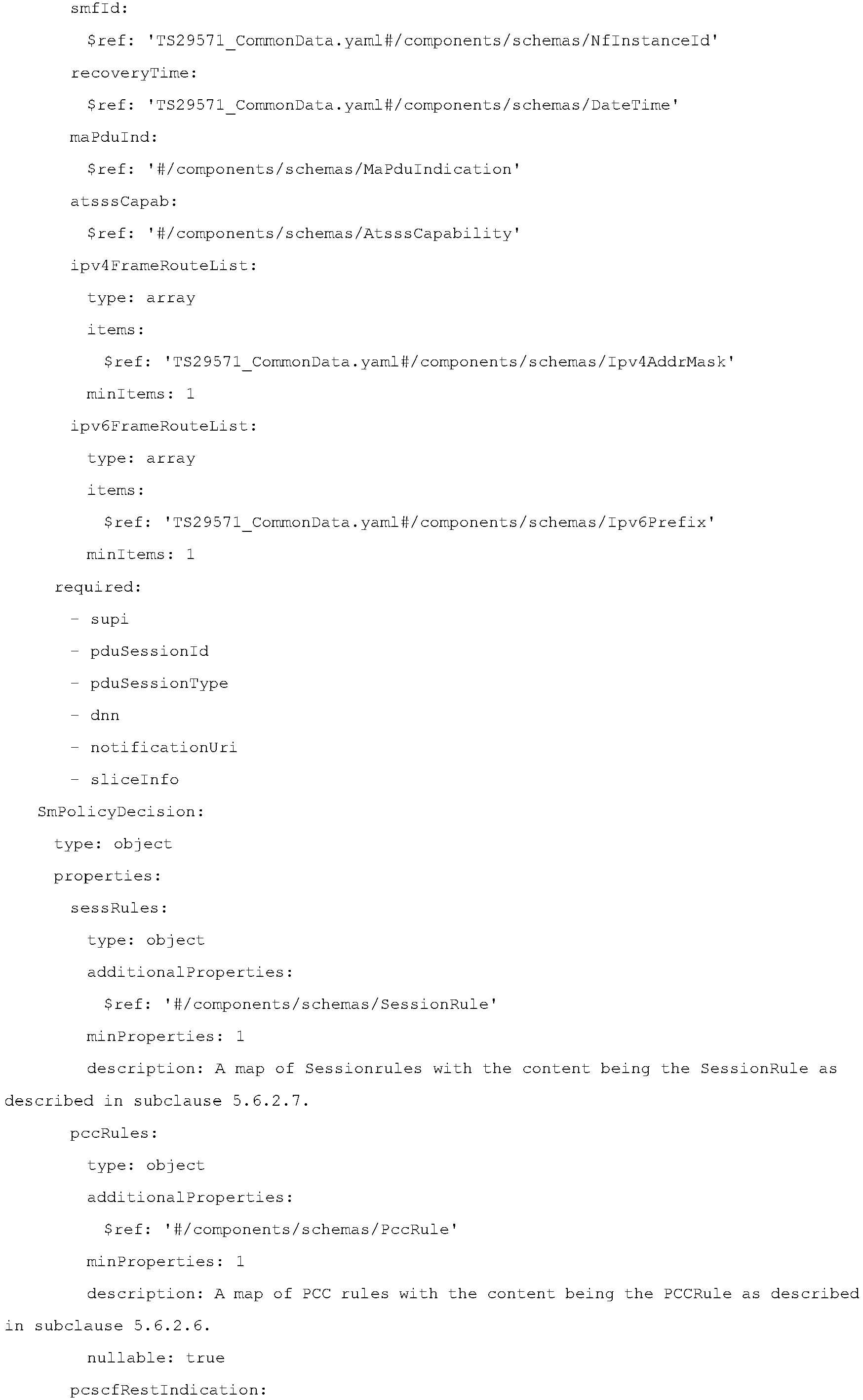

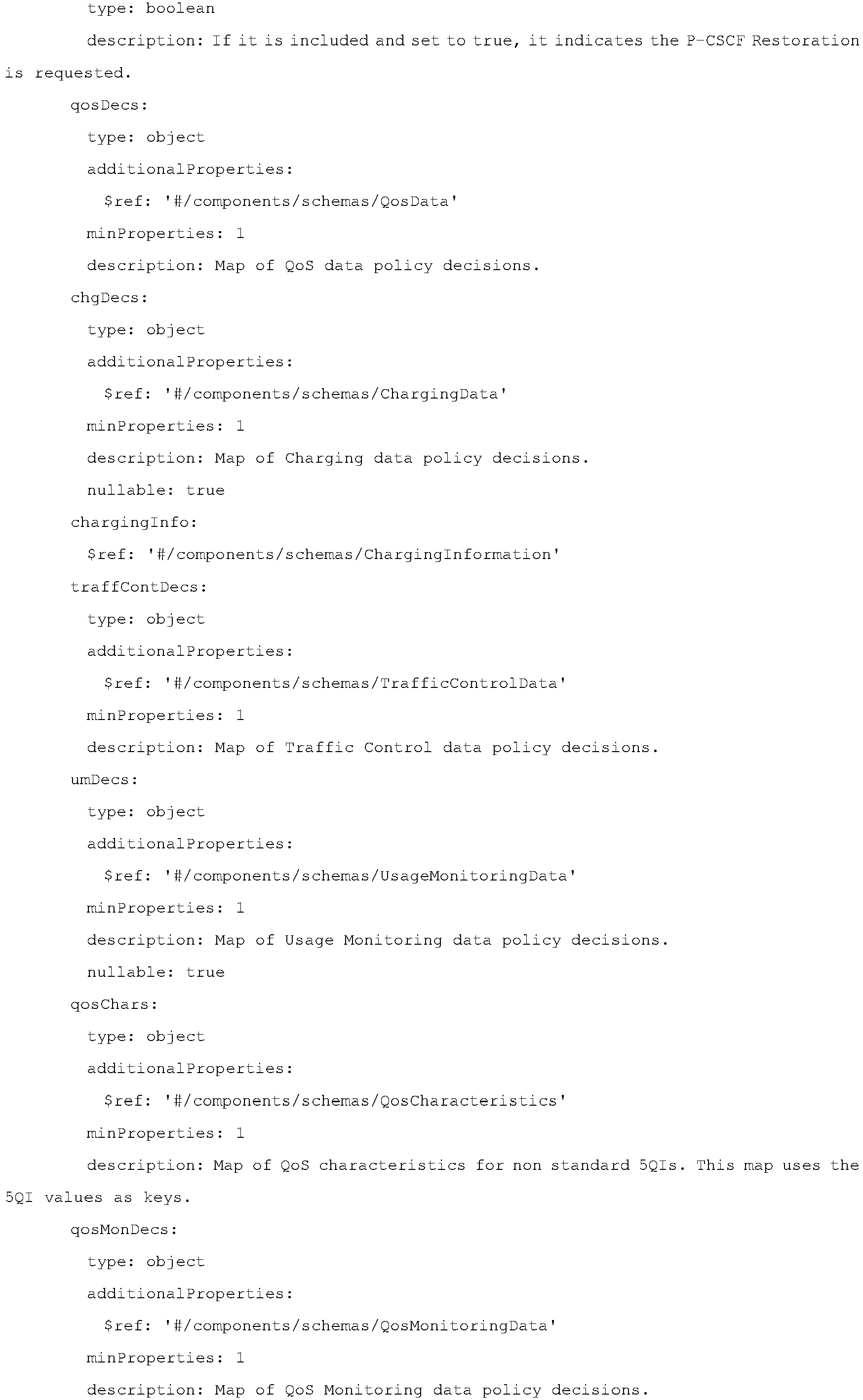

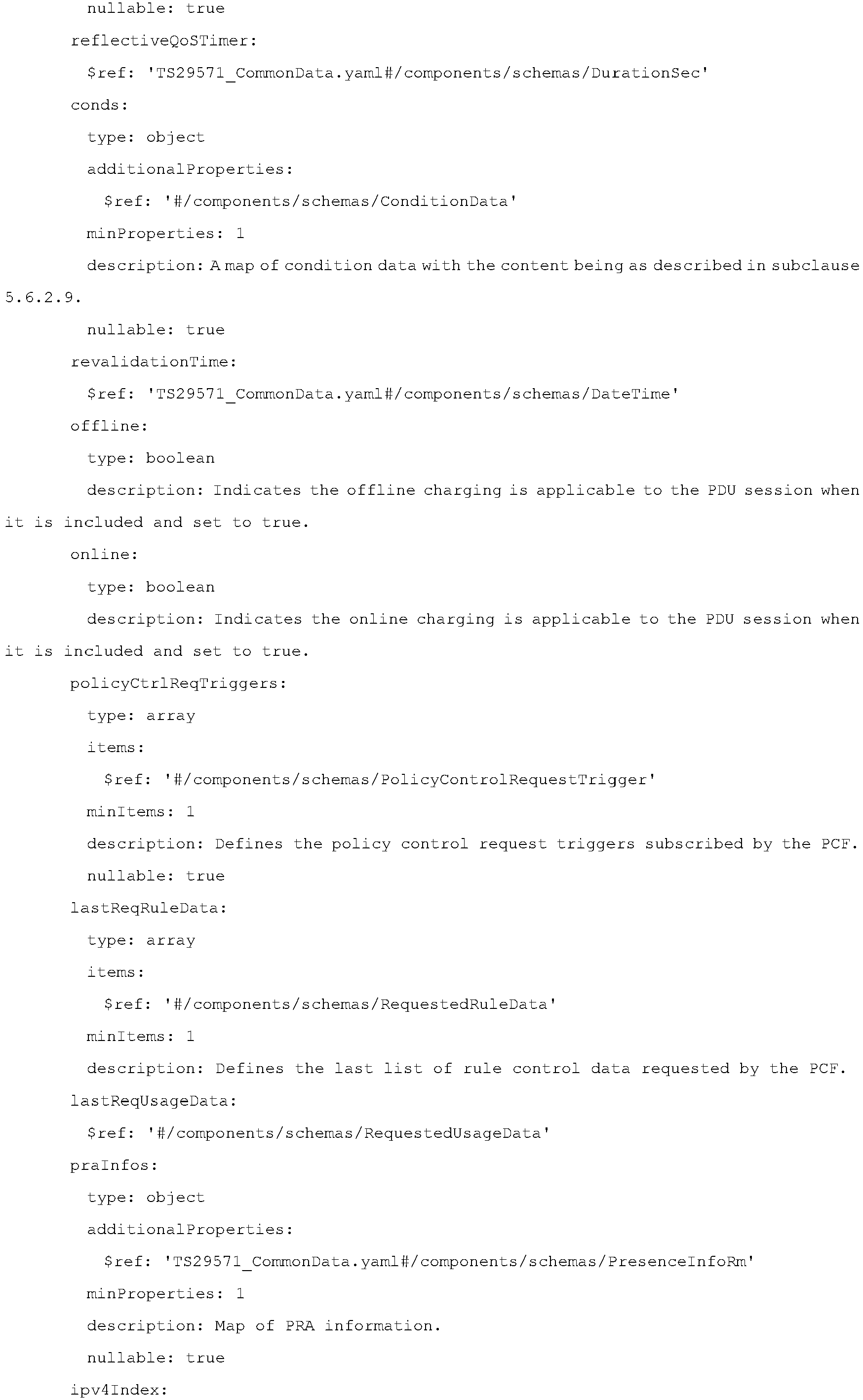

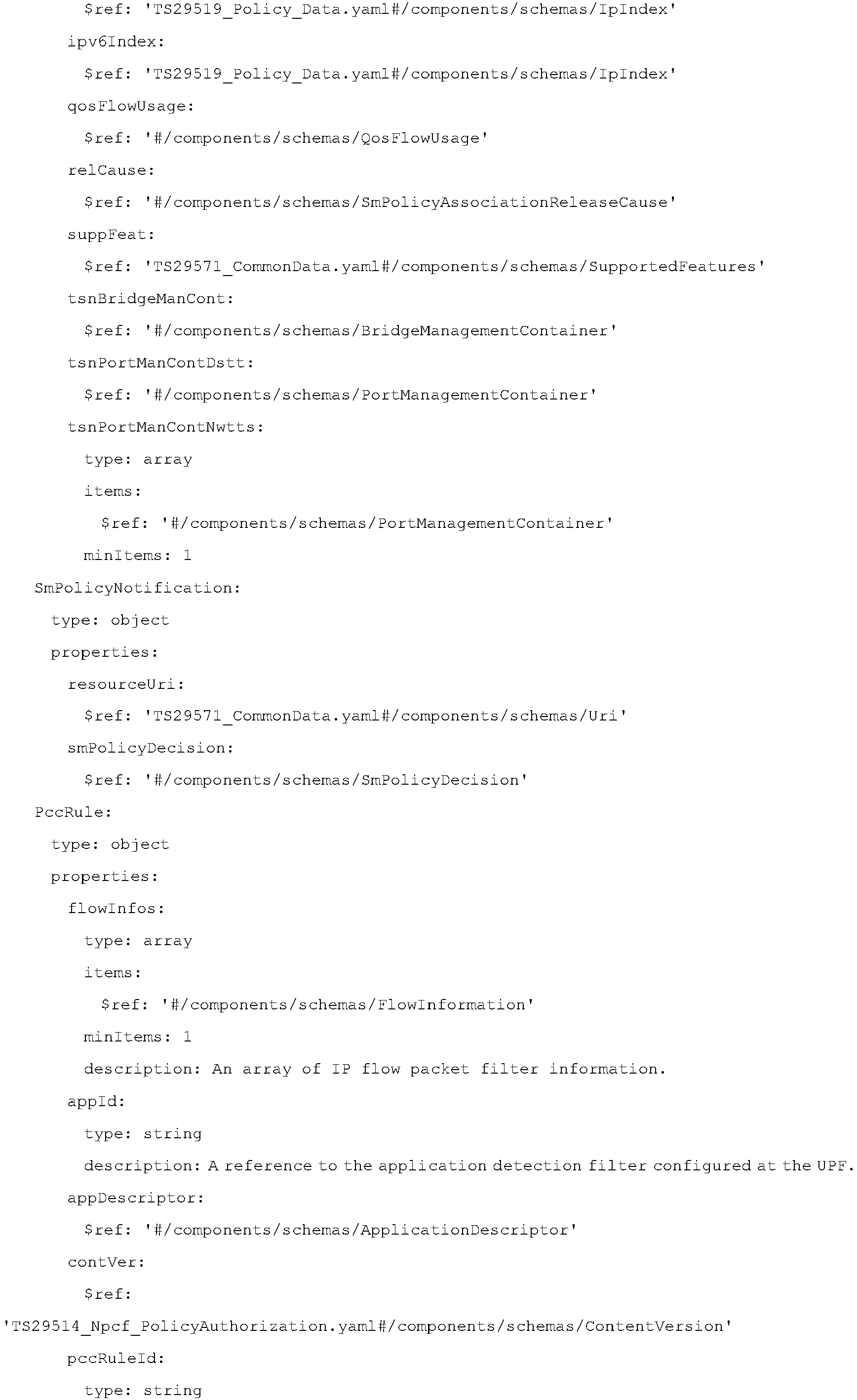

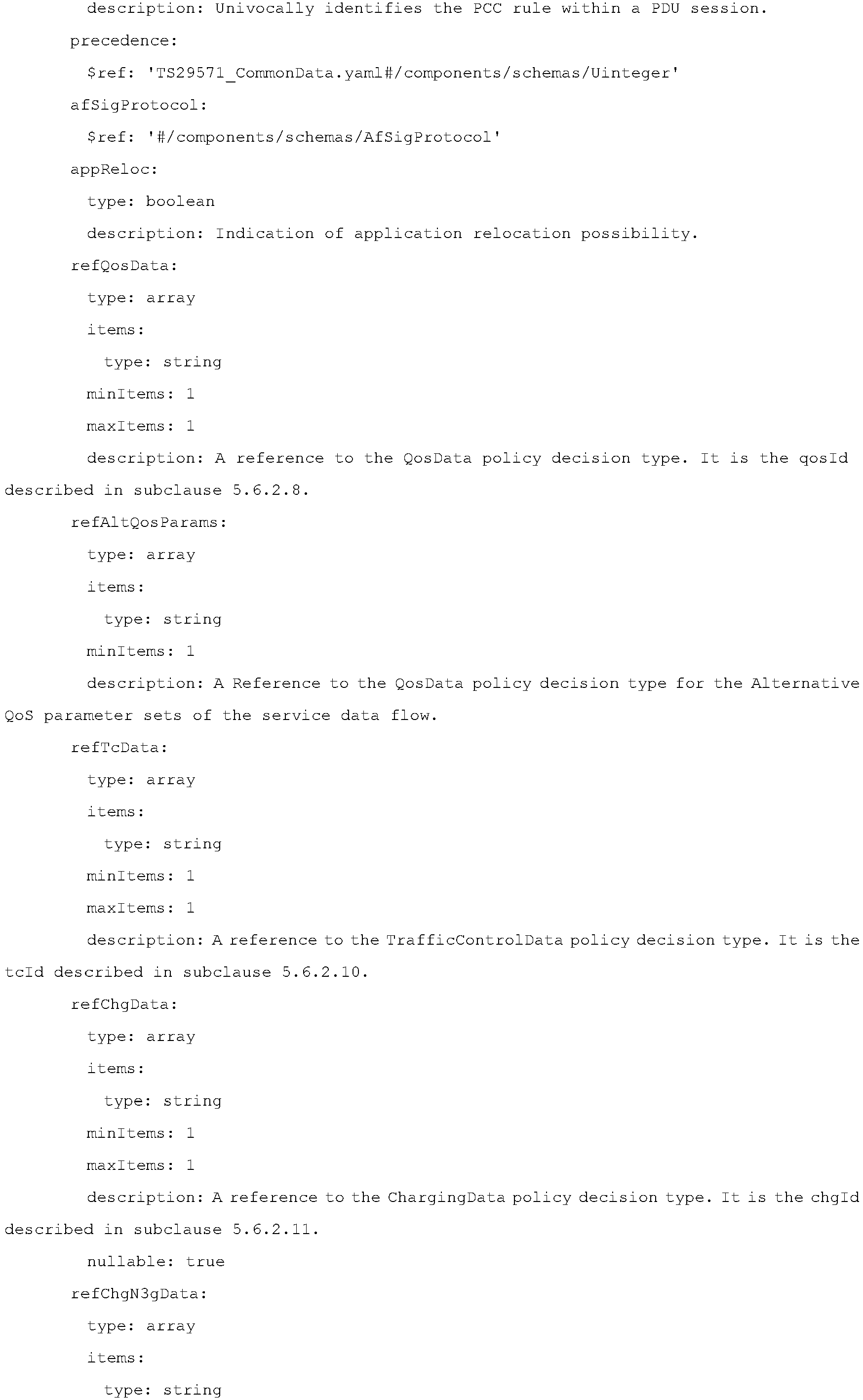

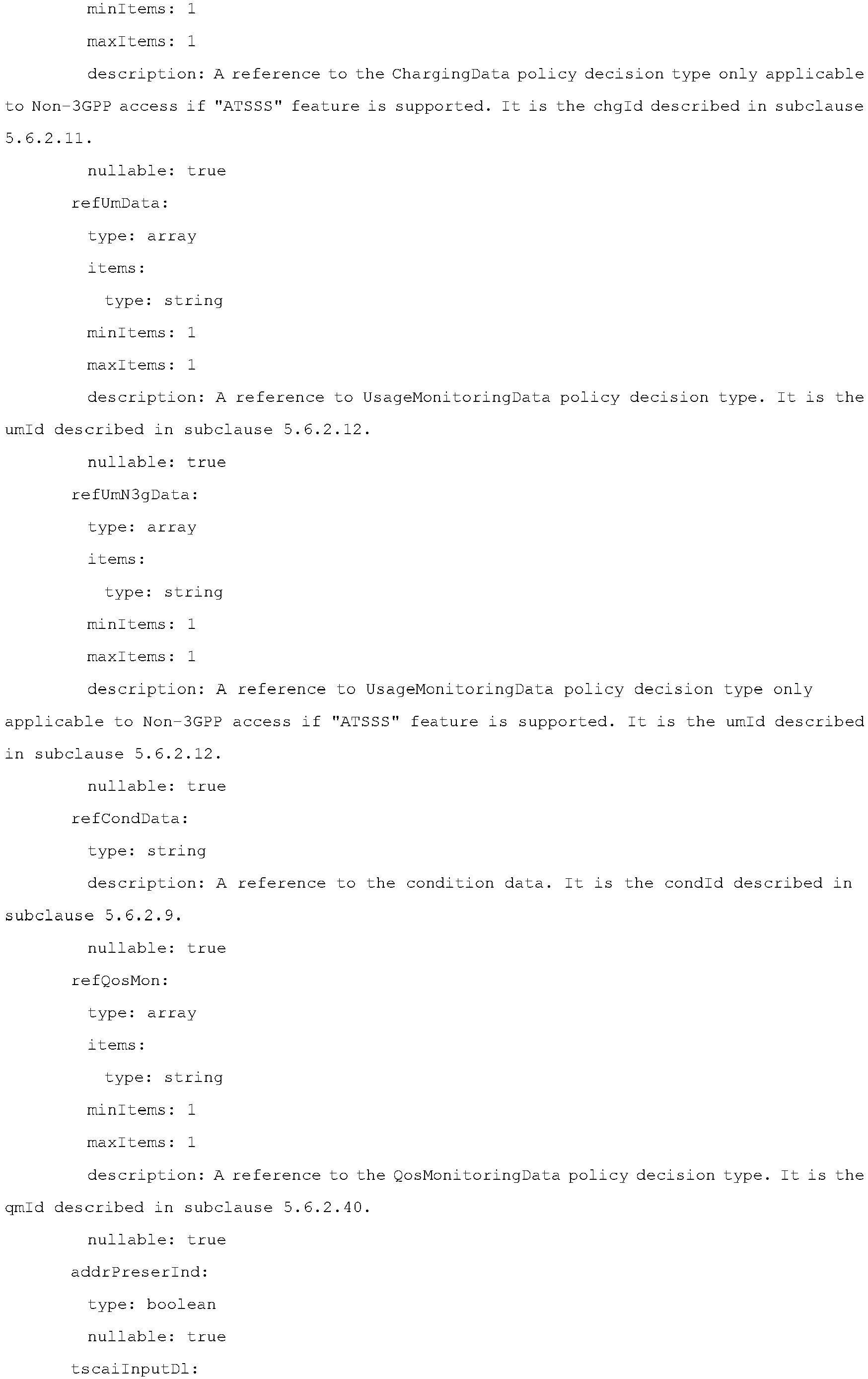

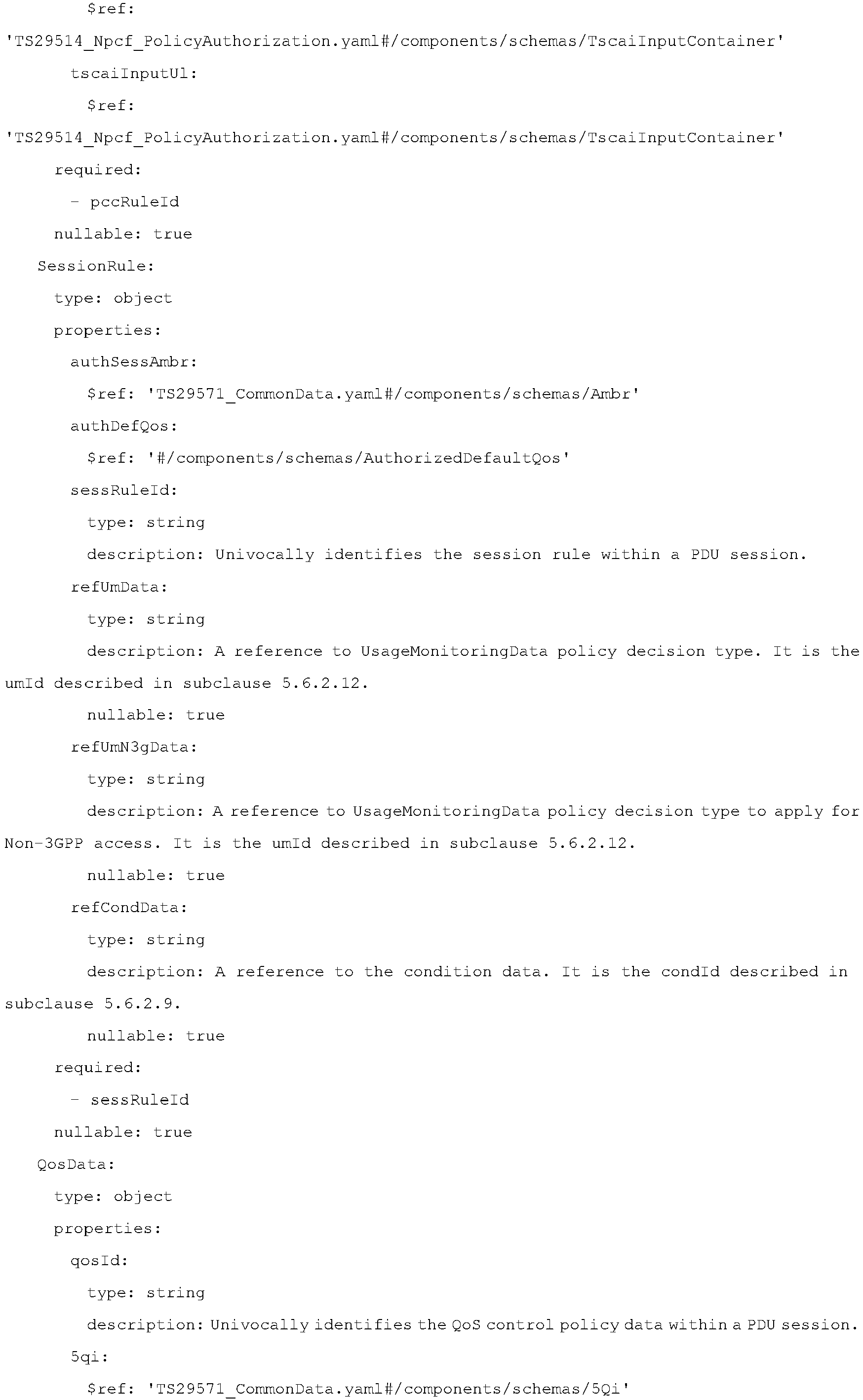

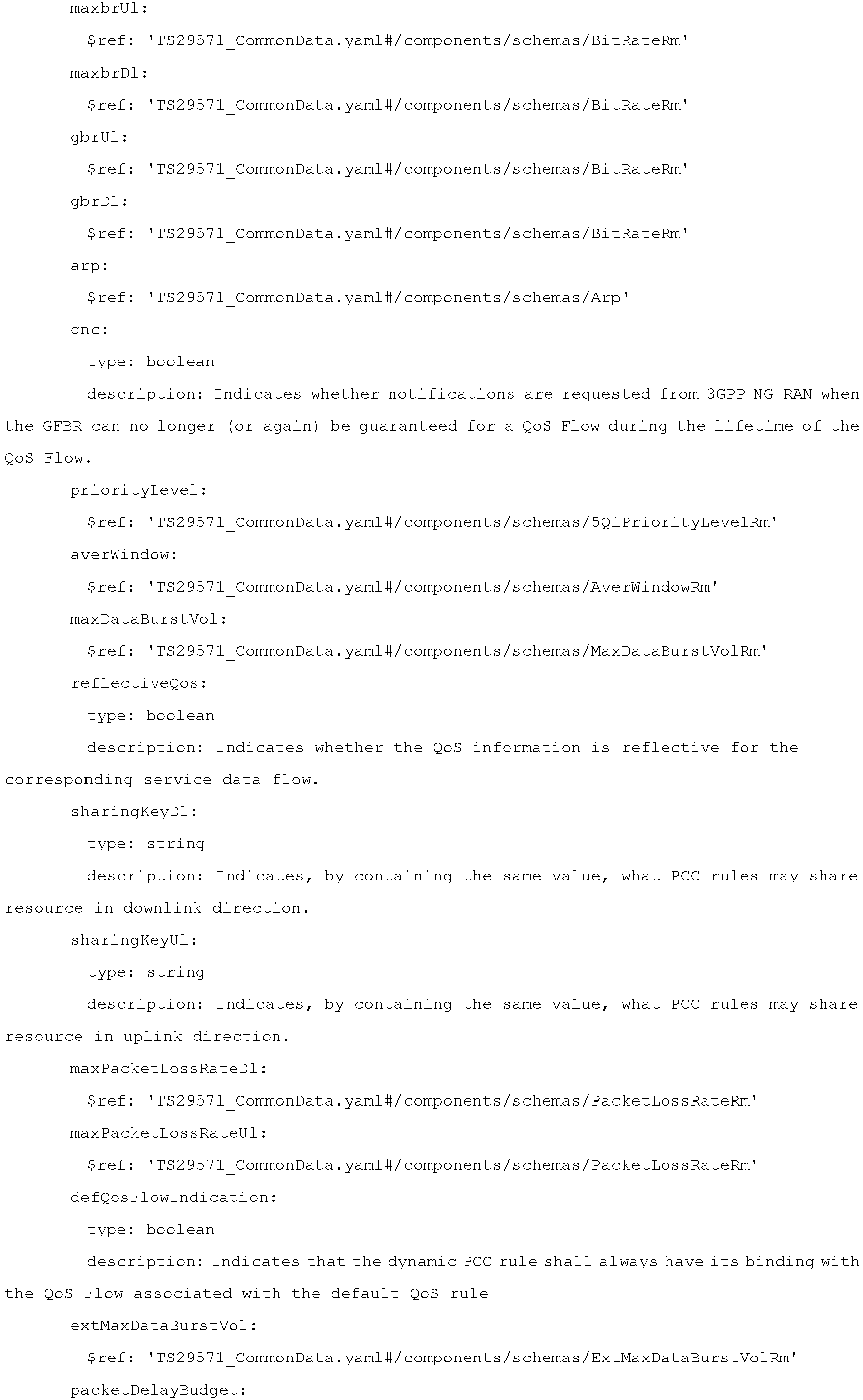

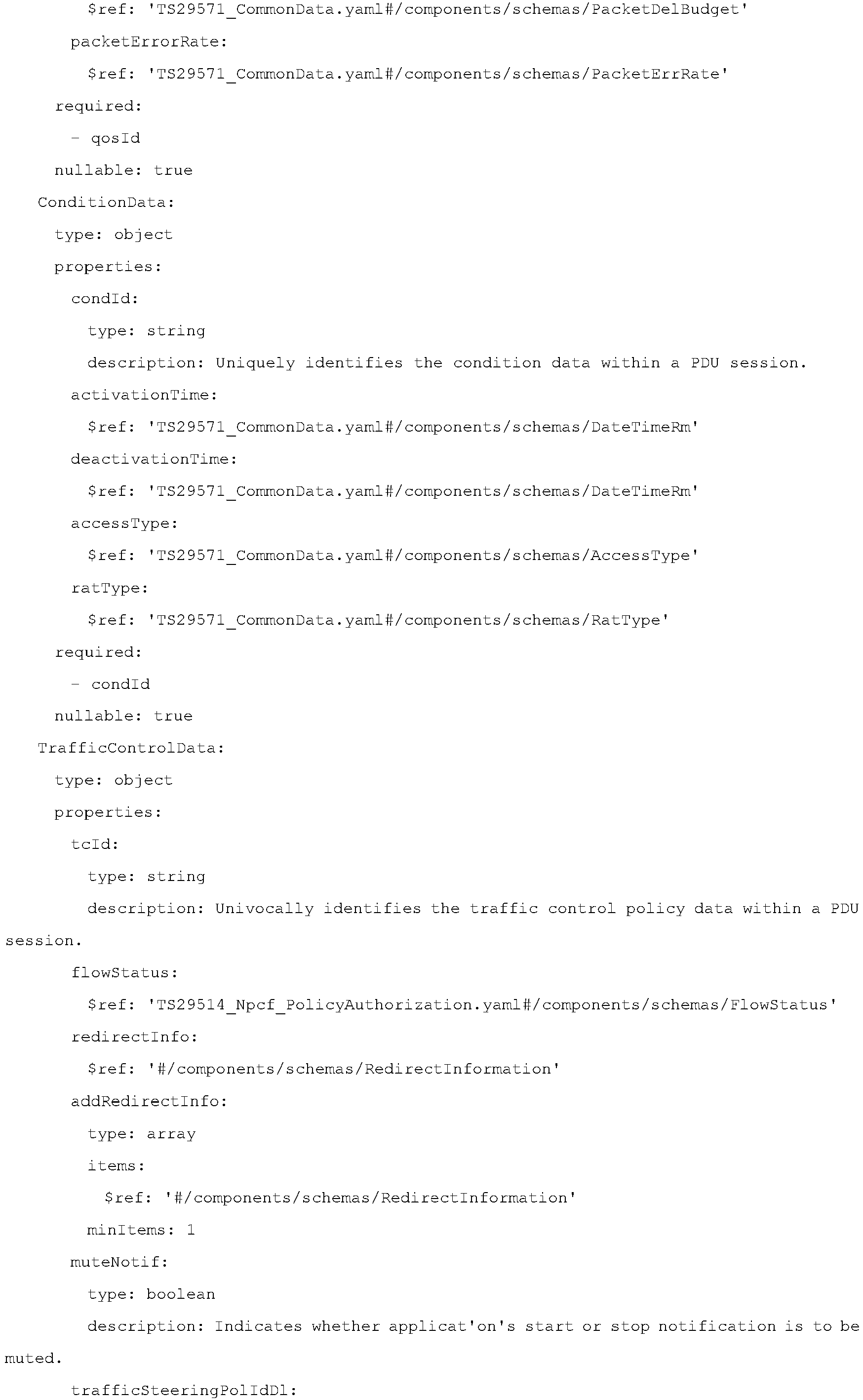

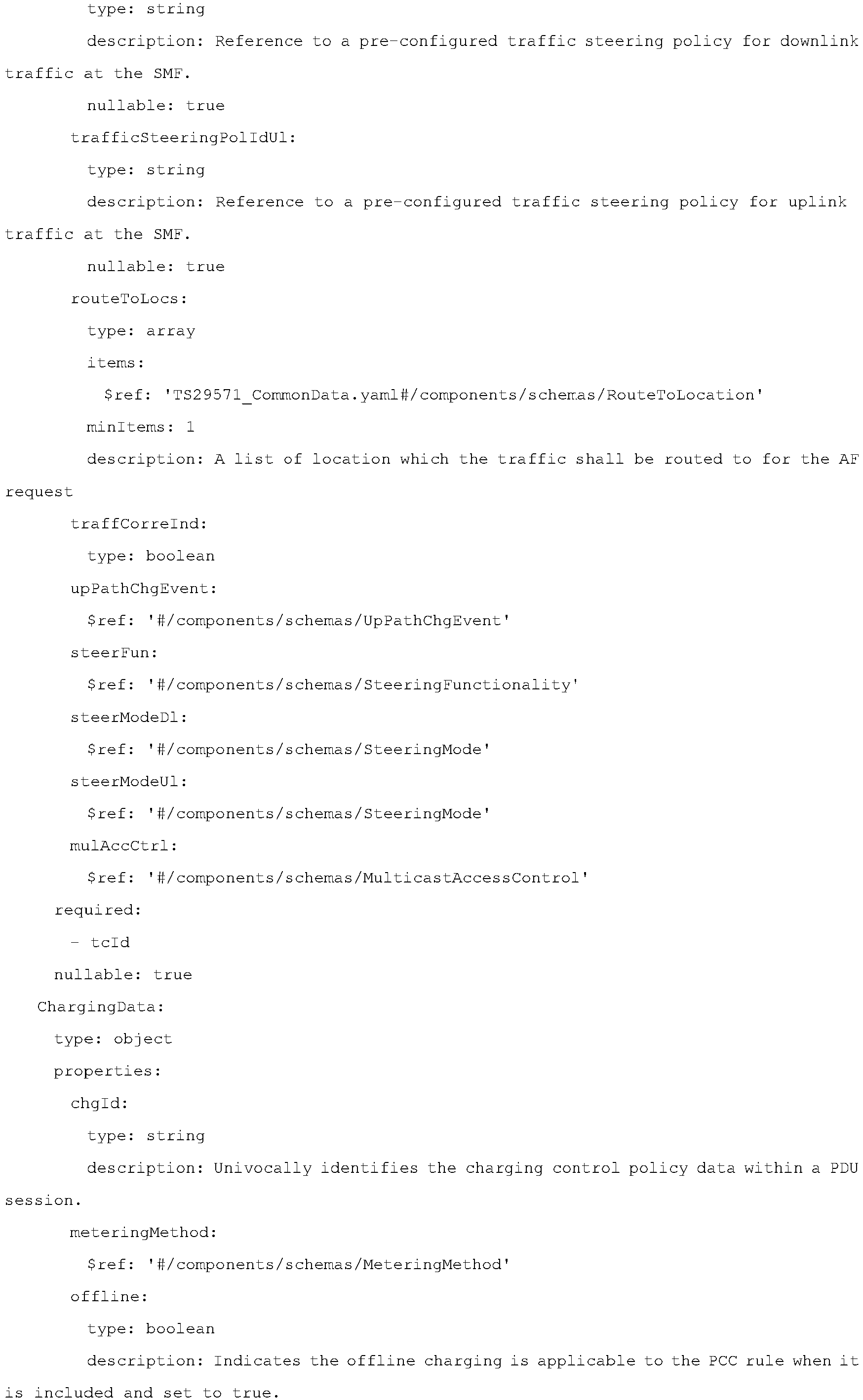

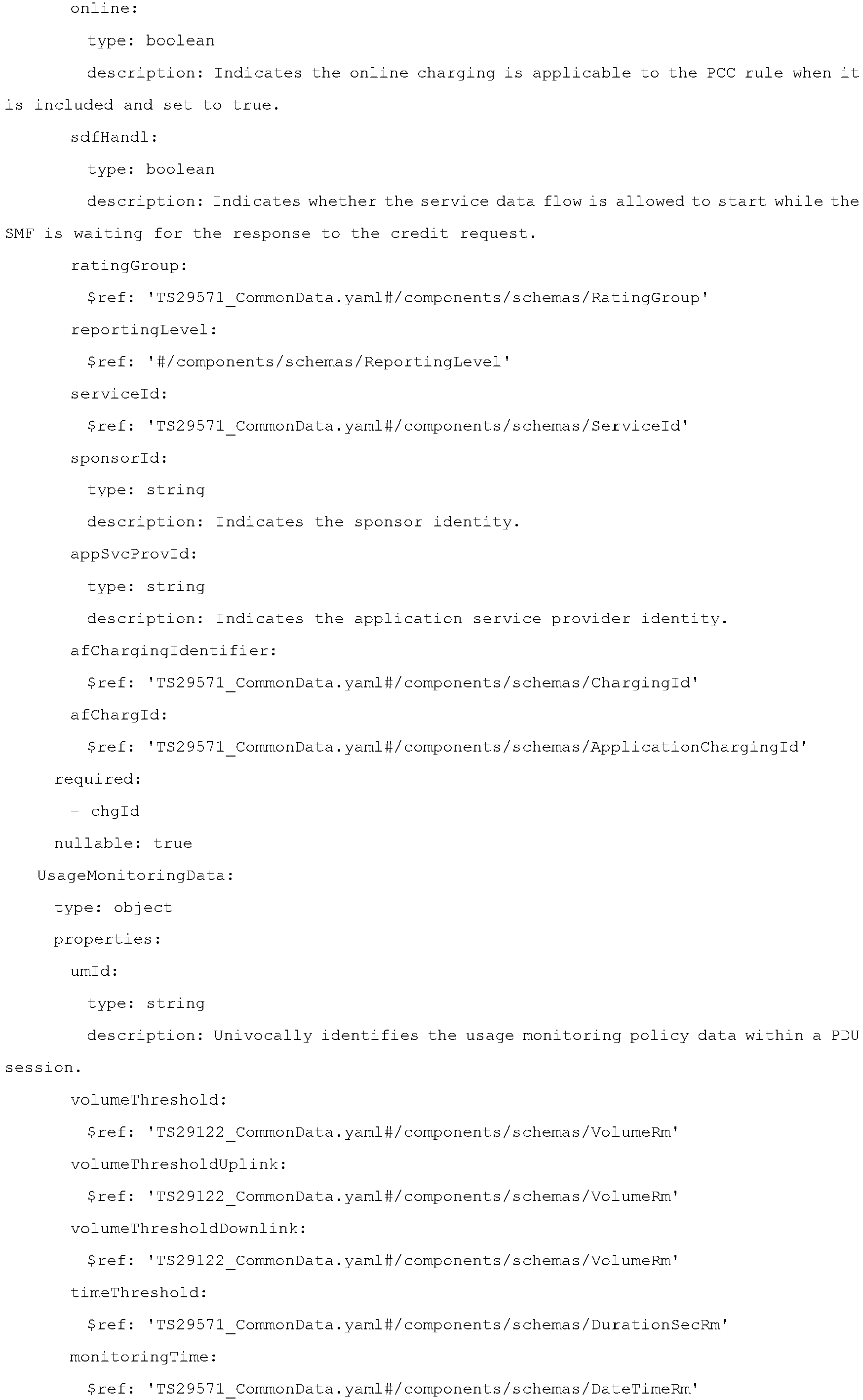

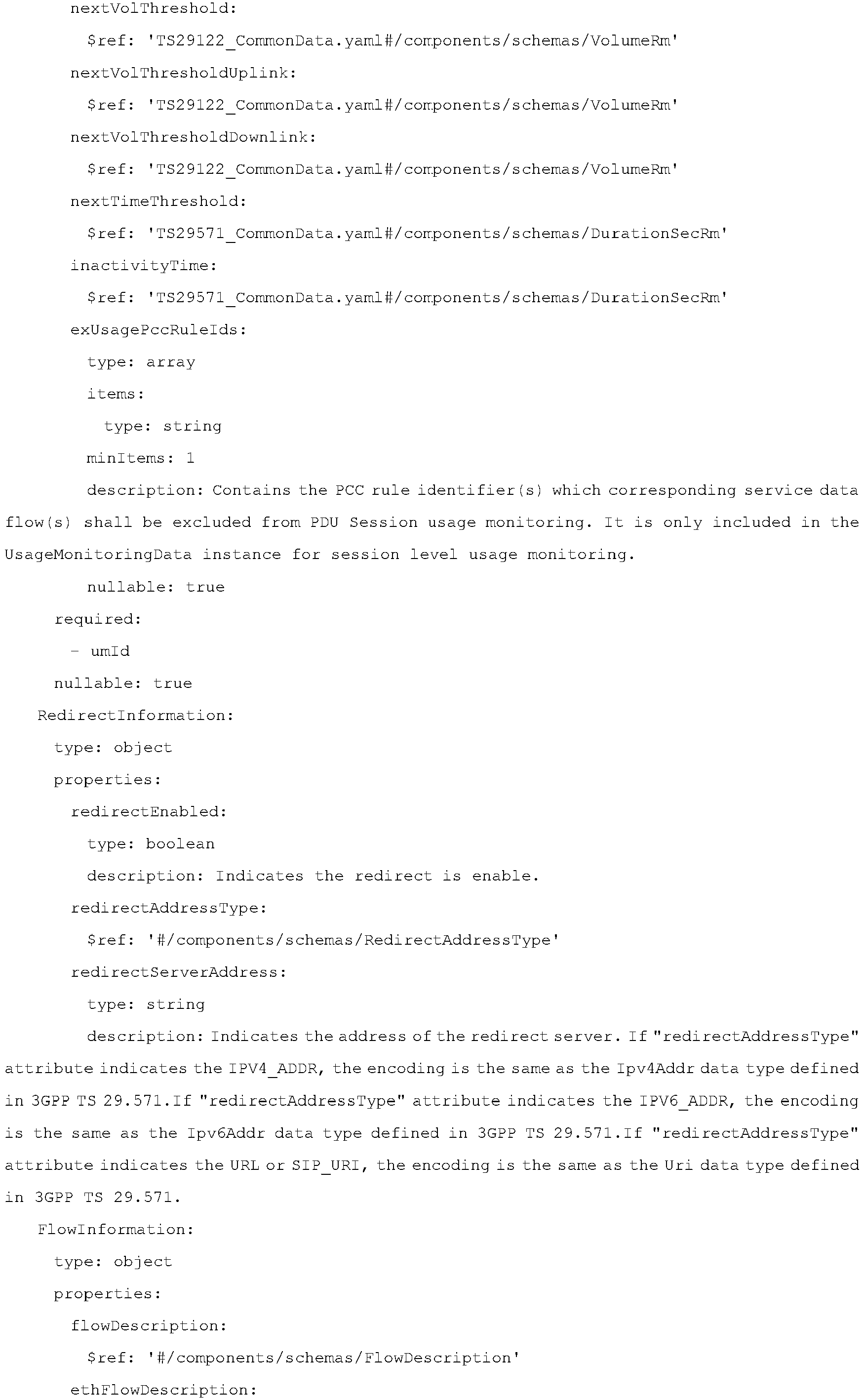

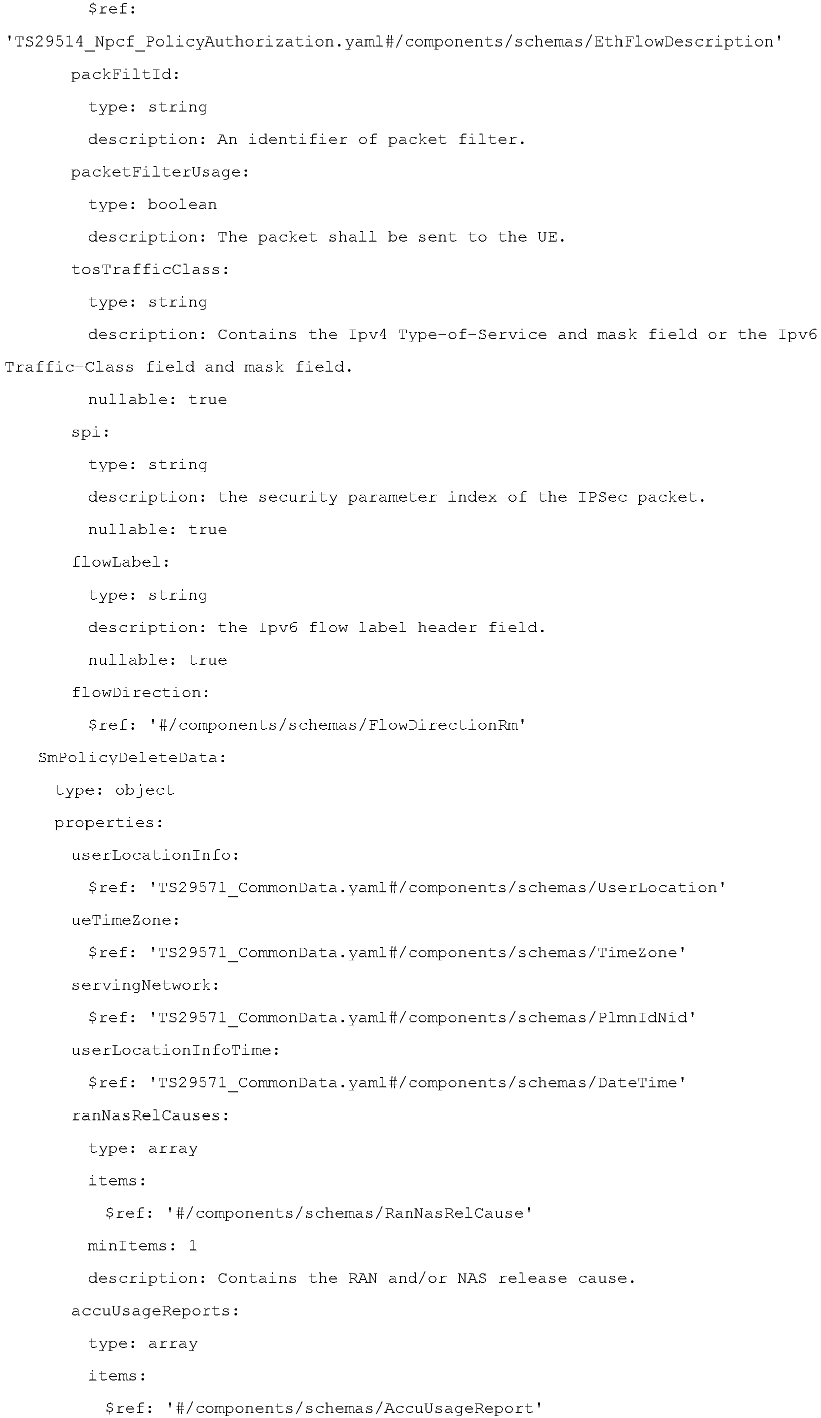

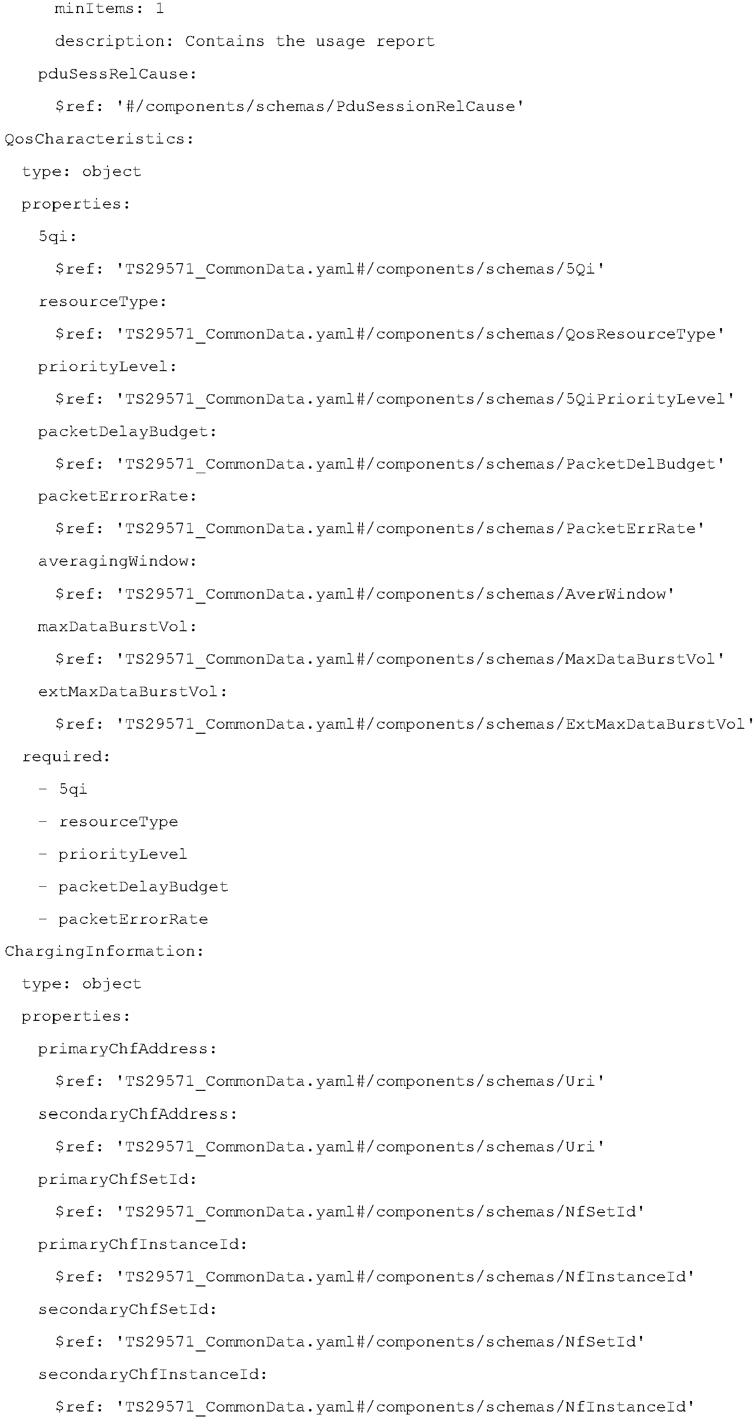

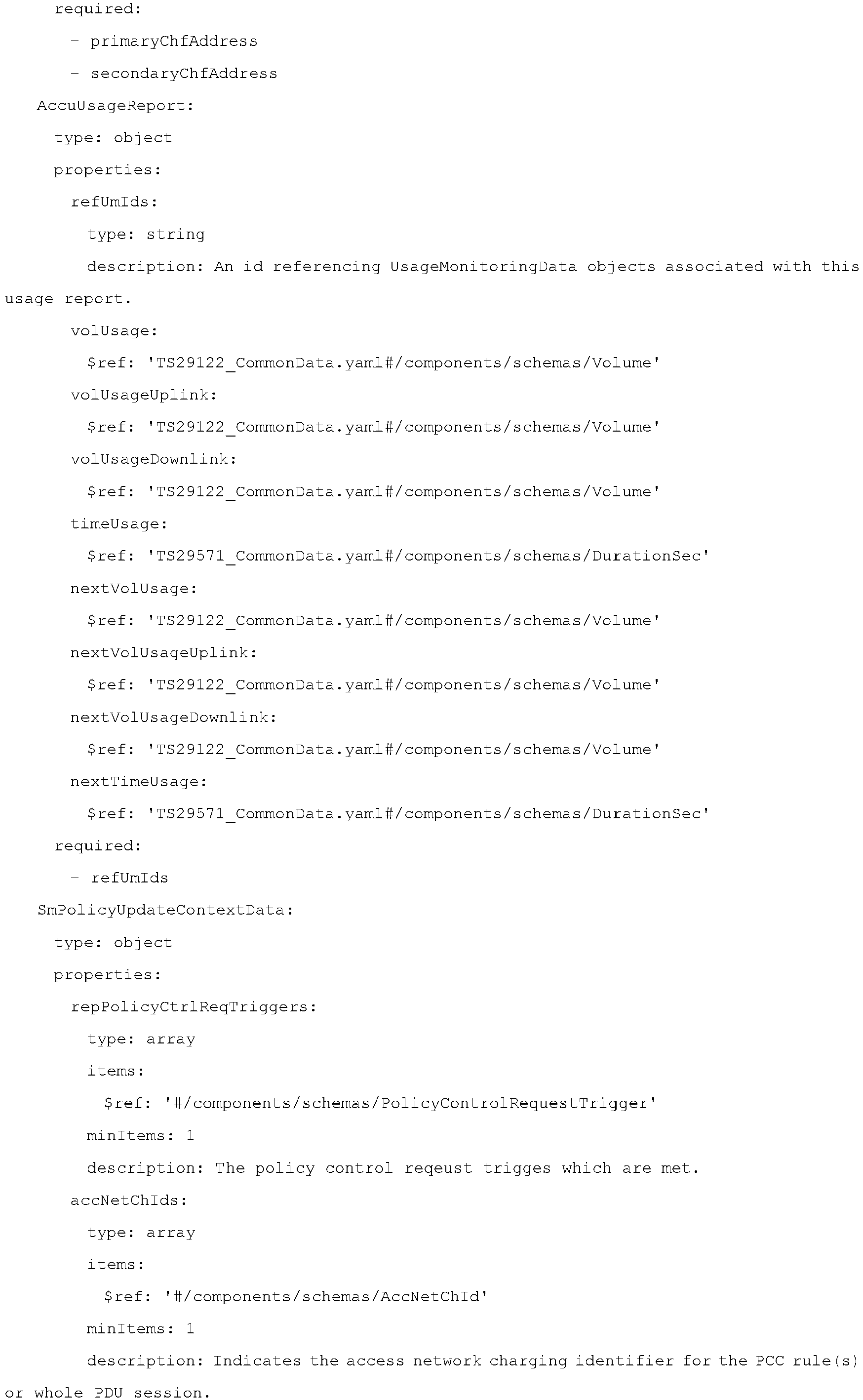

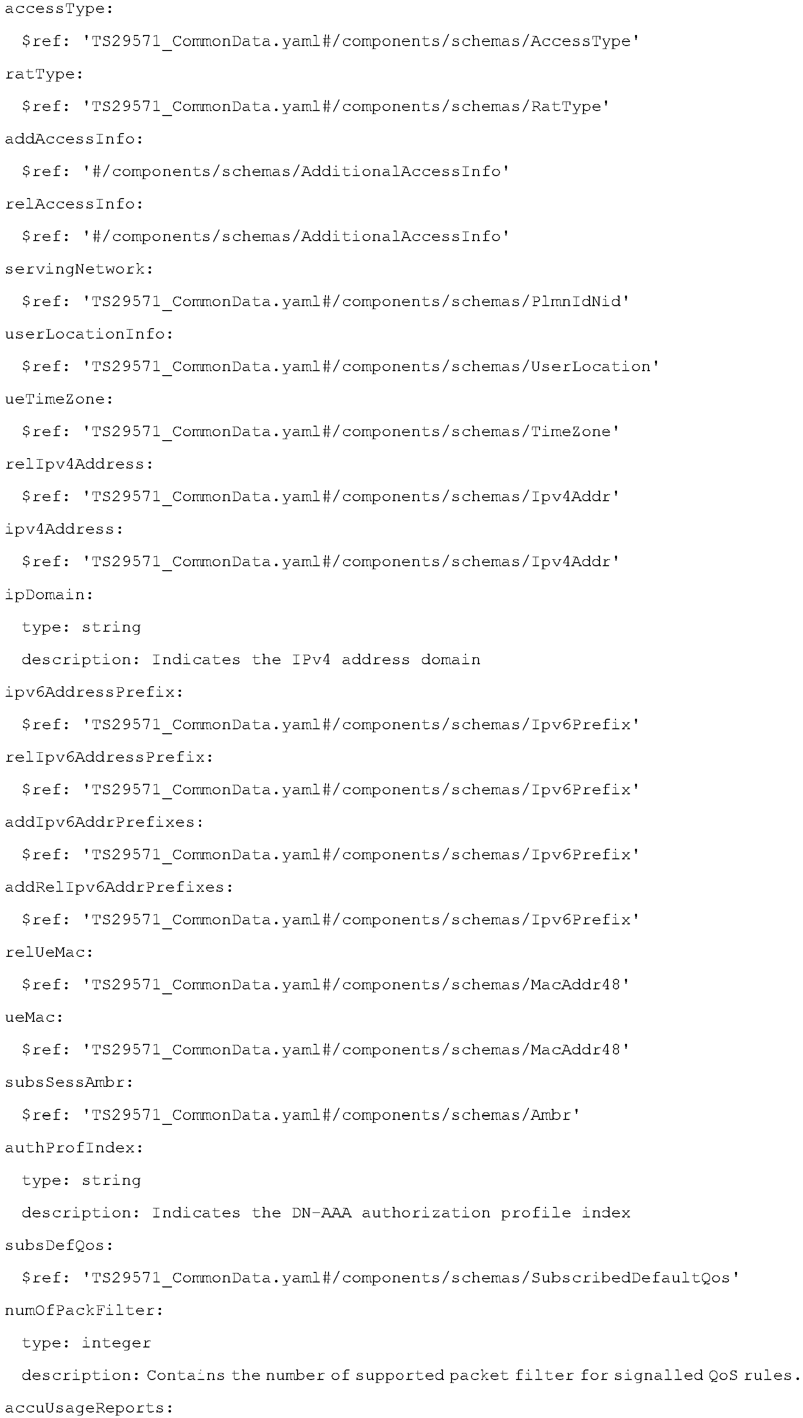

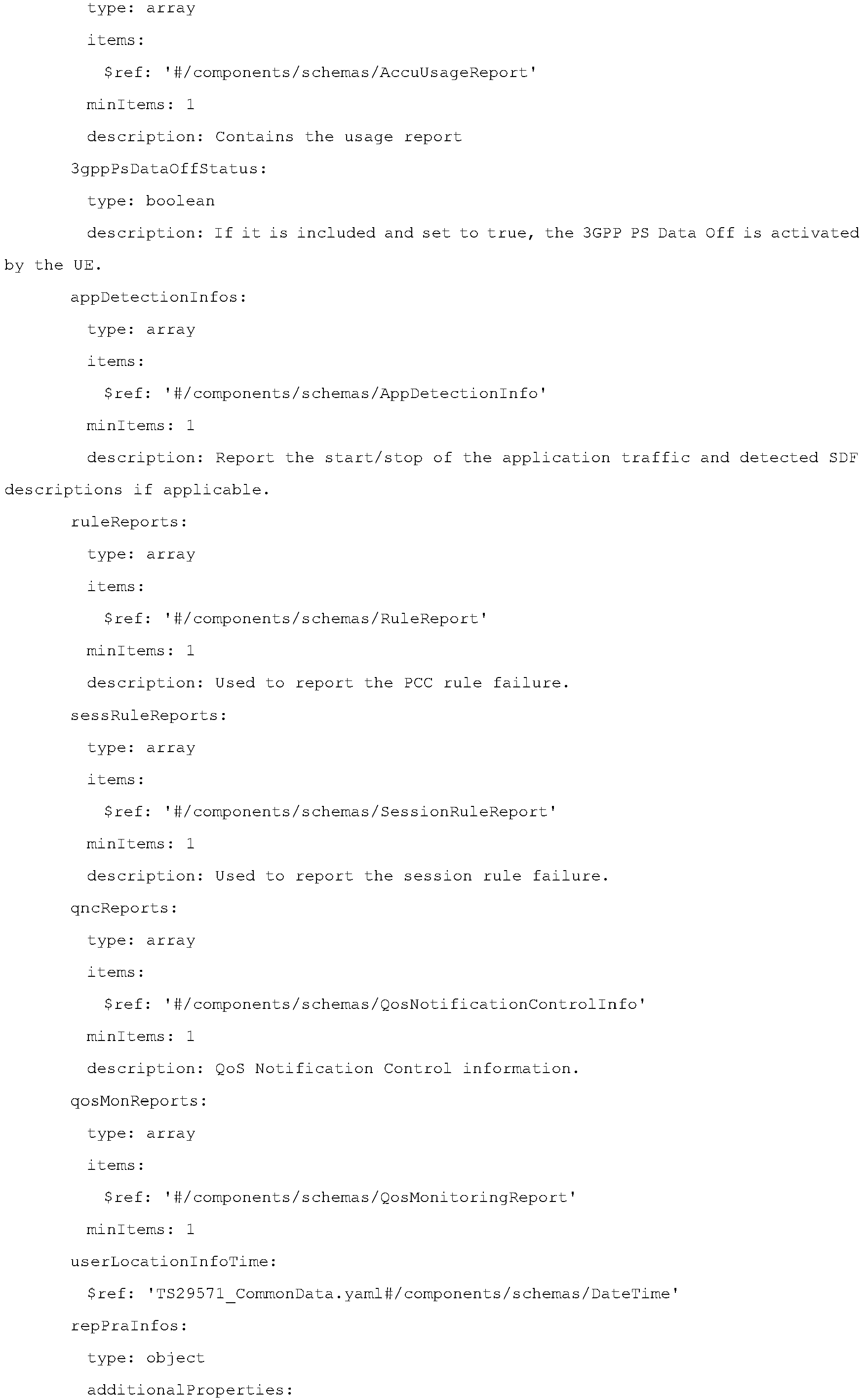

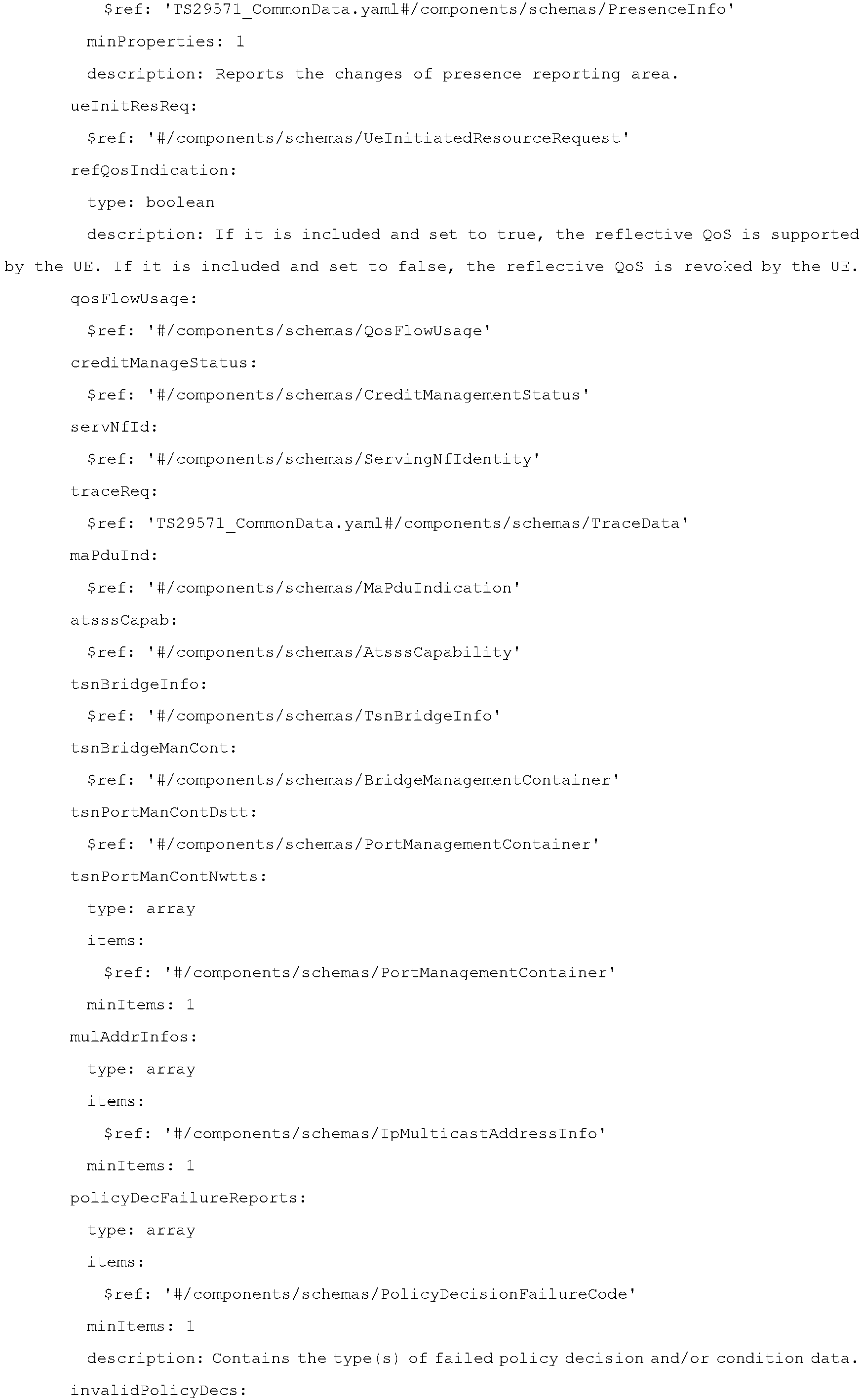

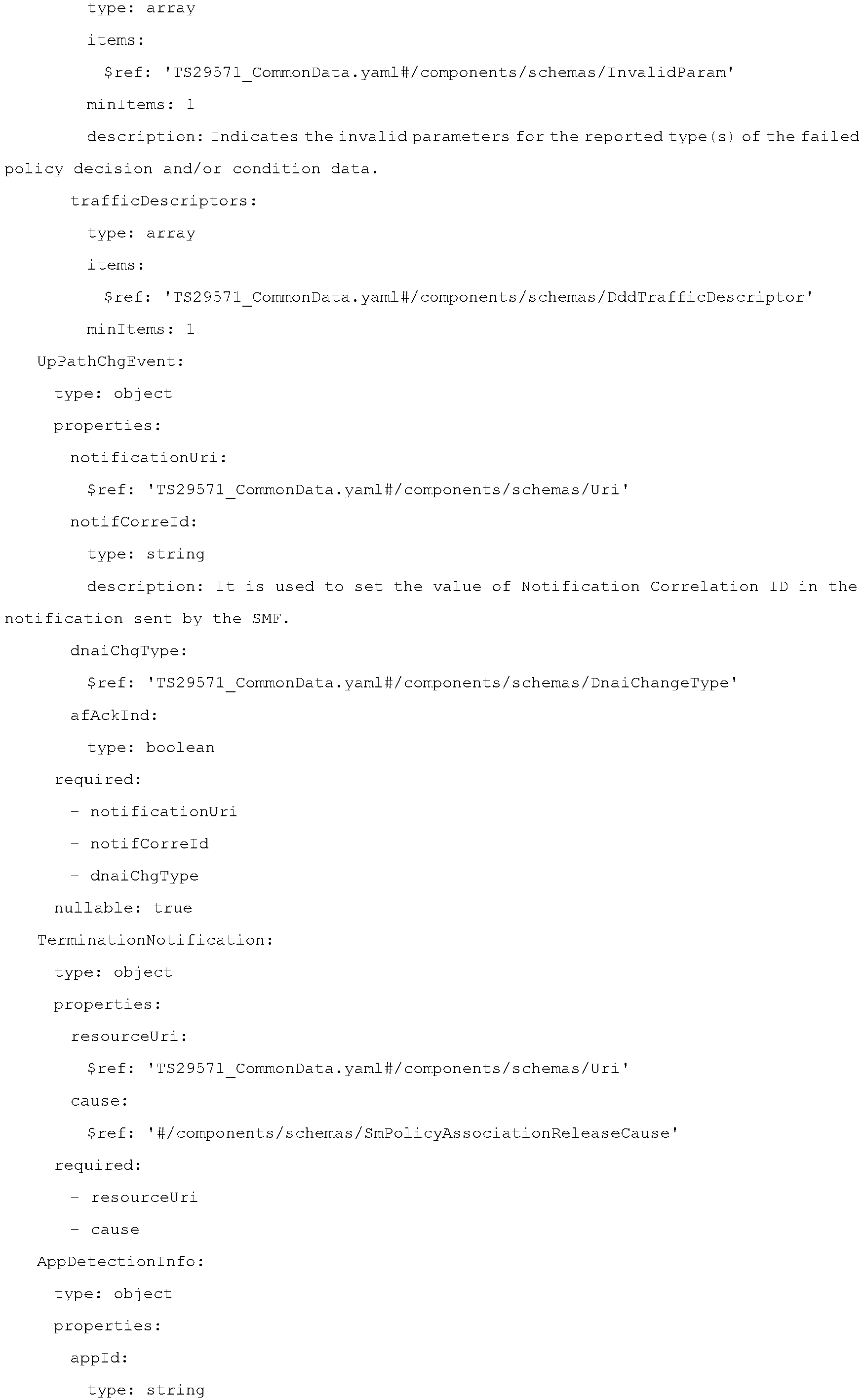

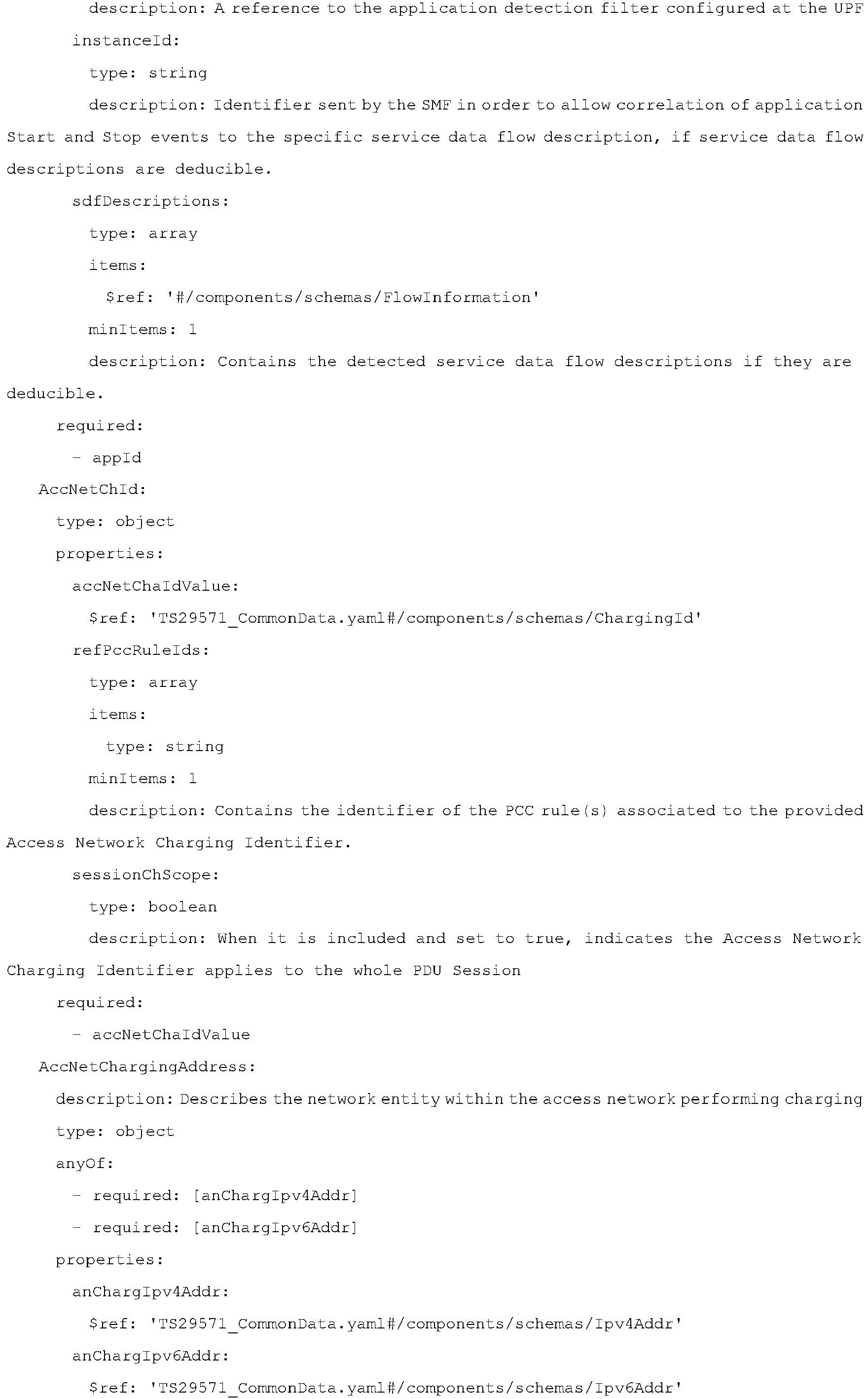

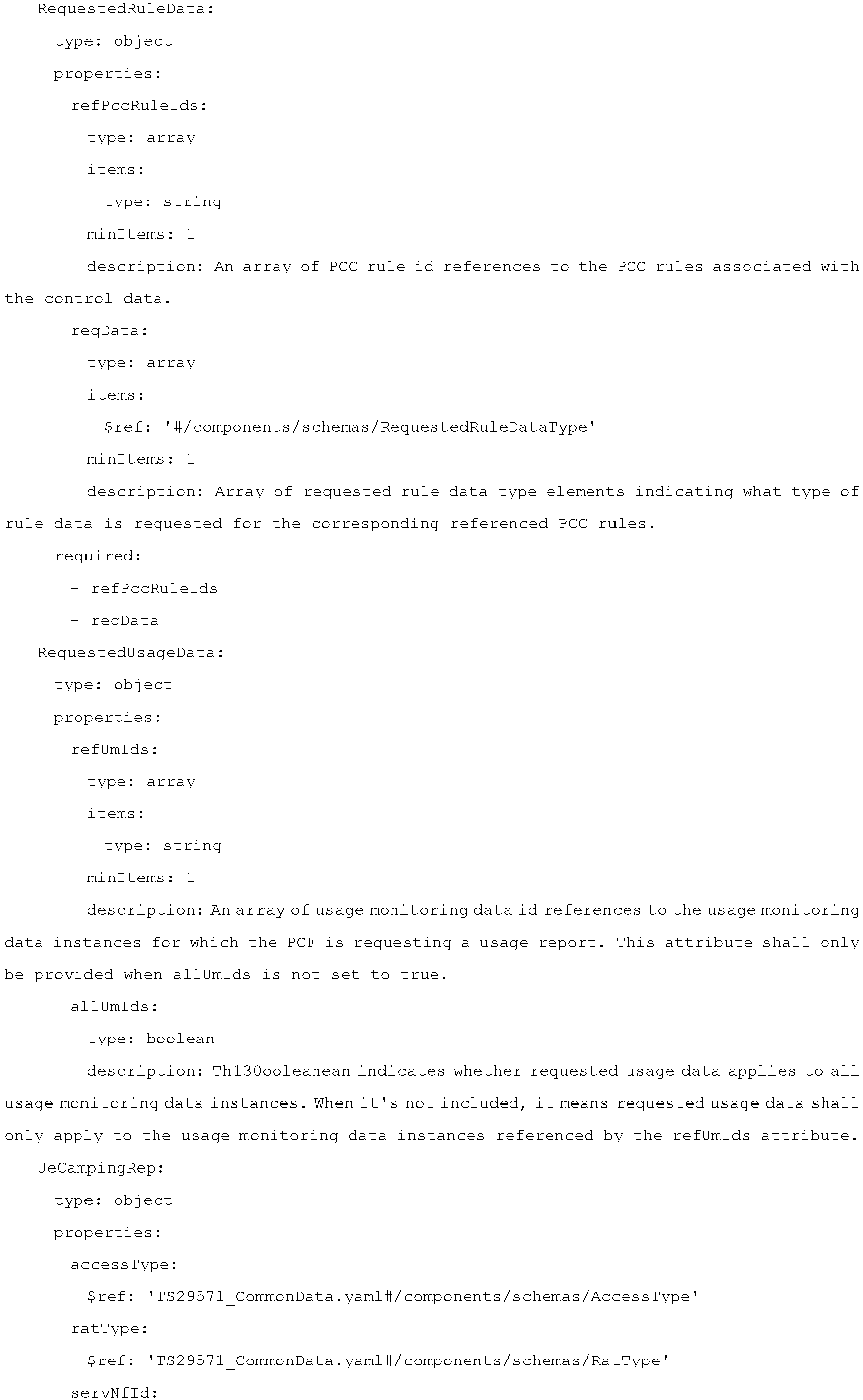

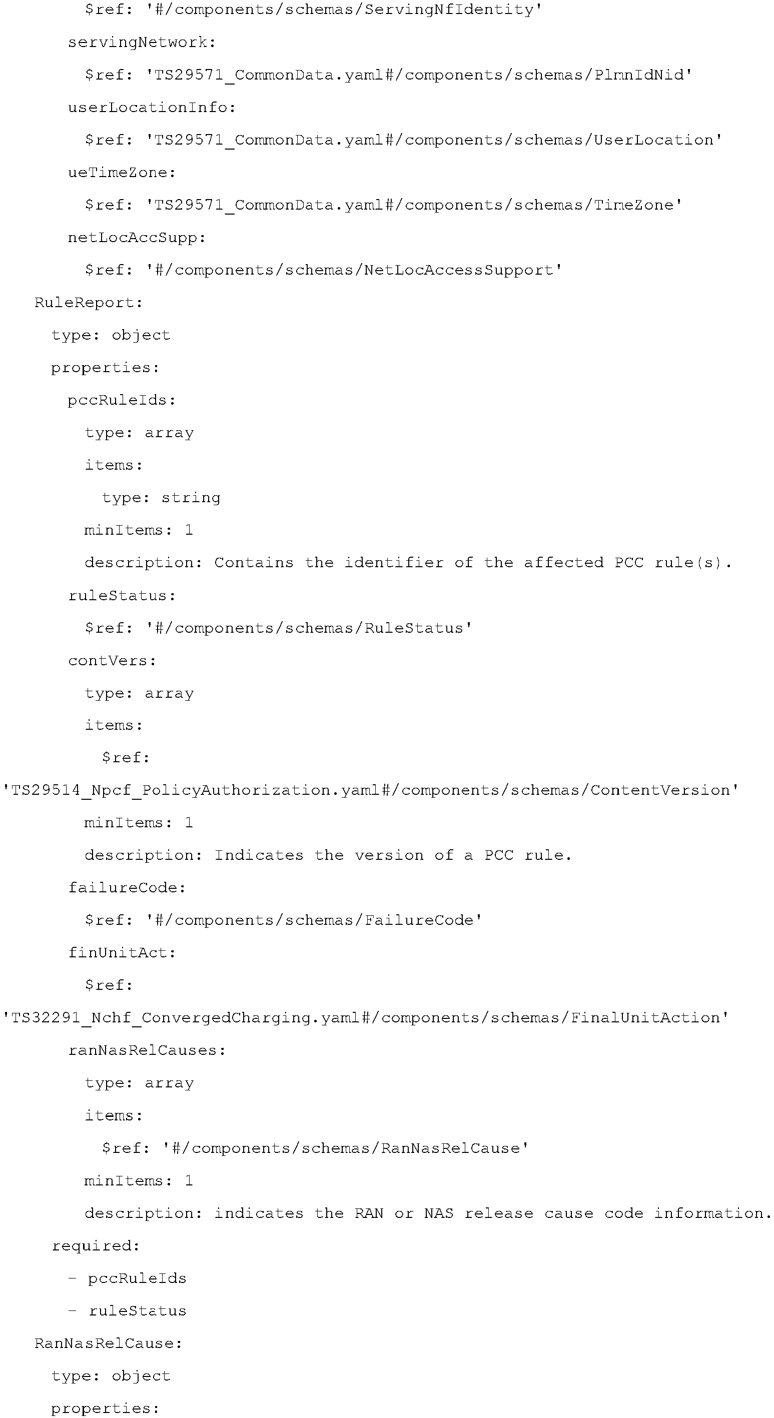

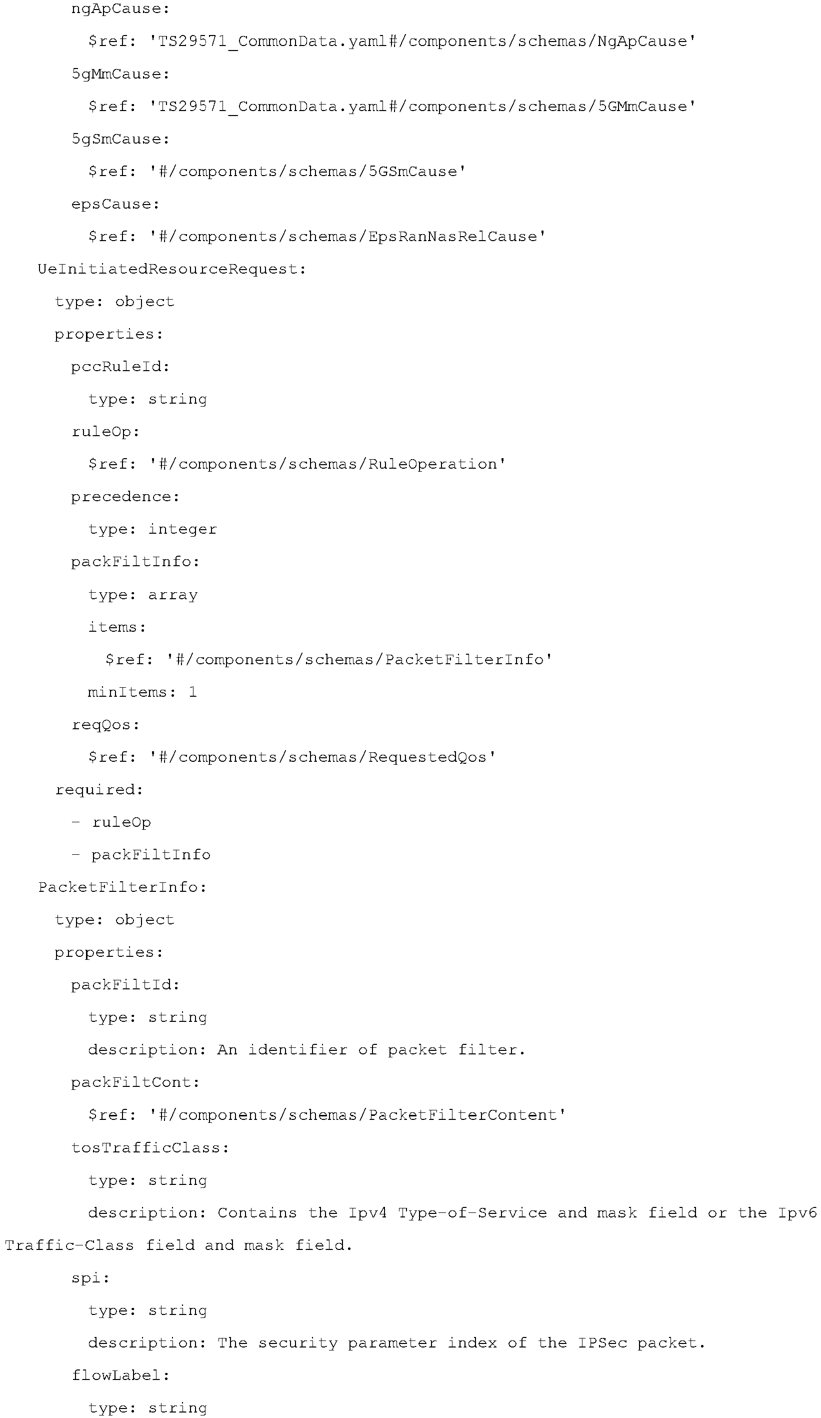

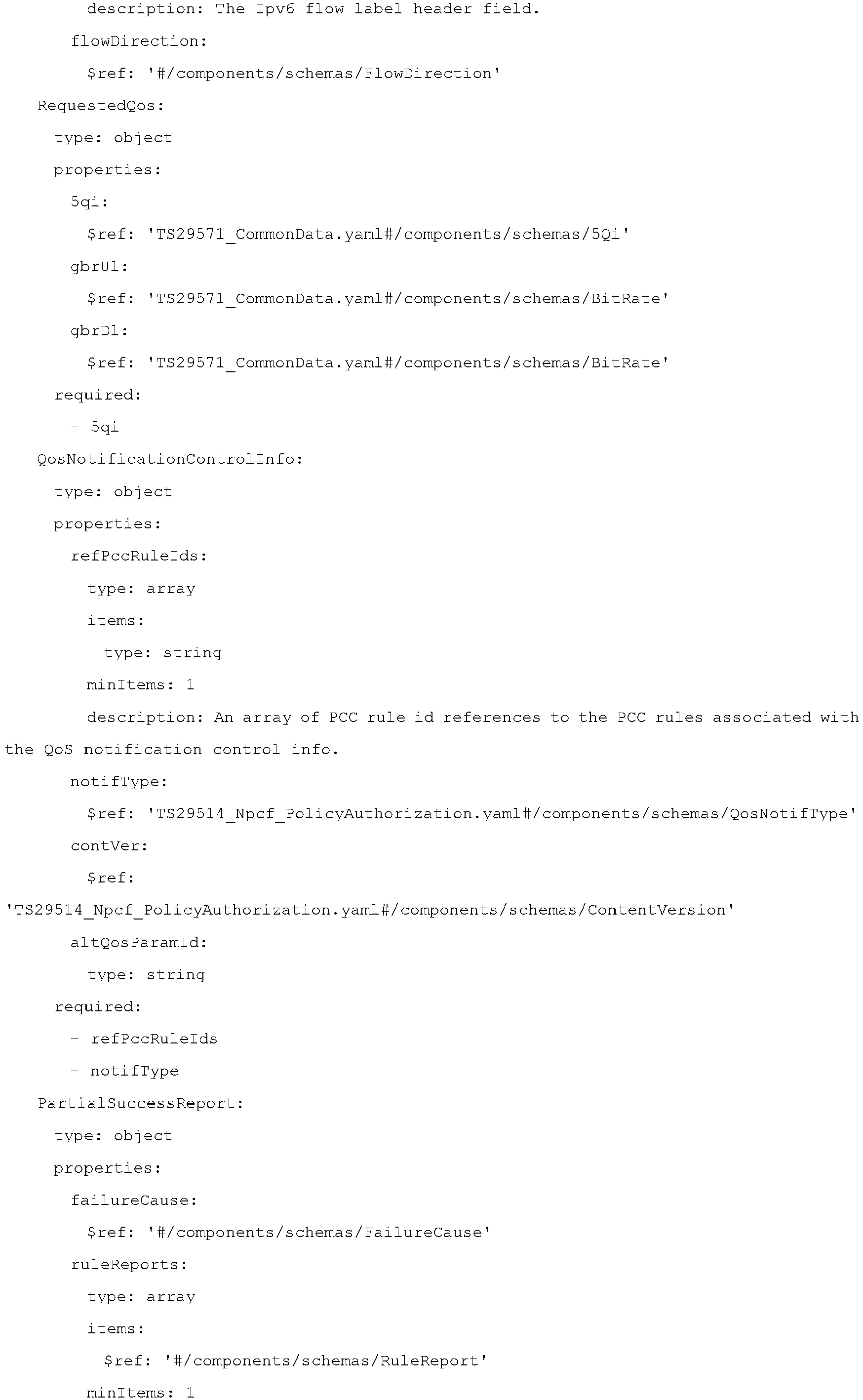

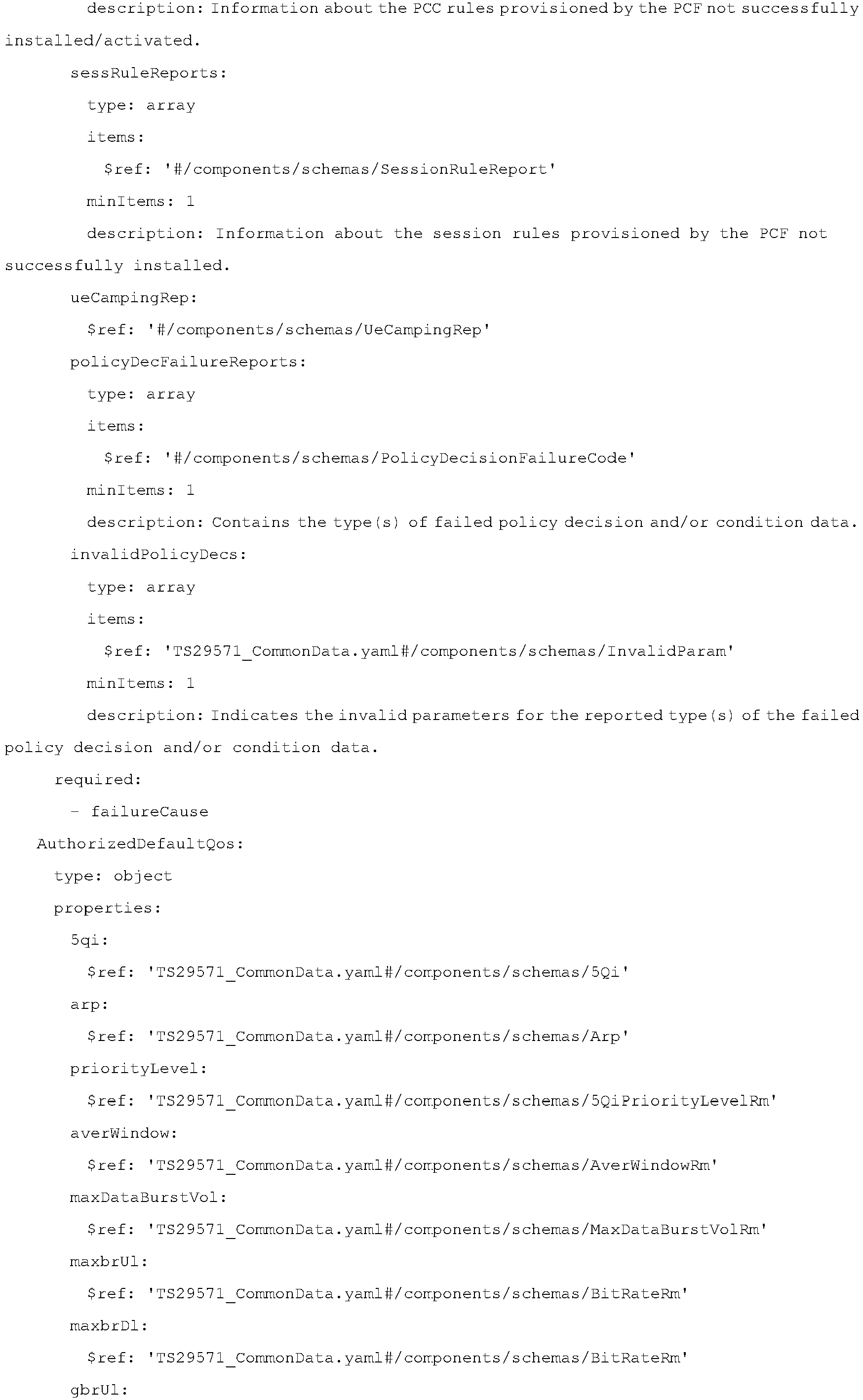

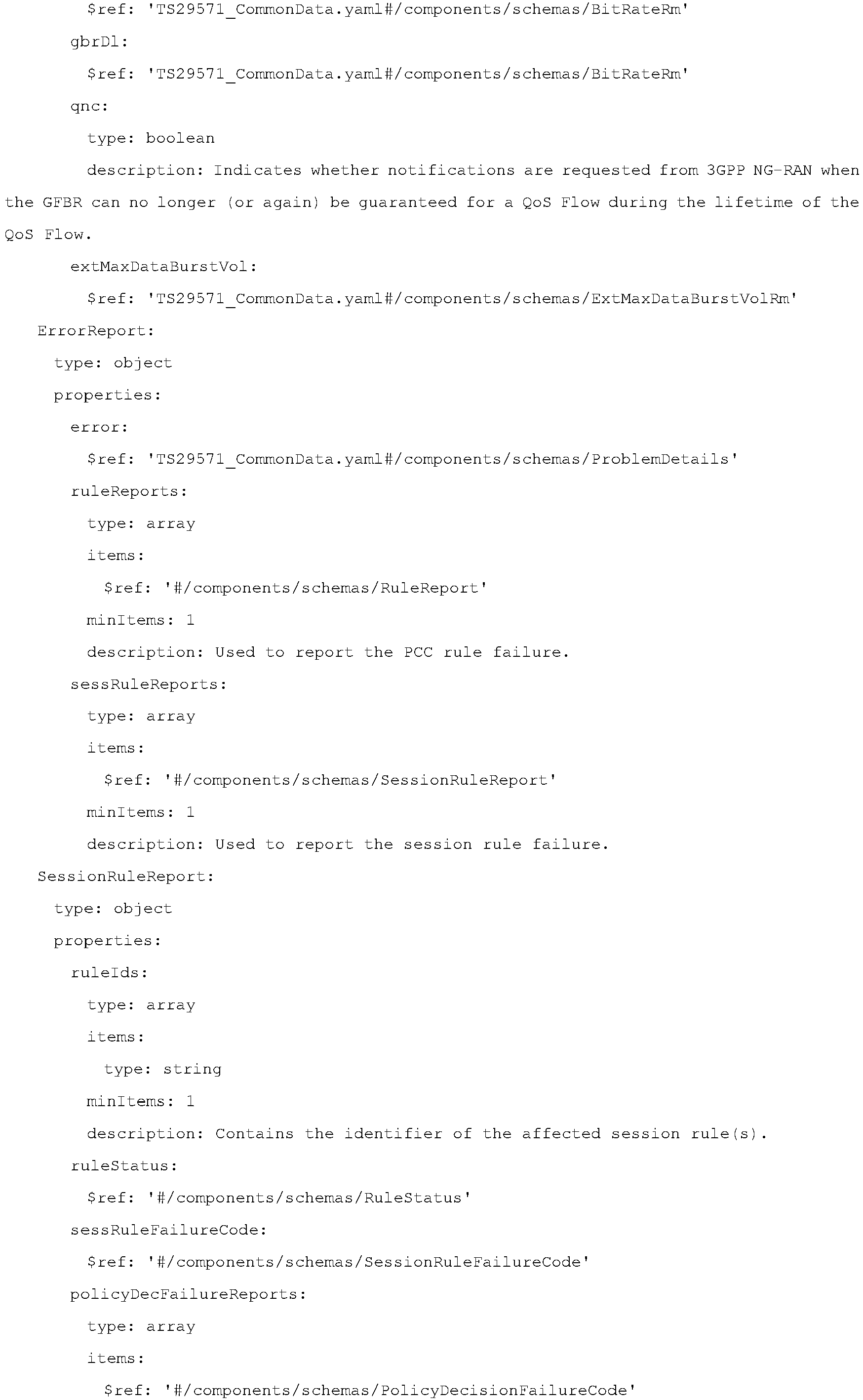

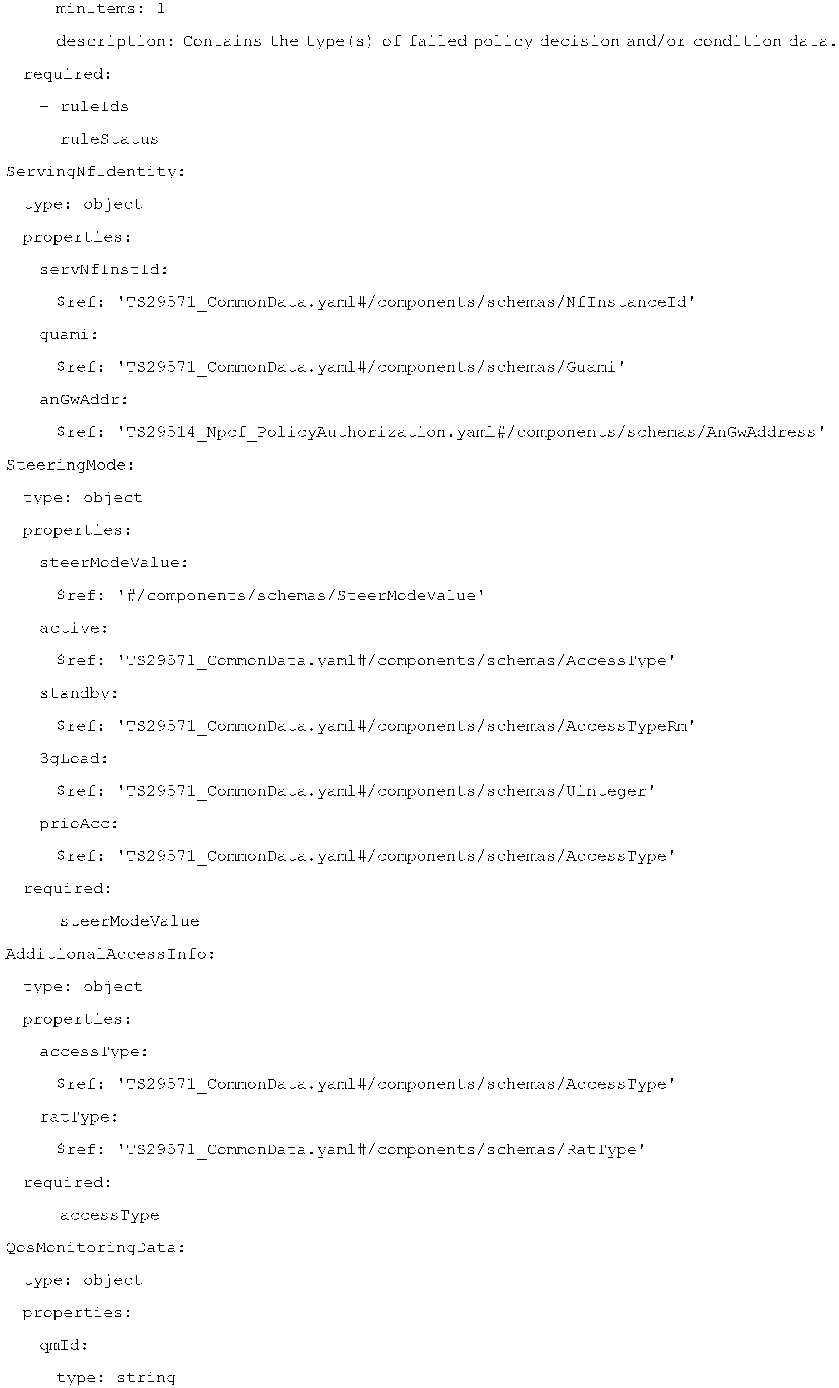

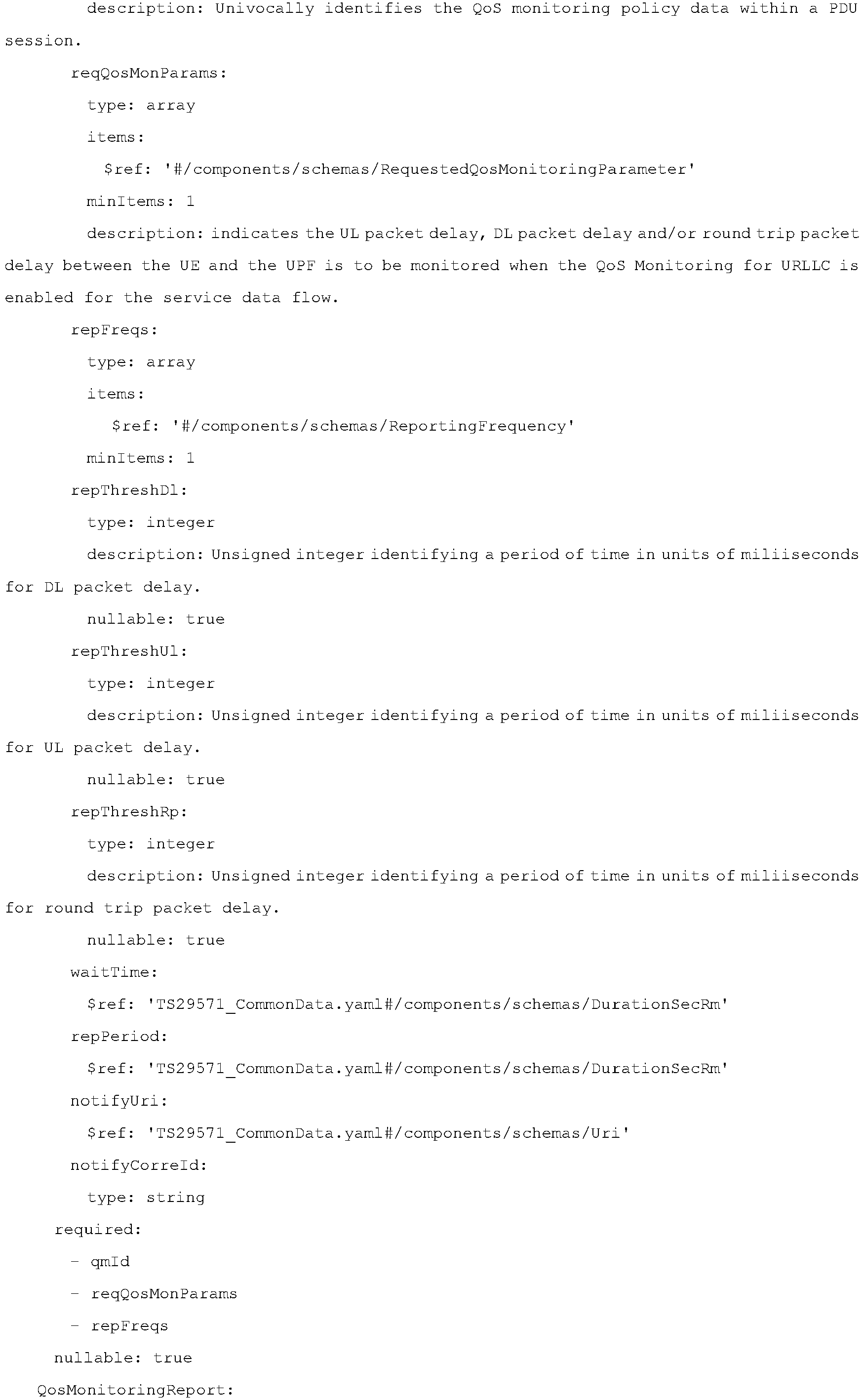

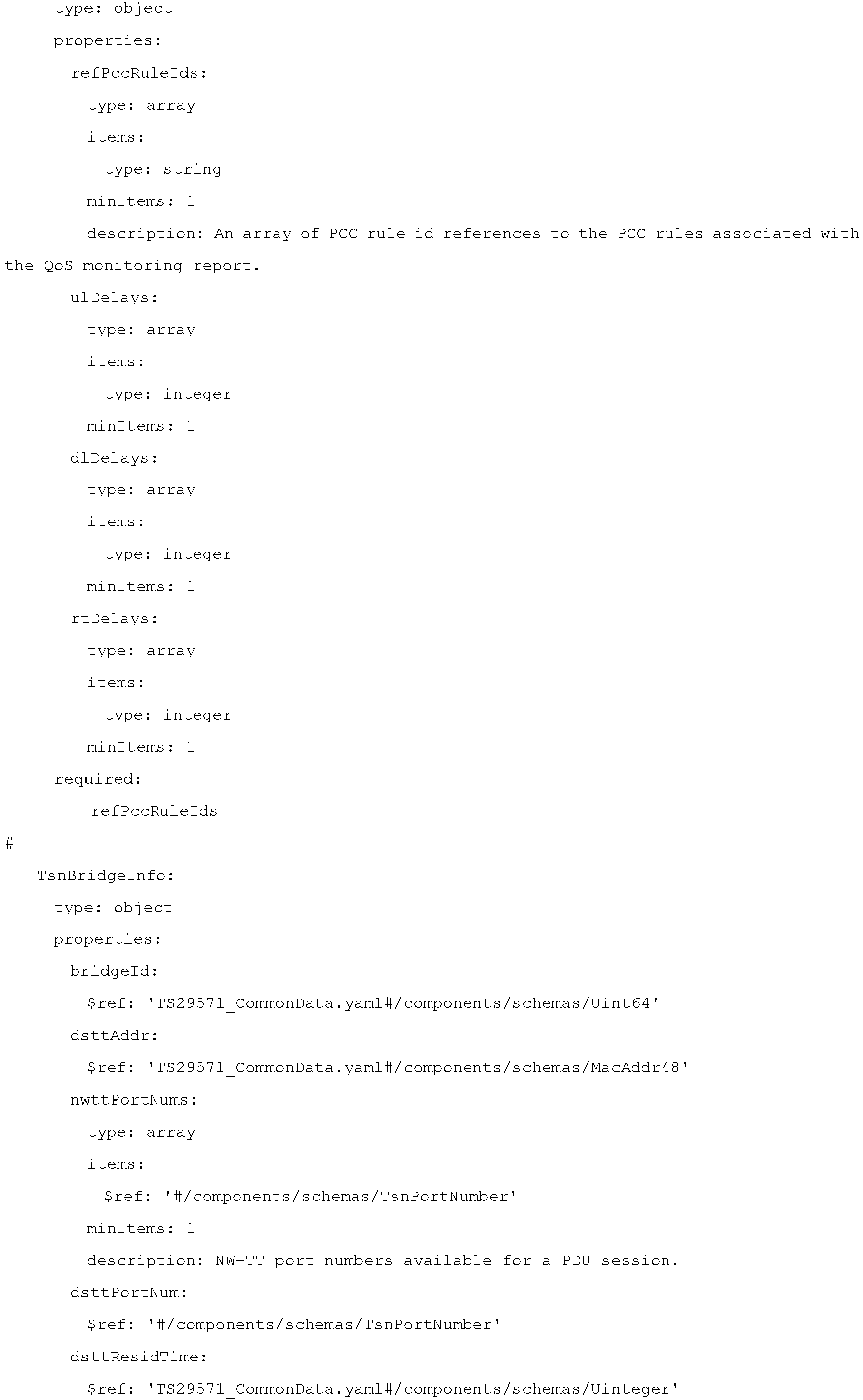

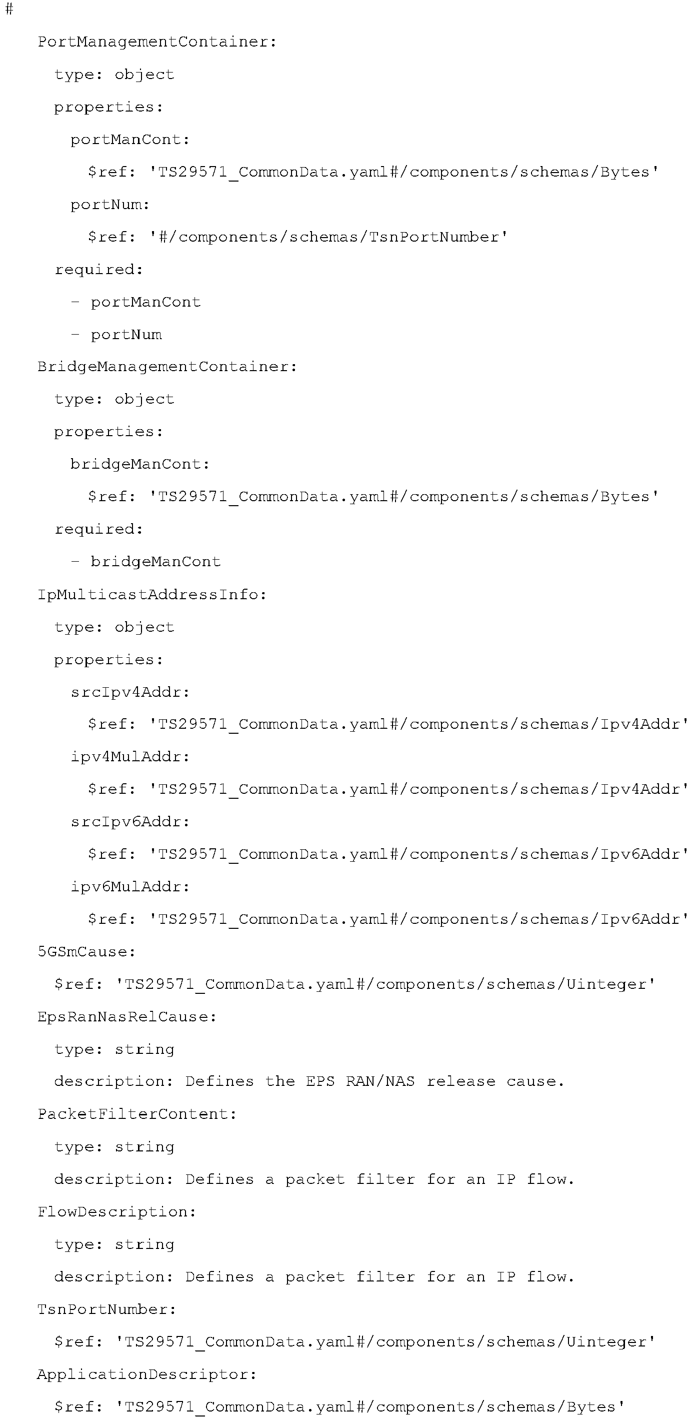

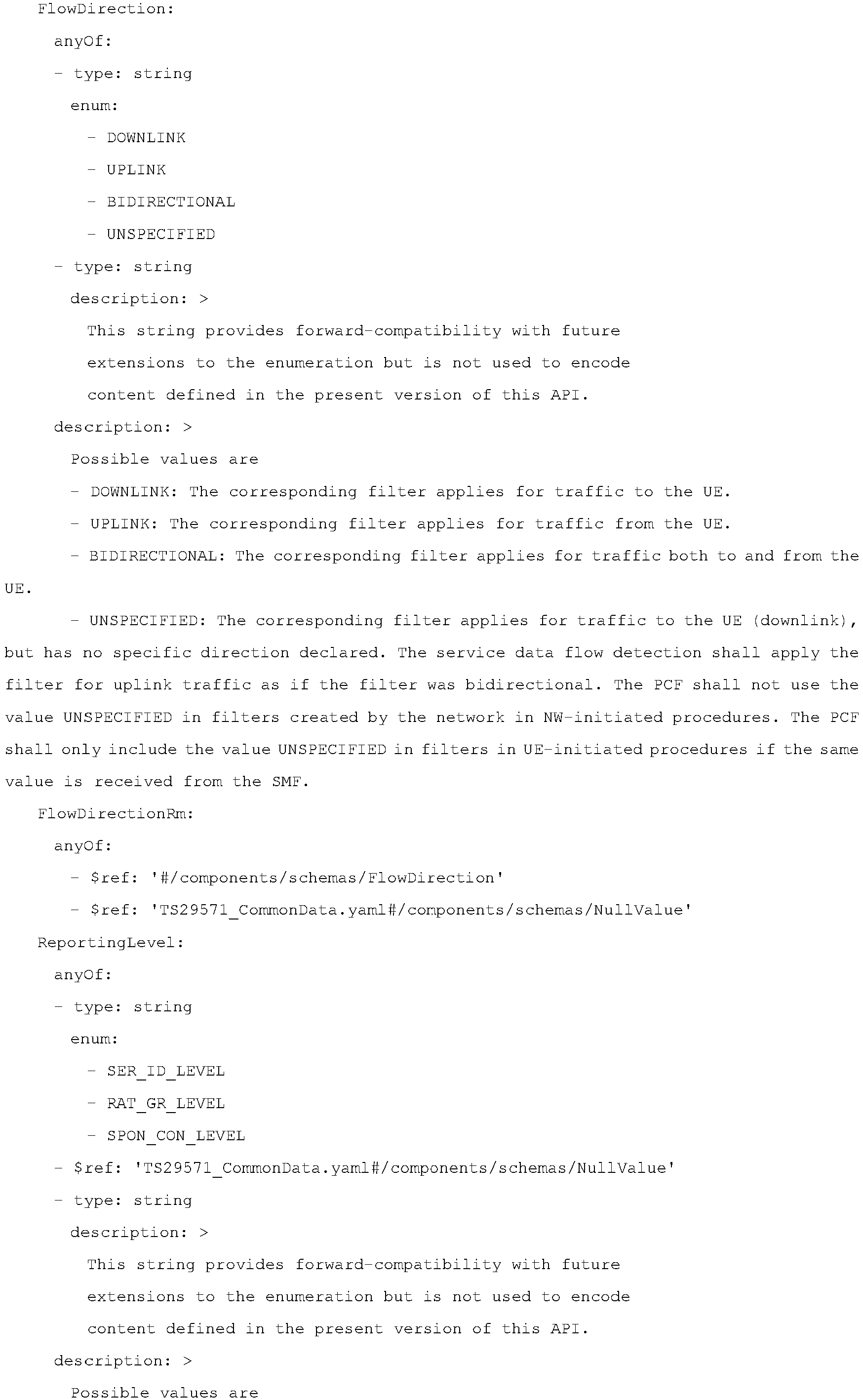

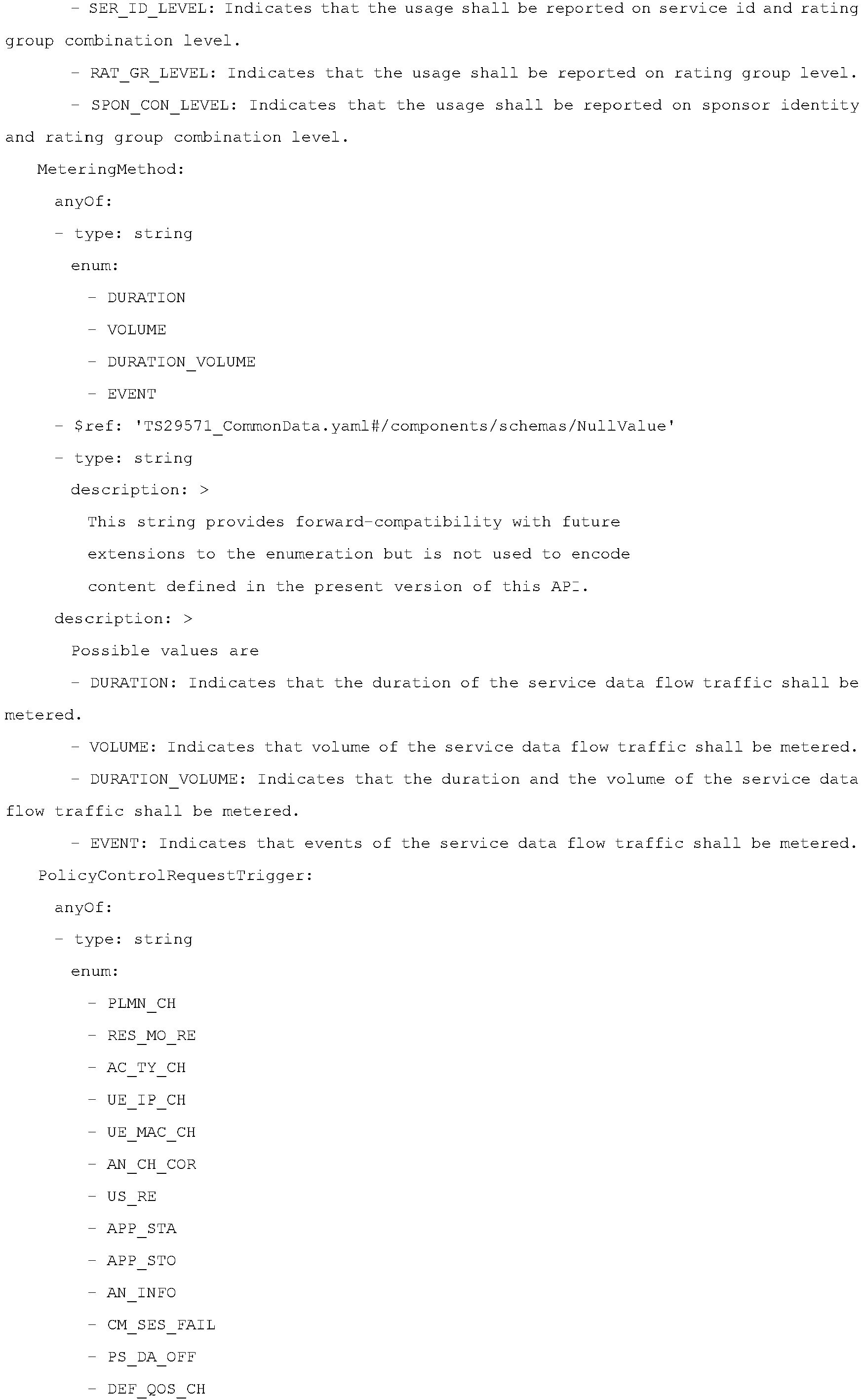

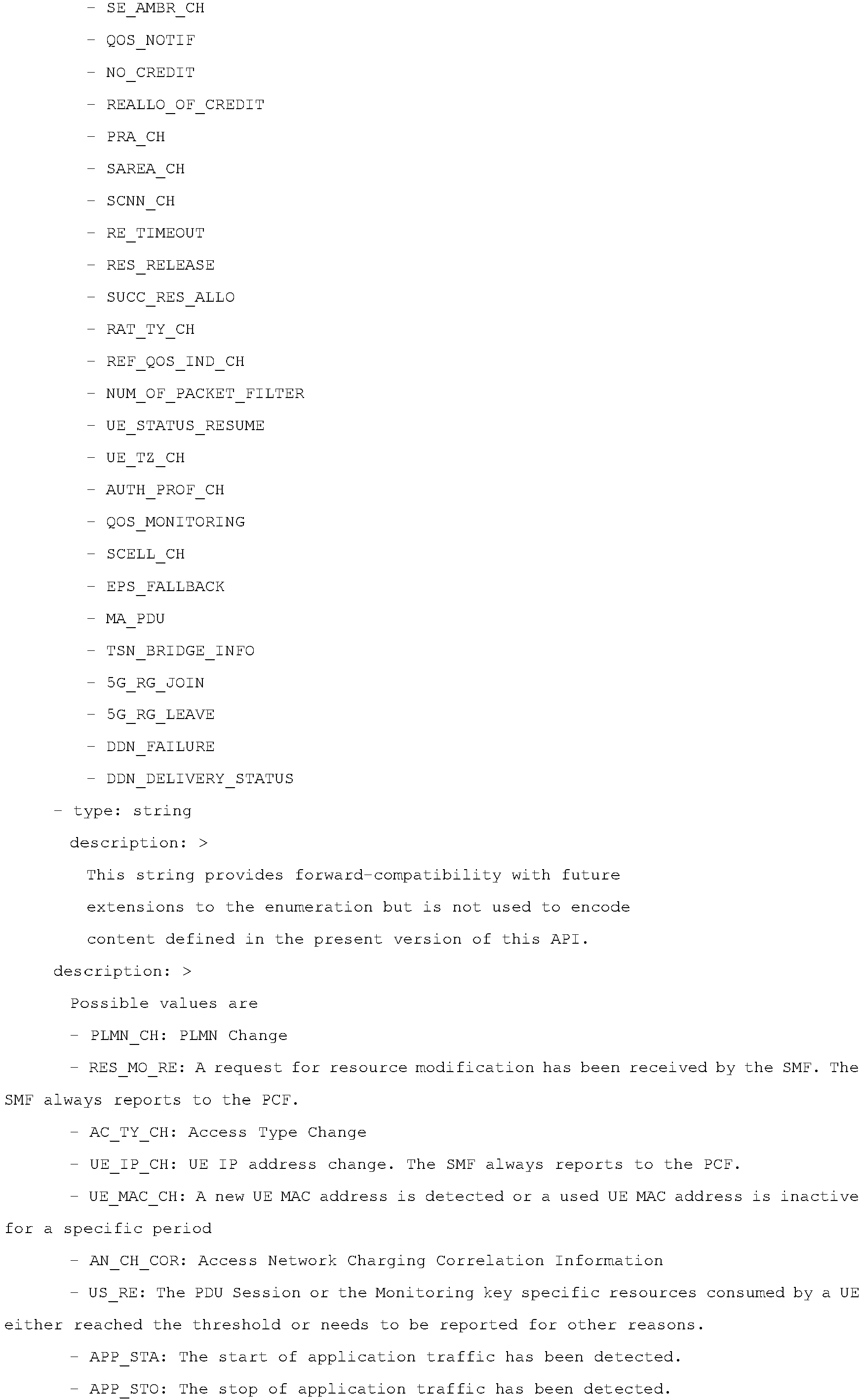

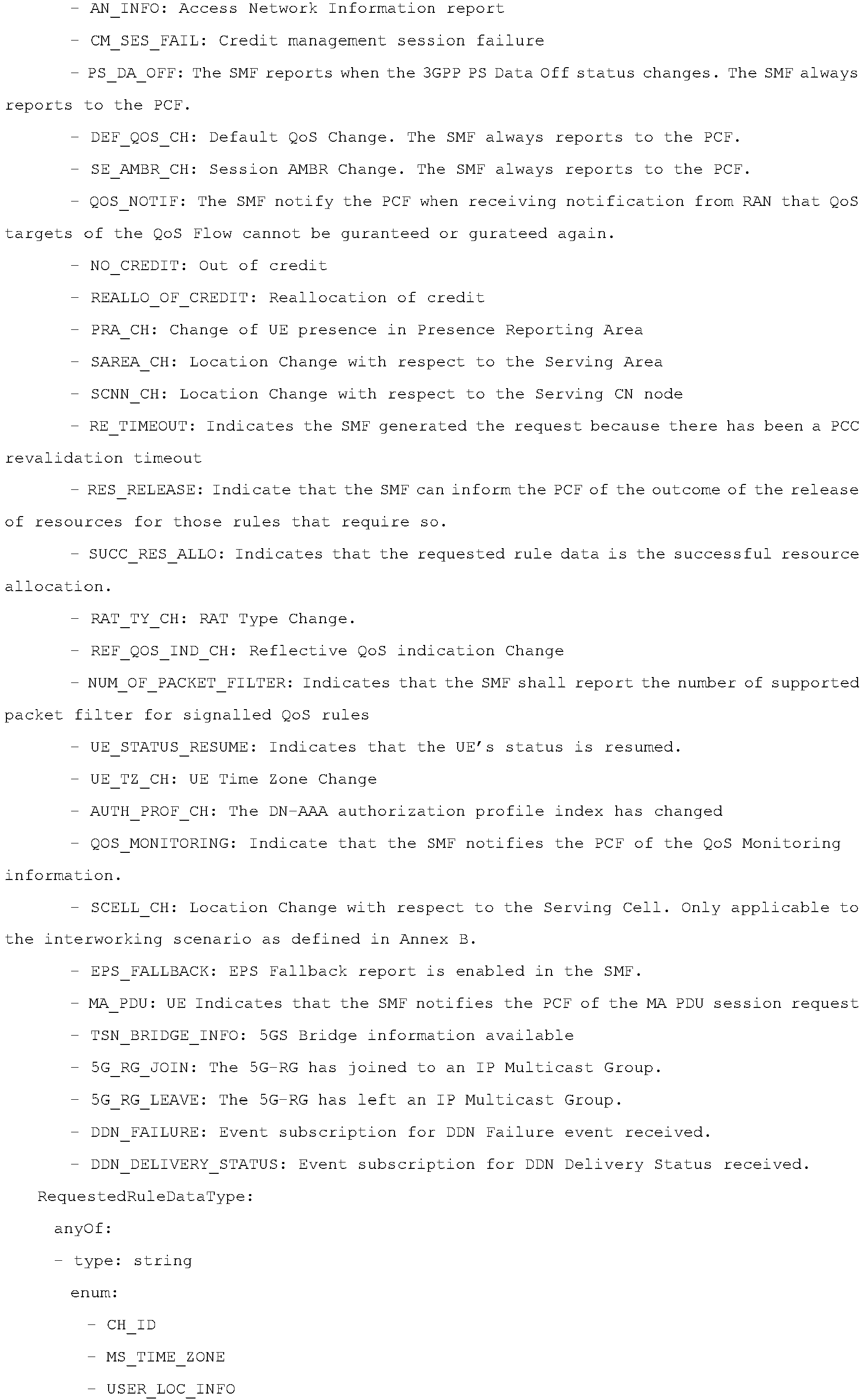

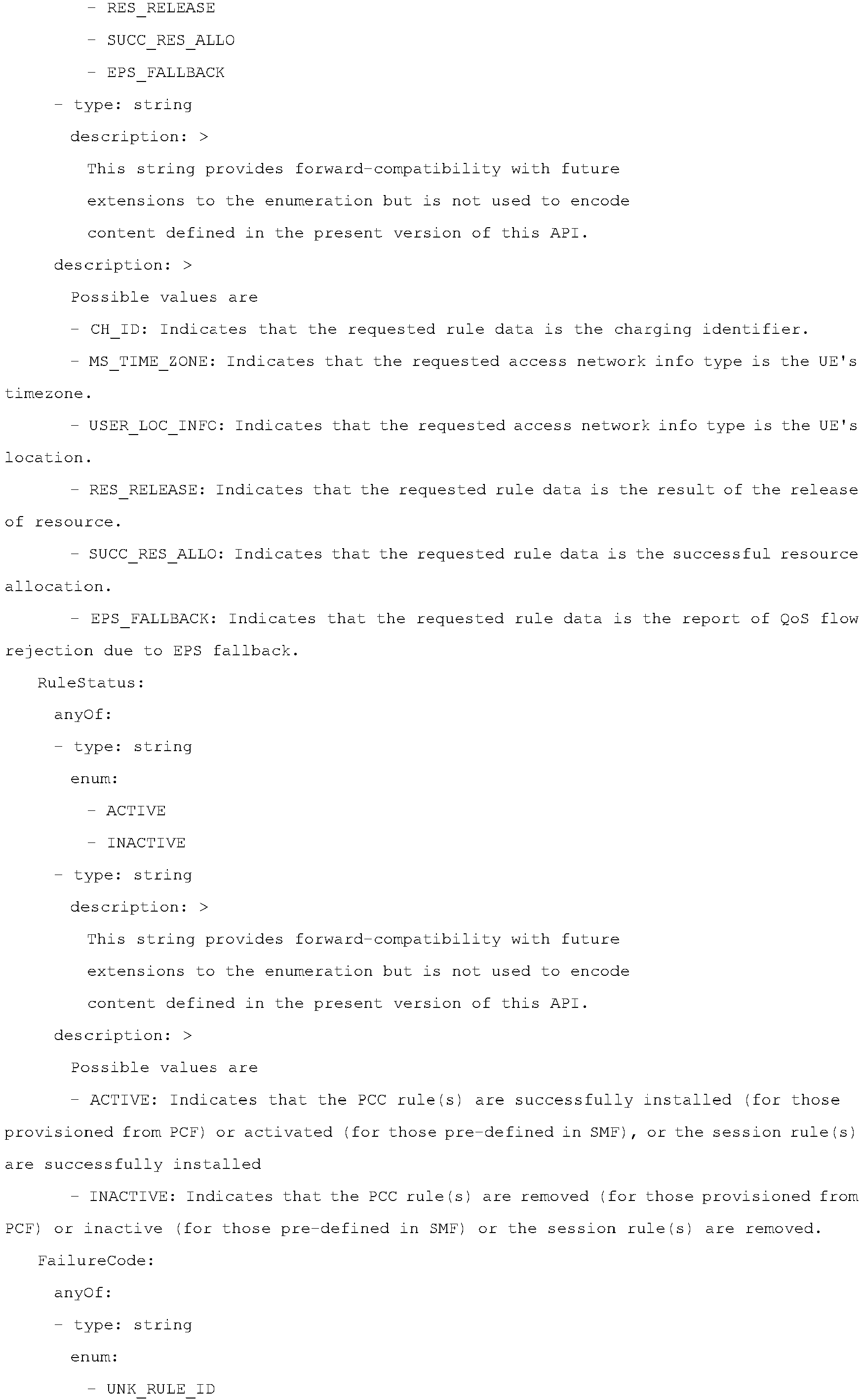

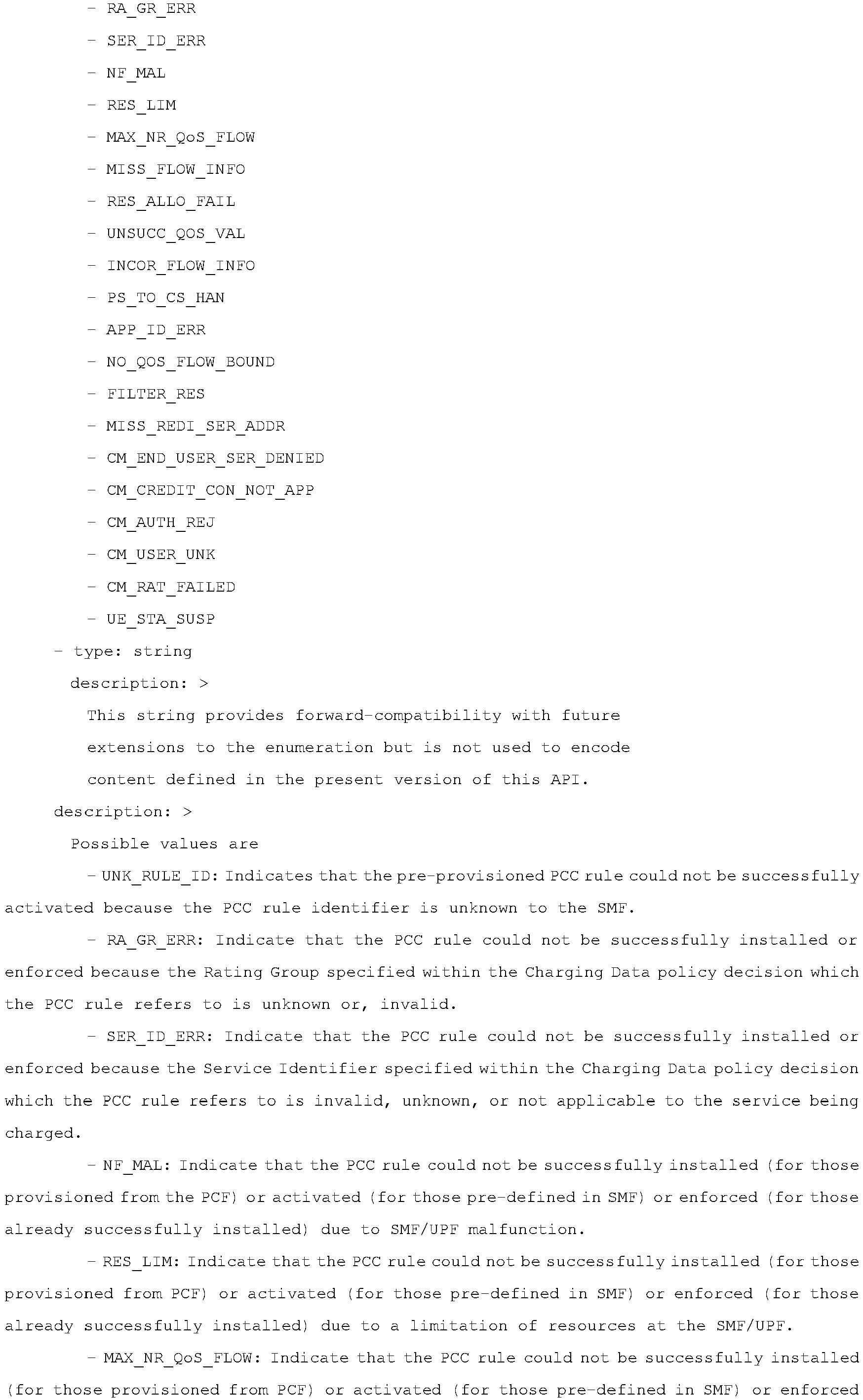

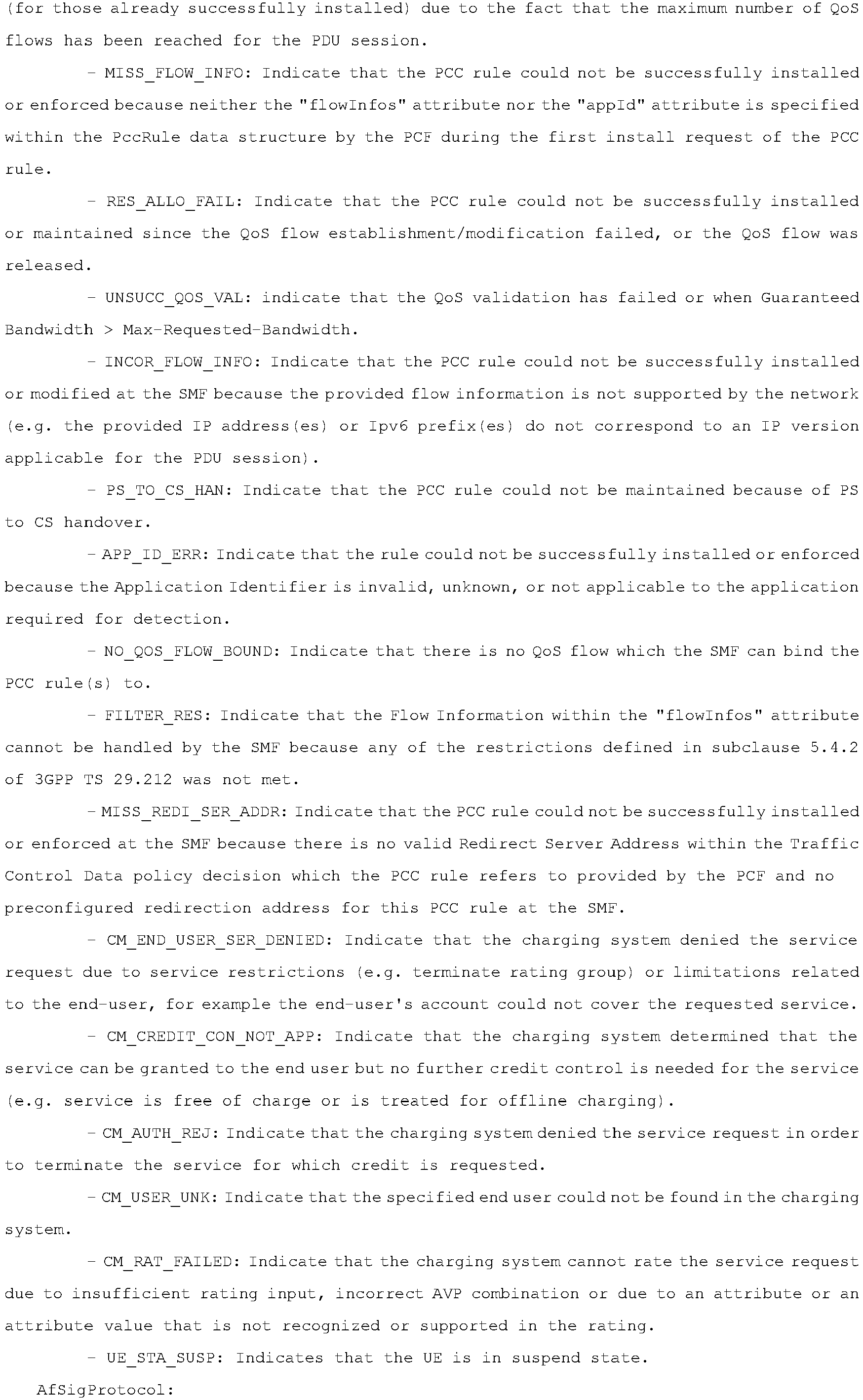

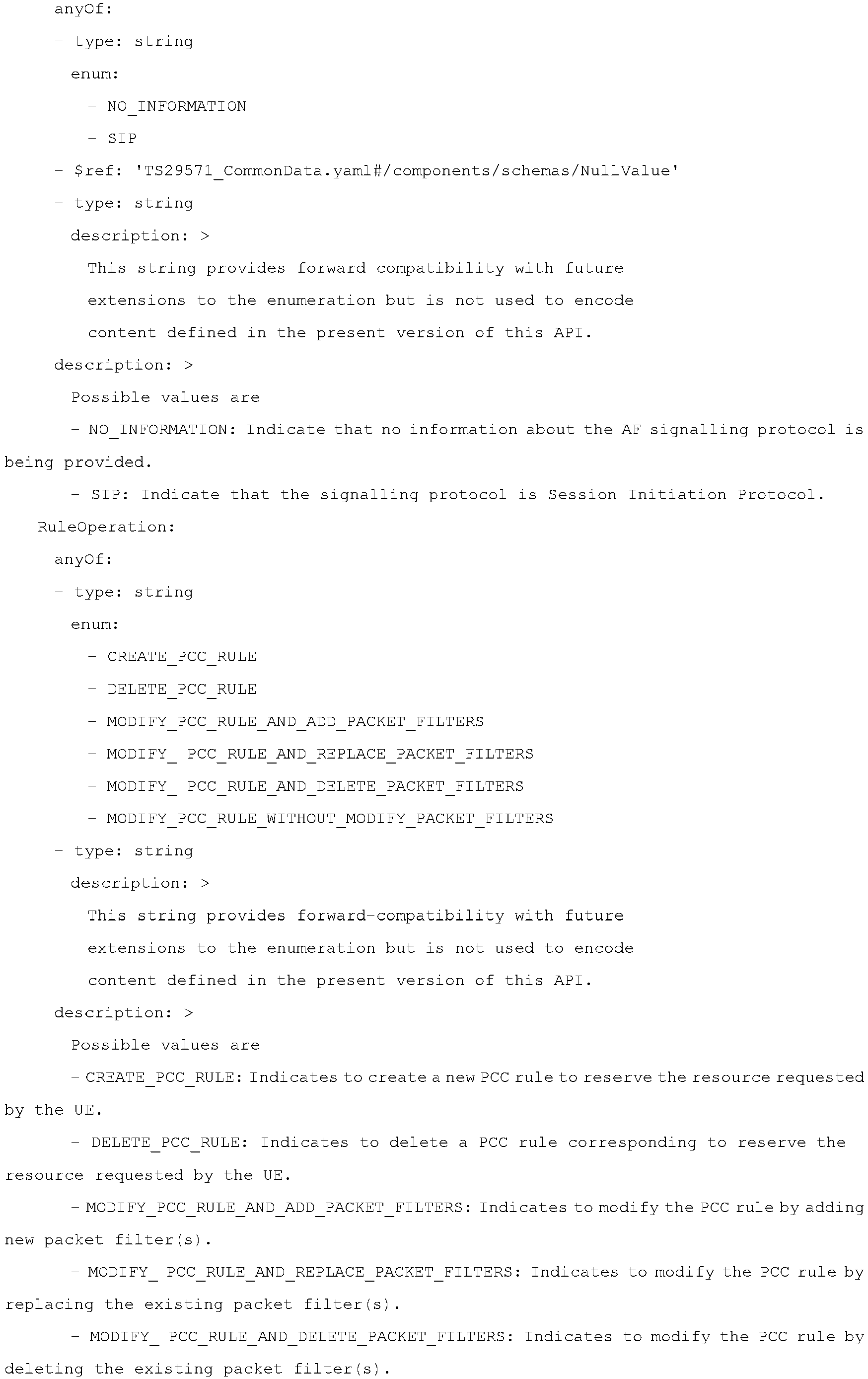

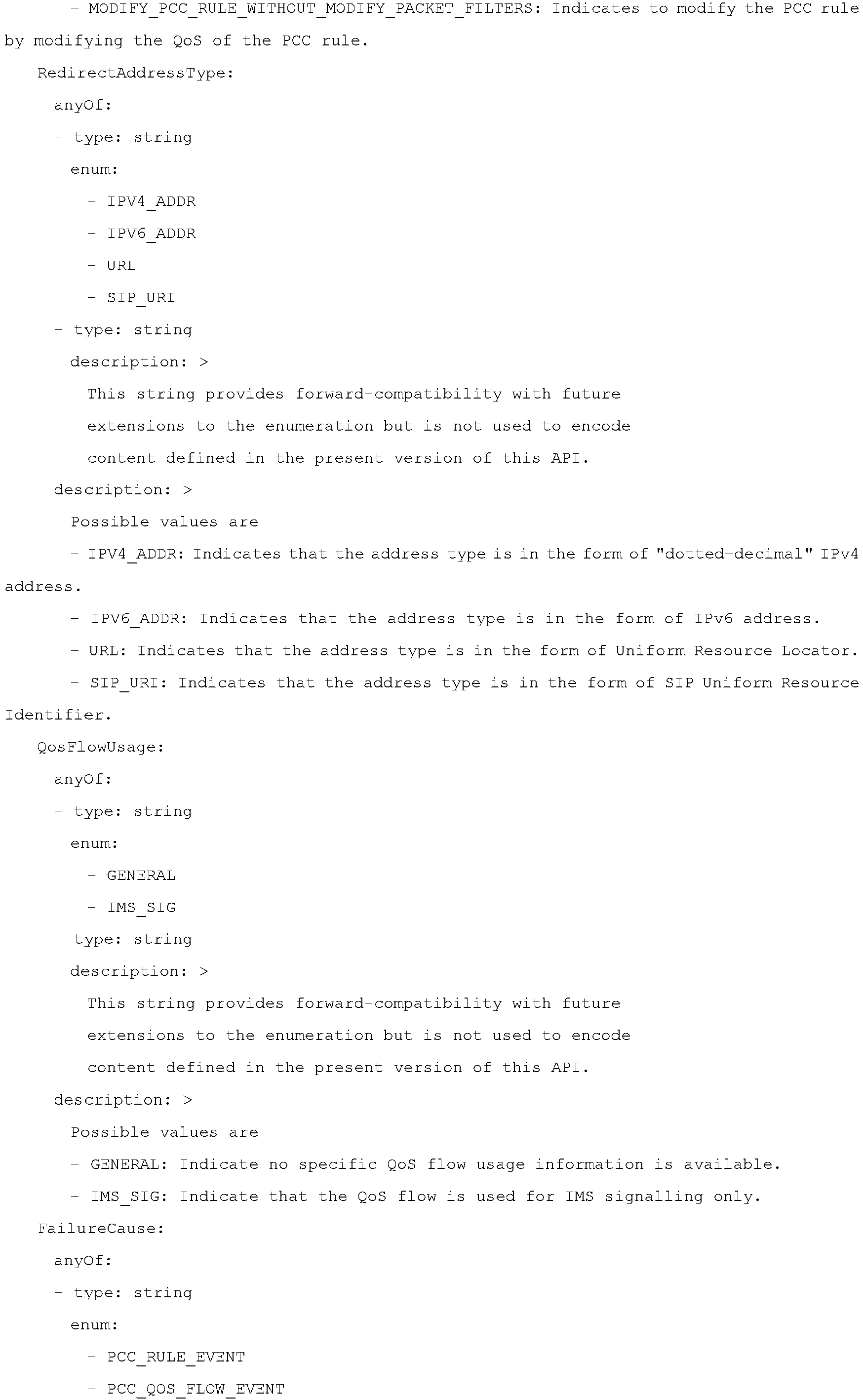

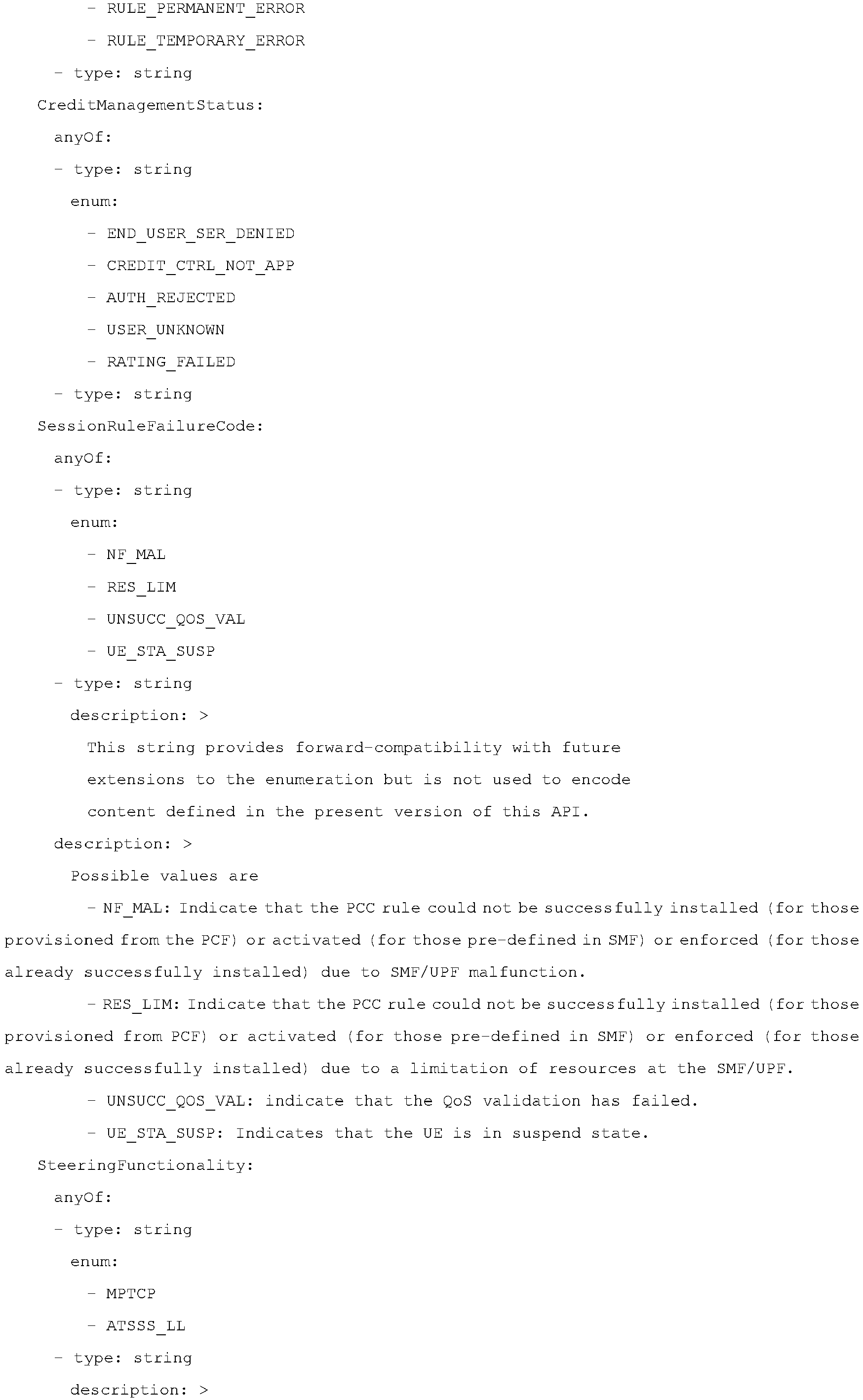

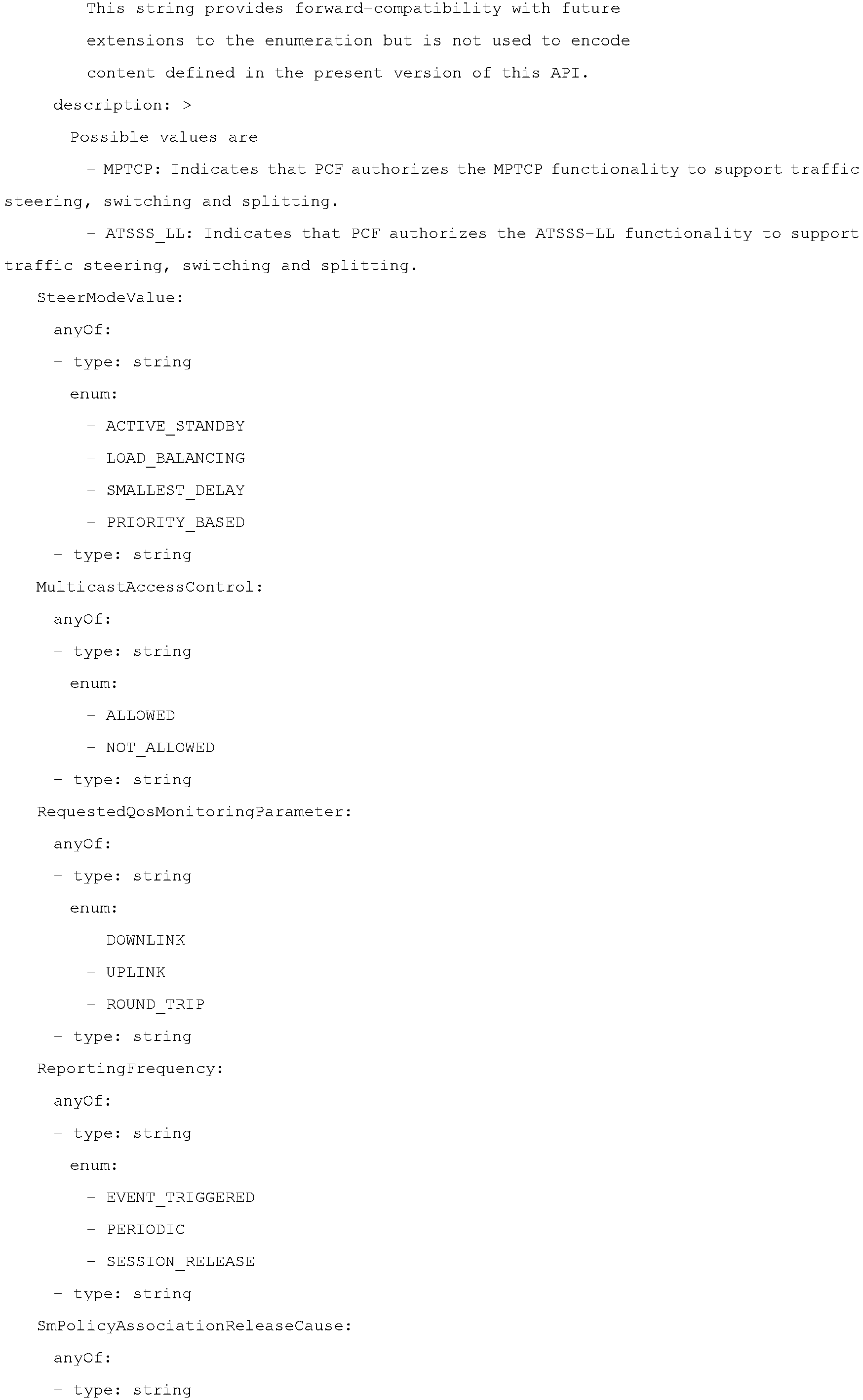

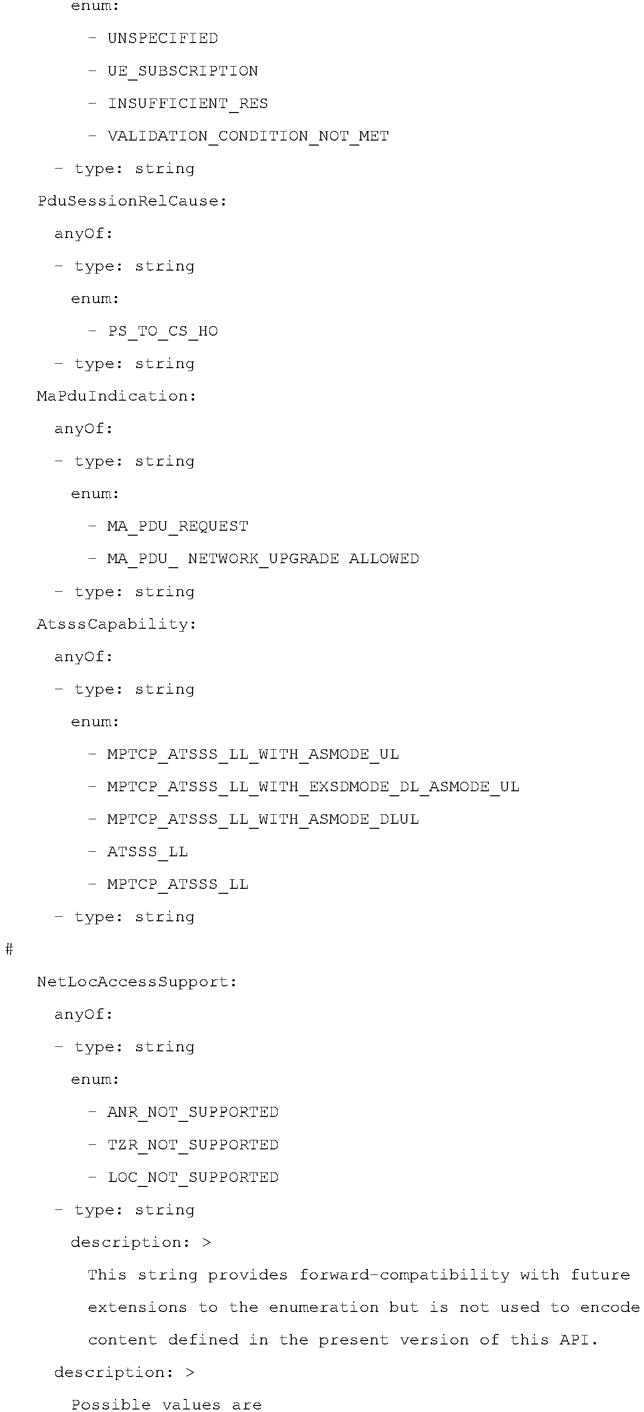

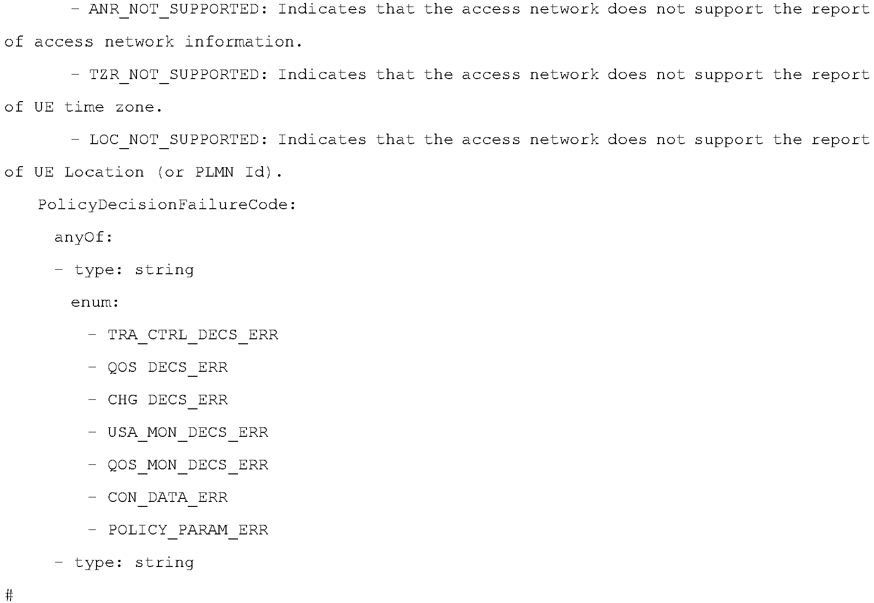

## Claims

1. A method (100) at a first entity, comprising:
determining (S101), based on a policy decision provisioned by a second entity, an error in at least one of:
a reference of a session rule and/or a Policy and Charging Control, PCC, rule to the policy decision, the error in the reference of the session rule and/or the PCC rule comprising at least one of:
the session rule and/or the PCC rule referring to an empty policy decision, or inconsistency of the policy decision with the session rule and/or the PCC rule; or
an attribute in the policy decision; and
transmitting (S103), to the second entity, a notification of the error.

2. The method (100) of claim 1, wherein the inconsistency of the policy decision with the session rule and/or the PCC rule further comprises at least one of:
inconsistency of the policy decision that is provisioned by the second entity with both the session rule and the PCC rule in the same policy decision, or
inconsistency of the policy decision that is provisioned by the second entity with both a session rule and a PCC rule in an updated policy decision.

3. The method (100) of claim 1 or 2, wherein the notification of the error is carried in a first request message for policy control update, the first request message particularly comprising an Npcf_SMPolicyControl_Update Request message.

4. The method (100) of any of claims 1 to 3, comprising receiving, from the second entity, an updated policy decision, particularly wherein the updated policy decision is carried in a first response message corresponding to the/a first request message for policy control update, more particularly wherein the first response message corresponding to the first request message for policy control update comprises an Npcf_SMPolicyControl_Update Response message.

5. The method (100) of any of claims 1 to 4, further comprising:
transmitting, to the second entity, a second request message for policy control create/update; and
receiving, from the second entity, a second response message corresponding to the second request message for policy control create/update, which comprises the policy decision provisioned by the second entity.

6. The method (100) of claim 1 or 2, wherein the notification of the error is carried in a first response message for policy control update notification, particularly wherein the first response message for policy control update notification comprises an Npcf_SMPolicyControl_ UpdateNotify Response message.

7. The method (100) of claim 6, further comprising:
receiving, from the second entity, a first request message corresponding to the first response message for policy control update notification, which comprises the policy decision provisioned by the second entity.

8. A method (200) at a second entity, comprising:
receiving (S201), from a first entity, a notification of an error in at least one of:
reference of a session rule and/or a Policy and Charging Control, PCC, rule to a policy decision, wherein the error in reference of the session rule and/or the PCC rule to the policy decision further comprises at least one of:
the session rule and/or the PCC rule referring to an empty policy decision, or
inconsistency of the policy decision with the session rule and/or the PCC rule, or an attribute in a policy decision; and
updating (5203) the policy decision.

9. The method (200) of claim 8, further comprising:
transmitting, to the first entity, the updated policy decision.

10. The method (200) of claim 8 or 9, wherein the inconsistency of the policy decision with the session rule and/or the PCC rule further comprises at least one of:
inconsistency of the policy decision that is provisioned by the second entity with both the session rule and the PCC rule in the same policy decision, or
inconsistency of the policy decision that is provisioned by the second entity with both a session rule and a PCC rule in an updated policy decision.

11. The method (200) of any of claims 8 to 10, wherein the notification of the error is carried in a first request message for policy control update, particularly wherein the first request message for policy control update comprises an Npcf_SMPolicyControl_Update Request message,
and wherein the updated policy decision is carried in a first response message corresponding to the first request message for policy control update, particularly wherein the first response message corresponding to the first request message for policy control update comprises an Npcf_SMPolicyControl_Update Response message.

12. The method (200) of any of claims 8 to 11, further comprising:
receiving, from the first entity, a second request message for policy control create/update; and
transmitting, to the first entity, a second response message corresponding to the second request message for policy control create/update, which comprises the Policy decision provisioned by the second entity.

13. The method (200) of any of claims 8 to 12, wherein the notification of the error is carried in a first response message for policy control update notification, particularly wherein the first response message for policy control update notification comprises an Npcf_SMPolicyControl_ UpdateNotify Response message,
the method (200) further comprising:
transmitting, to the first entity, a first request message corresponding to the first response message for policy control update notification, which comprises the policy decision provisioned by the second entity.

14. The method (200) of any of claims 9, 10 and 13, wherein the updated policy decision is carried in a second request message for policy control update notification, particularlywherein the second request message for policy control update notification comprises an Npcf_SMPolicyControl_ UpdateNotify Request message.

15. The method (200) of any of claims 1 to 14, wherein the first entity is a Session Management Function, SMF, entity, and the second entity is a Policy Control Function, PCF, entity.

16. The method (200) of any of claims 1 to 14, wherein the policy decision comprises a Session Management, SM, policy decision represented by SmPolicyDecision, particularly wherein the error in the attribute in the policy decision comprises an error in at least one attribute in SmPolicyDecision other than sessRules, pccRules, qosDecs, chgDecs, traffContDecs, umDecs, qosMonDecs and conds.

17. A first entity, configured to:
determine, based on a policy decision provisioned by a second entity, an error in at least one of:
a reference of a session rule and/or a Policy and Charging Control, PCC, rule to the policy decision, the error in the reference of the session rule and/or the PCC rule comprising at least one of:
the session rule and/or the PCC rule referring to an empty policy decision, or inconsistency of the policy decision with the session rule and/or the PCC rule; or
an attribute in the policy decision; and
transmit, to the second entity, a notification of the error.

18. The first entity (500) of claim 17, being configured to perform the method according to any of claims 2 to 7 or 15 and 16 when being dependent on any of claims 1 to 7.

19. A second entity, configured to:
receive, from a first entity, a notification of an error in at least one of:
reference of a session rule and/or a Policy and Charging Control, PCC, rule to a policy decision, wherein the error in reference of the session rule and/or the PCC rule to the policy decision further comprises at least one of:
the session rule and/or the PCC rule referring to an empty policy decision, or inconsistency of the policy decision with the session rule and/or the PCC rule, or
an attribute in a policy decision; and
update the policy decision.

20. The second entity (700) of claim 19, being configured to perform the method according to any of claims 9 to 14 or 15 and 16 when being dependent on any of claims 8 to 14.

## Patentansprüche

1. Verfahren (100) an einer ersten Entität, das umfasst:
Bestimmen (S101) eines Fehlers in mindestens einem des Folgenden auf der Grundlage einer Richtlinienentscheidung, die von einer zweiten Entität bereitgestellt wird:
einem Verweis einer Sitzungsregel und/oder einer Policy and Charging Control Rule, PCC-Regel, auf die Richtlinienentscheidung, wobei der Fehler in dem Verweis der Sitzungsregel und/oder der PCC-Regel mindestens eines des Folgenden umfasst:
die Sitzungsregel und/oder die PCC-Regel, die auf eine leere Richtlinienentscheidung verweist, oder
eine Widersprüchlichkeit zwischen der Richtlinienentscheidung und der Sitzungsregel und/oder der PCC-Regel; oder
ein Attribut in der Richtlinienentscheidung; und
Übertragen (S103) einer Benachrichtigung über den Fehler an die zweite Entität.

2. Verfahren (100) nach Anspruch 1, wobei die Widersprüchlichkeit zwischen der Richtlinienentscheidung und der Sitzungsregel und/oder der PCC-Regel ferner mindestens eines des Folgenden umfasst:
eine Widersprüchlichkeit zwischen der Richtlinienentscheidung, die von der zweiten Entität bereitgestellt wird, und sowohl der Sitzungsregel als auch der PCC-Regel in der gleichen Richtlinienentscheidung, oder
eine Widersprüchlichkeit zwischen der Richtlinienentscheidung, die von der zweiten Entität bereitgestellt wird, und sowohl einer Sitzungsregel als auch einer PCC-Regel in einer aktualisierten Richtlinienentscheidung.

3. Verfahren (100) nach Anspruch 1 oder 2, wobei die Benachrichtigung über den Fehler in einer ersten Anfragenachricht für eine Richtlinienkontrollenaktualisierung enthalten ist, wobei die erste Anfragenachricht insbesondere eine "Npcf_SMPolicyControl_Update Request"-Nachricht umfasst.

4. Verfahren (100) nach einem der Ansprüche 1 bis 3, das das Empfangen einer aktualisierten Richtlinienentscheidung von der zweiten Entität umfasst, insbesondere wobei die aktualisierte Richtlinienentscheidung in einer ersten Antwortnachricht enthalten ist, die der/einer ersten Anfragenachricht für eine Richtlinienkontrollenaktualisierung entspricht, spezifischer wobei die erste Antwortnachricht, die der ersten Anfragenachricht für eine Richtlinienkontrollenaktualisierung entspricht, eine "Npcf_SMPolicyControl_Update Response"-Nachricht umfasst.

5. Verfahren (100) nach einem der Ansprüche 1 bis 4, das ferner umfasst:
Übertragen einer zweiten Anfragenachricht für eine Richtlinienkontrollenerstellung/-aktualisierung an die zweite Entität; und Empfangen einer zweiten Antwortnachricht, die der zweiten Anfragenachricht für eine Richtlinienkontrollenerstellung/- aktualisierung entspricht und die von der zweiten Entität bereitgestellte Richtlinienentscheidung umfasst, von der zweiten Entität.

6. Verfahren (100) nach Anspruch 1 oder 2, wobei die Benachrichtigung über den Fehler in einer ersten Antwortnachricht für eine Benachrichtigung über eine Richtlinienkontrollenaktualisierung enthalten ist, insbesondere wobei die erste Antwortnachricht für eine Benachrichtigung über eine Richtlinienkontrollenaktualisierung eine "Npcf_SMPolicyControl_UpdateNotify Response"-Nachricht umfasst.

7. Verfahren (100) nach Anspruch 6, das ferner umfasst:
Empfangen einer ersten Anfragenachricht, die der ersten Antwortnachricht für eine Benachrichtigung über eine Richtlinienkontrollenaktualisierung entspricht und die von der zweiten Entität bereitgestellte Richtlinienentscheidung umfasst, von der zweiten Entität.

8. Verfahren (200) an einer zweiten Entität, das umfasst:
Empfangen (S201) einer Benachrichtigung über einen Fehler in mindestens einem des Folgenden von einer ersten Entität:
einem Verweis einer Sitzungsregel und/oder einer Policy and Charging Control Rule, PCC-Regel, auf eine Richtlinienentscheidung, wobei der Fehler in dem Verweis der Sitzungsregel und/oder der PCC-Regel auf die Richtlinienentscheidung ferner mindestens eines des Folgenden umfasst:
die Sitzungsregel und/oder die PCC-Regel, die auf eine leere Richtlinienentscheidung verweist, oder
eine Widersprüchlichkeit zwischen der Richtlinienentscheidung und der Sitzungsregel und/oder der PCC-Regel, oder
ein Attribut in einer Richtlinienentscheidung; und
Aktualisieren (S203) der Richtlinienentscheidung.

9. Verfahren (200) nach Anspruch 8, das ferner umfasst:
Übertragen der aktualisierten Richtlinienentscheidung an die erste Entität.

10. Verfahren (200) nach Anspruch 8 oder 9, wobei die Widersprüchlichkeit zwischen der Richtlinienentscheidung und der Sitzungsregel und/oder der PCC-Regel ferner mindestens eines des Folgenden umfasst:
eine Widersprüchlichkeit zwischen der Richtlinienentscheidung, die von der zweiten Entität bereitgestellt wird, und sowohl der Sitzungsregel als auch der PCC-Regel in der gleichen Richtlinienentscheidung, oder
eine Widersprüchlichkeit zwischen der Richtlinienentscheidung, die von der zweiten Entität bereitgestellt wird, und sowohl einer Sitzungsregel als auch einer PCC-Regel in einer aktualisierten Richtlinienentscheidung.

11. Verfahren (200) nach einem der Ansprüche 8 bis 10, wobei die Benachrichtigung über den Fehler in einer ersten Anfragenachricht für eine Richtlinienkontrollenaktualisierung enthalten ist, insbesondere wobei die erste Anfragenachricht für eine Richtlinienkontrollenaktualisierung eine "Npcf_SMPolicyControl_Update Request"-Nachricht umfasst.
und wobei die aktualisierte Richtlinienentscheidung in einer ersten Antwortnachricht enthalten ist, die der ersten Anfragenachricht für eine Richtlinienkontrollenaktualisierung entspricht, insbesondere wobei die erste Antwortnachricht, die der ersten Anfragenachricht für eine Richtlinienkontrollenaktualisierung entspricht, eine "Npcf_SMPolicyControl_Update Response"-Nachricht umfasst.

12. Verfahren (200) nach einem der Ansprüche 8 bis 11, das ferner umfasst:
Empfangen einer zweiten Anfragenachricht für eine Richtlinienkontrollenerstellung/-aktualisierung von der ersten Entität; und
Übertragen einer zweiten Antwortnachricht, die der zweiten Anfragenachricht für eine Richtlinienkontrollenerstellung/- aktualisierung entspricht und die von der zweiten Entität bereitgestellte Richtlinienentscheidung umfasst, an die erste Entität.

13. Verfahren (200) nach einem der Ansprüche 8 bis 12, wobei die Benachrichtigung über den Fehler in einer ersten Antwortnachricht für eine Benachrichtigung über eine Richtlinienkontrollenaktualisierung enthalten ist, insbesondere wobei die erste Antwortnachricht für eine Benachrichtigung über eine Richtlinienkontrollenaktualisierung eine "Npcf_SMPolicyControl_UpdateNotify Response"-Nachricht umfasst, wobei das Verfahren (200) ferner Folgendes umfasst:
Übertragen einer ersten Anfragenachricht, die der ersten Antwortnachricht für eine Benachrichtigung über eine Richtlinienkontrollenaktualisierung entspricht und die von der zweiten Entität bereitgestellte Richtlinienentscheidung umfasst, an die erste Entität.

14. Verfahren (200) nach einem der Ansprüche 9, 10 und 13, wobei die aktualisierte Richtlinienentscheidung in einer zweiten Anfragenachricht für eine Benachrichtigung über eine Richtlinienkontrollenaktualisierung enthalten ist, insbesondere wobei die zweite Anfragenachricht für eine Benachrichtigung über eine Richtlinienkontrollenaktualisierung eine "Npcf_SMPolicyControl_UpdateNotify Request"-Nachricht umfasst.

15. Verfahren (200) nach einem der Ansprüche 1 bis 14, wobei die erste Entität eine Session-Management-Function-Entität, SMF-Entität, ist und die zweite Entität eine Policy-Control-Function-Entität, PCF-Entität, ist.

16. Verfahren (200) nach einem der Ansprüche 1 bis 14, wobei die Richtlinienentscheidung eine Richtlinienentscheidung zu Session Management, SM, umfasst, die durch SmPolicyDecision dargestellt ist, insbesondere wobei der Fehler in dem Attribut in der Richtlinienentscheidung einen Fehler in mindestens einem Attribut in SmPolicyDecision umfasst, das nicht sessRules, pccRules, qosDecs, chgDecs, traffContDecs, umDecs, qosMonDecs und conds ist.

17. Erste Entität, die zu Folgendem konfiguriert ist:
Bestimmen eines Fehlers in mindestens einem des Folgenden auf der Grundlage einer Richtlinienentscheidung, die von einer zweiten Entität bereitgestellt wird: einem Verweis einer Sitzungsregel und/oder einer Policy and Charging Control Rule, PCC-Regel, auf die Richtlinienentscheidung, wobei der Fehler in dem Verweis der Sitzungsregel und/oder der PCC-Regel mindestens eines des Folgenden umfasst:
die Sitzungsregel und/oder die PCC-Regel, die auf eine leere Richtlinienentscheidung verweist, oder
eine Widersprüchlichkeit zwischen der Richtlinienentscheidung und der Sitzungsregel und/oder der PCC-Regel; oder
ein Attribut in der Richtlinienentscheidung; und
Übertragen einer Benachrichtigung über den Fehler an die zweite Entität.

18. Erste Entität (500) nach Anspruch 17, die dazu konfiguriert ist, das Verfahren nach einem der Ansprüche 2 bis 7 oder 15 und 16 auszuführen, wenn von einem der Ansprüche 1 bis 7 abhängig.

19. Zweite Entität, die zu Folgendem konfiguriert ist:
Empfangen einer Benachrichtigung über einen Fehler in mindestens einem des Folgenden von einer ersten Entität:
einem Verweis einer Sitzungsregel und/oder einer Policy and Charging Control Rule, PCC-Regel, auf eine Richtlinienentscheidung, wobei der Fehler in dem Verweis der Sitzungsregel und/oder der PCC-Regel auf die Richtlinienentscheidung ferner mindestens eines des Folgenden umfasst:
die Sitzungsregel und/oder die PCC-Regel, die auf eine leere Richtlinienentscheidung verweist, oder
eine Widersprüchlichkeit zwischen der Richtlinienentscheidung und der Sitzungsregel und/oder der PCC-Regel, oder
ein Attribut in einer Richtlinienentscheidung; und
Aktualisieren der Richtlinienentscheidung.

20. Zweite Entität (700) nach Anspruch 19, die dazu konfiguriert ist, das Verfahren nach einem der Ansprüche 9 bis 14 oder 15 und 16 auszuführen, wenn von einem der Ansprüche 8 bis 14 abhängig.

## Revendications

1. Procédé (100) au niveau d'une première entité, comprenant :
la détermination (S101), sur la base d'une décision politique fournie par une deuxième entité, d'une erreur dans au moins l'un des éléments suivants :
une référence d'une règle de session et/ou d'une règle de contrôle de politique et de facturation, PCC, à la décision de politique, l'erreur dans la référence de la règle de session et/ou de la règle PCC comprenant au moins l'un des éléments suivants :
la règle de session et/ou la règle PCC faisant référence à une décision de politique vide, ou
à une incohérence de la décision de politique avec la règle de session et/ou la règle PCC ; ou
un attribut dans la décision de politique ; et
la transmission (S103), à la deuxième entité, d'une notification de l'erreur.

2. Procédé (100) selon la revendication 1, dans lequel l'incohérence de la décision de politique avec la règle de session et/ou la règle PCC comprend en outre au moins l'un des éléments suivants :
une incohérence de la décision de politique fournie par la deuxième entité avec la règle de session et la règle PCC dans la même décision de politique, ou
une incohérence de la décision de politique fournie par la deuxième entité avec à la fois une règle de session et une règle PCC dans une décision de politique mise à jour.

3. Procédé (100) selon la revendication 1 ou 2, dans lequel la notification de l'erreur est transportée dans un premier message de demande de mise à jour de contrôle de politique, le premier message de demande comprenant notamment un message de demande Npcf_SMPolicyControl_Update Request.

4. Procédé (100) selon l'une quelconque des revendications 1 à 3, comprenant la réception, en provenance de la deuxième entité, d'une décision de politique mise à jour, en particulier dans lequel la décision de politique mise à jour est transportée dans un premier message de réponse correspondant au/à un premier message de demande de mise à jour de contrôle de politique, plus particulièrement dans lequel le premier message de réponse correspondant au premier message de demande de mise à jour de contrôle de politique comprend un message de réponse Npcf_SMPolicyControl_Update Response.

5. Procédé (100) selon l'une quelconque des revendications 1 à 4, comprenant en outre :
la transmission, à la deuxième entité, d'un deuxième message de demande de création/mise à jour de contrôle de politique ; et
la réception, en provenance de la deuxième entité, d'un deuxième message de réponse correspondant au deuxième message de demande de création/mise à jour de contrôle de politique, qui comprend la décision de politique fournie par la deuxième entité.

6. Procédé (100) selon la revendication 1 ou 2, dans lequel la notification de l'erreur est transportée dans un premier message de réponse pour la notification de mise à jour de contrôle de politique, en particulier dans lequel le premier message de réponse pour la notification de mise à jour de contrôle de politique comprend un message de réponse Npcf_SMPolicyControl_UpdateNotify Response.

7. Procédé (100) selon la revendication 6, comprenant en outre :
la réception, en provenance de la deuxième entité, d'un premier message de demande correspondant au premier message de réponse pour la notification de mise à jour de contrôle de politique, qui comprend la décision de politique fournie par la deuxième entité.

8. Procédé (200) au niveau d'une deuxième entité, comprenant :
la réception (S201), en provenance d'une première entité, d'une notification d'une erreur dans au moins l'un des éléments suivants :
une référence d'une règle de session et/ou d'une règle de contrôle de politique et de facturation, PCC, à une décision de politique, dans lequel l'erreur de référence de la règle de session et/ou de la règle PCC à la décision de politique comprend en outre au moins l'un des éléments suivants :
la règle de session et/ou la règle PCC faisant référence à une décision de politique vide, ou
une incohérence de la décision de politique avec la règle de session et/ou la règle PCC, ou
un attribut dans une décision de politique ; et
la mise à jour (S203) de la décision de politique.

9. Procédé (200) selon la revendication 8, comprenant en outre :
la transmission, à la première entité, de la décision de politique mise à jour.

10. Procédé (200) selon la revendication 8 ou 9, dans lequel l'incohérence de la décision de politique avec la règle de session et/ou la règle PCC comprend en outre au moins l'un des éléments suivants :
une incohérence de la décision de politique fournie par la deuxième entité avec la règle de session et la règle PCC dans la même décision de politique, ou
une incohérence de la décision de politique fournie par la deuxième entité avec à la fois une règle de session et une règle PCC dans une décision de politique mise à jour.

11. Procédé (200) selon l'une quelconque des revendications 8 à 10, dans lequel la notification de l'erreur est transportée dans un premier message de demande de mise à jour de contrôle de politique, en particulier dans lequel le premier message de demande de mise à jour de contrôle de politique comprend un message de demande Npcf_SMPolicyControl_Update Request,
et dans lequel la décision de politique mise à jour est transportée dans un premier message de réponse correspondant au premier message de demande de mise à jour de contrôle de politique, en particulier dans lequel le premier message de réponse correspondant au premier message de demande de mise à jour de contrôle de politique comprend un message de réponse Npcf_SMPolicyControl_Update Response.

12. Procédé (200) selon l'une quelconque des revendications 8 à 11, comprenant en outre :
la réception, en provenance de la première entité, d'un deuxième message de demande de création/mise à jour de contrôle de politique ; et
la transmission, à la première entité, d'un deuxième message de réponse correspondant au deuxième message de demande de création/mise à jour de contrôle de politique, qui comprend la décision de politique fournie par la deuxième entité.

13. Procédé (200) selon l'une quelconque des revendications 8 à 12, dans lequel la notification de l'erreur est transportée dans un premier message de réponse pour la notification de mise à jour de contrôle de politique, en particulier dans lequel le premier message de réponse pour la notification de mise à jour de contrôle de politique comprend un message de réponse Npcf_SMPolicyControl_UpdateNotify Response,
le procédé (200) comprenant en outre :
la transmission, à la première entité, d'un premier message de demande correspondant au premier message de réponse pour la notification de mise à jour de contrôle de politique, qui comprend la décision de politique fournie par la deuxième entité.

14. Procédé (200) selon l'une quelconque des revendications 9, 10 et 13, dans lequel la décision de politique mise à jour est transportée dans un deuxième message de demande de notification de mise à jour de contrôle de politique, en particulier dans lequel le deuxième message de demande de notification de mise à jour de contrôle de politique comprend un message de demande Npcf_SMPolicyControl_UpdateNotify Request.

15. Procédé (200) selon l'une quelconque des revendications 1 à 14, dans lequel la première entité est une entité de fonction de gestion de session, SMF, et la deuxième entité est une entité de fonction de contrôle de politique, PCF.

16. Procédé (200) selon l'une quelconque des revendications 1 à 14, dans lequel la décision de politique comprend une décision de politique de gestion de session, SM, représentée par SmPolicyDecision, en particulier dans lequel l'erreur dans l'attribut dans la décision de politique comprend une erreur dans au moins un attribut dans SmPolicyDecision autre que sessRules, pccRules, qosDecs, chgDecs, traffContDecs, umDecs, qosMonDecs et conds.

17. Première entité, configurée pour :
déterminer, sur la base d'une décision de politique fournie par une deuxième entité, une erreur dans au moins un des éléments suivants :
une référence d'une règle de session et/ou d'une règle de contrôle de politique et de facturation, PCC, à la décision de politique, l'erreur dans la référence de la règle de session et/ou de la règle PCC comprenant au moins l'un des éléments suivants :
la règle de session et/ou la règle PCC faisant référence à une décision de politique vide, ou
une incohérence de la décision de politique avec la règle de session et/ou la règle PCC ; ou
un attribut dans la décision de politique ; et
transmettre, à la deuxième entité, une notification de l'erreur.

18. Première entité (500) selon la revendication 17, étant configurée pour réaliser le procédé selon l'une quelconque des revendications 2 à 7 ou 15 et 16 lorsqu'elle dépend de l'une quelconque des revendications 1 à 7.

19. Deuxième entité, configurée pour :
recevoir, en provenance d'une première entité, une notification d'une erreur dans au moins un des éléments suivants :
une référence d'une règle de session et/ou d'une règle de contrôle de politique et de facturation, PCC, à une décision de politique, dans lequel l'erreur de référence de la règle de session et/ou de la règle PCC à la décision de politique comprend en outre au moins l'un des éléments suivants :
la règle de session et/ou la règle PCC faisant référence à une décision de politique vide, ou
une incohérence de la décision politique avec la règle de session et/ou la règle PCC, ou
un attribut dans une décision de politique ; et
mettre à jour la décision politique.

20. Deuxième entité (700) selon la revendication 19, étant configurée pour réaliser le procédé selon l'une quelconque des revendications 9 à 14 ou 15 et 16 lorsqu'elle dépend de l'une quelconque des revendications 8 à 14.
